(19) Europäisches Patentamt
European Patent Office
Office européen des brevets

(11) EP 3 495 450 B1

(12) **EUROPEAN PATENT SPECIFICATION**

(45) Date of publication and mention of the grant of the patent:
**05.08.2020 Bulletin 2020/32**

(21) Application number: **18207509.3**

(22) Date of filing: **21.11.2018**

(51) Int Cl.:
***C09K 19/04*** (2006.01)
***C09K 19/30*** (2006.01)
***C09K 19/12*** (2006.01)
***C09K 19/18*** (2006.01)
***C09K 19/20*** (2006.01)
***C09K 19/34*** (2006.01)

(54) **COMPOUND, LIQUID CRYSTAL COMPOSITION, AND LIQUID CRYSTAL DISPLAY ELEMENT**

VERBINDUNG, FLÜSSIGKRISTALLZUSAMMENSETZUNG UND FLÜSSIGKRISTALLANZEIGEELEMENT

COMPOSÉ, COMPOSITION DE CRISTAUX LIQUIDES ET ÉLÉMENT D'AFFICHAGE À CRISTAUX LIQUIDES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **06.12.2017 JP 2017234448**

(43) Date of publication of application:
**12.06.2019 Bulletin 2019/24**

(73) Proprietors:
- **JNC Corporation**
  **Chiyoda-ku**
  **Tokyo 100-8105 (JP)**
- **JNC Petrochemical Corporation**
  **Tokyo 100-0004 (JP)**

(72) Inventors:
- **TANAKA, Hiroyuki**
  **Chiba, 2908551 (JP)**
- **TAKATA, Akihiro**
  **Chiba, 2908551 (JP)**
- **MORI, Ayako**
  **Chiba, 2908551 (JP)**

(74) Representative: **Becker & Kurig Partnerschaft Patentanwälte PartmbB**
**Bavariastrasse 7**
**80336 München (DE)**

(56) References cited:
**WO-A1-2016/129490**
**WO-A1-2017/047177**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 495 450 B1

## Description

### BACKGROUND

Technical Field

The disclosure relates to a compound, a liquid crystal composition and a liquid crystal display element, and more specifically, to a compound having both a polar group such as an -OH group and a plurality of polymerizable groups such as a methacryloyloxy group, a liquid crystal composition containing the compound and having positive or negative dielectric anisotropy, and a liquid crystal display element containing the composition or a cured material of a part thereof.

Description of Related Art

Liquid crystal display elements can be classified into modes such as phase change (PC), twisted nematic (TN), super twisted nematic (STN), electrically controlled birefringence (ECB), optically compensated bend (OCB), in-plane switching (IPS), vertical alignment (VA), fringe field switching (FFS), and field-induced photo-reactive alignment (FPA) based on an operation mode of liquid crystal molecules. In addition, liquid crystal display elements can be classified as passive matrix (PM) and active matrix (AM) based on an element driving method. PMs are classified into, for example, static and multiplex matrixes and AMs are classified as, for example, thin film transistor (TFT) and metal insulator metal (MIM). In addition, TFTs can be classified as, for example, amorphous silicon and polycrystal silicon. The latter is classified into a high temperature type and a low temperature type according to a production process. Liquid crystal display elements can be classified into a reflective type that uses natural light, a transmissive type that uses a backlight, and a semi-transmissive type that uses both natural light and a backlight based on a light source.

A liquid crystal composition having a nematic phase has appropriate characteristics. It is possible to obtain an AM element having favorable characteristics by improving characteristics of this composition. The relationship between characteristics of the composition and characteristics of the AM element is summarized in the following Table 1.

[Table 1]

Table 1. Characteristics of compositions and AM elements

| Number | Characteristics of composition | Characteristics of AM element |
|---|---|---|
| 1 | Wide temperature range of a nematic phase | Wide temperature range in which the element can be used |
| 2 | Low viscosity [1)] | Short response time |
| 3 | Appropriate optical anisotropy | Large contrast ratio |
| 4 | Large positive or negative dielectric anisotropy | Low threshold voltage, low power consumption, and large contrast ratio |
| 5 | Large specific resistance | High voltage holding ratio and large contrast ratio |
| 6 | Stable with respect to ultraviolet radiation and heat | Long lifespan |
| 7 | Large elastic constant | Large contrast ratio and short response time |
| 1) The time taken for a composition to be inserted into a liquid crystal display element can be shortened | | |

Characteristics of the composition will be further described based on commercially available AM elements. A temperature range of a nematic phase (a temperature range in which a nematic phase is exhibited) is related to a temperature range in which an element can be used. A preferable upper limit temperature of a nematic phase is about 70 °C or higher and a preferable lower limit temperature of a nematic phase is about -10 °C or lower.

The viscosity of the composition is related to a response time of the element. A short response time is preferable in order to display a moving image with elements. A shorter response time is desirable even if it is only 1 millisecond. Therefore, a lower viscosity of the composition is preferable and a lower viscosity at low temperatures is more preferable.

The optical anisotropy of the composition is related to a contrast ratio of the element. According to a mode of

the element, large optical anisotropy or small optical anisotropy, that is, appropriate optical anisotropy is necessary. A product (Δn×d) of the optical anisotropy (Δn) of the composition and the cell gap (d) of the element is designed to maximize the contrast ratio. An appropriate product value depends on the type of operation mode. This value is about 0.45 μm in an element in a mode such as TN. This value is a range of about 0.30 μm to about 0.40 μm in an element in a VA mode and is a range of about 0.20 μm to about 0.30 μm in an element in an IPS mode or an FFS mode. In these cases, in an element having a small cell gap, a composition having large optical anisotropy is preferable.

Large dielectric anisotropy of the composition contributes to a low threshold voltage, low power consumption, and a large contrast ratio in the element. Therefore, large positive or negative dielectric anisotropy is preferable. A large specific resistance of the composition contributes to a high voltage holding ratio and a large contrast ratio in the element. Therefore, a composition having a large specific resistance not only at room temperature but also at a temperature close to an upper limit temperature of a nematic phase in an initial stage of use is preferable. A composition having a large specific resistance not only at room temperature but also at a temperature close to an upper limit temperature of a nematic phase after long term use is preferable.

The stability of the composition with respect to ultraviolet radiation and heat is related to a lifespan of the element. When this stability is higher, the lifespan of the element is longer. Such a characteristic is preferable for an AM element used in a liquid crystal projector and a liquid crystal television.

In a polymer sustained alignment (PSA) type liquid crystal display element, a liquid crystal composition containing a polymer is used. First, a composition to which a small amount of a polymerizable compound is added is inserted into an element. Here, a polymerizable compound having a plurality of polymerizable groups is generally used. Next, ultraviolet rays are emitted to the composition while a voltage is applied between substrates hold the element. The polymerizable compound is polymerized and forms a polymer network structure in the composition. When this composition is used, since it is possible to control the alignment of liquid crystal molecules according to the polymer, a response time of the element is shortened and image burn is lessened. Such effects of the polymer can be expected for elements having modes such as TN, ECB, OCB, IPS, VA, FFS, and FPA.

In general purpose liquid crystal display elements, vertical alignment of liquid crystal molecules is achieved using a polyimide alignment film. On the other hand, for liquid crystal display elements having no alignment film, a mode in which a polar compound is added to a liquid crystal composition and liquid crystal molecules are aligned has been proposed. First, a composition in which a small amount of a polar compound and a small amount of a polymerizable compound are added is inserted into an element. As the polymerizable compound, a polymerizable compound having a plurality of polymerizable groups is generally used. Here, liquid crystal molecules are aligned according to an action of the polar compound. Next, ultraviolet rays are emitted to the composition while a voltage is applied between substrates hold the element. Here, the polymerizable compound is polymerized and stabilizes the alignment of liquid crystal molecules. When this composition is used, since it is possible to control the alignment of liquid crystal molecules according to the polar compound and the polymer, a response time of the element is shortened and image burn is lessened. In addition, in elements having no alignment film, a process of forming an alignment film is unnecessary. Since there is no alignment film, a reduction in electrical resistance of the element due to an interaction between the alignment film and the composition does not occur. Such an effect caused by a combination of the polar compound and the polymer can be expected for elements having modes such as TN, ECB, OCB, IPS, VA, FFS, and FPA.

In liquid crystal display elements having no alignment film, as a compound having both an action of a polar compound and an action of a polymerizable compound, a polar compound having polymerizability has been synthesized so far (for example, Patent Documents 1 and 2). In Patent Document 1, Polymerizable Compound (S-1) having a plurality of polar groups and a plurality of polymerizable groups is described.

[Chem. 1]

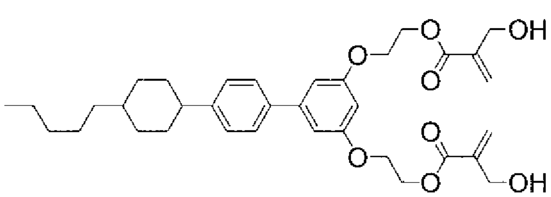

(S-1)

Patent Documents

[Patent Document 1] PCT International Publication No. WO 2017/047177
[Patent Document 2] PCT International Publication No. WO 2016/129490

## SUMMARY

Problems to be Solved

A first objective of the disclosure is to provide a compound having at least one of high chemical stability, a high ability to align liquid crystal molecules, and high polymerization reactivity according to ultraviolet radiation, and high solubility in a liquid crystal composition. A second objective is to provide a liquid crystal composition which contains the compound and has at least one of characteristics such as a high upper limit temperature of a nematic phase, a low lower limit temperature of a nematic phase, a low viscosity, appropriate optical anisotropy, large positive or negative dielectric anisotropy, a large specific resistance, high stability with respect to ultraviolet rays, high stability with respect to heat, a large elastic constant, and a high voltage holding ratio when used for a liquid crystal display element. A third objective is to provide a liquid crystal display element having at least one of characteristics such as a wide temperature range in which an element can be used, a short response time, a high transmittance, a high voltage holding ratio, a low threshold voltage, a large contrast ratio, a long lifespan, and favorable vertical alignment properties.

Means of Solving the Problems

The disclosure relates to a compound represented by Formula (1), a liquid crystal composition containing the compound, and a liquid crystal display element containing the composition and/or a polymerization product obtained by polymerizing at least some of the composition.

[Chem. 2]

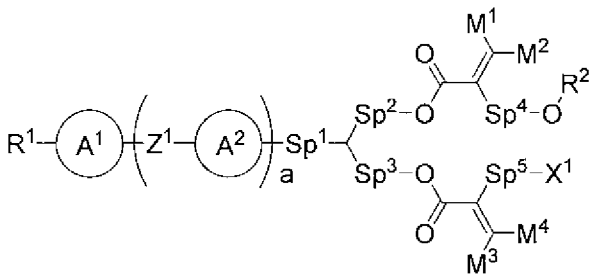

(1)

In Formula (1),

$R^1$ is a hydrogen atom or an alkyl group having 1 to 15 carbon atoms, and in the alkyl group, at least one $-CH_2-$ is optionally substituted with -O- or -S-, at least one $-(CH_2)_2-$ is optionally substituted with -CH=CH- or -C=C-, and in these groups, at least one hydrogen atom is optionally substituted with a fluorine or chlorine atom;

the ring $A^1$ and the ring $A^2$ are independently 1,2-cyclopropylene, 1,3-cyclobutylene, 1,3-cyclopentylene, 1,4-cyclohexylene, 1,4-cycloheptylene, 1,4-cyclohexenylene, 1,4-phenylene, naphthalene-2,6-diyl, decahydronaphthalene-2,6-diyl, 1,2,3,4-tetrahydronaphthalene-2,6-diyl, tetrahydropyran-2,5-diyl, 1,3-dioxane-2,5-diyl, pyrimidine-2,5-diyl, or pyridine-2,5-diyl, and in these rings, at least one hydrogen atom is optionally substituted with a fluorine atom, a chlorine atom, an alkyl group having 1 to 10 carbon atoms, an alkenyl group having 2 to 10 carbon atoms, an alkoxy group having 1 to 9 carbon atoms, or an alkenyloxy group having 2 to 9 carbon atoms, and in these groups, at least one hydrogen atom is optionally substituted with a fluorine or chlorine atom;

a is 0, 1, 2, 3, or 4;

$Z^1$ is a single bond or an alkylene group having 1 to 6 carbon atoms, and in the alkylene group, at least one $-CH_2-$ is optionally substituted with -O-, -CO-, -COO-, -OCO-, or -OCOO-, at least one $-(CH_2)_2-$ is optionally substituted with -CH=CH- or -C=C-, and in these groups, at least one hydrogen atom is optionally substituted with a fluorine or chlorine atom;

$Sp^1$, $Sp^2$, $Sp^3$, $Sp^4$, and $Sp^5$ are independently a single bond or an alkylene having 1 to 10 carbon atoms, and in the alkylene group, at least one $-CH_2-$ is optionally substituted with -O-,
-CO-, -COO-, -OCO-, or -OCOO-, at least one $-(CH_2)_2-$ is optionally substituted with -CH=CH- or -C≡C-, and in these groups, at least one hydrogen atom is optionally substituted with a fluorine or chlorine atom;

$M^1$, $M^2$, $M^3$, and $M^4$ are independently a hydrogen atom, a fluorine atom, a chlorine atom, an alkyl group having 1 to 5 carbon atoms, or an alkyl group having 1 to 5 carbon atoms in which at least one hydrogen atom is substituted with a fluorine or chlorine atom;

$R^2$ is an alkyl group having 1 to 5 carbon atoms, and in the alkyl group, at least one $-CH_2-$ is optionally substituted

with -O- or -S-, at least one $-(CH_2)_2-$ is optionally substituted with -CH=CH- or -C=C-, and in these groups, at least one hydrogen atom is optionally substituted with a fluorine or chlorine atom;

$X^1$ is -OH, $-NH_2$, $-OR^3$, $-N(R^3)_2$, -COOH, -SH, or $-Si(R^3)_3$;

in $-OR^3$, $-N(R^3)_2$, and $-Si(R^3)_3$,

$R^3$ is a hydrogen atom or an alkyl group having 1 to 10 carbon atoms, and in the alkyl group, at least one $-CH_2-$ is optionally substituted with -O-, at least one $-(CH_2)_2-$ is optionally substituted with -CH=CH-, and in these groups, at least one hydrogen atom is optionally substituted with a fluorine or chlorine atom;

when a is 1, both the ring $A^1$ and the ring $A^2$ are 1,4-cyclohexylene, $Z^1$ is a single bond, $Sp^2$, $Sp^3$, $Sp^4$, and $Sp^5$ are $-CH_2-$, $R^2$ is a methyl group, and when $X^1$ is -OH or $-OCH_3$, $Sp^1$ is not a single bond;

when a is 2, the ring on the side of $R^1$ is naphthalene-2,6-diyl, two rings on the side of $Sp^1$ are both 1,4-cyclohexylene, $Z^1$ is a single bond, $Sp^2$, $Sp^3$, $Sp^4$, and $Sp^5$ are $-CH_2-$, $R^2$ is a methyl group, and when $X^1$ is $-OCH_3$, $Sp^1$ is not a single bond; and

when a is 2, the ring on the side of $R^1$ is naphthalene-2,6-diyl, the center ring is 1,4-phenylene, the ring on the side of $Sp^1$ is 1,4-cyclohexylene, $Z^1$ is a single bond, $Sp^2$, $Sp^3$, $Sp^4$, and $Sp^5$ are $-CH_2-$, $R^2$ is a methyl group, and when $X^1$ is $-OCH_3$, $Sp^1$ is not a single bond. Advantageous Effects of the Invention

A first advantage of the disclosure is to provide a compound having at least one of high chemical stability, a high ability to align liquid crystal molecules, high polymerization reactivity according to ultraviolet radiation, and a high voltage holding ratio when used for a liquid crystal display element, and high solubility in a liquid crystal composition. A second advantage is to provide a liquid crystal composition which contains the compound and has at least one of characteristics such as a high upper limit temperature of a nematic phase, a low lower limit temperature of a nematic phase, a low viscosity, appropriate optical anisotropy, large positive or negative dielectric anisotropy, a large specific resistance, high stability with respect to ultraviolet rays, high stability with respect to heat, and a large elastic constant. A third advantage is to provide a liquid crystal display element having at least one of characteristics such as a wide temperature range in which an element can be used, a short response time, a high transmittance, a high voltage holding ratio, a low threshold voltage, a large contrast ratio, a long lifespan, and favorable vertical alignment properties.

## DESCRIPTION OF THE EMBODIMENTS

The terms used herein are used as follows. The terms "liquid crystalline compound," "liquid crystal composition," and "liquid crystal display element" may be abbreviated as a "compound," a "composition," and an "element."

A "liquid crystalline compound" generally refers to a compound having a liquid crystal phase such as a nematic phase or a smectic phase and a compound which does not have a liquid crystal phase and is added in order to adjust physical properties of a composition such as an upper limit temperature, a lower limit temperature, a viscosity, and dielectric anisotropy. Generally, this compound has a six-membered ring such as 1,4-cyclohexylene or 1,4-phenylene, and has a rod-like molecular structure.

A "polymerizable compound" is a compound that is added to form a polymer in the composition. A liquid crystalline compound having an alkenyl group is not a polymerizable compound in that sense.

A "polar group" refers to groups such as -OH, $-NH_2$, $-OR^3$, $-N(R^3)_2$, -COOH, -SH, or $-Si(R^3)_3$ which non-covalently interact with a surface of a substrate such as a glass (or a metal oxide) substrate.

A "polar compound" assists the alignment of liquid crystal molecules due to a polar group that interacts with, for example, a surface of a substrate.

A "liquid crystal display element" generally refers to, for example, a liquid crystal display panel and a liquid crystal display module.

A liquid crystal composition is generally prepared by mixing a plurality of liquid crystalline compounds together. Additives such as a polymerizable compound, a polymerization initiator, a polymerization inhibitor, an optically active compound, an antioxidant, a UV absorber, a light stabilizer, a heat stabilizer, a dye, and an antifoaming agent are added to this composition as necessary in order to further adjust physical properties. Also, when additives are added, a proportion (content) of a liquid crystalline compound in the liquid crystal composition is expressed as a weight percentage (weight%) based on a weight of a liquid crystal composition containing no additives. A proportion (amount added) of additives in the liquid crystal composition is expressed as a weight percentage (weight%) based on a weight of a liquid crystal composition containing no additives. That is, a proportion of a liquid crystalline compound or an additive is computed based on a total weight of a liquid crystalline compound. Parts per million (ppm) by weight may be used. Proportions of a polymerization initiator and a polymerization inhibitor in the liquid crystal composition are otherwise expressed based on a weight of a polymerizable compound.

The "clearing point" is a transition temperature of a liquid crystal phase-isotropic phase in a liquid crystalline compound. A "lower limit temperature of a liquid crystal phase" is a transition temperature of a solid-liquid crystal phase (such as a smectic phase or a nematic phase) in a liquid crystalline compound. An "upper limit temperature of a nematic

phase" is a transition temperature of a nematic phase-isotropic phase in a mixture of a liquid crystalline compound and a mother liquid crystal, or a liquid crystal composition, and may be abbreviated as an "upper limit temperature." A "lower limit temperature of a nematic phase" may be abbreviated as a "lower limit temperature." The expression "increase dielectric anisotropy" or "large dielectric anisotropy" means that an absolute value of a value thereof increases or is large. The expression "a voltage holding ratio is high" means that a voltage holding ratio is high not only at room temperature but also at a temperature close to the upper limit temperature when an element is in an initial stage of use, and thus, even after the element is used for a long time, it has a high voltage holding ratio not only at room temperature but also at a temperature close to the upper limit temperature. Characteristics of compositions and elements may be examined before and after an aging test (including an accelerated deterioration test). The expression "solubility in a liquid crystal composition is high" means that solubility is high in any composition containing a liquid crystalline compound at room temperature, but a composition used for evaluating solubility in the following examples can be used as a reference for the composition.

A compound represented by Formula (1) may be abbreviated as "Compound (1)." Compound (1) refers to one compound represented by Formula (1), a mixture of two compounds represented by Formula (1), or a mixture of three or more compounds represented by Formula (1). These rules apply to at least one compound selected from the group consisting of compounds represented by Formula (2).

Symbols such as $A^1$, $B^1$, and $C^1$ surrounded by a hexagon correspond to ring $A^1$, ring $B^1$, and ring $C^1$, respectively. A hexagon refers to a six-membered ring such as a cyclohexane ring or a benzene ring or a condensed ring such as a naphthalene ring. A straight line crossing one side of this hexagon indicates that any hydrogen atom on the ring is optionally substituted with a group such as $-Sp^1-P^1$.

A suffix such as f, g, or h indicates the number of groups substituted. When the suffix is 0, there is no such substitution.

In the expression "ring A and ring C are independently, X, Y, or Z," since the subject is plural, "independently" is used. When the subject is a "ring A," since the subject is singular, "independently" is not used.

In a chemical formula, the symbol of a terminal group $R^{11}$ is used for a plurality of compounds. In these compounds, groups represented by $R^{11}$ may be the same as or different from each other. For example, when $R^{11}$ of Compound (2) is an ethyl group, $R^{11}$ of Compound (3) may be an ethyl group or another group such as a propyl group. These rules also apply to other symbols. In Compound (8), when i is 2, there are two rings $D^1$. In this compound, two groups represented by two rings $D^1$ may be the same as or different from each other. When i is greater than 2, this rule also applies to any two rings $D^1$. These rules also apply to other symbols.

The expression "at least one 'A'" means that the number of 'A' is arbitrary. The expression "at least one 'A' is optionally substituted with 'B'" includes a case in which 'A' itself is not substituted with 'B,' a case in which one 'A' is substituted with 'B,' and a case in which two or more 'A' are substituted with 'B,' and in these cases, a position of 'A' that is substituted with 'B' is arbitrary. A rule in which a substitution position is arbitrary also applies to the expression "at least one 'A' is substituted with 'B''. The expression "at least one A is optionally substituted with B, C, or D" means, when A is not substituted, a case in which at least one A is substituted with B, a case in which at least one A is substituted with C, a case in which at least one A is substituted with D, and also a case in which a plurality of A are substituted with at least two of B, C, and D. An alkyl group in which at least one $-CH_2-$ (or $-CH_2CH_2-$) is optionally substituted with -O- (or -CH=CH-) includes, for example, an alkyl group, an alkenyl group, an alkoxy group, an alkoxyalkyl group, an alkoxyalkenyl group, and an alkenyloxyalkyl group. Here, it is not preferable for two consecutive $-CH_2-$ to be substituted with -O- and -O-O-be formed. For example in an alkyl group, it is not preferable for $-CH_2-$ in a methyl moiety ($-CH_2-H$) to be substituted with -O- and -O-H be formed.

The expression "$R^{11}$ and $R^{12}$ are independently an alkyl group having 1 to 10 carbon atoms or an alkenyl group having 2 to 10 carbon atoms, and in the alkyl and alkenyl groups, at least one $-CH_2-$ is optionally substituted with -O-, and in these groups, at least one hydrogen atom is optionally substituted with a fluorine atom" may be used. In this expression, "in these groups" may be interpreted literally. In this expression, "these groups" refer to, for example, an alkyl group, an alkenyl group, an alkoxy group, and an alkenyloxy group. That is, "these groups" indicate all of groups shown before the expression "in these groups." This common interpretation also applies to other terms.

A halogen atom includes fluorine, chlorine, bromine, and iodine atoms. A preferable halogen atom is fluorine or chlorine atom. A more preferable halogen atom is fluorine atom. In a liquid crystalline compound, an alkyl group is linear or branched, and does not contain a cyclic alkyl group. Generally, a linear alkyl group is more preferable than a branched alkyl group. These also apply to a terminal group such as an alkoxy group and an alkenyl group. Regarding the configuration of 1,4-cyclohexylene, the trans configuration is more preferable than the cis configuration in order to increase an upper limit temperature of a nematic phase. 2-Fluoro-1,4-phenylene refers to the following two divalent groups. In the chemical formulae, fluorine may be leftward (L) or rightward (R). These rules also apply to a bilaterally asymmetric divalent group that is formed by removing two hydrogen atoms from a ring such as tetrahydropyran-2,5-diyl.

[Chem. 3]

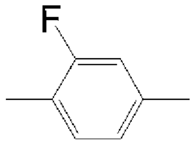

(L)

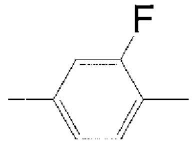

(R)

The disclosure includes, for example, the following items.

Item 1.

A compound represented by Formula (1).

[Chem. 4]

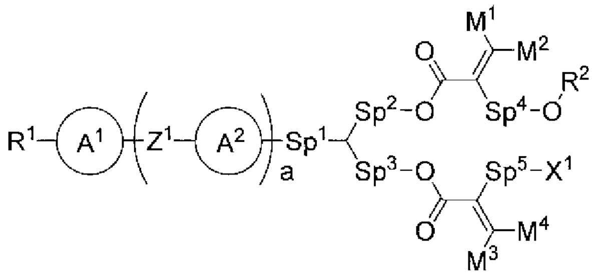

(1)

In Formula (1),

$R^1$ is a hydrogen atom or an alkyl group having 1 to 15 carbon atoms, and in the alkyl group, at least one $-CH_2-$ is optionally substituted with -O- or -S-, at least one $-(CH_2)_2-$ is optionally substituted with -CH=CH- or -C=C-, and in these groups, at least one hydrogen atom is optionally substituted with a fluorine or chlorine atom;

the ring $A^1$ and the ring $A^2$ are independently 1,2-cyclopropylene, 1,3-cyclobutylene, 1,3-cyclopentylene, 1,4-cyclohexylene, 1,4-cycloheptylene, 1,4-cyclohexenylene, 1,4-phenylene, naphthalene-2,6-diyl, decahydronaphthalene-2,6-diyl, 1,2,3,4-tetrahydronaphthalene-2,6-diyl, tetrahydropyran-2,5-diyl, 1,3-dioxane-2,5-diyl, pyrimidine-2,5-diyl, or pyridine-2,5-diyl, and in these rings, at least one hydrogen atom is optionally substituted with a fluorine atom, a chlorine atom, an alkyl group having 1 to 10 carbon atoms, an alkenyl group having 2 to 10 carbon atoms, an alkoxy group having 1 to 9 carbon atoms, or an alkenyloxy group having 2 to 9 carbon atoms, and in these groups, at least one hydrogen atom is optionally substituted with a fluorine or chlorine atom;

a is 0, 1, 2, 3, or 4;

$Z^1$ is a single bond or an alkylene group having 1 to 6 carbon atoms, and in the alkylene group, at least one $-CH_2-$ is optionally substituted with -O-, -CO-, -COO-, -OCO-, or -OCOO-, at least one $-(CH_2)_2-$ is optionally substituted with -CH=CH- or -C=C-, and in these groups, at least one hydrogen atom is optionally substituted with a fluorine or chlorine atom;

$Sp^1$, $Sp^2$, $Sp^3$, $Sp^4$, and $Sp^5$ are independently a single bond or an alkylene having 1 to 10 carbon atoms, and in the alkylene group, at least one $-CH_2-$ is optionally substituted with -O-,
-CO-, -COO-, -OCO-, or -OCOO-, at least one $-(CH_2)_2-$ is optionally substituted with -CH=CH- or -C≡C-, and in these groups, at least one hydrogen atom is optionally substituted with a fluorine or chlorine atom;

$M^1$, $M^2$, $M^3$, and $M^4$ are independently a hydrogen atom, a fluorine atom, a chlorine atom, an alkyl group having 1 to 5 carbon atoms, or an alkyl group having 1 to 5 carbon atoms in which at least one hydrogen atom is substituted with a fluorine or chlorine atom;

$R^2$ is an alkyl group having 1 to 5 carbon atoms, and in the alkyl group, at least one $-CH_2-$ is optionally substituted with -O- or -S-, at least one $-(CH_2)_2-$ is optionally substituted with -CH=CH- or -C=C-, and in these groups, at least one hydrogen atom is optionally substituted with a fluorine or chlorine atom;

$X^1$ is -OH, $-NH_2$, $-OR^3$, $-N(R^3)_2$, -COOH, -SH, or $-Si(R^3)_3$;

in $-OR^3$, $-N(R^3)_2$, and $-Si(R^3)_3$,

$R^3$ is a hydrogen atom or an alkyl group having 1 to 10 carbon atoms, and in the alkyl group, at least one $-CH_2-$ is

optionally substituted with -O-, at least one $-(CH_2)_2-$ is optionally substituted with -CH=CH-, and in these groups, at least one hydrogen atom is optionally substituted with a fluorine or chlorine atom;
when a is 1, both the ring $A^1$ and the ring $A^2$ are 1,4-cyclohexylene, $Z^1$ is a single bond, $Sp^2$, $Sp^3$, $Sp^4$, and $Sp^5$ are $-CH_2-$, $R^2$ is a methyl group, and when $X^1$ is -OH or $-OCH_3$, $Sp^1$ is not a single bond;
when a is 2, the ring on the side of $R^1$ is naphthalene-2,6-diyl, two rings on the side of $Sp^1$ are both 1,4-cyclohexylene, $Z^1$ is a single bond, $Sp^2$, $Sp^3$, $Sp^4$, and $Sp^5$ are $-CH_2-$, $R^2$ is a methyl group, and when $X^1$ is $-OCH_3$, $Sp^1$ is not a single bond; and
when a is 2, the ring on the side of $R^1$ is naphthalene-2,6-diyl, the center ring is 1,4-phenylene, the ring on the side of $Sp^1$ is 1,4-cyclohexylene, $Z^1$ is a single bond, $Sp^2$, $Sp^3$, $Sp^4$, and $Sp^5$ are $-CH_2-$, $R^2$ is a methyl group, and when $X^1$ is $-OCH_3$, $Sp^1$ is not a single bond.

Item 2.

The compound according to Item 1,
wherein, in Formula (1), $Z^1$ is a single bond, $-(CH_2)_2-$, $-(CH_2)_4-$, -CH=CH-, -C≡C-, -COO-, -OCO-, $-CF_2O-$, $-OCF_2-$, $-CH_2O-$, $-OCH_2-$, or -CF=CF-.

Item 3.

The compound according to Item 1 or 2,
wherein, in Formula (1), the ring $A^1$ and the ring $A^2$ are independently 1,4-cyclohexylene, 1,4-cyclohexenylene, 1,4-phenylene, naphthalene-2,6-diyl, tetrahydropyran-2,5-diyl, 1,3-dioxane-2,5-diyl, pyrimidine-2,5-diyl, or pyridine-2,5-diyl, and in these rings, at least one hydrogen atom is optionally substituted with a fluorine atom, a chlorine atom, an alkyl group having 1 to 10 carbon atoms, an alkenyl group having 2 to 10 carbon atoms, an alkoxy group having 1 to 9 carbon atoms, or an alkenyloxy group having 2 to 9 carbon atoms, and in these groups, at least one hydrogen atom is optionally substituted with a fluorine or chlorine atom.

Item 4.

The compound according to any one of Items 1 to 3 represented by any one of Formula (1-1) to Formula (1-4).

[Chem. 5]

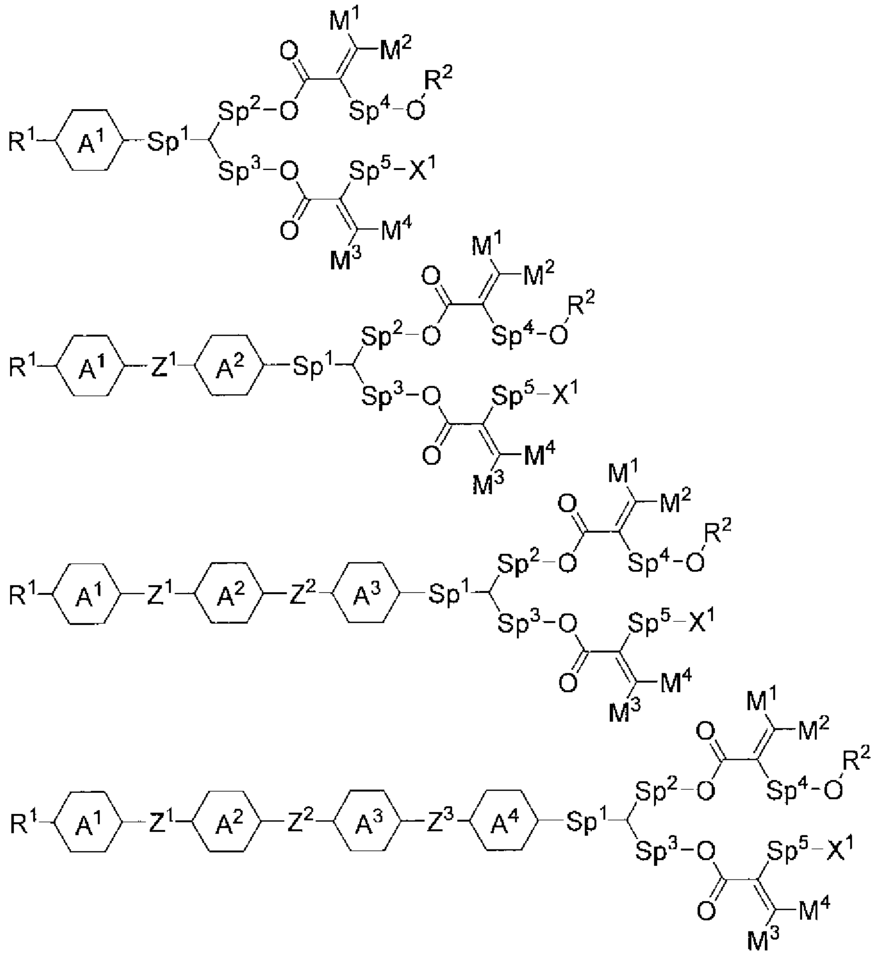

(1-1)

(1-2)

(1-3)

(1-4)

In Formula (1-1) to Formula (1-4),

$R^1$ is an alkyl group having 1 to 15 carbon atoms, an alkenyl group having 2 to 15 carbon atoms, an alkoxy group having 1 to 14 carbon atoms, or an alkenyloxy group having 2 to 14 carbon atoms, and in these groups, at least one hydrogen atom is optionally substituted with a fluorine atom;

the ring $A^1$, the ring $A^2$, the ring $A^3$, and the ring $A^4$ are independently 1,4-cyclohexylene, 1,4-cyclohexenylene, 1,4-phenylene, naphthalene-2,6-diyl, tetrahydropyran-2,5-diyl, or 1,3-dioxane-2,5-diyl, and in these rings, at least one hydrogen atom is optionally substituted with a fluorine atom, an alkyl group having 1 to 10 carbon atoms, an alkenyl group having 2 to 10 carbon atoms, an alkoxy group having 1 to 9 carbon atoms, or an alkenyloxy group having 2 to 9 carbon atoms, and in these groups, at least one hydrogen atom is optionally substituted with a fluorine atom;

$Z^1$, $Z^2$, and $Z^3$ are independently a single bond, $-(CH_2)_2-$, -CH=CH-, -C≡C-, -COO-, -OCO-, $-CF_2O-$, $-OCF_2-$, $-CH_2O-$, $-OCH_2-$, or -CF=CF-;

$Sp^1$, $Sp^2$, $Sp^3$, $Sp^4$, and $Sp^5$ are independently a single bond or an alkylene group having 1 to 7 carbon atoms, and in the alkylene group, at least one $-CH_2-$ is optionally substituted with -O-, -COO-, or -OCO-, at least one $-(CH_2)_2-$ is optionally substituted with -CH=CH-, and in these groups, at least one hydrogen atom is optionally substituted with a fluorine atom;

$M^1$, $M^2$, $M^3$, and $M^4$ are independently a hydrogen atom, a fluorine atom, an alkyl group having 1 to 5 carbon atoms, or an alkyl group having 1 to 5 carbon atoms in which at least one hydrogen atom is substituted with a fluorine atom;

$R^2$ is an alkyl group having 1 to 5 carbon atoms, and in the alkyl group, at least one $-CH_2-$ is optionally substituted with -O-;

$X^1$ is -OH, $-NH_2$, or -SH;

in Formula (1-2),

both the ring $A^1$ and the ring $A^2$ are 1,4-cyclohexylene, $Z^1$ is a single bond, $Sp^2$, $Sp^3$, $Sp^4$, and $Sp^5$ are $-CH_2-$, $R^2$ is a methyl group, and when $X^1$ is -OH, $Sp^1$ is not a single bond.

Item 5.

The compound according to any one of Items 1 to 4 represented by any one of Formula (1-5) to Formula (1-7).

[Chem. 6]

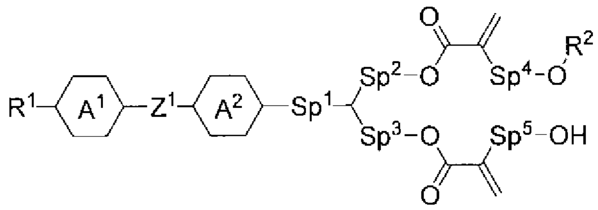

(1-5)

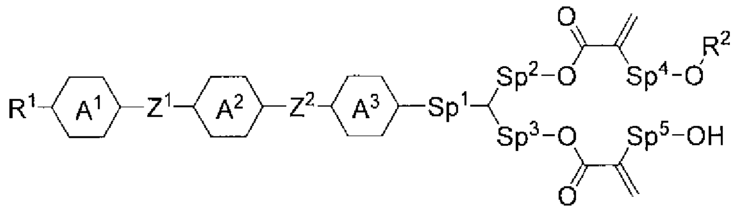

(1-6)

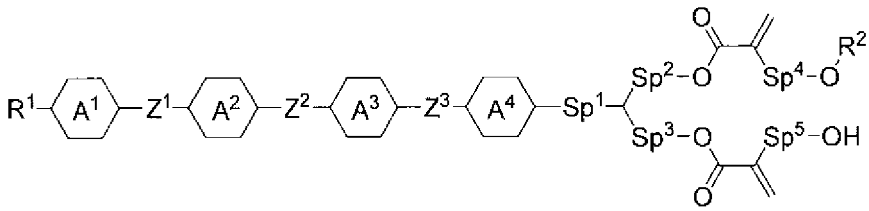

(1-7)

In Formula (1-5) to Formula (1-7),

$R^1$ is an alkyl group having 1 to 10 carbon atoms, an alkenyl group having 2 to 10 carbon atoms, or an alkoxy group having 1 to 9 carbon atoms;
the ring $A^1$, the ring $A^2$, the ring $A^3$, and the ring $A^4$ are independently 1,4-cyclohexylene, 1,4-cyclohexenylene, 1,4-phenylene, naphthalene-2,6-diyl, tetrahydropyran-2,5-diyl, or 1,3-dioxane-2,5-diyl, and in these rings, at least one hydrogen atom is optionally substituted with a fluorine atom, an alkyl group having 1 to 5 carbon atoms, an alkenyl group having 2 to 5 carbon atoms, or an alkoxy group having 1 to 4 carbon atoms;
$Z^1$, $Z^2$, and $Z^3$ are independently a single bond, $-(CH_2)_2-$, -CH=CH-, -C≡C-, $-CH_2O-$, or $-OCH_2-$;
$Sp^1$, $Sp^2$, $Sp^3$, $Sp^4$, and $Sp^5$ are independently a single bond or an alkylene group having 1 to 5 carbon atoms, and in the alkylene group, at least one $-CH_2-$ is optionally substituted with -O-, and at least one $-(CH_2)_2-$ is optionally substituted with -CH=CH-;
$R^2$ is an alkyl group having 1 to 3 carbon atoms;
in Formula (1-5),
both the ring $A^1$ and the ring $A^2$ are 1,4-cyclohexylene, $Z^1$ is a single bond, $Sp^2$, $Sp^3$, $Sp^4$, and $Sp^5$ are $-CH_2-$, and when $R^2$ is a methyl group, $Sp^1$ is not a single bond.

Item 6.

The compound according to any one of Items 1 to 5 represented by any one of Formula (1-8) to Formula (1-16).

[Chem. 7]

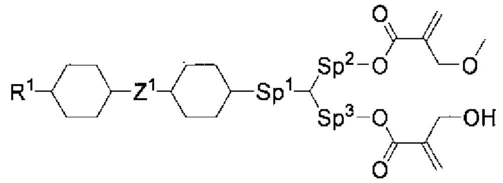

(1-8)

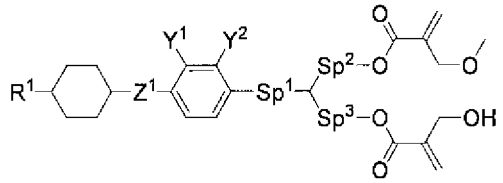

(1-9)

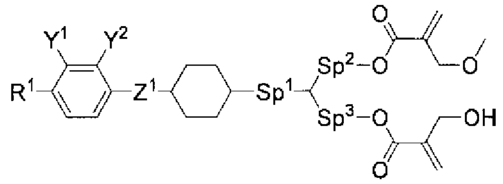

(1-10)

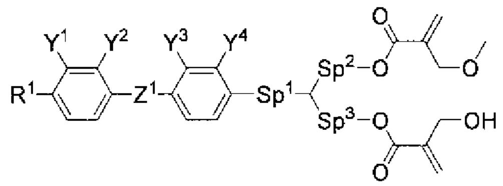

(1-11)

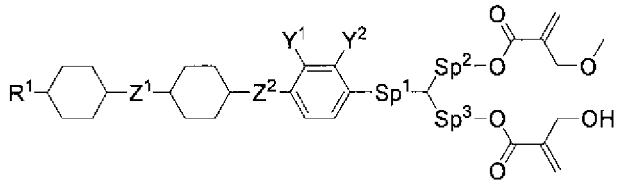

(1-12)

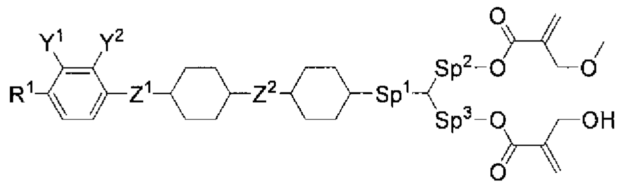

(1-13)

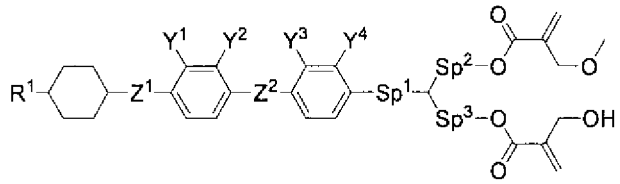

(1-14)

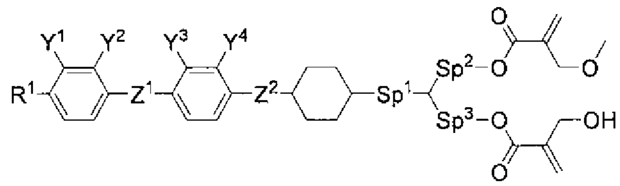

(1-15)

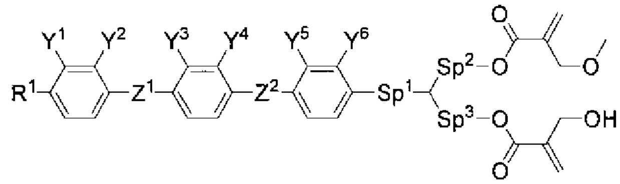

(1-16)

In Formula (1-8) to Formula (1-16),

$R^1$ is an alkyl group having 1 to 10 carbon atoms, an alkenyl group having 2 to 10 carbon atoms, or an alkoxy group having 1 to 9 carbon atoms;
$Z^1$ and $Z^2$ are independently a single bond or $-(CH_2)_2-$;
$Sp^1$, $Sp^2$, and $Sp^3$ are independently a single bond or an alkylene group having 1 to 5 carbon atoms, and in the alkylene group, at least one $-CH_2-$ is optionally substituted with -O-;
$Y^1$, $Y^2$, $Y^3$, $Y^4$, $Y^5$, and $Y^6$ are independently a hydrogen atom, a fluorine atom, an alkyl group having 1 to 5 carbon atoms, an alkenyl group having 2 to 5 carbon atoms, or an alkoxy group having 1 to 4 carbon atoms;
in Formula (1-8),
$Z^1$ is a single bond, and when $Sp^2$ and $Sp^3$ are $-CH_2-$, $Sp^1$ is not a single bond.

Item 7.

The compound according to any one of Items 1 to 6 represented by any one of Formula (1-17) to Formula (1-23).

[Chem. 8]

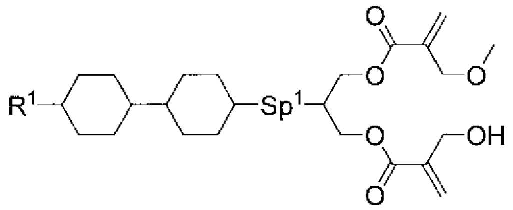

(1-17)

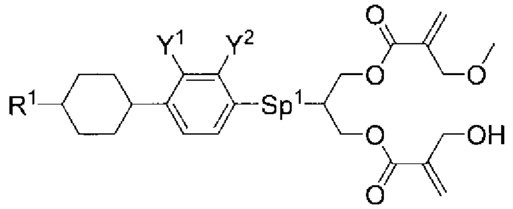

(1-18)

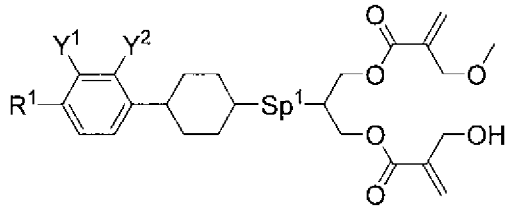

(1-19)

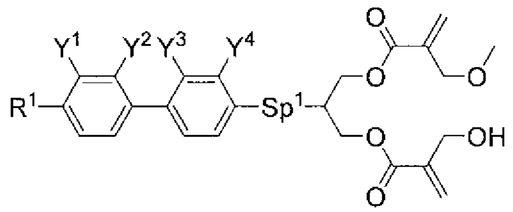

(1-20)

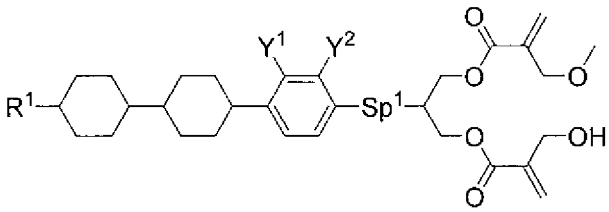

(1-21)

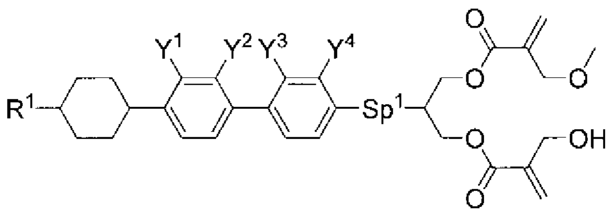

(1-22)

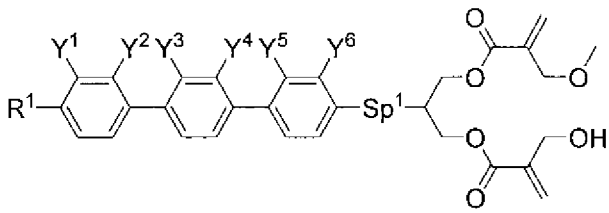

(1-23)

In Formula (1-17) to Formula (1-23),

$R^1$ is an alkyl group having 1 to 10 carbon atoms;
$Y^1$, $Y^2$, $Y^3$, $Y^4$, $Y^5$, and $Y^6$ are independently a hydrogen atom, a fluorine atom, a methyl group, or an ethyl group
$Sp^1$ is a single bond or an alkylene group having 1 to 5 carbon atoms, and in the alkylene group, at least one $-CH_2-$ is optionally substituted with -O-;
in Formula (1-17),

$Sp^1$ is not a single bond.

Item 8.

A liquid crystal composition containing at least one of the compounds according to any one of Items 1 to 7.

Item 9.

The liquid crystal composition according to Item 8 including at least one compound selected from the group consisting of compounds represented by Formula (2) to (4).

[Chem. 9]

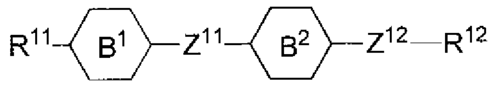
(2)

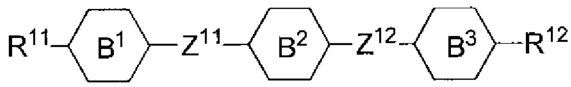
(3)

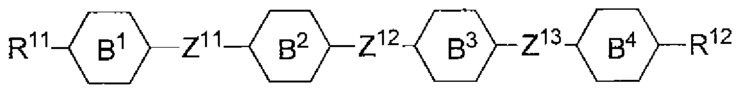
(4)

In Formulae (2) to (4),

$R^{11}$ and $R^{12}$ are independently an alkyl group having 1 to 10 carbon atoms or an alkenyl group having 2 to 10 carbon atoms, and in the alkyl and alkenyl groups, at least one $-CH_2-$ is optionally substituted with -O-, and in these groups, at least one hydrogen atom is optionally substituted with a fluorine atom;
the ring $B^1$, the ring $B^2$, the ring $B^3$, and the ring $B^4$ are independently 1,4-cyclohexylene, 1,4-phenylene, 2-fluoro-1,4-phenylene, 2,5-difluoro-1,4-phenylene, or pyrimidine-2,5-diyl; and
$Z^{11}$, $Z^{12}$, and $Z^{13}$ are independently a single bond, -COO-, $-CH_2CH_2-$, -CH=CH-, or -C≡C-.

Item 10.

The liquid crystal composition according to Item 8 or 9 including at least one compound selected from the group consisting of compounds represented by Formulae (5) to (7).

[Chem. 10]

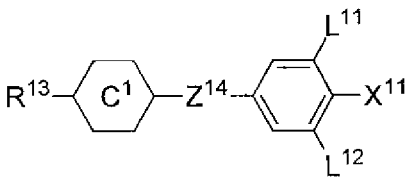
(5)

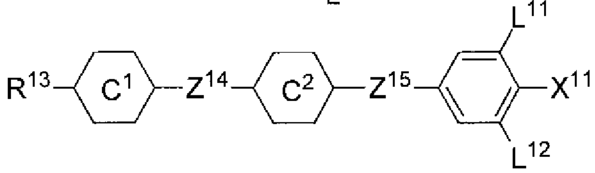
(6)

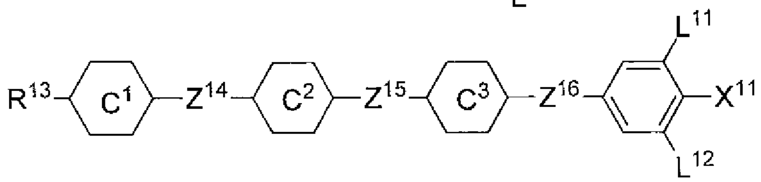
(7)

In Formulae (5) to (7),

$R^{13}$ is an alkyl group having 1 to 10 carbon atoms or an alkenyl group having 2 to 10 carbon atoms, and in the alkyl and alkenyl groups, at least one $-CH_2-$ is optionally substituted with -O-, and in these groups, at least one hydrogen atom is optionally substituted with a fluorine atom;
$X^{11}$ is a fluorine atom, a chlorine atom, $-OCF_3$, $-OCHF_2$, $-CF_3$, $-CHF_2$, $-CH_2F$, $-OCF_2CHF_2$, or $-OCF_2CHFCF_3$;
the ring $C^1$, the ring $C^2$, and the ring $C^3$ are independently 1,4-cyclohexylene, 1,4-phenylene, tetrahydropyran-2,5-diyl, 1,3-dioxane-2,5-diyl, pyrimidine-2,5-diyl, or 1,4-phenylene in which at least one hydrogen atom is substituted with a fluorine atom;
$Z^{14}$, $Z^{15}$, and $Z^{16}$ are independently a single bond, -COO-, -OCO-, $-CH_2O-$, $-OCH_2-$, $-CF_2O-$, $-OCF_2-$, $-CH_2CH_2-$, -CH=CH-, -C=C-, or $-(CH_2)_4-$;
$L^{11}$ and $L^{12}$ are independently a hydrogen or fluorine atom.

Item 11.

The liquid crystal composition according to any one of Items 8 to 10 including at least one compound selected from the group consisting of compounds represented by Formula (8).

[Chem. 11]

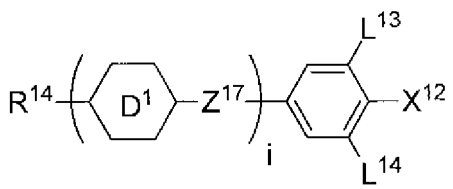

(8)

In Formula (8),

$R^{14}$ is an alkyl group having 1 to 10 carbon atoms or an alkenyl group having 2 to 10 carbon atoms, and in the alkyl and alkenyl groups, at least one $-CH_2-$ is optionally substituted with -O-, and in these groups, at least one hydrogen atom is optionally substituted with a fluorine atom;
$X^{12}$ is -C=N or -C=C-C=N;
the ring $D^1$ is 1,4-cyclohexylene, 1,4-phenylene, tetrahydropyran-2,5-diyl, 1,3-dioxane-2,5-diyl, pyrimidine-2,5-diyl, or 1,4-phenylene in which at least one hydrogen atom is substituted with a fluorine atom;
$Z^{17}$ is a single bond, -COO-, -OCO-, $-CH_2O-$, $-OCH_2-$, $-CF_2O-$, $-OCF_2-$, $-CH_2CH_2-$, or -C≡C-;
$L^{13}$ and $L^{14}$ are independently a hydrogen or fluorine atom; and
i is 1, 2, 3, or 4.

Item 12.

The liquid crystal composition according to any one of Items 8 to 11 including at least one compound selected from the group consisting of compounds represented by Formulae (11) to (19).

[Chem. 12]

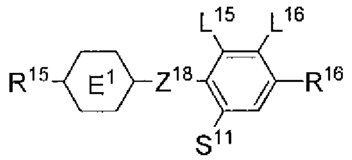

(11)

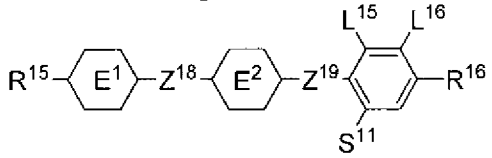

(12)

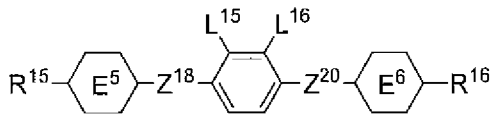

(13)

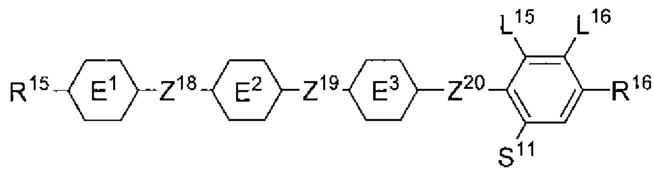

(14)

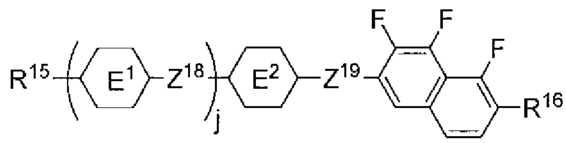

(15)

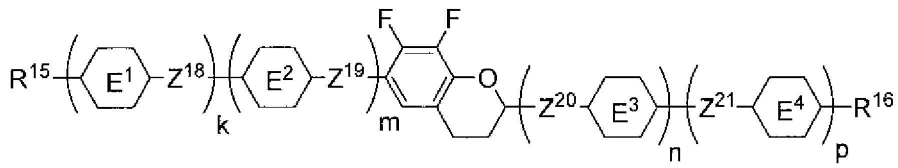

(16)

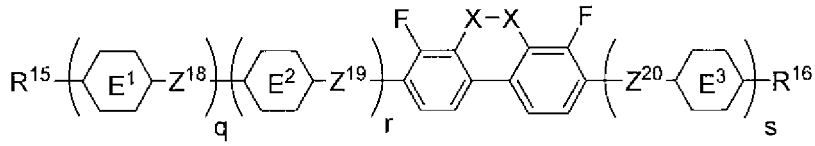

(17)

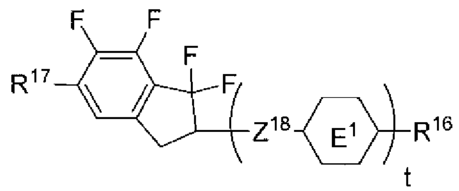

(18)

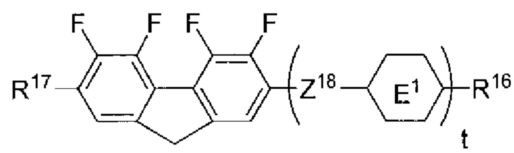

(19)

In Formulae (11) to (19),

$R^{15}$, $R^{16}$, and $R^{17}$ are independently an alkyl group having 1 to 10 carbon atoms or an alkenyl group having 2 to 10 carbon atoms, and in the alkyl and alkenyl groups, at least one $-CH_2-$ is optionally substituted with -O-, and in these groups, at least one hydrogen atom is optionally substituted with a fluorine atom and $R^{17}$ may be a hydrogen or fluorine atom;

the ring $E^1$, the ring $E^2$, the ring $E^3$, and the ring $E^4$ are independently 1,4-cyclohexylene, 1,4-cyclohexenylene, 1,4-phenylene, tetrahydropyran-2,5-diyl, decahydronaphthalene-2,6-diyl, or 1,4-phenylene in which at least one hydrogen atom is substituted with a fluorine atom;

the ring $E^5$ and the ring $E^6$ are independently 1,4-cyclohexylene, 1,4-cyclohexenylene, 1,4-phenylene, tetrahydropyran-2,5-diyl, or decahydronaphthalene-2,6-diyl;
$Z^{18}$, $Z^{19}$, $Z^{20}$, and $Z^{21}$ are independently a single bond, -COO-, -OCO-, $-CH_2O-$, $-OCH_2-$, $-CF_2O-$, $-OCF_2-$, $-CH_2CH_2-$, $-CF_2OCH_2CH_2-$, or $-OCF_2CH_2CH_2-$;
$L^{15}$ and $L^{16}$ are independently a fluorine or chlorine atom;
$S^{11}$ is a hydrogen atom or a methyl group;
X is -CHF- or $-CF_2-$;
j, k, m, n, p, q, r, and s are independently 0 or 1, a sum of k, m, n, and p is 1 or 2, and a sum of q, r, and s is 0, 1, 2, or 3, t is 1, 2, or 3.

Item 13.

The liquid crystal composition according to any one of Items 8 to 12 including at least one polymerizable compound represented by Formula (20) other than the compound represented by Formula (1).

[Chem. 13]

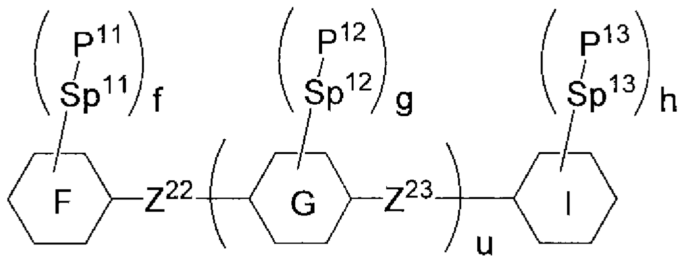

(20)

In Formula (20),

the ring F and the ring I are independently cyclohexyl, cyclohexenyl, phenyl, 1-naphthyl, 2-naphthyl, tetrahydropyran-2-yl, 1,3-dioxan-2-yl, pyrimidin-2-yl, or pyridin-2-yl, and in these rings, at least one hydrogen atom is optionally substituted with a halogen atom, an alkyl group having 1 to 12 carbon atoms, an alkoxy group having 1 to 12 carbon atoms, or an alkyl group having 1 to 12 carbon atoms in which at least one hydrogen atom is substituted with a halogen atom;
the ring G is 1,4-cyclohexylene, 1,4-cyclohexenylene, 1,4-phenylene, naphthalene-1,2-diyl, naphthalene-1,3-diyl, naphthalene-1,4-diyl, naphthalene-1,5-diyl, naphthalene-1,6-diyl, naphthalene- 1,7-diyl, naphthalene-1,8-diyl, naphthalene-2,3-diyl, naphthalene-2,6-diyl, naphthalene-2,7-diyl, phenanthrene-2,7-diyl, tetrahydropyran-2,5-diyl, 1,3-dioxane-2,5-diyl, pyrimidine-2,5-diyl, or pyridine-2,5-diyl, and in these rings, at least one hydrogen atom is optionally substituted with a halogen atom, an alkyl group having 1 to 12 carbon atoms, an alkoxy group having 1 to 12 carbon atoms, or an alkyl group having 1 to 12 carbon atoms in which at least one hydrogen atom is substituted with a halogen atom;
$Z^{22}$ and $Z^{23}$ are independently a single bond or an alkylene having 1 to 10 carbon atoms, and in the alkylene group, at least one $-CH_2-$ is optionally substituted with -O-, -CO-, -COO-, or -OCO-, and at least one $-CH_2CH_2-$ is optionally substituted with -CH=CH-, $-C(CH_3)=CH-$, $-CH=C(CH_3)-$, or $-C(CH_3)=C(CH_3)-$, and in these groups, at least one hydrogen atom is optionally substituted with a fluorine or chlorine atom;
$P^{11}$, $P^{12}$, and $P^{13}$ are independently a polymerizable group;
$Sp^{11}$, $Sp^{12}$, and $Sp^{13}$ are independently a single bond or an alkylene having 1 to 10 carbon atoms, and in the alkylene group, at least one $-CH_2-$ is optionally substituted with -O-, -COO-, -OCO-, or -OCOO-, and at least one $-CH_2CH_2-$ is optionally substituted with -CH=CH- or -C≡C-, and in these groups, at least one hydrogen atom is optionally substituted with a fluorine or chlorine atom;
u is 0, 1, or 2; and
f, g, and h are independently 0, 1, 2, 3, or 4, and a sum of f, g, and h is 1 or more.

Item 14.

The liquid crystal composition according to Item 13,
wherein, in Formula (20), $P^{11}$, $P^{12}$, and $P^{13}$ are independently a group selected from the group consisting of polymerizable groups represented by Formula (P-1) to Formula (P-5).

[Chem. 14]

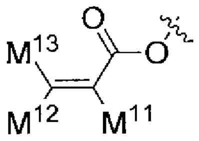
(P-1)

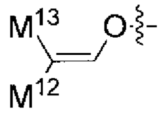
(P-2)

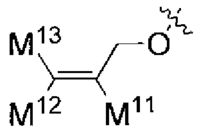
(P-3)

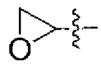
(P-4)

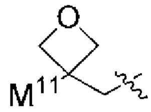
(P-5)

In Formula (P-1) to Formula (P-5),
$M^{11}$, $M^{12}$, and $M^{13}$ are independently a hydrogen atom, a fluorine atom, an alkyl group having 1 to 5 carbon atoms, or an alkyl group having 1 to 5 carbon atoms in which at least one hydrogen atom is substituted with a halogen atom.

Item 15.

The liquid crystal composition according to Item 13 or 14,
wherein the polymerizable compound represented by Formula (20) is at least one compound selected from the group consisting of polymerizable compounds represented by Formula (20-1) to Formula (20-7).

[Chem. 15]

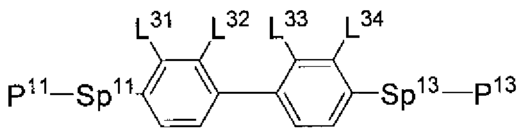

(20-1)

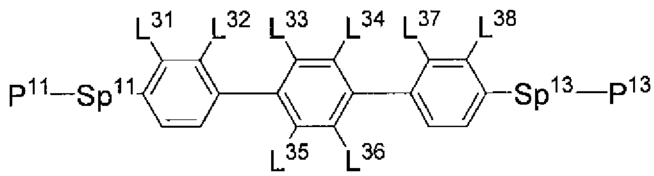

(20-2)

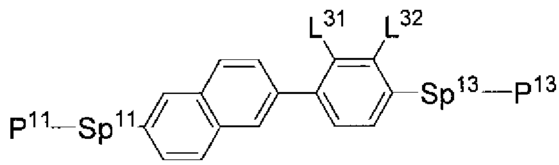

(20-3)

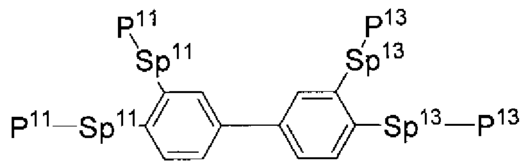

(20-4)

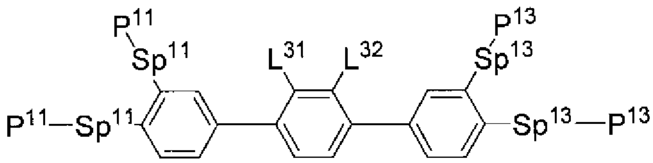

(20-5)

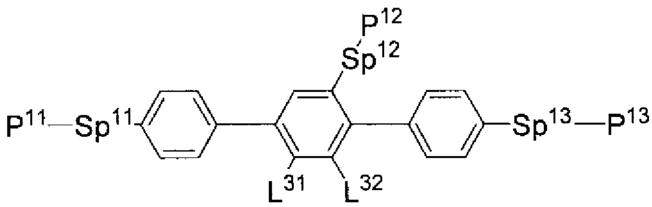

(20-6)

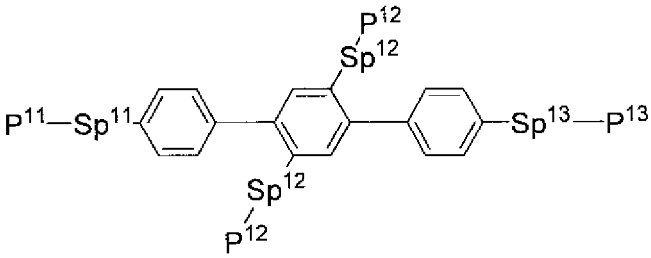

(20-7)

In Formula (20-1) to Formula (20-7),

$L^{31}$, $L^{32}$, $L^{33}$, $L^{34}$, $L^{35}$, $L^{36}$, $L^{37}$, and $L^{38}$ are independently a hydrogen atom, a fluorine atom or a methyl group;
$Sp^{11}$, $Sp^{12}$, and $Sp^{13}$ are independently a single bond or an alkylene having 1 to 10 carbon atoms, and in the alkylene group, at least one $-CH_2-$ is optionally substituted with -O-, -COO-, -OCO-, or -OCOO-, and at least one $-CH_2CH_2-$ is optionally substituted with -CH=CH- or -C≡C-, and in these groups, at least one hydrogen atom is optionally substituted with a fluorine or chlorine atom.
$P^{11}$, $P^{12}$, and $P^{13}$ are independently a group selected from the group consisting of polymerizable groups represented by Formula (P-1) to Formula (P-3),

[Chem. 16]

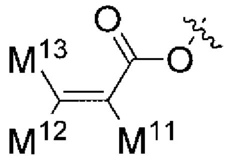

(P-1)

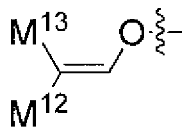

(P-2)

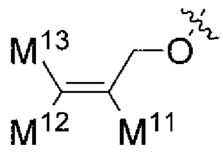

(P-3)

In Formula (P-1) to Formula (P-3),
$M^{11}$, $M^{12}$, and $M^{13}$ are independently a hydrogen atom, a fluorine atom, an alkyl group having 1 to 5 carbon atoms, or an alkyl group having 1 to 5 carbon atoms in which at least one hydrogen atom is substituted with a halogen atom.

Item 16.

The liquid crystal composition according to any one of Items 8 to 15, containing at least one selected from the group consisting of a polymerizable compound different from compounds represented by Formula (1) and Formula (20), a polymerization initiator, a polymerization inhibitor, an optically active compound, an antioxidant, a UV absorber, a light stabilizer, a heat stabilizer, a dye, and an antifoaming agent.

[Chem. 17]

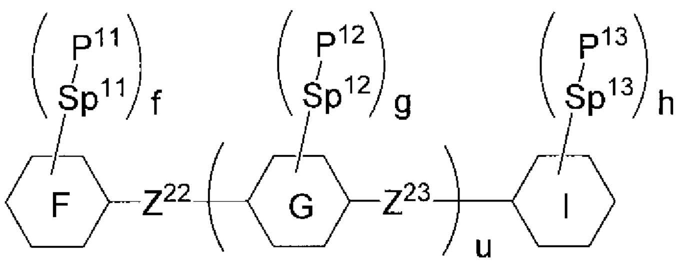

(20)

In Formula (20),

the ring F and the ring I are independently cyclohexyl, cyclohexenyl, phenyl, 1-naphthyl, 2-naphthyl, tetrahydropyran-2-yl, 1,3-dioxan-2-yl, pyrimidin-2-yl, or pyridin-2-yl, and in these rings, at least one hydrogen atom is optionally substituted with a halogen atom, an alkyl group having 1 to 12 carbon atoms, an alkoxy group having 1 to 12 carbon atoms, or an alkyl group having 1 to 12 carbon atoms in which at least one hydrogen atom is substituted with a halogen atom;
the ring G is 1,4-cyclohexylene, 1,4-cyclohexenylene, 1,4-phenylene, naphthalene-1,2-diyl, naphthalene-1,3-diyl, naphthalene-1,4-diyl, naphthalene-1,5-diyl, naphthalene-1,6-diyl, naphthalene- 1,7-diyl, naphthalene-1,8-diyl, naphthalene-2,3-diyl, naphthalene-2,6-diyl, naphthalene-2,7-diyl, phenanthrene-2,7-diyl, tetrahydropyran-2,5-diyl, 1,3-dioxane-2,5-diyl, pyrimidine-2,5-diyl, or pyridine-2,5-diyl, and in these rings, at least one hydrogen atom is optionally substituted with a halogen atom, an alkyl group having 1 to 12 carbon atoms, an alkoxy group having 1 to 12 carbon

atoms, or an alkyl group having 1 to 12 carbon atoms in which at least one hydrogen atom is substituted with a halogen atom;
$Z^{22}$ and $Z^{23}$ are independently a single bond or an alkylene having 1 to 10 carbon atoms, and in the alkylene group, at least one $-CH_2-$ is optionally substituted with -O-, -CO-, -COO-, or -OCO-, and at least one $-CH_2CH_2-$ is optionally substituted with -CH=CH-, -C(CH3)=CH-, -CH=C(CH3)-, or $-C(CH_3)=C(CH_3)-$, and in these groups, at least one hydrogen atom is optionally substituted with a fluorine or chlorine atom;
$P^{11}$, $P^{12}$, and $P^{13}$ are independently a polymerizable group;
$Sp^{11}$, $Sp^{12}$, and $Sp^{13}$ are independently a single bond or an alkylene having 1 to 10 carbon atoms, and in the alkylene group, at least one $-CH_2-$ is optionally substituted with -O-, -COO-, -OCO-, or -OCOO-, and at least one $-CH_2CH_2-$ is optionally substituted with -CH=CH- or -C≡C-, and in these groups, at least one hydrogen atom is optionally substituted with a fluorine or chlorine atom;
u is 0, 1, or 2; and
f, g, and h are independently 0, 1, 2, 3, or 4, and a sum of f, g, and h is 1 or more.

Item 17.

A liquid crystal display element containing at least one selected from the group consisting of products obtained by polymerizing at least some of the liquid crystal composition according to any one of Items 8 to 16 and the liquid crystal composition according to any one of Items 8 to 16.
The disclosure includes the following items.

(a) The liquid crystal composition further containing at least two of additives such as a polymerizable compound, a polymerization initiator, a polymerization inhibitor, an optically active compound, an antioxidant, a UV absorber, a light stabilizer, a heat stabilizer, a dye, and an antifoaming agent.
(b) A polymerizable composition prepared by adding a polymerizable compound different from Compound (1) and Compound (20) to the liquid crystal composition.
(c) A polymerizable composition prepared by adding Compound (1) and Compound (20) to the liquid crystal composition.
(d) A liquid crystal composite prepared by polymerizing the polymerizable composition.
(e) A polymer sustained alignment type element containing the liquid crystal composite.
(f) A polymer sustained alignment type element produced using a polymerizable composition prepared by adding Compound (1) and Compound (20), and a polymerizable compound different from Compound (1) and Compound (20) to the liquid crystal composition.

Forms of Compound (1), synthesis of Compound (1), a liquid crystal composition, and a liquid crystal display element will be described below in order.

1. Forms of Compound (1)

Compound (1) of the disclosure has a mesogenic site constituted by at least one ring, at least one polar group, and two or more polymerizable groups, and particularly, has a branched spacer moiety ($Sp^1$ below) bonded to the ring, and a polymerizable group and a polar group ($X^1$ below) on at least one side and at least a polymerizable group on the other side. Compound (1) is beneficial because a polar group non-covalently interacts with a surface of a substrate such as a glass (or a metal oxide) substrate. One of applications is an additive for a liquid crystal composition used for a liquid crystal display element. In this application, Compound (1) is added in order to control the alignment of liquid crystal molecules. It is preferable for such an additive to be chemically stable under conditions in which it is sealed in the element, and to have a high ability to align liquid crystal molecules and high solubility in a liquid crystal composition, and when the additive is used for a liquid crystal display element, it is preferable in that a liquid crystal display element having a high voltage holding ratio can be obtained. Compound (1) has such properties to a considerable extent, and has extremely high solubility in a liquid crystal composition which was not possible to obtain in compounds of the related art. When Compound (1) is used, it is possible to easily obtain an element having excellent long-term stability while alignment properties and a voltage holding ratio are maintained to the same degree as or higher than in a case in which compounds of the related art are used.
Preferable examples of Compound (1) will be described. Preferable examples of symbols such as $R^1$, $A^1$, and $Sp^1$ in Compound (1) also apply to sub-formulas of Compound (1), for example, Formula (1-1). In Compound (1), when types of these groups are appropriately combined, it is possible to arbitrarily adjust properties. Compound (1) may contain a larger amount of isotopes such as $^2H$ (deuterium) and $^{13}C$ than a natural abundance of isotopes since there are no significant differences in properties of such compounds.

[Chem. 18]

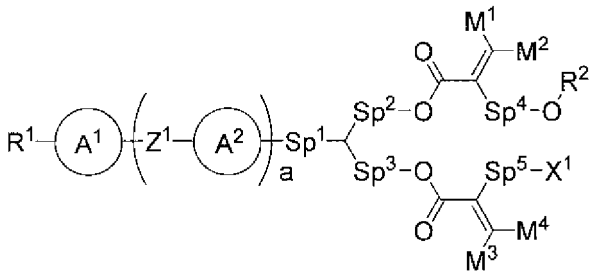

(1)

$R^1$ is a hydrogen atom or an alkyl group having 1 to 15 carbon atoms, and in the alkyl group, at least one $-CH_2-$ is optionally substituted with -O- or -S-, at least one $-(CH_2)_2-$ is optionally substituted with -CH=CH- or -C=C-, and in these groups, at least one hydrogen atom is optionally substituted with a fluorine or chlorine atom.

Preferably, $R^1$ is an alkyl group having 1 to 15 carbon atoms, an alkenyl group having 2 to 15 carbon atoms, an alkoxy group having 1 to 14 carbon atoms, or an alkenyloxy group having 2 to 14 carbon atoms, and in these groups, at least one hydrogen atom is optionally substituted with a fluorine atom.

More preferably, $R^1$ is an alkyl group having 1 to 10 carbon atoms, an alkenyl group having 2 to 10 carbon atoms, or an alkoxy group having 1 to 9 carbon atoms.

Particularly preferably, $R^1$ is an alkyl group having 1 to 10 carbon atoms.

A compound in which $R^1$ is an alkyl group having 1 to 15 carbon atoms or an alkoxy group having 1 to 14 carbon atoms tends to have high chemical stability. A compound in which $R^1$ is an alkyl group having 1 to 15 carbon atoms, an alkenyl group having 2 to 15 carbon atoms, or an alkenyloxy group having 2 to 14 carbon atoms tends to have high solubility in a liquid crystal composition. A compound in which $R^1$ is an alkyl group having 1 to 15 carbon atoms tends to have a high ability to align liquid crystal molecules.

The ring $A^1$ and the ring $A^2$ are independently 1,2-cyclopropylene, 1,3-cyclobutylene, 1,3-cyclopentylene, 1,4-cyclohexylene, 1,4-cycloheptylene, 1,4-cyclohexenylene, 1,4-phenylene, naphthalene-2,6-diyl, decahydronaphthalene-2,6-diyl, 1,2,3,4-tetrahydronaphthalene-2,6-diyl, tetrahydropyran-2,5-diyl, 1,3-dioxane-2,5-diyl, pyrimidine-2,5-diyl, or pyridine-2,5-diyl, and in these rings, at least one hydrogen atom is optionally substituted with a fluorine atom, a chlorine atom, an alkyl group having 1 to 10 carbon atoms, an alkenyl group having 2 to 10 carbon atoms, an alkoxy group having 1 to 9 carbon atoms, or an alkenyloxy group having 2 to 9 carbon atoms, and in these groups, at least one hydrogen atom is optionally substituted with a fluorine or chlorine atom.

Preferably, the ring $A^1$ and the ring $A^2$ are 1,4-cyclohexylene, 1,4-cyclohexenylene, 1,4-phenylene, naphthalene-2,6-diyl, tetrahydropyran-2,5-diyl, 1,3-dioxane-2,5-diyl, pyrimidine-2,5-diyl, or pyridine-2,5-diyl, and in these rings, at least one hydrogen atom is optionally substituted with a fluorine atom, a chlorine atom, an alkyl group having 1 to 10 carbon atoms, an alkenyl group having 2 to 10 carbon atoms, an alkoxy group having 1 to 9 carbon atoms, or an alkenyloxy group having 2 to 9 carbon atoms, and in these groups, at least one hydrogen atom is optionally substituted with a fluorine or chlorine atom.

More preferably, the ring $A^1$ and the ring $A^2$ are 1,4-cyclohexylene, 1,4-cyclohexenylene, 1,4-phenylene, naphthalene-2,6-diyl, tetrahydropyran-2,5-diyl, or 1,3-dioxane-2,5-diyl, and in these rings, at least one hydrogen atom is optionally substituted with a fluorine atom, an alkyl group having 1 to 10 carbon atoms, an alkenyl group having 2 to 10 carbon atoms, an alkoxy group having 1 to 9 carbon atoms, or an alkenyloxy group having 2 to 9 carbon atoms, and in these groups, at least one hydrogen atom is optionally substituted with a fluorine atom.

Most preferably, the ring $A^1$ and the ring $A^2$ are 1,4-cyclohexylene, 1,4-cyclohexenylene, 1,4-phenylene, naphthalene-2,6-diyl, tetrahydropyran-2,5-diyl, or 1,3-dioxane-2,5-diyl, and in these rings, at least one hydrogen atom is optionally substituted with a fluorine atom, an alkyl group having 1 to 5 carbon atoms, an alkenyl group having 2 to 5 carbon atoms, or an alkoxy group having 1 to 4 carbon atoms.

Particularly preferably, the ring $A^1$ and the ring $A^2$ are 1,4-cyclohexylene, 1,4-phenylene, or 1,4-phenylene substituted at position 2, position 3, or positions 2 and 3. The substituent is preferably a hydrogen atom, a fluorine atom, an alkyl group having 1 to 5 carbon atoms, an alkenyl group having 2 to 5 carbon atoms, or an alkoxy group having 1 to 4 carbon atoms, and more preferably, a hydrogen atom, a fluorine atom, a methyl group, or an ethyl group.

A compound in which the ring $A^1$ and the ring $A^2$ are independently 1,3-cyclopentylene, 1,4-cyclohexylene, 1,4-cycloheptylene, 1,4-phenylene, 1,4-phenylene in which at least one hydrogen atom is substituted with a fluorine atom, 1,4-phenylene in which at least one hydrogen atom is substituted with an alkyl group having 1 to 5 carbon atoms, decahydronaphthalene-2,6-diyl, or tetrahydropyran-2,5-diyl tends to have high chemical stability. A compound in which the ring $A^1$ and the ring $A^2$ are independently 1,4-cyclohexylene, 1,4-cyclohexenylene, 1,4-phenylene, 1,4-phenylene in which at least one hydrogen atom is substituted with a fluorine atom, 1,4-phenylene in which at least one hydrogen

atom is substituted with an alkyl group having 1 to 5 carbon atoms, or 1,4-phenylene in which at least one hydrogen atom is substituted with an alkenyl group having 2 to 5 carbon atoms tends to have high solubility in a liquid crystal composition. A compound in which the ring $A^1$ and the ring $A^2$ are independently 1,4-cyclohexylene, 1,4-phenylene, or 1,4-phenylene in which at least one hydrogen atom is substituted with an alkyl group having 1 to 2 carbon atoms tends to have a high ability to align liquid crystal molecules. A compound in which the ring $A^1$ and the ring $A^2$ are independently 1,4-phenylene, 1,4-phenylene in which at least one hydrogen atom is substituted with an alkyl group having 1 to 5 carbon atoms, 1,4-phenylene in which at least one hydrogen atom is substituted with an alkoxy group having 1 to 4 carbon atoms, naphthalene-2,6-diyl, pyrimidine-2,5-diyl, or pyridine-2,5-diyl tends to have high polymerization reactivity according to ultraviolet radiation.

a is 0, 1, 2, 3, or 4, preferably 0, 1, 2, or 3, more preferably 1, 2, or 3, and particularly preferably 1 or 2.

A compound in which a is 0 tends to have high solubility in a liquid crystal composition. A compound in which a is 3 or 4 tends to have a high ability to align liquid crystal molecules. A compound in which a is 1 or 2 tends to have high solubility in a liquid crystal composition, a high ability to align liquid crystal molecules, and high polymerization reactivity according to ultraviolet radiation.

$Z^1$ is a single bond or an alkylene group having 1 to 6 carbon atoms, and in the alkylene group, at least one $-CH_2-$ is optionally substituted with -O-, -CO-, -COO-, -OCO-, or -OCOO-, at least one $-(CH_2)_2-$ is optionally substituted with -CH=CH- or -C≡C-, and in these groups, at least one hydrogen atom is optionally substituted with a fluorine or chlorine atom.

Preferably, $Z^1$ is a single bond, $-(CH_2)_2-$, $-(CH_2)_4-$, -CH=CH-, -C≡C-, -COO-, -OCO-, $-CF_2O-$, $-OCF_2-$, $-CH_2O-$, $-OCH_2-$, or -CF=CF-.

More preferably, $Z^1$ is a single bond, $-(CH_2)_2-$, -CH=CH-, -C=C-, -COO-, -OCO-, $-CF_2O-$, $-OCF_2-$, $-CH_2O-$, $-OCH_2-$, or -CF=CF-.

Still more preferably, $Z^1$ is a single bond, $-(CH_2)_2-$, -CH=CH-, -C=C-, $-CH_2O-$, or $-OCH_2-$. Most preferably, $Z^1$ is a single bond or $-(CH_2)_2-$, and particularly preferably, $Z^1$ is a single bond.

A compound in which $Z^1$ is a single bond tends to have high chemical stability. A compound in which $Z^1$ is a single bond, $-(CH_2)_2-$, $-CF_2O-$, or $-OCF_2-$ tends to have high solubility in a liquid crystal composition. A compound in which $Z^1$ is a single bond or $-(CH_2)_2-$tends to have a high ability to align liquid crystal molecules. A compound in which $Z^1$ is a single bond, -CH=CH-, -C≡C-, -COO-, -OCO-, $-CH_2O-$, or $-OCH_2-$ tends to have high polymerization reactivity according to ultraviolet radiation.

$Sp^1$, $Sp^2$, $Sp^3$, $Sp^4$, and $Sp^5$ are independently a single bond or an alkylene having 1 to 10 carbon atoms, and in the alkylene group, at least one $-CH_2-$ is optionally substituted with -O-, -CO-, -COO-, -OCO-, or -OCOO-, at least one $-(CH_2)_2-$ is optionally substituted with -CH=CH- or -C≡C-, and in these groups, at least one hydrogen atom is optionally substituted with a fluorine or chlorine atom.

Preferably, $Sp^1$, $Sp^2$, $Sp^3$, $Sp^4$, and $Sp^5$ are independently a single bond or an alkylene group having 1 to 7 carbon atoms, and in the alkylene group, at least one $-CH_2-$ is optionally substituted with -O-, -COO-, or -OCO-, at least one $-(CH_2)_2-$ is optionally substituted with -CH=CH-, and in these groups, at least one hydrogen atom is optionally substituted with a fluorine atom.

A compound in which $Sp^1$, $Sp^2$, $Sp^3$, $Sp^4$, and $Sp^5$ are independently a single bond or an alkylene group having 1 to 7 carbon atoms tends to have high chemical stability. A compound in which $Sp^1$, $Sp^2$, $Sp^3$, $Sp^4$, and $Sp^5$ are independently an alkylene group having 1 to 7 carbon atoms, or a group in which at least one $-CH_2-$ of an alkylene group having 1 to 7 carbon atoms is substituted with -O- tends to have high solubility in a liquid crystal composition.

More preferably, $Sp^1$, $Sp^2$, $Sp^3$, $Sp^4$, and $Sp^5$ are independently a single bond or an alkylene group having 1 to 5 carbon atoms, and in the alkylene group, at least one $-CH_2-$ is optionally substituted with -O-, and at least one $-(CH_2)_2-$ is optionally substituted with -CH=CH-.

In order to obtain a compound having superior solubility in a liquid crystal composition, particularly preferably,

$Sp^1$ is a single bond or an alkylene group having 1 to 5 carbon atoms, and in the alkylene group, at least one $-CH_2-$ is optionally substituted with -O-;
$Sp^2$ and $Sp^3$ are independently a single bond or an alkylene group having 1 to 5 carbon atoms, and in the alkylene group, at least one $-CH_2-$ is optionally substituted with -O-, and more preferably, $-CH_2-$;
$Sp^4$ and $Sp^5$ are independently $-CH_2-$.

$M^1$, $M^2$, $M^3$, and $M^4$ are independently a hydrogen atom, a fluorine atom, a chlorine atom, an alkyl group having 1 to 5 carbon atoms, or an alkyl group having 1 to 5 carbon atoms in which at least one hydrogen atom is substituted with a fluorine or chlorine atom, preferably a hydrogen atom, a fluorine atom, an alkyl group having 1 to 5 carbon atoms, or an alkyl group having 1 to 5 carbon atoms in which at least one hydrogen atom is substituted with a fluorine atom, and more preferably a hydrogen atom in order to obtain a compound having, for example, particularly high polymerization reactivity according to ultraviolet radiation.

$R^2$ is an alkyl group having 1 to 5 carbon atoms, and in the alkyl group, at least one $-CH_2-$ is optionally substituted with -O- or -S-, at least one $-(CH_2)_2-$ is optionally substituted with -CH=CH- or -C=C-, and in these groups, at least one hydrogen atom is optionally substituted with a fluorine or chlorine atom.

Preferably, $R^2$ is an alkyl group having 1 to 5 carbon atoms, and in the alkyl group, at least one $-CH_2-$ is optionally substituted with -O-. In order to obtain a compound having, for example, superior solubility in a liquid crystal composition, high chemical stability, and a high ability to align liquid crystal molecules, more preferably, $R^2$ is an alkyl group having 1 to 3 carbon atoms, and particularly preferably, $R^2$ is a methyl group.

$X^1$ is -OH, $-NH_2$, $-OR^3$, $-N(R^3)_2$, -COOH, -SH, or $-Si(R^3)_3$.

In order to obtain a compound having superior solubility in a liquid crystal composition, preferably $X^1$ is -OH, $-NH_2$, or -SH, and particularly preferably, $X^1$ is -OH.

Here, $R^3$ is a hydrogen atom or an alkyl group having 1 to 10 carbon atoms, and in the alkyl group, at least one $-CH_2-$ is optionally substituted with -O-, at least one $-(CH_2)_2-$ is optionally substituted with -CH=CH-, and in these groups, at least one hydrogen atom is optionally substituted with a fluorine or chlorine atom.

A compound in which $X^1$ is -OH, $-NH_2$, or-SH tends to have a high ability to align liquid crystal molecules. A compound in which $X^1$ is -OH tends to have high chemical stability, a high ability to align liquid crystal molecules, and high solubility in a liquid crystal composition, and when the compound is used, a liquid crystal display element having a high voltage holding ratio is easily obtained.

Here, when a is 1, both the ring $A^1$ and the ring $A^2$ are 1,4-cyclohexylene, $Z^1$ is a single bond, $Sp^2$, $Sp^3$, $Sp^4$, and $Sp^5$ are $-CH_2-$, $R^2$ is a methyl group, and when $X^1$ is -OH or $-OCH_3$, $Sp^1$ is not a single bond;

when a is 2, the ring on the side of $R^1$ is naphthalene-2,6-diyl, two rings on the side of $Sp^1$ are both 1,4-cyclohexylene, $Z^1$ is a single bond, $Sp^2$, $Sp^3$, $Sp^4$, and $Sp^5$ are $-CH_2-$, $R^2$ is a methyl group, and when $X^1$ is $-OCH_3$, $Sp^1$ is not a single bond; and

when a is 2, the ring on the side of $R^1$ is naphthalene-2,6-diyl, the center ring is 1,4-phenylene, the ring on the side of $Sp^1$ is 1,4-cyclohexylene, $Z^1$ is a single bond, $Sp^2$, $Sp^3$, $Sp^4$, and $Sp^5$ are $-CH_2-$, $R^2$ is a methyl group, and when $X^1$ is $-OCH_3$, $Sp^1$ is not a single bond.

Preferable examples of Compound (1) are Compounds (1-1) to (1-4) described in Item 4. More preferable examples of Compound (1) are Compounds (1-5) to (1-7) described in Item 5. Still more preferable examples of Compound (1) are Compounds (1-8) to (1-16) described in Item 6. Most preferable examples of Compound (1) are Compounds (1-17) to (1-23) described in Item 7.

2. Synthesis of Compound (1)

A synthesis method of Compound (1) will be described. Compound (1) can be synthesized by appropriately combining methods in organic synthetic chemistry. Compounds of which synthesis methods are not described can be synthesized according to methods in books such as "Organic Syntheses" (John Wiley & Sons, Inc), "Organic Reactions" (John Wiley & Sons, Inc), "Comprehensive Organic Synthesis" (Pergamon Press), "New Course of Experimental Chemistry" (Maruzen).

2-1. Generation of a bonding group

An exemplary method of generating a bonding group in Compound (1) is shown in the following scheme. In this scheme, $MSG^1$ (or $MSG^2$) is a monovalent organic group having at least one ring. Monovalent organic groups represented by a plurality of $MSG^1$ (or $MSG^2$) may be the same as or different from each other. Compounds (1A) to (1G) correspond to Compound (1) or an intermediate of Compound (1).

[Chem. 19]

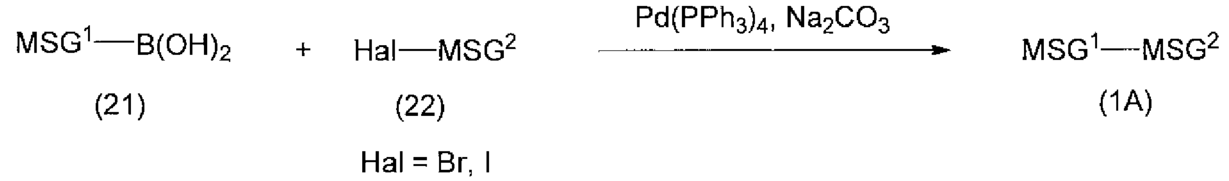


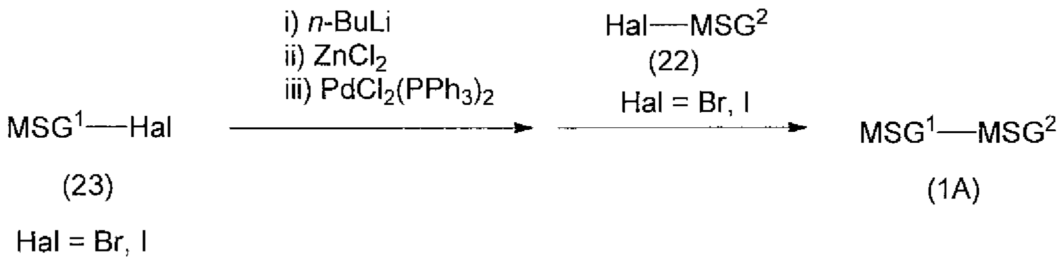


[Chem. 20]

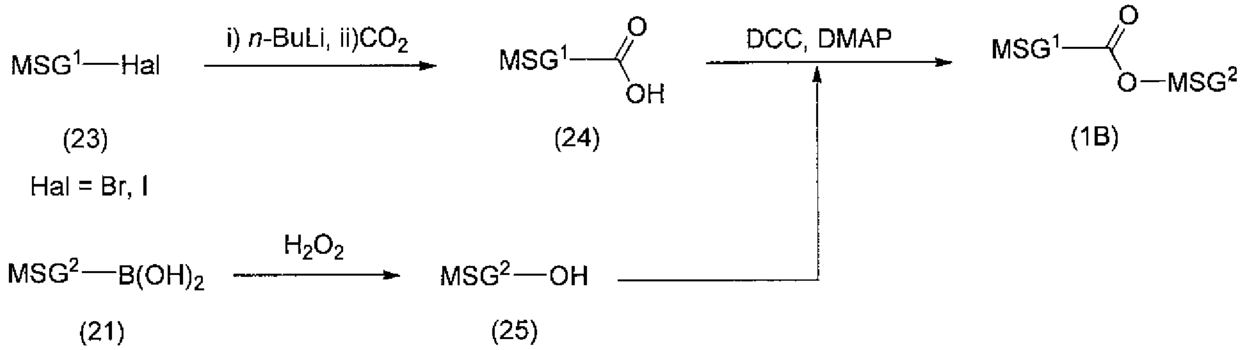


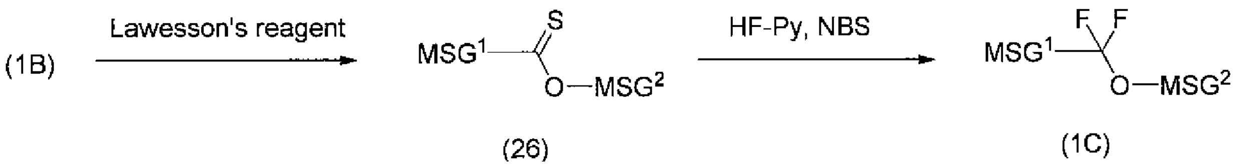


[Chem. 21]

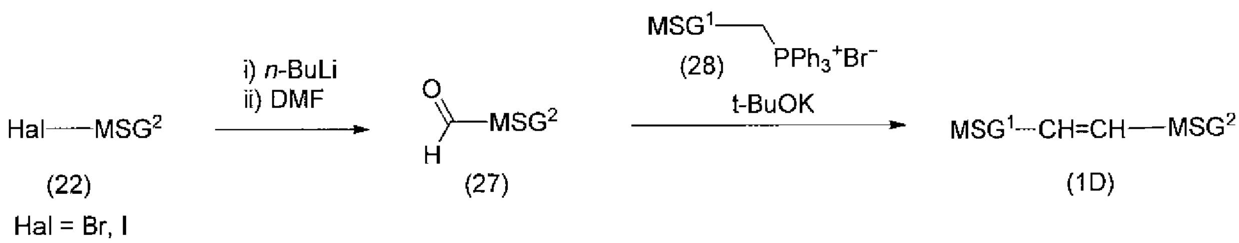


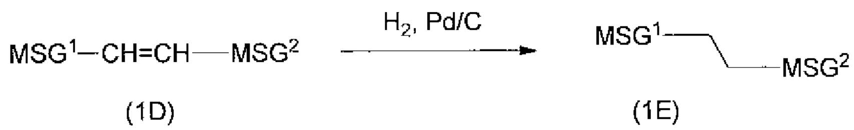

[Chem. 22]

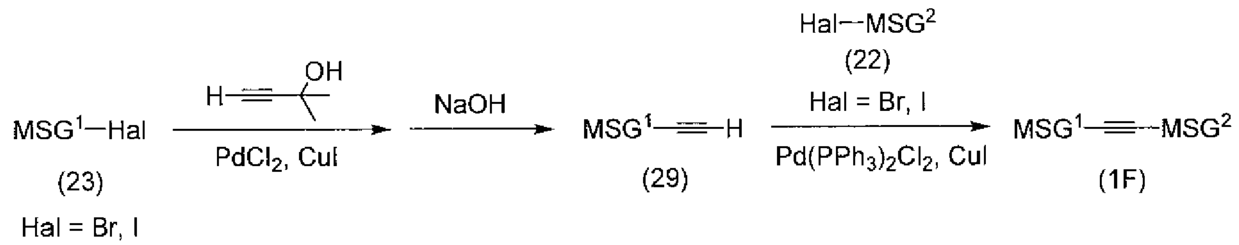


[Chem. 23]

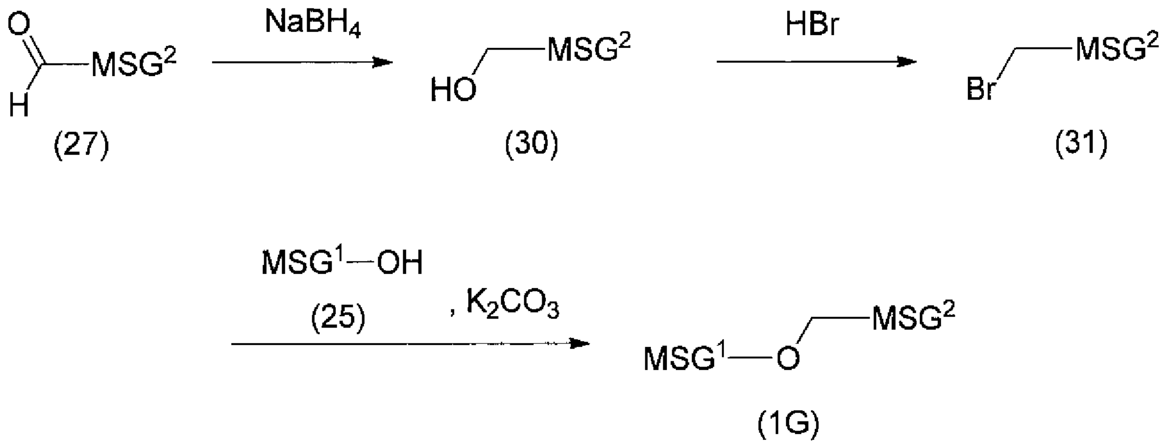


[Chem. 24]

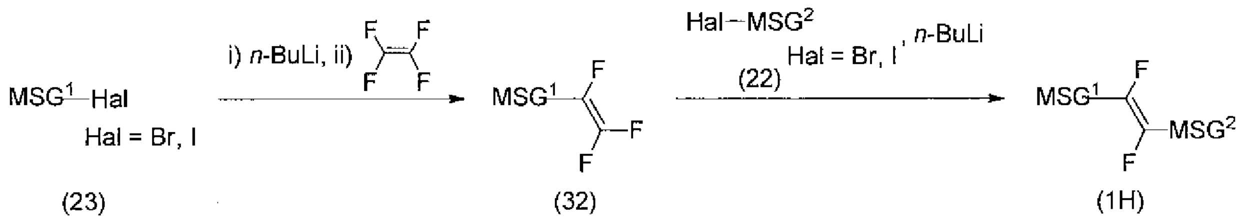


(I) Generation of a single bond

A boric acid compound (21) and Compound (22) are reacted in the presence of a carbonate, and a tetrakis(triphenylphosphine)palladium catalyst to synthesize Compound (1A). Compound (1A) can be synthesized by reacting Compound (23) with n-butyllithium and then with zinc chloride, and reacting Compound (22) in the presence of a dichlorobis(triphenylphosphine)palladium catalyst.

(II) Generation of -COO- and -OCO-

Compound (23) is reacted with n-butyllithium and then with carbon dioxide to obtain a carboxylic acid (24). The carboxylic acid (24) and an alcohol (25) derived from Compound (21) are dehydrated in the presence of DCC (1,3-dicyclohexylcarbodiimide) and DMAP (4-dimethylaminopyridine) to synthesize Compound (1B) including -COO-. According to this method, a compound including -OCO- is also synthesized.

(III) Generation of $-CF_2O-$ and $-OCF_2-$

Compound (1B) is sulfurized with a Lawesson's reagent to obtain Compound (26). Compound (26) is fluorinated

with a hydrogen fluoride pyridine complex and NBS (N-bromosuccinimide) to synthesize Compound (1C) including $-CF_2O-$. M. Kuroboshi et al., Chem. Lett., 1992, 827 may be referred to. Compound (1C) can be synthesized by fluorinating Compound (26) with DAST ((diethylamino)sulfur trifluoride). W. H. Bunnelle et al., J. Org. Chem. 1990, 55, 768 may be referred to. According to this method, a compound including $-OCF_2-$ can be synthesized.

(IV) Generation of -CH=CH-

Compound (22) is reacted with n-butyllithium, and then with DMF (N,N-dimethylformamide) to obtain an aldehyde (27). A phosphorus ylide generated by reacting a phosphonium salt (28) with potassium tert-butoxide is reacted with an aldehyde (27) to synthesize Compound (1D). Depending on reaction conditions, a cis form is generated. Therefore, as necessary, a cis form is isomerized to a trans form according to a known method.

(V) Generation of $-CH_2CH_2-$

Compound (1D) is hydrogenated in the presence of a palladium carbon catalyst to synthesize Compound (1E).

(VI) Generation of -C=C-

In the presence of dichloropalladium and copper iodide catalysts, Compound (23) is reacted with 2-methyl-3-butyn-2-ol, and then deprotected under basic conditions to obtain Compound (29). In the presence of dichlorobis(triphenylphosphine)palladium and copper halide catalysts, Compound (29) is reacted with Compound (22) to synthesize Compound (1F).

(VII) Generation of $-CH_2O-$ and $-OCH_2-$

Compound (27) is reduced with sodium borohydride to obtain Compound (30). This is brominated with hydrobromic acid to obtain Compound (31). In the presence of potassium carbonate, Compound (25) and Compound (31) are reacted to synthesize Compound (1G). According to this method, a compound including $-OCH_2-$ can be synthesized.

(VIII) Generation of -CF=CF-

Compound (23) is treated with n-butyllithium and then reacted with tetrafluoroethylene to obtain Compound (32). Compound (22) is treated with n-butyllithium and then reacted with Compound (32) to synthesize Compound (1H).

2-2. Generation of rings $A^1$ and $A^2$

Starting materials for rings such as 1,2-cyclopropylene, 1,3-cyclobutylene, 1,3-cyclopentylene, 1,4-cyclohexylene, 1,4-cycloheptylene, 1,4-cyclohexenylene, 1,4-phenylene, naphthalene-2,6-diyl, decahydronaphthalene-2,6-diyl, 1,2,3,4-tetrahydronaphthalene-2,6-diyl, tetrahydropyran-2,5-diyl, 1,3-dioxane-2,5-diyl, pyrimidine-2,5-diyl, and pyridine-2,5-diyl are commercially available or synthesis methods thereof are well known.

2-3. Synthesis Examples

Examples of methods of synthesizing Compound (1) are as follows. In these compounds, definitions of $R^1$, $R^2$, $A^1$, $A^2$, $Z^1$, $Sp^1$, $Sp^2$, $Sp^3$, and a are the same as those described in Item 1.

Compound (1-51) in which $Sp^4$ and $Sp^5$ are $-CH_2-$, $M^1$, $M^2$, $M^3$, and $M^4$ are a hydrogen atom, and $X^1$ is-OH in Formula (1) can be synthesized by the following method.

Compound (51) is reacted with dicyclohexylamine and formaldehyde in a corresponding alcohol solvent to obtain Compound (52). Compound (53) is reacted with formaldehyde in the presence of DABCO (1,4-diazabicyclo[2.2.2]octane) to obtain Compound (54). Compound (54) is reacted with 3,4-dihydro-2H-pyran in the presence of PPTS (pyridinium p-toluenesulfonate) to obtain Compound (55). Compound (55) is hydrolyzed using lithium hydroxide to obtain Compound (56). A diol (57) synthesized by a known method and Compound (52) are reacted in the presence of DCC and DMAP to obtain Compound (58). Compound (58) and Compound (56) are reacted in the presence of DCC and DMAP to obtain Compound (59) and then deprotected using PPTS and thereby Compound (1-51) can be derived.

[Chem. 25]

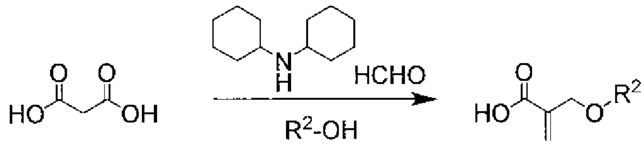


(51) (52)

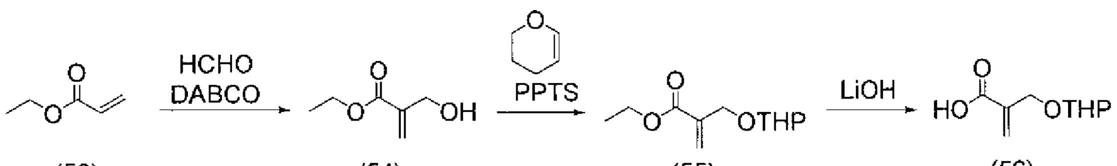


(53) (54) (55) (56)

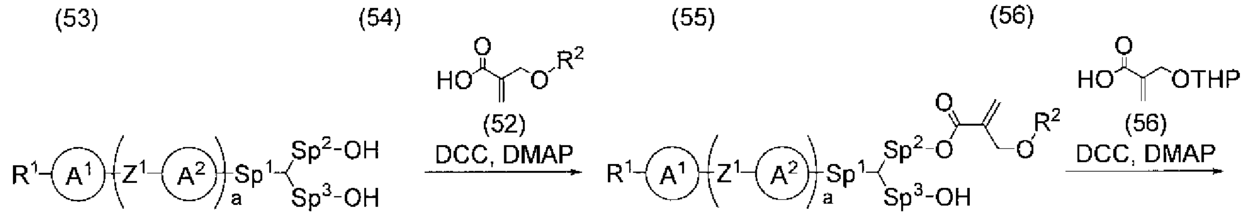


(57) (58)

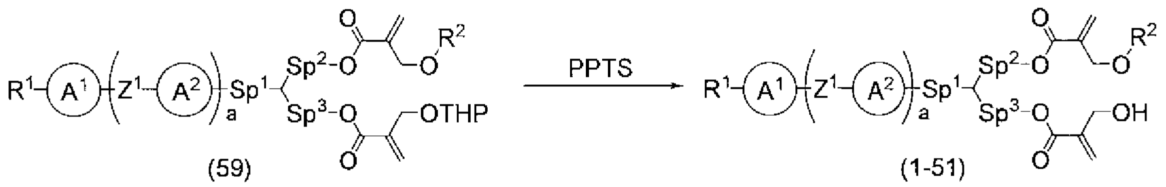


(59) (1-51)

Compound (1-52) in which $Sp^4$ is $-CH_2-$, $Sp^5$ is $-(CH_2)_2-$, $M^1$, $M^2$, $M^3$, and $M^4$ are a hydrogen atom, and $X^1$ is -OH in Formula (1) can be synthesized by the following method.

Compound (1-51) is reacted with phosphorus tribromide to obtain Compound (60). Next, Compound (60) is reacted with indium and then reacted with formaldehyde, and thereby Compound (1-52) can be derived.

[Chem. 26]

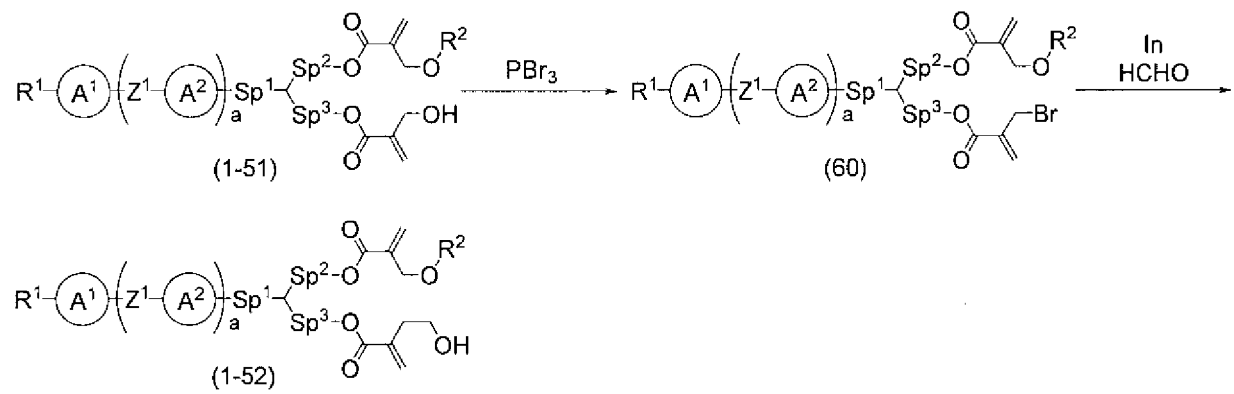


(1-51) (60) (1-52)

Compound (1-53) in which $Sp^4$ is $-CH_2-$, $Sp^5$ is $-CH_2O(CH_2)_2-$, $M^1$, $M^2$, $M^3$, and $M^4$ are a hydrogen atom, and $X^1$ is -OH in Formula (1) can be synthesized by the following method.

Compound (1-51) is reacted with trifluoromethanesulfonic anhydride ($Tf_2O$) and triethylamine ($Et_3N$) and then reacted with ethylene glycol and thereby Compound (1-53) can be derived.

[Chem. 27]

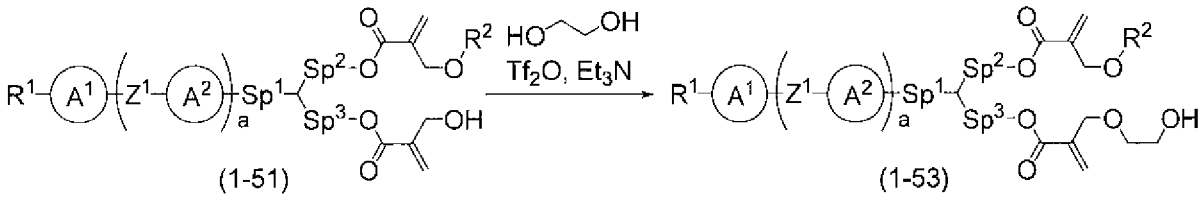


(1-51) (1-53)

3. Liquid crystal composition

3-1. Component compounds

A liquid crystal composition of the disclosure includes Compound (1) as a component A. Compound (1) can control the alignment of liquid crystal molecules according to a noncovalent interaction with a substrate of an element. This composition contains Compound (1) as a component A, and preferably further contains at least one liquid crystalline compound selected from the following components B, C, D, and E. The component B is selected from Compounds (2) to (4). The component C is selected from Compounds (5) to (7) other than Compounds (2) to (4). The component D is Compound (8). The component E is selected from Compounds (11) to (19). This composition may contain other liquid crystalline compounds different from Compounds (2) to (8) and (11) to (19). When this composition is prepared, the components B, C, D, and E are preferably selected in consideration of a magnitude of positive or negative dielectric anisotropy. A composition containing components appropriately selected has a high upper limit temperature, a low lower limit temperature, a low viscosity, appropriate optical anisotropy (that is, large optical anisotropy or small optical anisotropy), large positive or negative dielectric anisotropy, a large specific resistance, stability with respect to heat or ultraviolet rays, and an appropriate elastic constant (that is, a large elastic constant or a small elastic constant).

Compound (1) is added to the composition in order to control the alignment of liquid crystal molecules. A preferable proportion of Compound (1) with respect to 100 weight% of a liquid crystal composition is 0.05 weight% or more in order to, for example, easily align liquid crystal molecules, and preferably 10 weight% or less in order to, for example, further prevent display defects of an element. A more preferable proportion is in a range of 0.1 weight% to 7 weight%, a still more preferable proportion is in a range of 0.4 weight% to 5 weight%, and a particularly preferable proportion is in a range of 0.5 weight% to 5 weight%. These proportions also apply to a composition containing Compound (20).

The component B is a compound in which two terminal groups are, for example, an alkyl group. The component B has small dielectric anisotropy. Preferable examples of the component B include Compounds (2-1) to (2-11), Compounds (3-1) to (3-19), and Compounds (4-1) to (4-7). In these compounds, $R^{11}$ and $R^{12}$ are independently an alkyl group having 1 to 10 carbon atoms or an alkenyl group having 2 to 10 carbon atoms, and in these alkyl or alkenyl groups, at least one $-CH_2-$ is optionally substituted with -O-, and in these groups, at least one hydrogen atom is optionally substituted with a fluorine atom.

[Chem. 28]

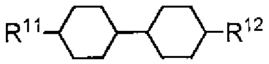
(2-1)

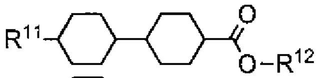
(2-2)

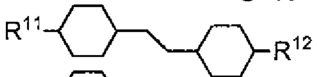
(2-3)

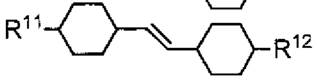
(2-4)

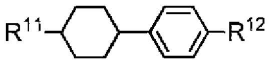
(2-5)

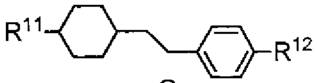
(2-6)

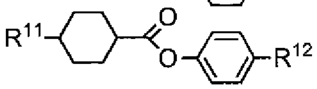
(2-7)

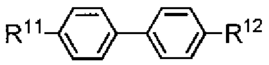
(2-8)

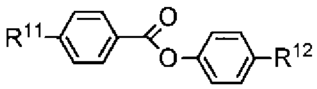
(2-9)

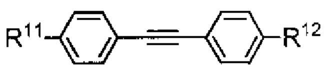
(2-10)

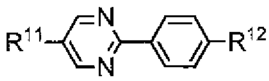
(2-11)

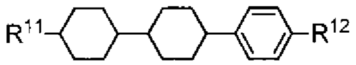
(3-1)

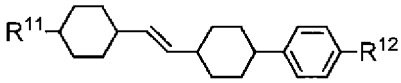
(3-2)

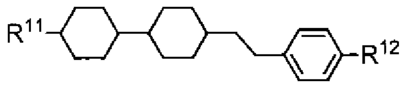
(3-3)

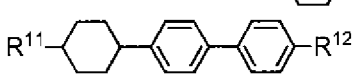
(3-4)

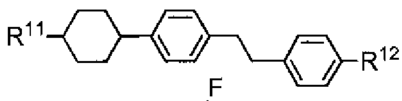
(3-5)

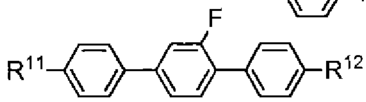
(3-6)

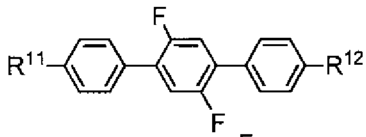
(3-7)

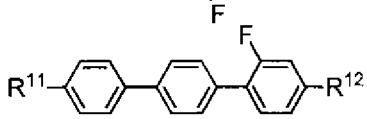
(3-8)

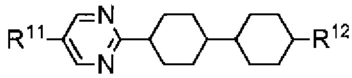
(3-9)

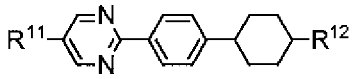
(3-10)

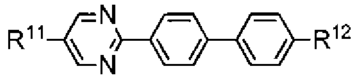
(3-11)

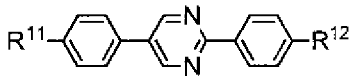
(3-12)

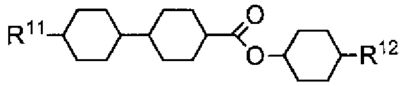
(3-13)

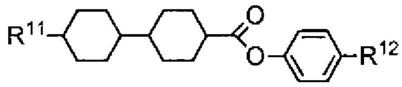
(3-14)

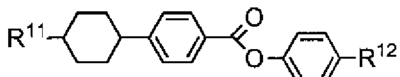
(3-15)

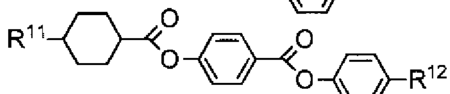
(3-16)

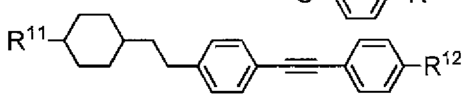
(3-17)

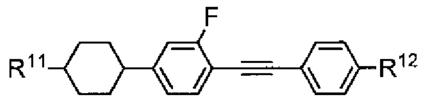
(3-18)

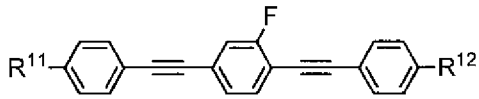
(3-19)

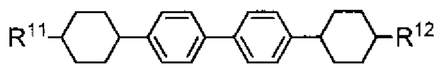
(4-1)

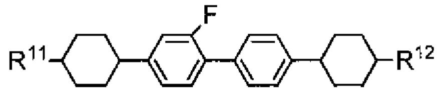
(4-2)

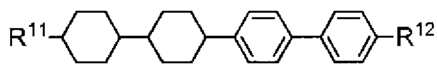
(4-3)

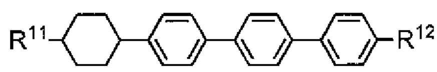
(4-4)

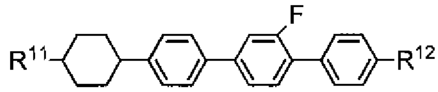
(4-5)

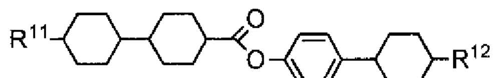
(4-6)

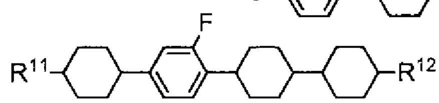
(4-7)

The component B is a compound close to being neutral because an absolute value of dielectric anisotropy is small. Compound (2) has an effect of mainly lowering the viscosity or adjusting the optical anisotropy. Compounds (3) and (4) have an effect of increasing an upper limit temperature and thus widening a temperature range of the nematic phase or an effect of adjusting the optical anisotropy.

As the content of the component B increases, the dielectric anisotropy of the composition decreases but the viscosity decreases. Therefore, a higher content of the component B is preferable as long as a threshold voltage of the element has a required value. The content of the component B is preferably 30 weight% or more, and more preferably 40 weight% or more with respect to 100 weight% of a liquid crystal composition and an upper limit thereof is not particularly

limited, but may be, for example, 99.95 weight%.

The component C is a compound having a fluorine atom, a chlorine atom or a fluorine-containing group at at least one end. The component C has large positive dielectric anisotropy. Preferable examples of the component C include Compounds (5-1) to (5-16), Compounds (6-1) to (6-116), and Compounds (7-1) to (7-59). In a compound contained the component C, $R^{13}$ is an alkyl group having 1 to 10 carbon atoms or an alkenyl group having 2 to 10 carbon atoms, and in the alkyl and alkenyl groups, at least one $-CH_2-$ is optionally substituted with -O-, and in these groups, at least one hydrogen atom is optionally substituted with a fluorine atom; and $X^{11}$ is a fluorine atom, a chlorine atom, $-OCF_3$, $-OCHF_2$, $-CF_3$, $-CHF_2$, $-CH_2F$, $-OCF_2CHF_2$, or $-OCF_2CHFCF_3$.

[Chem. 29]

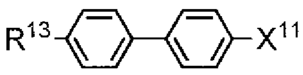 (5-1)

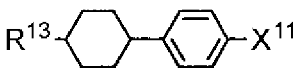 (5-2)

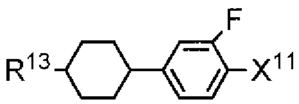 (5-3)

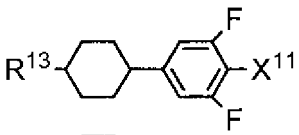 (5-4)

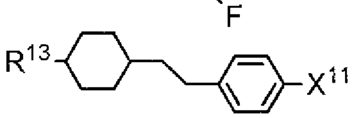 (5-5)

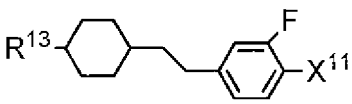 (5-6)

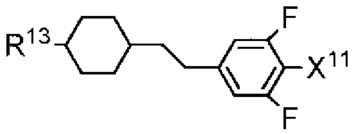 (5-7)

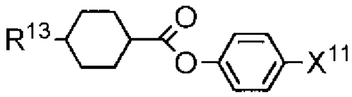 (5-8)

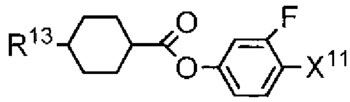 (5-9)

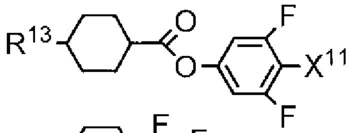 (5-10)

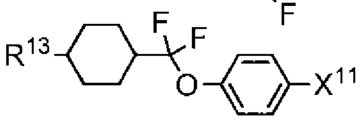 (5-11)

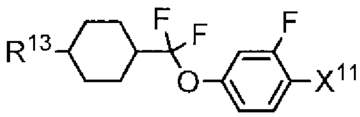 (5-12)

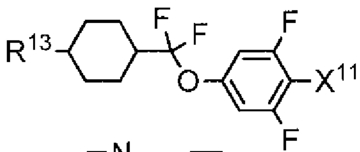 (5-13)

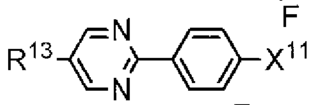 (5-14)

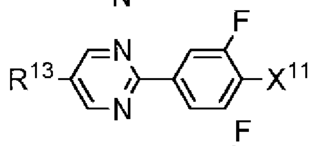 (5-15)

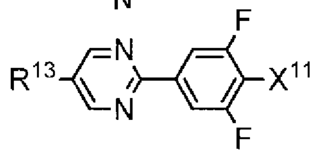 (5-16)

[Chem. 30]

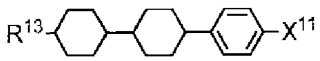
(6-1)

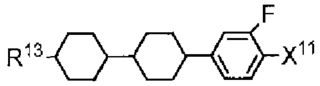
(6-2)

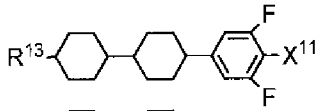
(6-3)

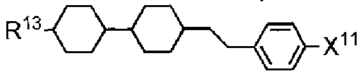
(6-4)

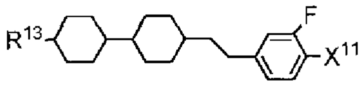
(6-5)

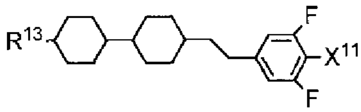
(6-6)

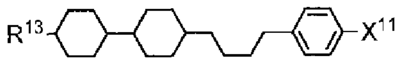
(6-7)

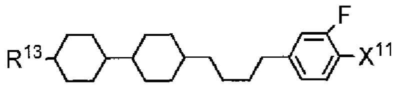
(6-8)

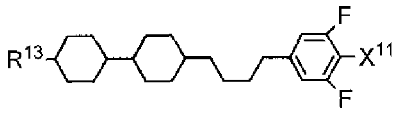
(6-9)

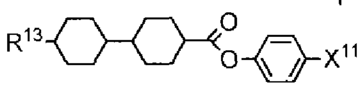
(6-10)

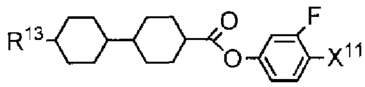
(6-11)

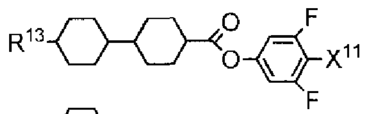
(6-12)

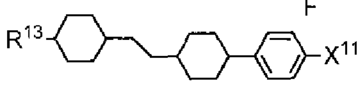
(6-13)

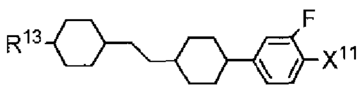
(6-14)

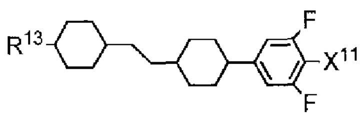
(6-15)

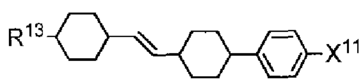
(6-16)

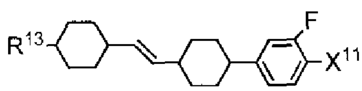
(6-17)

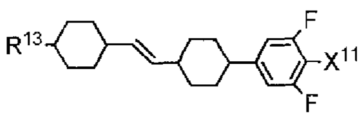
(6-18)

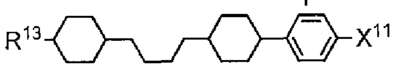
(6-19)

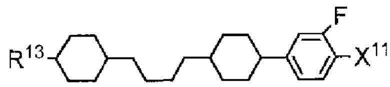
(6-20)

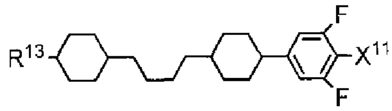
(6-21)

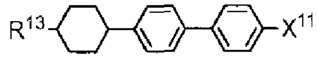
(6-22)

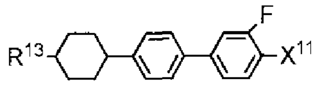
(6-23)

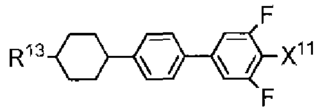
(6-24)

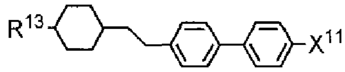
(6-25)

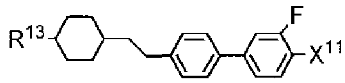
(6-26)

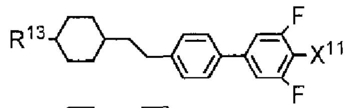
(6-27)

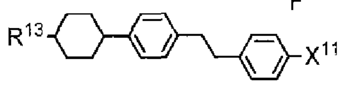
(6-28)

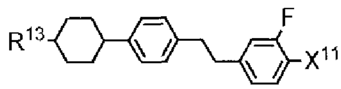
(6-29)

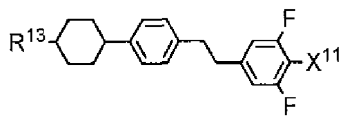
(6-30)

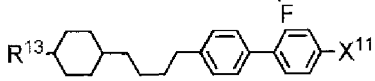
(6-31)

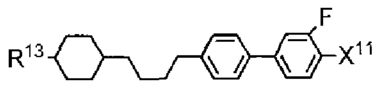
(6-32)

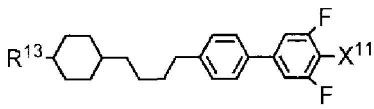
(6-33)

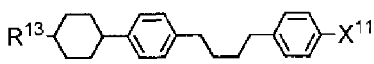
(6-34)

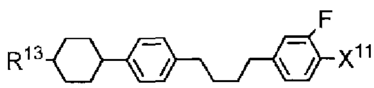
(6-35)

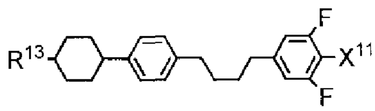
(6-36)

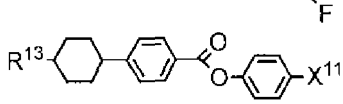
(6-37)

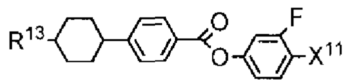
(6-38)

[Chem. 31]

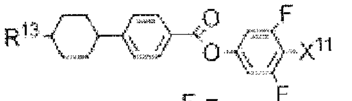
(6-39)

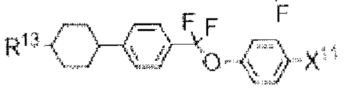
(6-40)

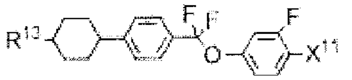
(6-41)

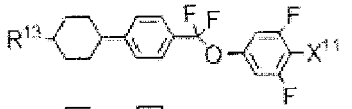
(6-42)

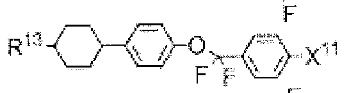
(6-43)

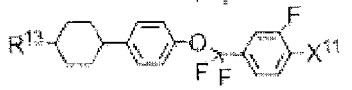
(6-44)

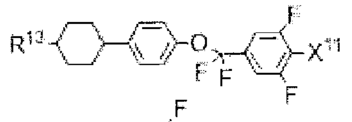
(6-45)

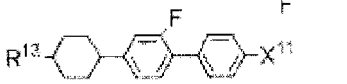
(6-46)

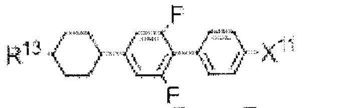
(6-47)

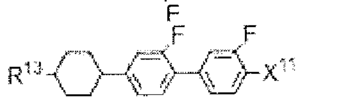
(6-48)

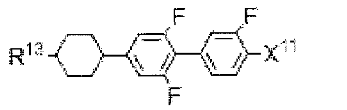
(6-49)

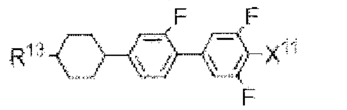
(6-50)

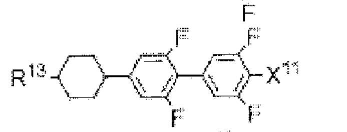
(6-51)

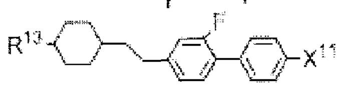
(6-52)

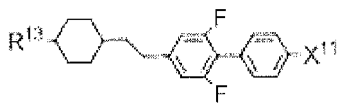
(6-53)

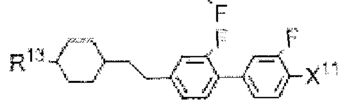
(6-54)

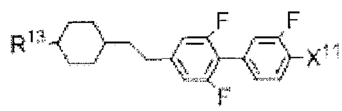
(6-55)

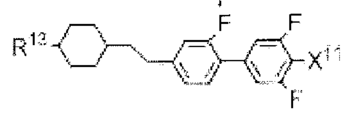
(6-56)

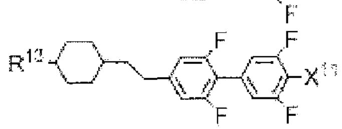
(6-57)

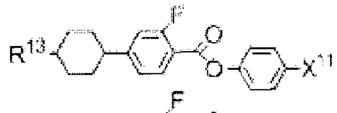
(6-58)

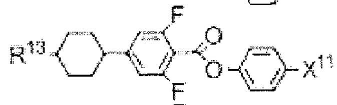
(6-59)

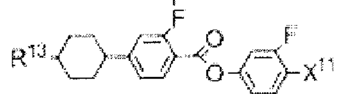
(6-60)

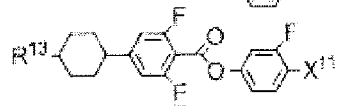
(6-61)

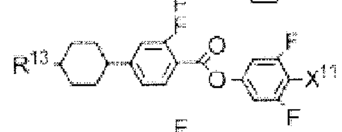
(6-62)

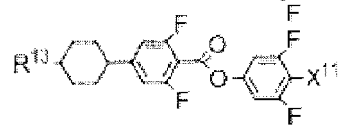
(6-63)

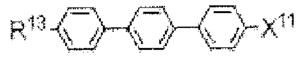
(6-64)

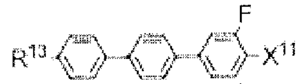
(6-65)

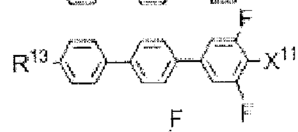
(6-66)

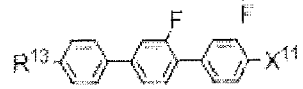
(6-67)

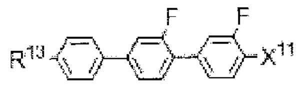
(6-68)

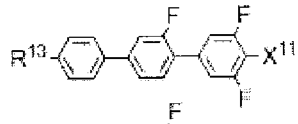
(6-69)

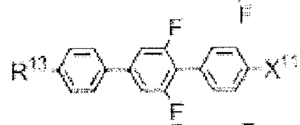
(6-70)

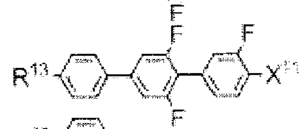
(6-71)

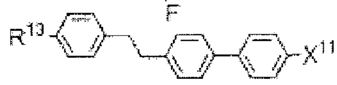
(6-72)

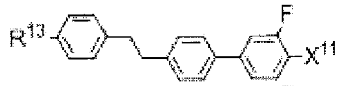
(6-73)

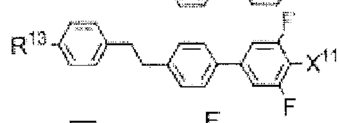
(6-74)

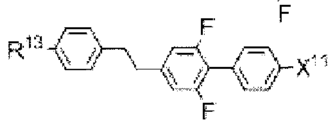
(6-75)

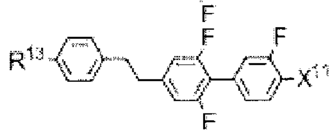
(6-76)

[Chem. 32]

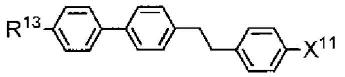
(6-77)

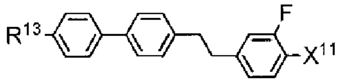
(6-78)

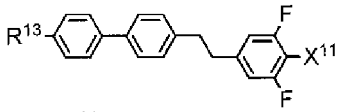
(6-79)

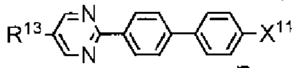
(6-80)

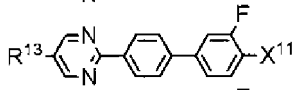
(6-81)

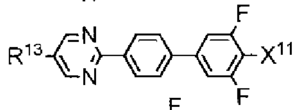
(6-82)

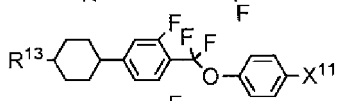
(6-83)

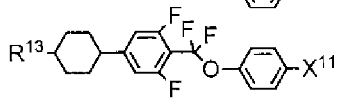
(6-84)

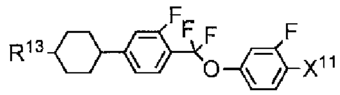
(6-85)

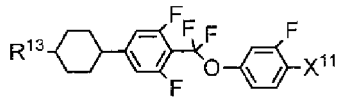
(6-86)

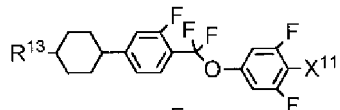
(6-87)

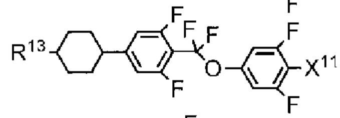
(6-88)

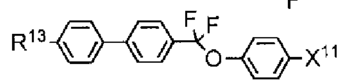
(6-89)

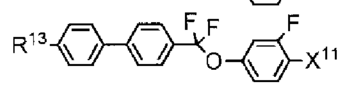
(6-90)

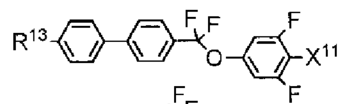
(6-91)

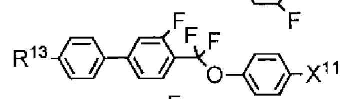
(6-92)

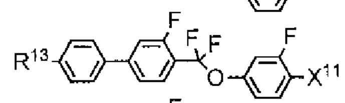
(6-93)

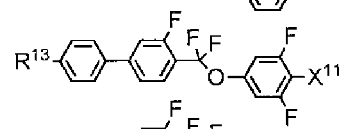
(6-94)

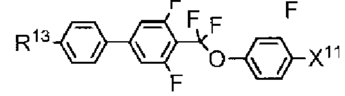
(6-95)

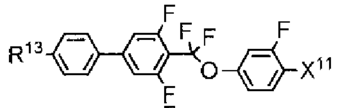
(6-96)

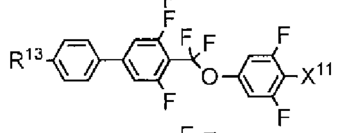
(6-97)

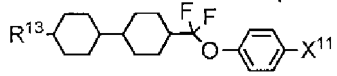
(6-98)

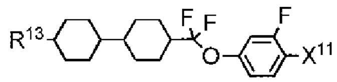
(6-99)

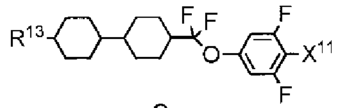
(6-100)

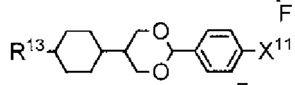
(6-101)

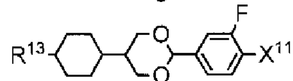
(6-102)

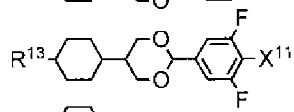
(6-103)

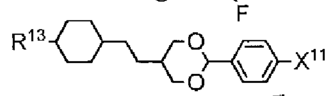
(6-104)

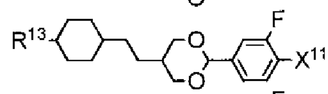
(6-105)

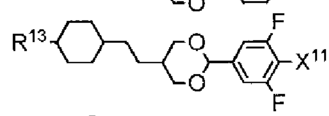
(6-106)

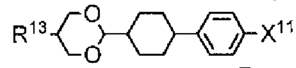
(6-107)

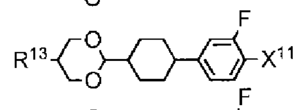
(6-108)

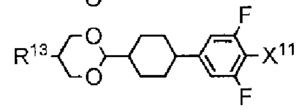
(6-109)

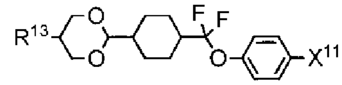
(6-110)

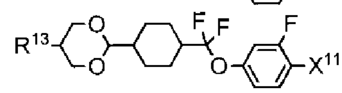
(6-111)

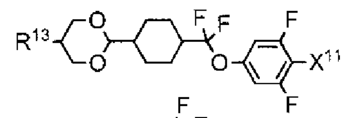
(6-112)

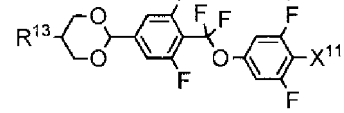
(6-113)

[Chem. 33]

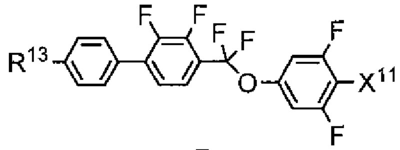

(6-114)

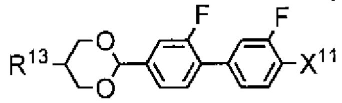

(6-115)

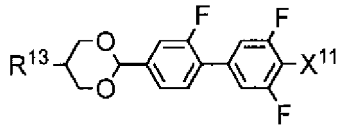

(6-116)

[Chem. 34]

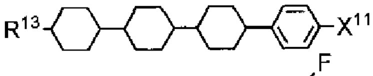 (7-1)

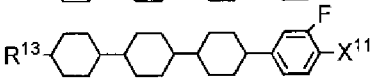 (7-2)

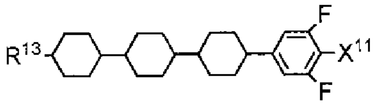 (7-3)

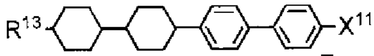 (7-4)

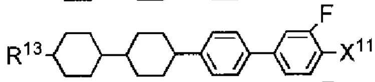 (7-5)

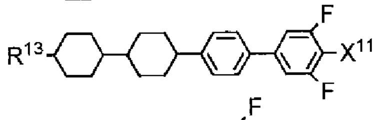 (7-6)

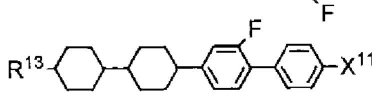 (7-7)

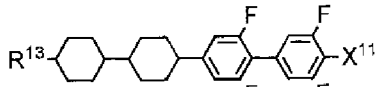 (7-8)

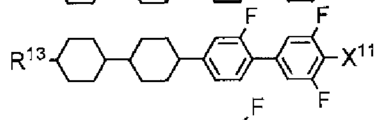 (7-9)

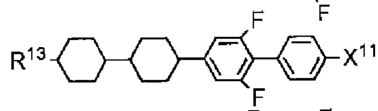 (7-10)

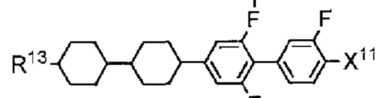 (7-11)

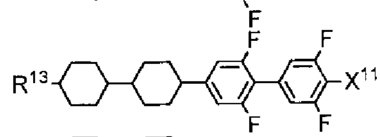 (7-12)

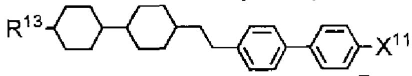 (7-13)

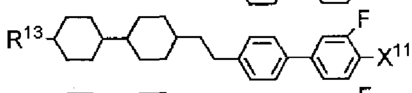 (7-14)

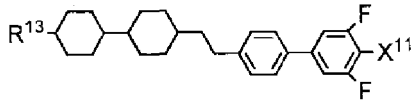 (7-15)

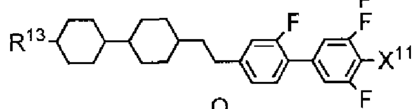 (7-16)

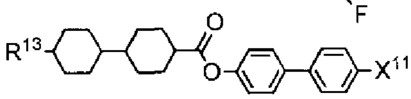 (7-17)

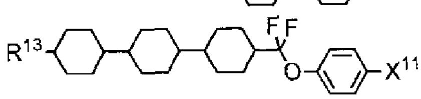 (7-18)

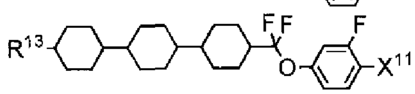 (7-19)

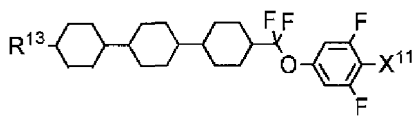 (7-20)

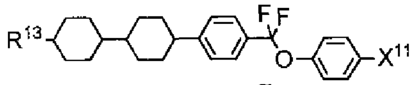 (7-21)

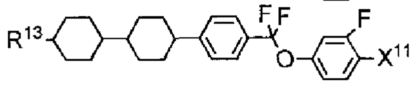 (7-22)

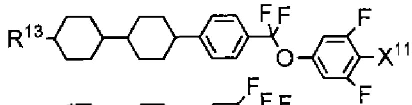 (7-23)

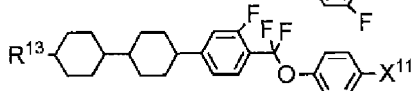 (7-24)

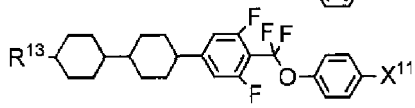 (7-25)

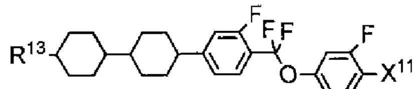 (7-26)

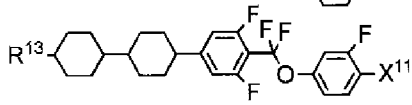 (7-27)

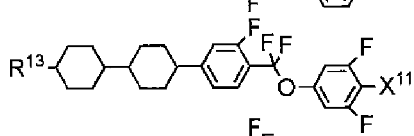 (7-28)

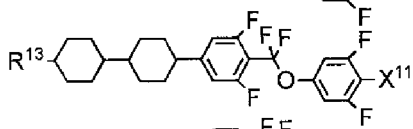 (7-29)

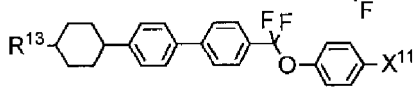 (7-30)

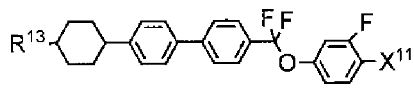 (7-31)

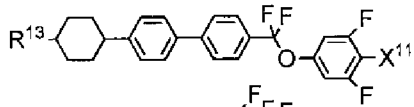 (7-32)

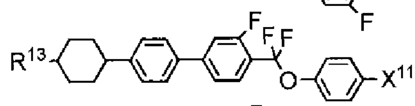 (7-33)

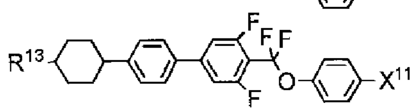 (7-34)

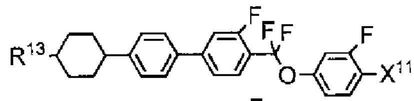 (7-35)

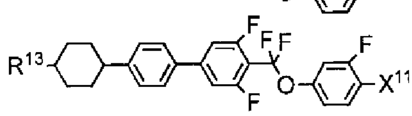 (7-36)

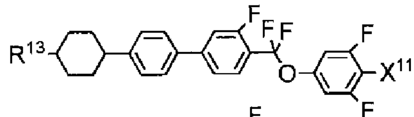 (7-37)

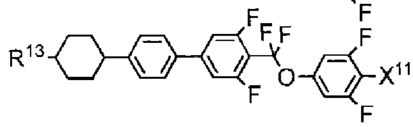 (7-38)

[Chem. 35]

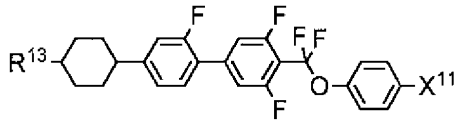
(7-39)

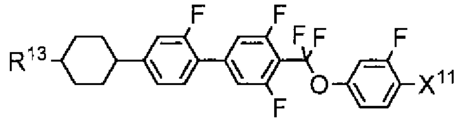
(7-40)

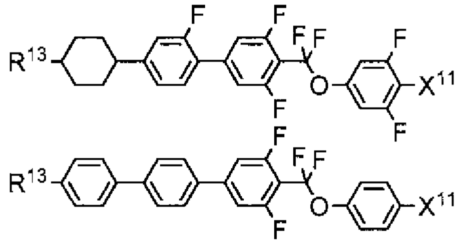
(7-41)

(7-42)

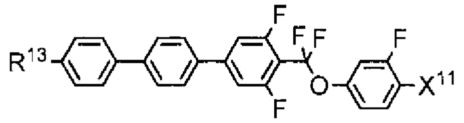
(7-43)

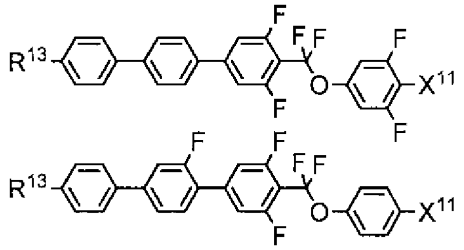
(7-44)

(7-45)

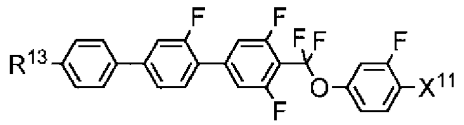
(7-46)

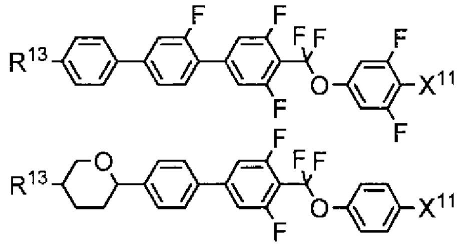
(7-47)

(7-48)

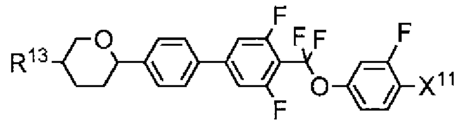
(7-49)

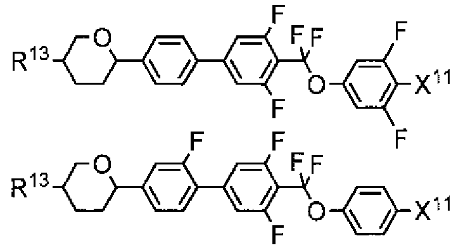
(7-50)

(7-51)

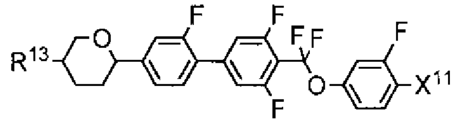
(7-52)

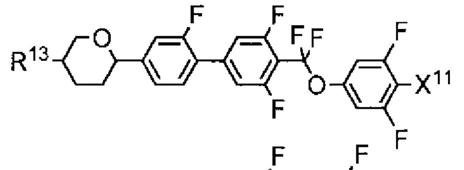
(7-53)

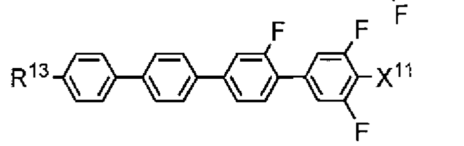
(7-54)

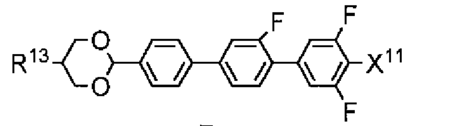
(7-55)

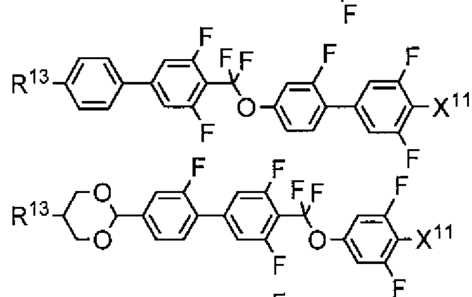
(7-56)

(7-57)

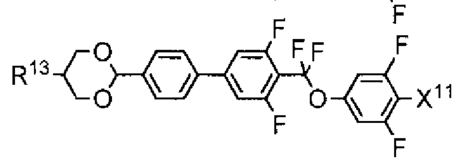
(7-58)

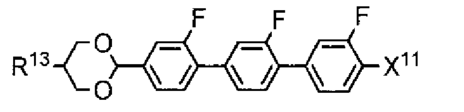
(7-59)

Since the component C has positive dielectric anisotropy and has very favorable stability with respect to, for example, heat and light, it is suitably used to prepare a composition for a mode such as IPS, FFS, and OCB. When a composition having positive dielectric anisotropy is prepared using the component C, the content of the component C with respect to 100 weight% of a liquid crystal composition is suitably in a range of 1 weight% to 99 weight%, preferably in a range of 10 weight% to 97 weight%, and more preferably in a range of 40 weight% to 95 weight%. When the component C is added to a composition having negative dielectric anisotropy, the content of the component C with respect to 100 weight% of a liquid crystal composition is preferably 30 weight% or less. When the component C is added, it is possible to easily adjust an elastic constant of the composition and a voltage-transmittance curve of the element.

The component D is Compound (8) in which one terminal group is -C=N or -C=C-C=N. The component D has larger positive dielectric anisotropy because it has a cyano group. Preferable examples of the component D include Compounds (8-1) to (8-64). In a compound contained the component D, $R^{14}$ is an alkyl group having 1 to 10 carbon

atoms or an alkenyl group having 2 to 10 carbon atoms, and in the alkyl and alkenyl groups, at least one $-CH_2-$ is optionally substituted with -O-, and in these groups, at least one hydrogen atom is optionally substituted with a fluorine atom; and $-X^{12}$ is -C≡N or -C≡C-C≡N.

[Chem. 36]

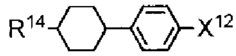
(8-1)

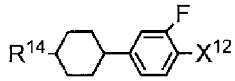
(8-2)

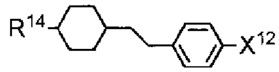
(8-3)

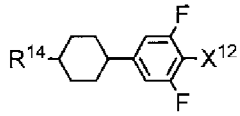
(8-4)

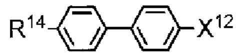
(8-5)

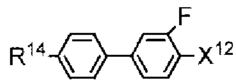
(8-6)

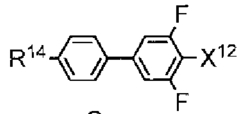
(8-7)

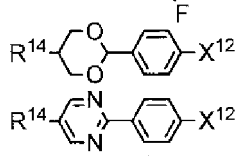
(8-8)

(8-9)

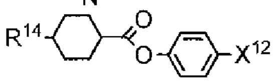
(8-10)

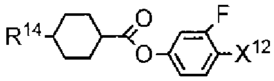
(8-11)

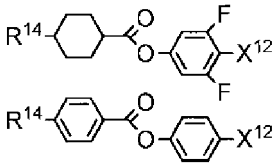
(8-12)

(8-13)

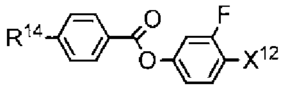
(8-14)

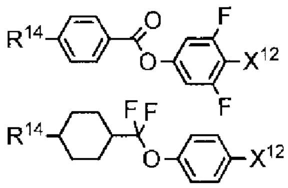
(8-15)

(8-16)

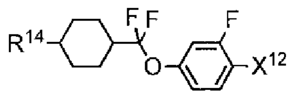
(8-17)

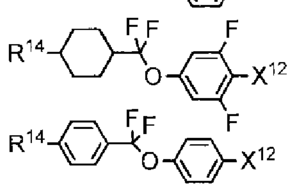
(8-18)

(8-19)

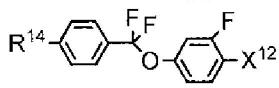
(8-20)

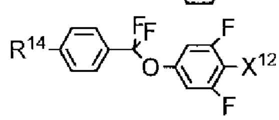
(8-21)

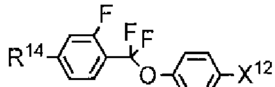
(8-22)

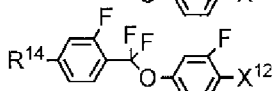
(8-23)

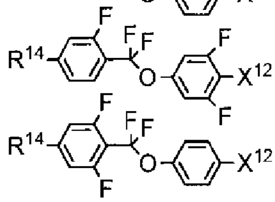
(8-24)

(8-25)

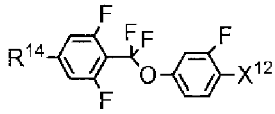
(8-26)

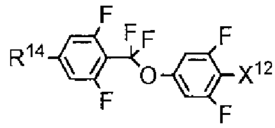
(8-27)

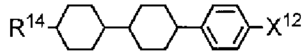
(8-28)

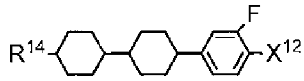
(8-29)

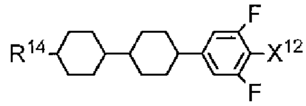
(8-30)

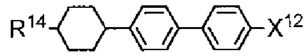
(8-31)

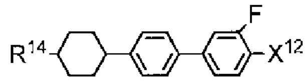
(8-32)

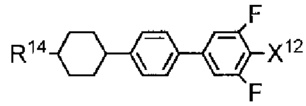
(8-33)

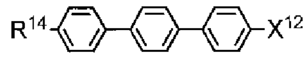
(8-34)

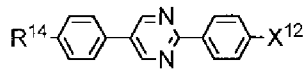
(8-35)

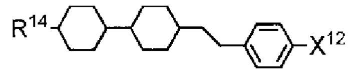
(8-36)

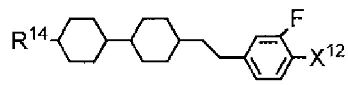
(8-37)

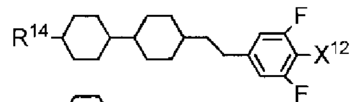
(8-38)

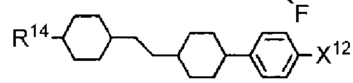
(8-39)

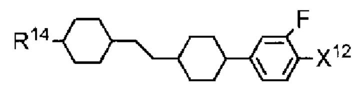
(8-40)

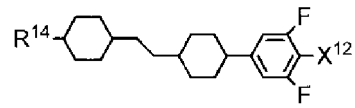
(8-41)

[Chem. 37]

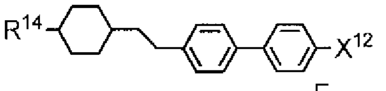
(8-42)

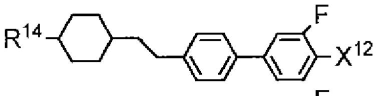
(8-43)

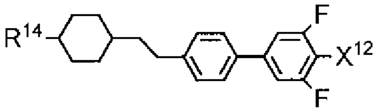
(8-44)

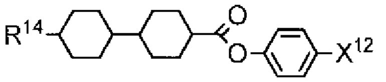
(8-45)

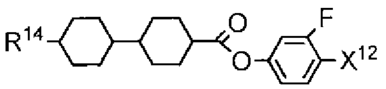
(8-46)

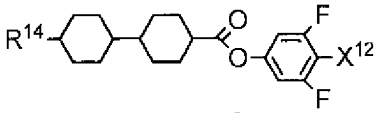
(8-47)

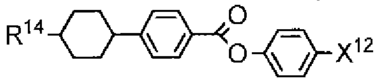
(8-48)

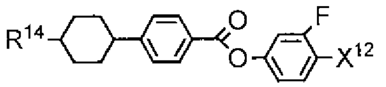
(8-49)

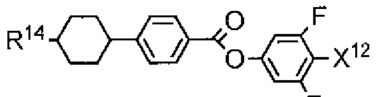
(8-50)

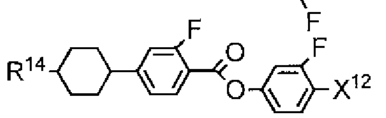
(8-51)

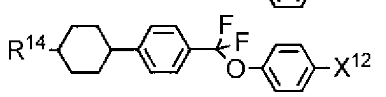
(8-52)

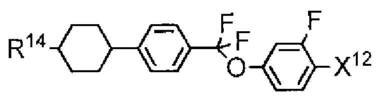
(8-53)

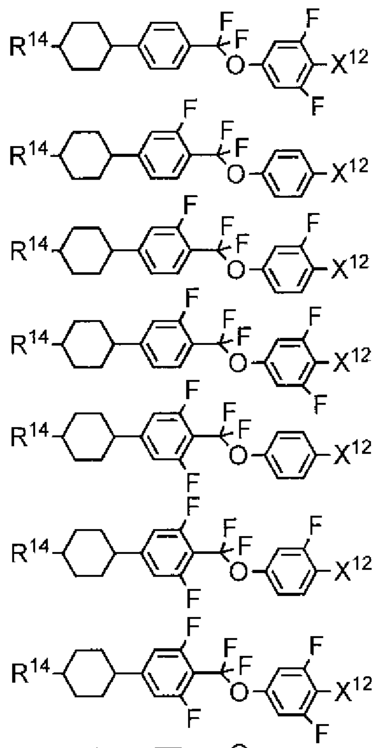
(8-54)
(8-55)
(8-56)
(8-57)
(8-58)
(8-59)
(8-60)

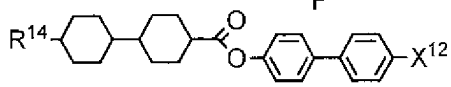
(8-61)

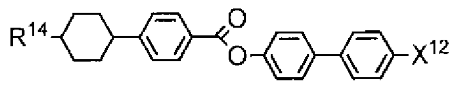
(8-62)

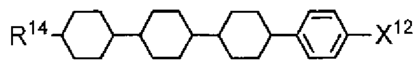
(8-63)

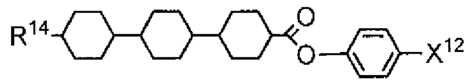
(8-64)

The component D has positive dielectric anisotropy and since its value is large, it is mainly used to prepare a composition for a mode such as TN. When the component D is added, it is possible to increase the dielectric anisotropy of the composition. The component D has an effect of widening a temperature range of the liquid crystal phase, adjusting the viscosity, or adjusting the optical anisotropy. The component D is also beneficial for adjusting a voltage-transmittance curve of the element.

When a composition having positive dielectric anisotropy is prepared using the component D, the content of the component D with respect to 100 weight% of a liquid crystal composition is suitably in a range of 1 weight% to 99 weight%, preferably in a range of 10 weight% to 97 weight%, and more preferably in a range of 40 weight% to 95 weight%. When the component D is added to a composition having negative dielectric anisotropy, the content of the component D with respect to 100 weight% of a liquid crystal composition is preferably 30 weight% or less. When the component D is added, it is possible to easily adjust an elastic constant of the composition and a voltage-transmittance curve of the element.

The component E is selected from Compounds (11) to (19). The component E has large negative dielectric anisotropy. These compounds include a phenylene in which the lateral positions are substituted with two halogen atoms (fluorine or chlorine atoms) like 2,3-difluoro-1,4-phenylene. Preferable examples of the component E include Compounds (11-1) to (11-9), Compounds (12-1) to (12-19), Compounds (13-1) and (13-2), Compounds (14-1) to (14-3), Compounds (15-1) to (15-3), Compounds (16-1) to (16-11), Compounds (17-1) to (17-3), Compounds (18-1) to (18-3), and Compound (19-1). In these compounds, $R^{15}$, $R^{16}$, and $R^{17}$ are independently an alkyl group having 1 to 10 carbon atoms or an alkenyl group having 2 to 10 carbon atoms, and in the alkyl and alkenyl groups, at least one $-CH_2-$ is optionally substituted

with -O-, and in these groups, at least one hydrogen atom is optionally substituted with a fluorine atom, and $R^{17}$ may be a hydrogen or fluorine atom.

[Chem. 38]

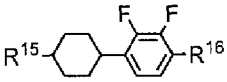
(11-1)

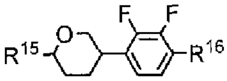
(11-2)

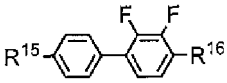
(11-3)

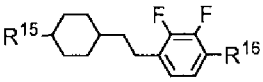
(11-4)

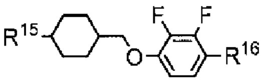
(11-5)

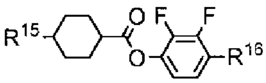
(11-6)

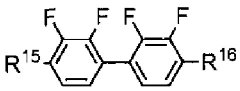
(11-7)

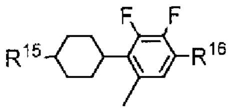
(11-8)

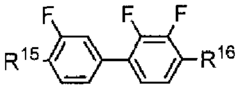
(11-9)

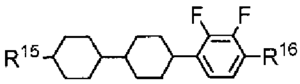
(12-1)

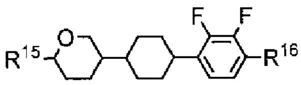
(12-2)

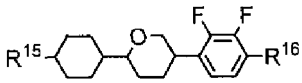
(12-3)

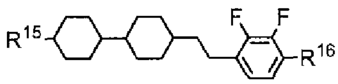
(12-4)

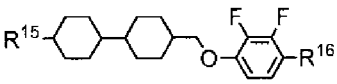
(12-5)

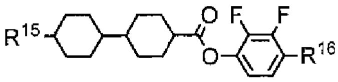
(12-6)

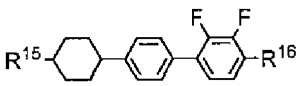
(12-7)

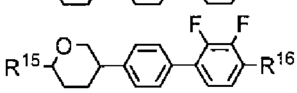
(12-8)

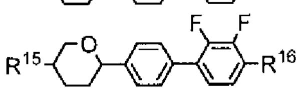
(12-9)

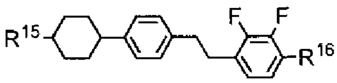
(12-10)

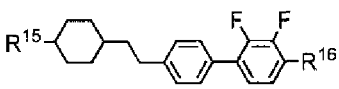
(12-11)

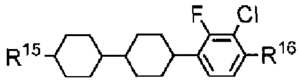
(12-12)

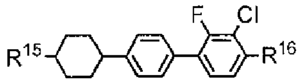
(12-13)

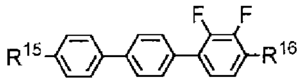
(12-14)

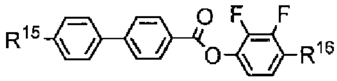
(12-15)

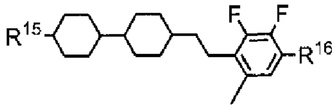
(12-16)

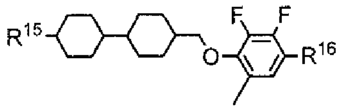
(12-17)

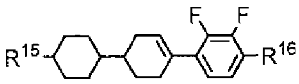
(12-18)

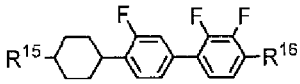
(12-19)

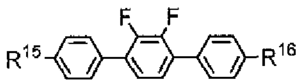
(13-1)

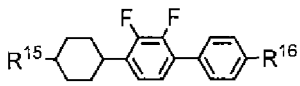
(13-2)

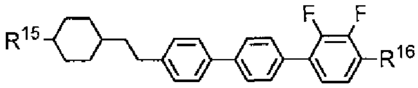
(14-1)

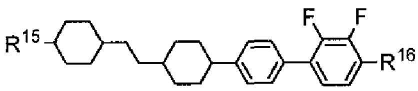
(14-2)

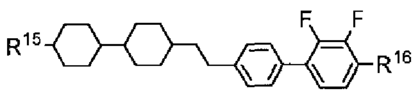
(14-3)

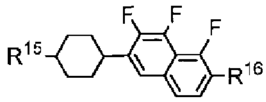
(15-1)

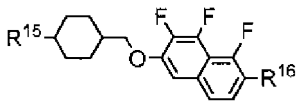
(15-2)

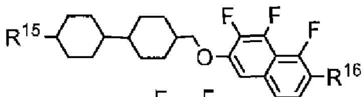
(15-3)

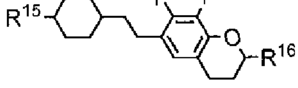
(16-1)

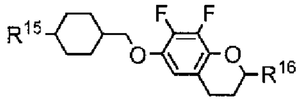
(16-2)

[Chem. 39]

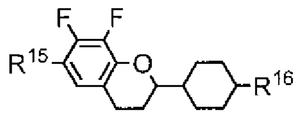
(16-3)

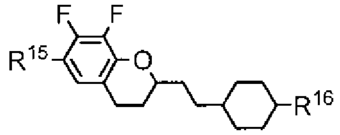
(16-4)

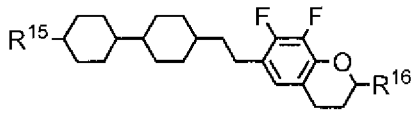
(16-5)

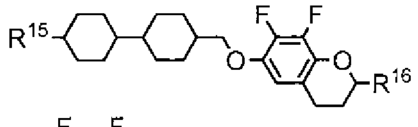
(16-6)

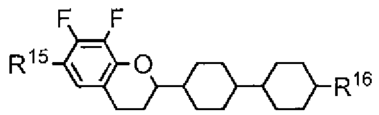
(16-7)

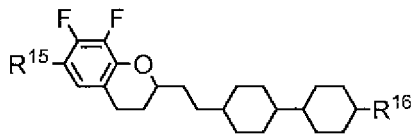
(16-8)

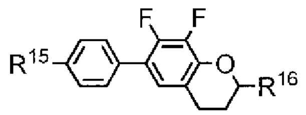
(16-9)

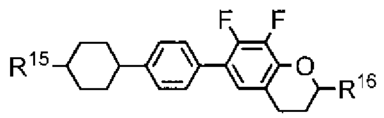
(16-10)

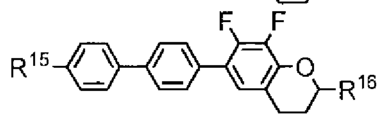
(16-11)

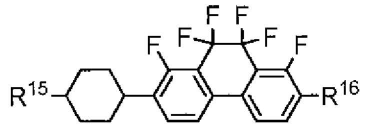
(17-1)

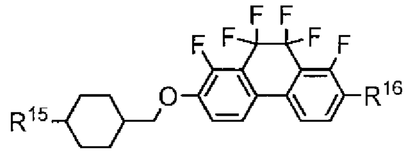
(17-2)

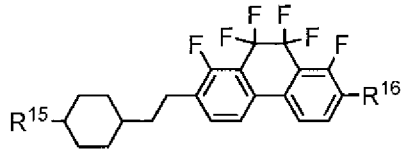
(17-3)

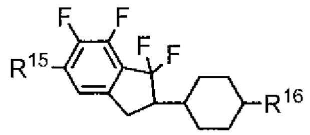
(18-1)

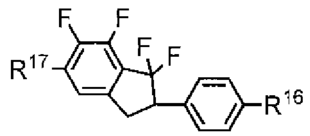
(18-2)

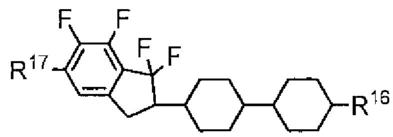
(18-3)

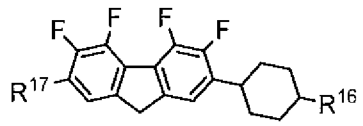
(19-1)

The component E has large negative dielectric anisotropy. The component E is suitably used when a composition for a mode such as IPS, VA, and PSA is prepared. As the content of the component E increases, the dielectric anisotropy of the composition becomes negatively larger, but the viscosity increases. Therefore, the content is preferably as small as possible as long as a threshold voltage of the element has a required value. In consideration of the fact that the dielectric anisotropy is about -5, in order for driving at a sufficient voltage, the content of the component E with respect to 100 weight% of a liquid crystal composition is preferably 40 weight% or more.

Among the components E, since Compound (11) is a bicyclic compound, it has an effect of lowering the viscosity, adjusting the optical anisotropy, or increasing the dielectric anisotropy. Since Compounds (12) and (13) are tricyclic compounds and Compound (14) is a tetracyclic compound, they have an effect of increasing the upper limit temperature, increasing the optical anisotropy, or increasing the dielectric anisotropy. Compounds (15) to (19) have an effect of increasing the dielectric anisotropy.

When a composition having negative dielectric anisotropy is prepared using the component E, the content of the component E with respect to 100 weight% of a liquid crystal composition is preferably in a range of 40 weight% or more and more preferably in a range of 50 weight% to 95 weight%. When the component E is added to a composition having positive dielectric anisotropy, the content of the component E with respect to 100 weight% of a liquid crystal composition is preferably 30 weight% or less. When the component E is added, it is possible to easily adjust an elastic constant of the composition and a voltage-transmittance curve of the element.

When the components B, C, D, and E described above are appropriately combined, it is possible to prepare a liquid crystal composition which has at least one of characteristics such as a high upper limit temperature, a low lower limit temperature, a low viscosity, appropriate optical anisotropy, large positive or negative dielectric anisotropy, a large

specific resistance, high stability with respect to ultraviolet rays, high stability with respect to heat, and a large elastic constant.

3-2. Additives

A liquid crystal composition is prepared by a known method. For example, there is a method in which the components are mixed together and then dissolved by heating. According to applications, an additive may be added to this composition. Examples of the additive include a polymerizable compound other than Compound (1), a polymerization initiator, a polymerization inhibitor, an optically active compound, an antioxidant, a UV absorber, a light stabilizer, a heat stabilizer, a dye, and an antifoaming agent. Such additives are well-known to those skilled in the art and described in documents.

The polymerizable compound is added in order to generate a polymer in the liquid crystal composition. While a voltage is applied between electrodes, when ultraviolet rays are emitted, and Compound (1) is polymerized, the polymer can be generated. In this case, Compound (1) is immobilized while its polar groups non-covalently interact with a surface of a glass (or a metal oxide) substrate. Accordingly, since an ability to control the alignment of liquid crystal molecules is further improved and an appropriate pretilt is obtained, a response time is shortened.

Preferable examples of the polymerizable compound include an acrylate, a methacrylate, a vinyl compound, a vinyloxy compound, propenyl ether, an epoxy compound (oxirane, oxetane), and vinyl ketone. More preferable examples include a compound having at least one acryloyloxy group and a compound having at least one methacryloyloxy group. Still more preferable examples include a compound having both acryloyloxy and methacryloyloxy groups.

Particularly preferable examples of the polymerizable compound include Compound (20). Compound (20) is a compound different from Compound (1). Compound (1) has a polar group. On the other hand, Compound (20) preferably has no polar group.

[Chem. 40]

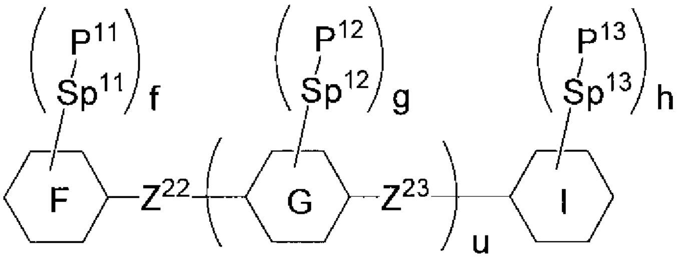

(20)

In Formula (20), the ring F and the ring I are independently cyclohexyl, cyclohexenyl, phenyl, 1-naphthyl, 2-naphthyl, tetrahydropyran-2-yl, 1,3-dioxan-2-yl, pyrimidin-2-yl, or pyridin-2-yl, and in these rings, at least one hydrogen atom is optionally substituted with a halogen atom, an alkyl group having 1 to 12 carbon atoms, an alkoxy group having 1 to 12 carbon atoms, or an alkyl group having 1 to 12 carbon atoms in which at least one hydrogen atom is substituted with a halogen atom.

Preferably, the ring F and the ring I are cyclohexyl, cyclohexenyl, phenyl, fluorophenyl, difluorophenyl, 1-naphthyl, or 2-naphthyl. More preferably, the ring F and the ring I are cyclohexyl, cyclohexenyl, or phenyl. Particularly preferably, the ring F and the ring I are phenyl.

In Formula (20), the ring G is 1,4-cyclohexylene, 1,4-cyclohexenylene, 1,4-phenylene, naphthalene-1,2-diyl, naphthalene-1,3-diyl, naphthalene-1,4-diyl, naphthalene-1,5-diyl, naphthalene-1,6-diyl, naphthalene-1,7-diyl, naphthalene-1,8-diyl, naphthalene-2,3-diyl, naphthalene-2,6-diyl, naphthalene-2,7-diyl, phenanthrene-2,7-diyl, tetrahydropyran-2,5-diyl, 1,3-dioxane-2,5-diyl, pyrimidine-2,5-diyl, or pyridine-2,5-diyl, and in these rings, at least one hydrogen atom is optionally substituted with a halogen atom, an alkyl group having 1 to 12 carbon atoms, an alkoxy group having 1 to 12 carbon atoms, or an alkyl group having 1 to 12 carbon atoms in which at least one hydrogen atom is substituted with a halogen atom.

Preferably, the ring G is 1,4-cyclohexylene, 1,4-cyclohexenylene, 1,4-phenylene, 2-fluoro-1,4-phenylene, naphthalene-1,2-diyl, naphthalene-1,3-diyl, naphthalene-1,4-diyl, naphthalene-1,5-diyl, naphthalene-1,6-diyl, naphthalene-1,7-diyl, naphthalene-1,8-diyl, naphthalene-2,3-diyl, naphthalene-2,6-diyl, or naphthalene-2,7-diyl. More preferably, the ring G is 1,4-cyclohexylene, 1,4-cyclohexenylene, 1,4-phenylene, or 2-fluoro-1,4-phenylene. Particularly preferably, the ring G is 1,4-phenylene or 2-fluoro-1,4-phenylene. Most preferably, the ring G is 1,4-phenylene.

In Formula (20), $Z^{22}$ and $Z^{23}$ are independently a single bond or an alkylene having 1 to 10 carbon atoms, and in the alkylene group, at least one $-CH_2-$ is optionally substituted with -O-, -CO-, -COO-, or -OCO-, and at least one $-CH_2CH_2-$ is optionally substituted with -CH=CH-, $-C(CH_3)=CH-$, $-CH=C(CH_3)-$, or $-C(CH_3)=C(CH_3)-$, and in these groups,

at least one hydrogen atom is optionally substituted with a fluorine or chlorine atom. Preferably, $Z^{22}$ and $Z^{23}$ are a single bond, $-CH_2CH_2-$, $-CH_2O-$, $-OCH_2-$, -COO-, or -OCO-. More preferably, $Z^{22}$ and $Z^{23}$ are a single bond.

In Compound (20), $P^{11}$, $P^{12}$, and $P^{13}$ are independently a polymerizable group. Preferably, $P^{11}$, $P^{12}$, and $P^{13}$ are groups selected from the group consisting of polymerizable groups represented by Formula (P-1) to Formula (P-5). More preferably, $P^{11}$, $P^{12}$, and $P^{13}$ are groups represented by Formula (P-1), Formula (P-2), and Formula (P-3). Particularly preferably, $P^{11}$, $P^{12}$, and $P^{13}$ are groups represented by Formula (P-1). Preferable groups represented by Formula (P-1) include acryloyloxy ($-OCO-CH=CH_2$) and methacryloyloxy ($-OCO-C(CH_3)=CH_2$). Wavy lines in Formula (P-1) to Formula (P-5) indicate bonding sites.

[Chem. 41]

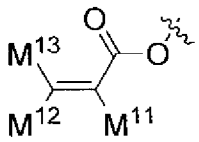
(P-1)

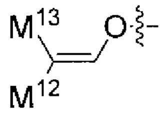
(P-2)

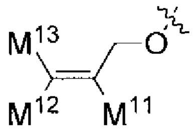
(P-3)

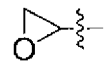
(P-4)

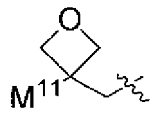
(P-5)

In Formula (P-1) to Formula (P-5), $M^{11}$, $M^{12}$, and $M^{13}$ are independently a hydrogen atom, a fluorine atom, an alkyl group having 1 to 5 carbon atoms, or an alkyl group having 1 to 5 carbon atoms in which at least one hydrogen atom is substituted with a halogen atom. Preferably, $M^{11}$, $M^{12}$, and $M^{13}$ are a hydrogen atom or a methyl group in order to increase reactivity. More preferably, $M^{11}$ is a hydrogen atom or a methyl group, and more preferably, $M^{12}$ and $M^{13}$ are a hydrogen atom.

In Formula (20), $Sp^{11}$, $Sp^{12}$, and $Sp^{13}$ are independently a single bond or an alkylene having 1 to 10 carbon atoms, and in the alkylene group, at least one $-CH_2-$ is optionally substituted with -O-, -COO-, -OCO-, or -OCOO-, and at least one $-CH_2CH_2-$ is optionally substituted with -CH=CH- or -C≡C-, and in these groups, at least one hydrogen atom is optionally substituted with a fluorine or chlorine atom. Preferably, $Sp^{11}$, $Sp^{12}$, and $Sp^{13}$ are a single bond.

In Formula (20), u is 0, 1, or 2. Preferably, u is 0 or 1.

In Formula (20), f, g, and h are independently 0, 1, 2, 3, or 4, and a sum of f, g, and h is 1 or more. Preferably, f, g, or h is 0, 1 or 2. Preferably, the sum is 2, 3 or 4. More preferably, the sum is 2 or 3.

Preferable examples of Compound (20) include Compound (20-1) to Compound (20-7) described in Item 15 and the following Compounds (20-8) to (20-11). More preferable examples include Compounds (20-1-1) to (20-1-5), Compounds (20-2-1) to (20-2-5), Compound (20-4-1), Compound (20-5-1), Compound (20-6-1), and Compound (20-7-1). In these compounds, $R^{25}$ to $R^{31}$ are independently a hydrogen atom or a methyl group; $R^{32}$, $R^{33}$, and $R^{34}$ are independently a hydrogen atom or an alkyl group having 1 to 5 carbon atoms, at least one of $R^{32}$, $R^{33}$, and $R^{34}$ is an alkyl group having 1 to 5 carbon atoms; v, and x are independently 0 or 1; t and u are independently an integer of 1 to 10, t+v and x+u each have a maximum of 10; $L^{31}$ to $L^{36}$ are independently a hydrogen or fluorine atom, and $L^{37}$ and $L^{38}$ are independently a hydrogen atom, a fluorine atom, or a methyl group.

[Chem. 42]

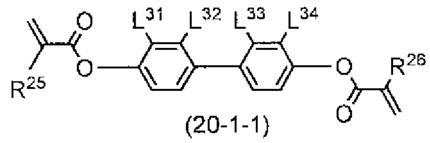

(20-1-1)

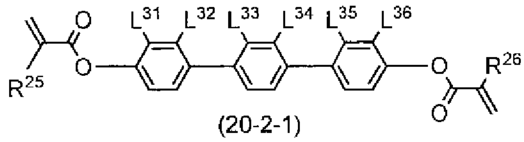

(20-2-1)

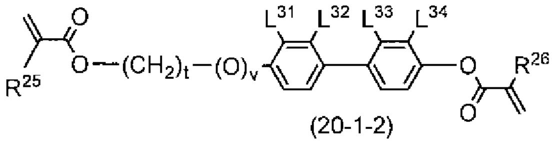

(20-1-2)

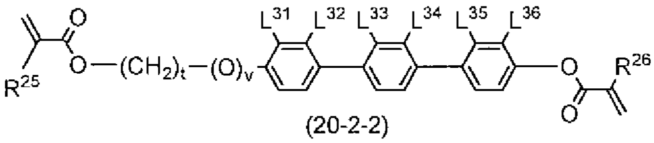

(20-2-2)

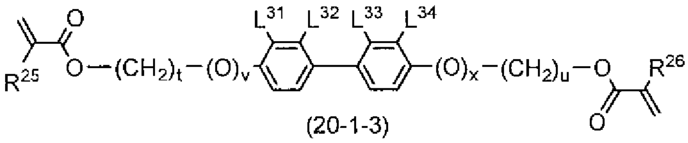

(20-1-3)

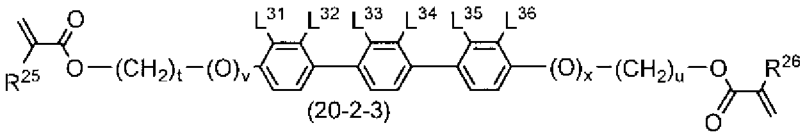

(20-2-3)

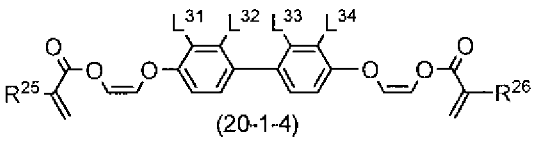

(20-1-4)

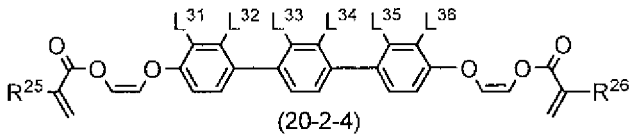

(20-2-4)

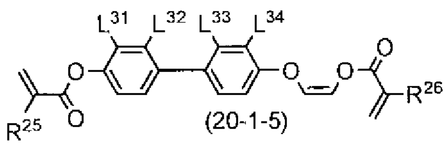

(20-1-5)

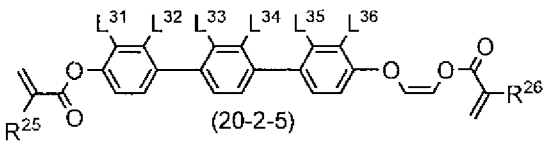

(20-2-5)

[Chem. 43]

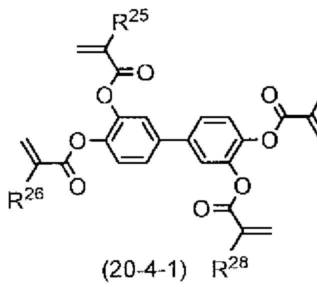
(20-4-1)

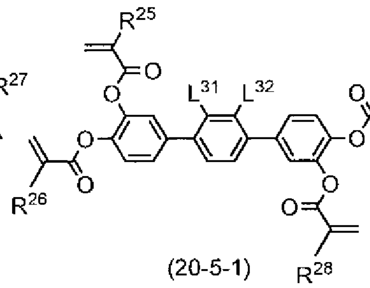
(20-5-1)

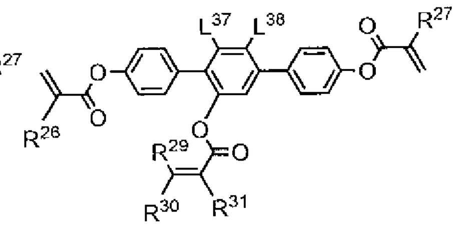
(20-6-1)

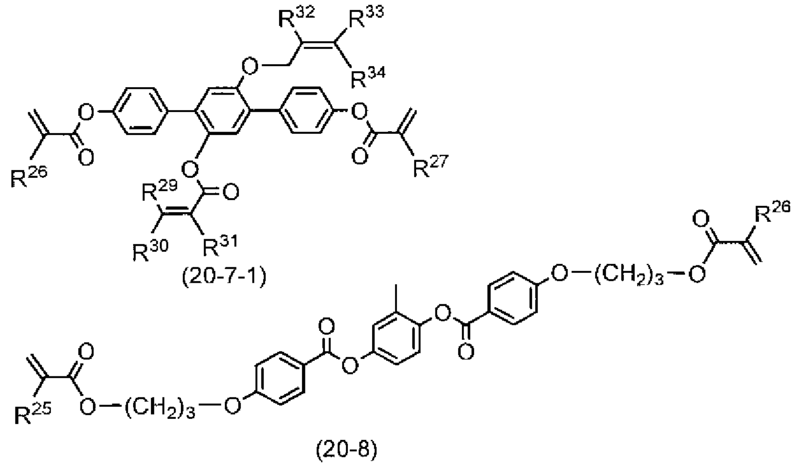
(20-7-1)

(20-8)

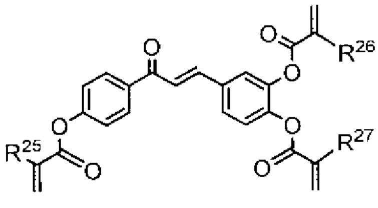
(20-9)

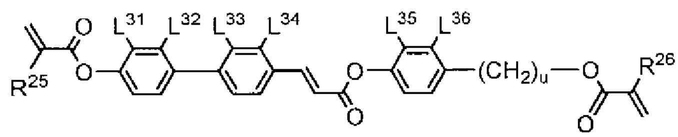
(20-10)

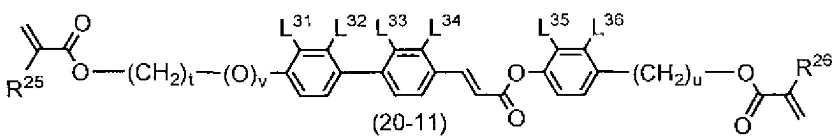
(20-11)

The polymerizable compound in the composition can be polymerized rapidly using a polymerization initiator such as a photoradical polymerization initiator. In addition, when reaction conditions during polymerization are optimized, it is possible to reduce an amount of the polymerizable compound remaining. Examples of a photoradical polymerization initiator include Darocur series TPO, 1173, and 4265, and Irgacure series 184, 369, 500, 651, 784, 819, 907, 1300, 1700, 1800, 1850, and 2959 which are commercially available from BASF.

Additional examples of the photoradical polymerization initiator include 4-methoxyphenyl-2,4-bis(trichloromethyl)triazine, 2-(4-butoxystyryl)-5-trichloromethyl-1,3,4-oxadiazole, 9-phenylacridine, 9,10-benzphenazine, a benzophenone/Michler's ketone mixture, a hexaarylbiimidazole/mercaptobenzimidazole mixture, 1-(4-isopropylphenyl)-2-hydroxy-2-methylpropan-1-one, benzyldimethylketal, 2-methyl-1-[4-(methylthio)phenyl]-2-morpholinopropan-1-one, 2,4-diethyl xanthone/methyl p-dimethylaminobenzoate mixture, and a benzophenone/methyltriethanolamine mixture.

After a photoradical polymerization initiator is added to the liquid crystal composition, ultraviolet rays are emitted while an electric field is applied, and thus polymerization can be performed. Unreacted polymerization initiator or decomposition products of a polymerization initiator may cause display defects such as image burning in the element. In order to prevent this, photopolymerization may be performed without adding a polymerization initiator. A preferable wavelength of light to be emitted is in a range of 150 nm to 500 nm. A more preferable wavelength is in a range of 250 nm to 450 nm, and a most preferable wavelength is in a range of 300 nm to 400 nm.

When the polymerizable compound is stored, a polymerization inhibitor may be added in order to prevent polymerization. Generally, when a polymerization inhibitor is contained in the polymerizable compound, the polymerizable compound is added to the composition when the polymerization inhibitor has not been removed. Examples of the polymerization inhibitor include hydroquinone, hydroquinone derivatives such as methylhydroquinone, 4-t-butyl catechol,

4-methoxyphenol, and phenothiazine.

The optically active compound has an effect of deriving a helical structure in liquid crystal molecules, imparting a required helix angle, and thus preventing reverse twisting. When the optically active compound is added, it is possible to adjust a helical pitch. Two or more optically active compounds may be added in order to adjust a temperature dependence of the helical pitch. Preferable examples of the optically active compound include the following Compounds (Op-1) to (Op-18). In Compound (Op-18), ring J is 1,4-cyclohexylene or 1,4-phenylene, and $R^{28}$ is an alkyl group having 1 to 10 carbon atoms. * indicates an asymmetric carbon atom.

[Chem. 44]

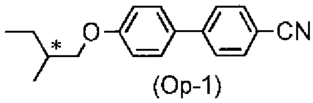

(Op-1)

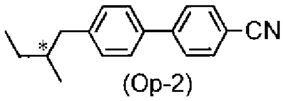

(Op-2)

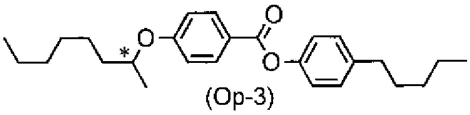

(Op-3)

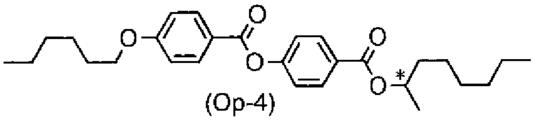

(Op-4)

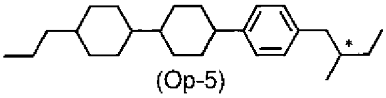

(Op-5)

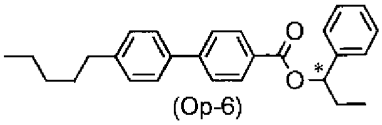

(Op-6)

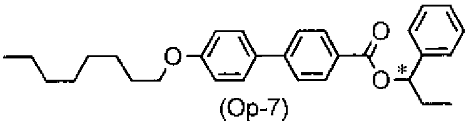

(Op-7)

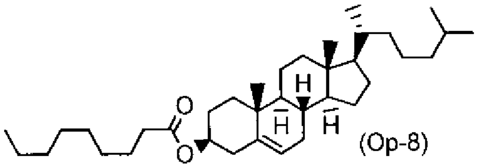

(Op-8)

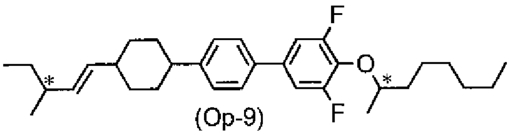

(Op-9)

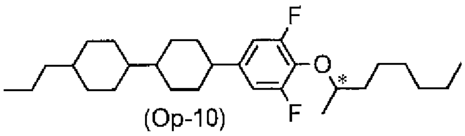

(Op-10)

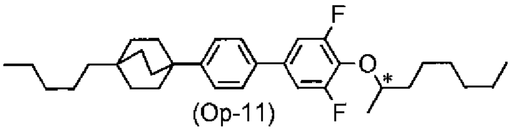

(Op-11)

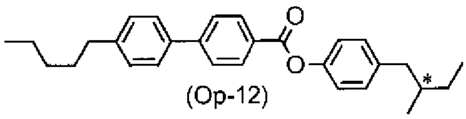

(Op-12)

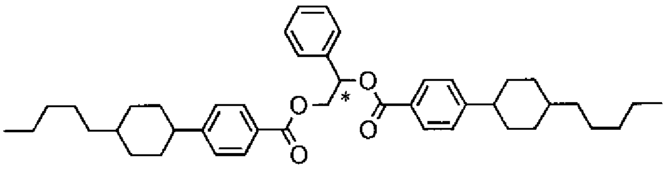

(Op-13)

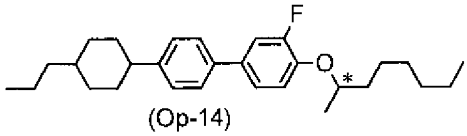

(Op-14)

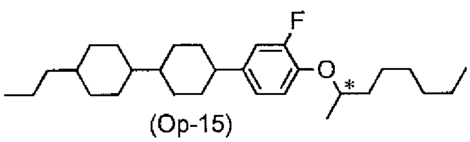

(Op-15)

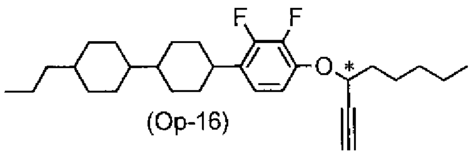

(Op-16)

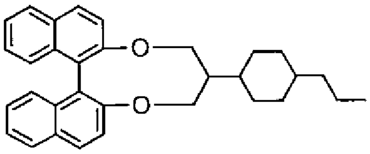

(Op-17)

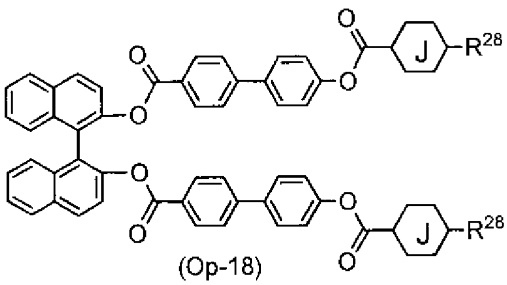

(Op-18)

When an antioxidant is used, it is effective for maintaining a high voltage holding ratio of the element. Preferable examples of the antioxidant include the following Compounds (AO-1) and (AO-2); Irganox 415, Irganox 565, Irganox 1010, Irganox 1035, Irganox 3114, and Irganox 1098 (product name; commercially available from BASF).

When a UV absorber is used, it is effective for preventing an upper limit temperature of the element from decreasing. Preferable examples of the UV absorber include benzophenone derivatives, benzoate derivatives, and triazole derivatives. Specific examples include the following Compounds (AO-3) and (AO-4); Tinuvin 329, Tinuvin P, Tinuvin 326, Tinuvin 234, Tinuvin 213, Tinuvin 400, Tinuvin 328, and Tinuvin 99-2 (product name; commercially available from BASF); and 1,4-diazabicyclo[2.2.2]octane (DABCO).

A light stabilizer such as a sterically hindered amine is preferably used in order to maintain a high voltage holding ratio of the element. Preferable examples of the light stabilizer include the following Compounds (AO-5), (AO-6), and (AO-7); Tinuvin 144, Tinuvin 765, and Tinuvin 770DF (product name; commercially available from BASF); LA-77Y and LA-77G (product name; commercially available from ADEKA).

A heat stabilizer is used because it is effective to maintain a high voltage holding ratio of the element. Preferable examples include Irgafos 168 (product name; commercially available from BASF).

In order to adapt the composition to an element in a guest host (GH) mode, a dichroic dye such as an azo dye or an anthraquinone dye is added to the composition as necessary.

The antifoaming agent is effective for preventing foaming. Preferable examples of the antifoaming agent include dimethyl silicone oil and methylphenyl silicone oil.

[Chem. 45]

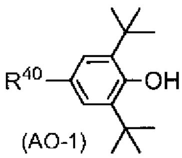
(AO-1)

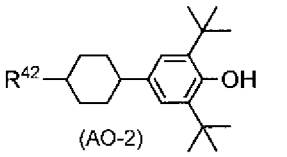
(AO-2)

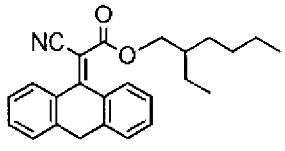
(AO-3)

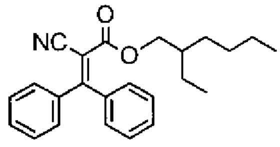
(AO-4)

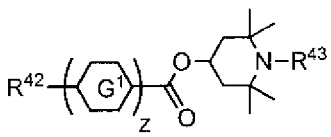
(AO-5)

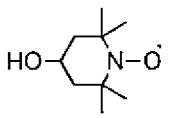
(AO-6)

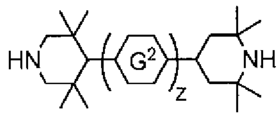
(AO-7)

In Compound (AO-1), $R^{40}$ is an alkyl group having 1 to 20 carbon atoms, an alkoxy group having 1 to 20 carbon atoms, $-COOR^{41}$, or $-CH_2CH_2COOR^{41}$, here, $R^{41}$ is an alkyl group having 1 to 20 carbon atoms. In Compounds (AO-2) and (AO-5), $R^{42}$ is an alkyl group having 1 to 20 carbon atoms. In Compound (AO-5), $R^{43}$ is a hydrogen atom, a methyl group or O. (oxygen radical); ring $G^1$ is 1,4-cyclohexylene or 1,4-phenylene; in Compound (AO-7), ring $G^2$ is 1,4-cyclohexylene, 1,4-phenylene, or a group in which at least one hydrogen atom of 1,4-phenylene is substituted with a fluorine atom; in Compounds (AO-5) and (AO-7), z is 1, 2, or 3.

4. Liquid crystal display element

The liquid crystal composition has an operation mode such as PC, TN, STN, OCB, and PSA, and can be suitably used for a liquid crystal display element that is driven by an active matrix method. This composition has an operation mode such as PC, TN, STN, OCB, VA, and IPS, and can also be suitably used for a liquid crystal display element that is driven by a passive matrix method. These elements can be applied to any type of a reflective type, a transmissive type, and a semi-transmissive type.

This composition is also suitable for a nematic curvilinear aligned phase (NCAP) element, and here, the composition is microencapsulated. This composition can also be used for a polymer dispersed liquid crystal display element (PDLCD) and a polymer network liquid crystal display element (PNLCD). In these compositions, a large amount of the polymerizable compound is added. On the other hand, in a composition using a liquid crystal display element in a PSA mode, a proportion of the polymerizable compound with respect to 100 weight% of a liquid crystal composition is preferably 10 weight% or less, a more preferable proportion is in a range of 0.1 weight% to 2 weight%, and a still more preferable proportion is in a range of 0.2 weight% to 1.0 weight%. An element in a PSA mode can be driven by a driving method such as an active matrix method and a passive matrix method. Such an element can be applied to any type of a reflective

type, a transmissive type, and a semi-transmissive type.

In the polymer sustained alignment type element, the polymer contained in the composition causes liquid crystal molecules to be aligned. The polar compound assists the alignment of liquid crystal molecule. That is, the polar compound can be used in place of an alignment film. An example of a method of producing such an element is as follows. An element including two substrates called an array substrate and a color filter substrate is prepared. The substrates have no alignment film. At least one of the substrates has an electrode layer. Liquid crystalline compounds are mixed to prepare a liquid crystal composition. Compound (1), and additionally other polymerizable compounds and polar compounds are added as necessary to this composition. As necessary, an additive may be further added thereto. This composition is inserted into an element. Light is emitted while a voltage is applied to this element. Ultraviolet rays are preferable. The polymerizable compound is polymerized by emitting light. According to the polymerization, a composition containing a polymer is produced and an element having a PSA mode is produced.

In this procedure, since a polar group interacts with a surface of the substrate, the polar compound is disposed on the substrate. The polar compound causes liquid crystal molecules to be aligned. When there are a plurality of polar groups, interaction with a surface of the substrate becomes stronger and liquid crystal molecules can be aligned at a low concentration. When a voltage is applied, the alignment of liquid crystal molecules is further promoted according to an action of an electric field. According to the alignment, the polymerizable compound is also aligned. Since the polymerizable compound is polymerized by ultraviolet rays in this state, a polymer that maintains this alignment is produced. According to an effect of the polymer, the alignment of liquid crystal molecules is additionally stabilized, and thus a response time of the element is shortened. Since image burn is a malfunction of liquid crystal molecules, burn is also lessened by an effect of the polymer at the same time. Since Compound (1) is polymerizable, it is consumed by polymerization. Compound (1) is also consumed by copolymerization with other polymerizable compounds. Therefore, Compound (1) has a polar group but it is consumed, and thus a liquid crystal display element having a high voltage holding ratio is obtained. Here, when a polar compound having polymerizability is used, it is possible for one compound to exhibit effects of both a polar compound and a polymerizable compound. Therefore, a polymerizable compound having no polar group is not necessary in some cases.

[Examples]

The disclosure will be described in further detail with reference to examples (including synthesis examples and usage examples). The disclosure is not limited to such examples. The disclosure also includes a mixture prepared by mixing at least two of compositions of usage examples.

1. Example of Compound (1)

Unless otherwise described, the reactions occurred under a nitrogen atmosphere. Compound (1) was synthesized according to procedures shown in Example 1. A synthesized compound was identified by a method such as NMR analysis. Characteristics of Compound (1), liquid crystalline compounds, compositions, and elements were measured by the following methods.

NMR analysis: a DRX-500 (commercially available from Bruker BioSpin) was used for measurement. In $^1$H-NMR measurement, a sample was dissolved in a deuterated solvent such as $CDCl_3$ and measurement was performed under conditions of room temperature and 500 MHz with a cumulative number of 16 measurements. Tetramethylsilane was used as an internal standard. $^{19}$F-NMR measurement was performed under conditions in which $CFCl_3$ was used as an internal standard and a cumulative number of measurements was 24. In the explanation of nuclear magnetic resonance spectrums, s denotes singlet, d denotes doublet, t denotes triplet, q denotes quartet, quin denotes quintet, sext denotes sextet, m denotes multiplet, and br denotes broad.

Gas chromatographic analysis: A GC-2010 type gas chromatography instrument (commercially available from Shimadzu Corporation) was used for measurement. As a column, a capillary column DB-1 (with a length 60 m, an inner diameter of 0.25 mm, and a film thickness of 0.25 $\mu$m, commercially available from Agilent Technologies Inc.) was used. Helium (1 ml/min) was used as a carrier gas. A temperature of a sample vaporization chamber was set to 300 °C, and a temperature of a detector (FID) part was set to 300 °C. A sample was dissolved in acetone to prepare a 1 weight% solution, and 1 $\mu$l of the obtained solution was injected into the sample vaporization chamber. As a recorder, a GC Solution system (commercially available from Shimadzu Corporation) was used.

HPLC analysis: a Prominence (LC-20AD; SPD-20A, commercially available from Shimadzu Corporation) was used for measurement. As a column, a YMC-Pack ODS-A (with a length of 150 mm, an inner diameter of 4.6 mm, and a particle size of 5 $\mu$m, commercially available from YMC Co., Ltd.) was used. As an eluent, acetonitrile and water were appropriately mixed and used. As a detector, for example, a UV detector, an RI detector, or a CORONA detector, was appropriately used. When a UV detector was used, a detection wavelength was set to 254 nm. A sample was dissolved in acetonitrile to prepare a 0.1 weight% solution and 1 $\mu$L of the solution was introduced into a sample chamber. As a

recorder, a C-R7Aplus (commercially available from Shimadzu Corporation) was used.

UV-visible spectroscopic analysis: a PharmaSpec UV-1700 (commercially available from Shimadzu Corporation) was used for measurement. A detection wavelength of 190 nm to 700 nm was set. A sample was dissolved in acetonitrile to prepare a 0.01 mmol/L solution, and put into a quartz cell (optical path length of 1 cm) for measurement.

Measurement sample: when a phase structure and a transition temperature (a clearing point, a melting point, a polymerization initiation temperature, etc.) were measured, a compound itself was used as a sample.

Measurement method: properties were measured by the following methods. Most of these are described in JEITA standards (JEITA·ED-2521B) discussed and established by the Japan Electronics and Information Technology Industries Association (JEITA) or modified methods thereof. No thin film transistor (TFT) was attached to a TN element used for measurement.

(1) Phase structure

A sample was placed on a hot plate (FP-52 type hot stage (commercially available from Mettler Toledo)) of a melting point measuring device including a polarizing microscope. While this sample was heated at a speed of 3 °C/min, a phase state and changes thereof were observed under a polarization microscope, and a type of the phase was identified.

(2) Transition temperature (°C)

A scanning calorimeter (commercially available from PerkinElmer) and a Diamond DSC system or a high sensitivity differential scanning calorimeter X-DSC7000 (commercially available from Hitachi High-Tech Science Corporation) were used for measurement. The temperature of the sample was raised or lowered at a speed of 3 °C/min, a starting point of an endothermic peak or an exothermic peak according to a phase change in the sample was obtained by extrapolation, and a transition temperature was determined. A melting point and a polymerization initiation temperature of the compound were measured using this device. A temperature at which the compound transitions from a solid phase to a liquid crystal phase such as a smectic phase or a nematic phase may be abbreviated as a "lower limit temperature of a liquid crystal phase." A temperature at which the compound transitions from a liquid crystal phase to a liquid phase may be abbreviated as a "clearing point."

A crystal is represented as C. When types of crystal are distinguished, they are denoted as $C_1$ and $C_2$. The smectic phase is represented as S and the nematic phase is represented as N. In the smectic phase, when phases are distinguished as a smectic A phase, a smectic B phase, a smectic C phase, and a smectic F phase, they are represented as $S_A$, $S_B$, $S_C$, and $S_F$, respectively. A liquid (isotropic) is represented as I. The transition temperature is expressed as, for example, "C 50.0 N 100.0 I." This indicates that a transition temperature from a crystal to a nematic phase is 50.0 °C, and a transition temperature from a nematic phase to a liquid is 100.0 °C.

(3) Upper limit temperature of nematic phase ($T_{NI}$ or NI; °C)

A sample was placed on a hot plate of a melting point measuring device including a polarization microscope and heated at a speed of 1 °C/min. A temperature at which a part of the sample changed from a nematic phase to an isotropic liquid was measured. The upper limit temperature of a nematic phase may be abbreviated as an "upper limit temperature." When a sample is a mixture of Compound (1) and a mother liquid crystal, the sample is indicated by a symbol $T_{NI}$. When a sample is a mixture of Compound (1) and a compound of the components B, C, and D, the sample is indicated by a symbol NI.

(4) Lower limit temperature of nematic phase ($T_C$; °C)

A sample having a nematic phase was stored in a freezer at 0 °C, -10 °C, -20 °C, -30 °C, and -40 °C for 10 days, and then a liquid crystal phase was observed. For example, when the sample remained in a nematic phase at -20 °C and changed to a crystal or a smectic phase at -30 °C, $T_C$ is described as ≤-20 °C. A lower limit temperature of a nematic phase may be abbreviated as a "lower limit temperature."

(5) Viscosity (bulk viscosity; η; measured at 20 °C; mPa.s)

An E type rotational viscometer (commercially available from Tokyo Keiki Inc) was used for measurement.

(6) Optical anisotropy (refractive index anisotropy; measured at 25 °C; Δn)

Measurement was performed using an Abbe refractometer in which a polarizing plate was attached to an

eyepiece using light with a wavelength of 589 nm. A surface of a main prism was rubbed in one direction and the sample was then added dropwise onto the main prism. A refractive index (n∥) was measured when a direction of polarized light was parallel to a rubbing direction. A refractive index (n⊥) was measured when a direction of polarized light was perpendicular to a rubbing direction. A value of optical anisotropy (Δn) was calculated from the formula Δn=n∥-n⊥.

(7) Specific resistance (ρ; measured at 25 °C; Ωcm)

1.0 mL of a sample was injected into a vessel including an electrode. A DC voltage (10 V) was applied to this vessel and a direct current was measured after 10 seconds. A specific resistance was computed from the following formula.

$$\text{(Specific resistance)}=\{\text{(voltage)}\times\text{(electrical capacitance of vessel)}\}/\{\text{(direct current)}\times\text{(dielectric constant of vacuum)}\}$$

Methods of measuring properties may be different between a sample having positive dielectric anisotropy and a sample having negative dielectric anisotropy. A measurement method when dielectric anisotropy is positive is described in Items (8a) to (12a). A measurement method when dielectric anisotropy is negative is described in Items (8b) to (12b).

(8a) Viscosity (rotational viscosity; γ1; measured at 25 °C; mPa.s)

Positive dielectric anisotropy: Measurement was performed according to a method described in M. Imai et al., Molecular Crystals and Liquid Crystals, Vol. 259, 37 (1995). A sample was inserted into a TN element in which a twist angle was 0 degrees and an interval (cell gap) between two glass substrates was 5 μm. Voltages in a range of 16 V to 19.5 V were gradually applied at 0.5 V intervals to this element. After no voltage was applied for 0.2 seconds, application was repeated under conditions of one square wave (rectangular pulse; 0.2 seconds) and no voltage application (2 seconds). A peak current and a peak time of a transient current generated by this application were measured. A value of the rotational viscosity was obtained from these measured values and Calculation Formula (8) on page 40 in the paper (M. Imai). A value of the dielectric anisotropy necessary for this calculation was obtained by the method described below using an element for which the rotational viscosity was measured.

(8b) Viscosity (rotational viscosity; γ1; measured at 25 °C; mPa.s)

Negative dielectric anisotropy: Measurement was performed according to a method described in M. Imai et al., Molecular Crystals and Liquid Crystals, Vol. 259, 37 (1995). A sample was inserted into a VA element in which an interval (cell gap) between two glass substrates was 20 μm. Voltages in a range of 39 V to 50 V were gradually applied at 1 V intervals to this element. After no voltage was applied for 0.2 seconds, application was repeated under conditions of one square wave (rectangular pulse; 0.2 seconds) and no voltage application (2 seconds). A peak current and a peak time of a transient current generated by this application were measured. A value of the rotational viscosity was obtained from these measured values and Calculation Formula (8) on page 40 in the paper (M. Imai). The dielectric anisotropy necessary for this calculation was obtained using a value measured in the following dielectric anisotropy section.

(9a) Dielectric anisotropy (Δε; measured at 25 °C)

Positive dielectric anisotropy: A sample was inserted into a TN element in which an interval (cell gap) between two glass substrates was 9 μm and a twist angle was 80 degrees. A sine wave (10 V, 1 kHz) was applied to this element, and after 2 seconds, a dielectric constant (ε∥) in a long axis direction of liquid crystal molecules was measured. A sine wave (0.5 V, 1 kHz) was applied to this element, and after 2 seconds, a dielectric constant (ε⊥) in a short axis direction of liquid crystal molecules was measured. A value of the dielectric anisotropy was calculated from Formula Δε=ε∥-ε⊥.

(9b) Dielectric anisotropy (Δε; measured at 25 °C)

Negative dielectric anisotropy: A value of dielectric anisotropy was calculated from Formula Δε=ε∥-ε⊥. A dielectric constant (ε∥ and ε⊥) was measured as follows.

1) Measurement of dielectric constant (ε∥): An ethanol (20 mL) solution containing octadecyltriethoxysilane (0.16 mL) was applied to a well-washed glass substrate. The glass substrate was rotated by a spinner and then heated

at 150 °C for 1 hour. A sample was inserted into a VA element in which an interval (cell gap) between two glass substrates was 4 μm, and this element was sealed using an adhesive that was cured with ultraviolet rays. A sine wave (0.5 V, 1 kHz) was applied to this element and after 2 seconds, a dielectric constant (ε||) in a long axis direction of liquid crystal molecules was measured.

2) Measurement of dielectric constant (ε⊥): A polyimide solution was applied to a well-washed glass substrate. The glass substrate was fired and a rubbing treatment was then performed on the obtained alignment film. A sample was inserted into a TN element in which an interval (cell gap) between two glass substrates was 9 μm and a twist angle was 80 degrees. A sine wave (0.5 V, 1 kHz) was applied to this element, and after 2 seconds, a dielectric constant (ε⊥) in a short axis direction of liquid crystal molecules was measured.

(10a) Elastic constant (K; measured at 25 °C; pN)

Positive dielectric anisotropy: An HP4284A type LCR meter (commercially available from Agilent Technologies) was used for measurement. A sample was inserted into a horizontally aligned element in which an interval (cell gap) between two glass substrates was 20 μm. A charge of 0 V to 20 V was applied to this element, and an electrostatic capacitance and an applied voltage were measured. These measured electrostatic capacitance (C) and applied voltage (V) values were fitted into Formula (2.98) and Formula (2.101) on page 75 in "Liquid Crystal Device Handbook" (commercially available from Nikkan Kogyo Shimbun, Ltd.), and values of $K_{11}$ and $K_{33}$ were obtained from Formula (2.99). Next, in Formula (3.18) on page 171, $K_{22}$ was computed using the values of $K_{11}$ and $K_{33}$ obtained above. An elastic constant K was expressed as an average value of $K_{11}$, $K_{22}$ and $K_{33}$ obtained in this manner.

(10b) Elastic constant ($K_{11}$ and $K_{33}$; measured at 25 °C; pN)

Negative dielectric anisotropy: An EC-1 elastic constant measuring instrument (commercially available from TOYO Corporation) was used for measurement. A sample was inserted into a vertically aligned element in which an interval (cell gap) between two glass substrates was 20 μm. A charge of 20 V to 0 V was applied to this element and an electrostatic capacitance and an applied voltage were measured. Values of an electrostatic capacitance (C) and an applied voltage (V) were fitted into Formula (2.98) and Formula (2.101) on page 75 in "Liquid Crystal Device Handbook" (commercially available from Nikkan Kogyo Shimbun, Ltd.) and a value of the elastic constant was obtained from Formula (2.100).

(11a) Threshold voltage (Vth; measured at 25 °C; V)

Positive dielectric anisotropy: An LCD5100 type luminance meter (commercially available from Otsuka Electronics) was used for measurement. A light source was a halogen lamp. A sample was inserted into a TN element in a normally white mode in which an interval (cell gap) between two glass substrates was 0.45/Δn μm) and a twist angle was 80 degrees. A voltage (32 Hz, square wave) applied to this element was gradually increased by 0.02 V from 0 V to 10 V. In this case, light was emitted to the element in a vertical direction and a quantity of light that had passed through the element was measured. A voltage-transmittance curve in which the transmittance was 100% when the quantity of light was a maximum and the transmittance was 0% when the quantity of light was a minimum was created. A threshold voltage was a voltage when the transmittance was 90%.

(11b) Threshold voltage (Vth; measured at 25 °C; V)

Negative dielectric anisotropy: An LCD5100 type luminance meter (commercially available from Otsuka Electronics) was used for measurement. A light source was a halogen lamp. A sample was inserted into a VA element in a normally black mode in which an interval (cell gap) between two glass substrates was 4 μm and a rubbing direction was antiparallel, and this element was sealed using an adhesive that was cured with ultraviolet rays. A voltage (60 Hz, square wave) applied to this element was gradually increased by 0.02 V from 0 V to 20 V. In this case, light was emitted to the element in a vertical direction and a quantity of light that had passed through the element was measured. A voltage-transmittance curve in which the transmittance was 100% when the quantity of light was a maximum and the transmittance was 0% when the quantity of light was a minimum was created. A threshold voltage was a voltage when the transmittance was 10%.

(12a) Response time (τ; measured at 25 °C; ms)

Positive dielectric anisotropy: An LCD5100 type luminance meter (commercially available from Otsuka Electronics) was used for measurement. A light source was a halogen lamp. A low-pass filter was set at 5 kHz. A sample

was inserted into a TN element in a normally white mode in which an interval (cell gap) between two glass substrates was 5.0 μm and a twist angle was 80 degrees. A square wave (60 Hz, 5 V, 0.5 seconds) was applied to this element. In this case, light was emitted to the element in a vertical direction and a quantity of light that had passed through the element was measured. The transmittance was 100% when the quantity of light was a maximum, and the transmittance was 0% when the quantity of light was a minimum. A rise time (τr; millisecond) was a time required for the transmittance to change from 90% to 10%. A fall time (τf; millisecond) was a time for the transmittance to change from 10% to 90%. A response time was a sum of the rise time and the fall time obtained in this manner.

(12b) Response time (τ; measured at 25 °C; ms)

Negative dielectric anisotropy: An LCD5100 type luminance meter (commercially available from Otsuka Electronics) was used for measurement. A light source was a halogen lamp. A low-pass filter was set at 5 kHz. A sample was inserted into a PVA element in a normally black mode in which an interval (cell gap) between two glass substrates was 3.2 μm and a rubbing direction was antiparallel. This element was sealed using an adhesive that was cured with ultraviolet rays. A voltage that was slightly higher than a threshold voltage was applied to this element for 1 minute, and next ultraviolet rays of 23.5 $mW/cm^2$ were emitted for 8 minutes while a voltage of 5.6 V was applied. A square wave (60 Hz, 10 V, 0.5 seconds) was applied to this element. In this case, light was emitted to the element in a vertical direction and a quantity of light that had passed through the element was measured. The transmittance was 100% when the quantity of light was a maximum, and the transmittance was 0% when the quantity of light was a minimum. A response time was a time (fall time; milliseconds) required for the transmittance to change from 90% to 10%.

(13) Voltage holding ratio

A polymerizable compound was polymerized by emitting ultraviolet rays using a Black light, F40T10/BL (peak wavelength of 369 nm, commercially available from Eye Graphics Co., Ltd.). A pulse voltage (at 1 V for 60 microseconds) was applied to this element at 60 °C for charging. An attenuating voltage was measured for 1.67 seconds using a high-speed voltmeter, and an area A between a voltage curve in a unit cycle and the horizontal axis was obtained. An area B was an area when the voltage was not attenuated. A voltage holding ratio was expressed as a percentage of the area A with respect to the area B.

Raw materials

Sol Mix (registered trademark) A-11 was a mixture containing ethanol (85.5%), methanol (13.4%), and isopropanol (IPA) (1.1%) and purchased from Japan Alcohol Corporation.

[Synthesis Example 1]

Synthesis of Compound (1-2-3)

[Chem. 46]

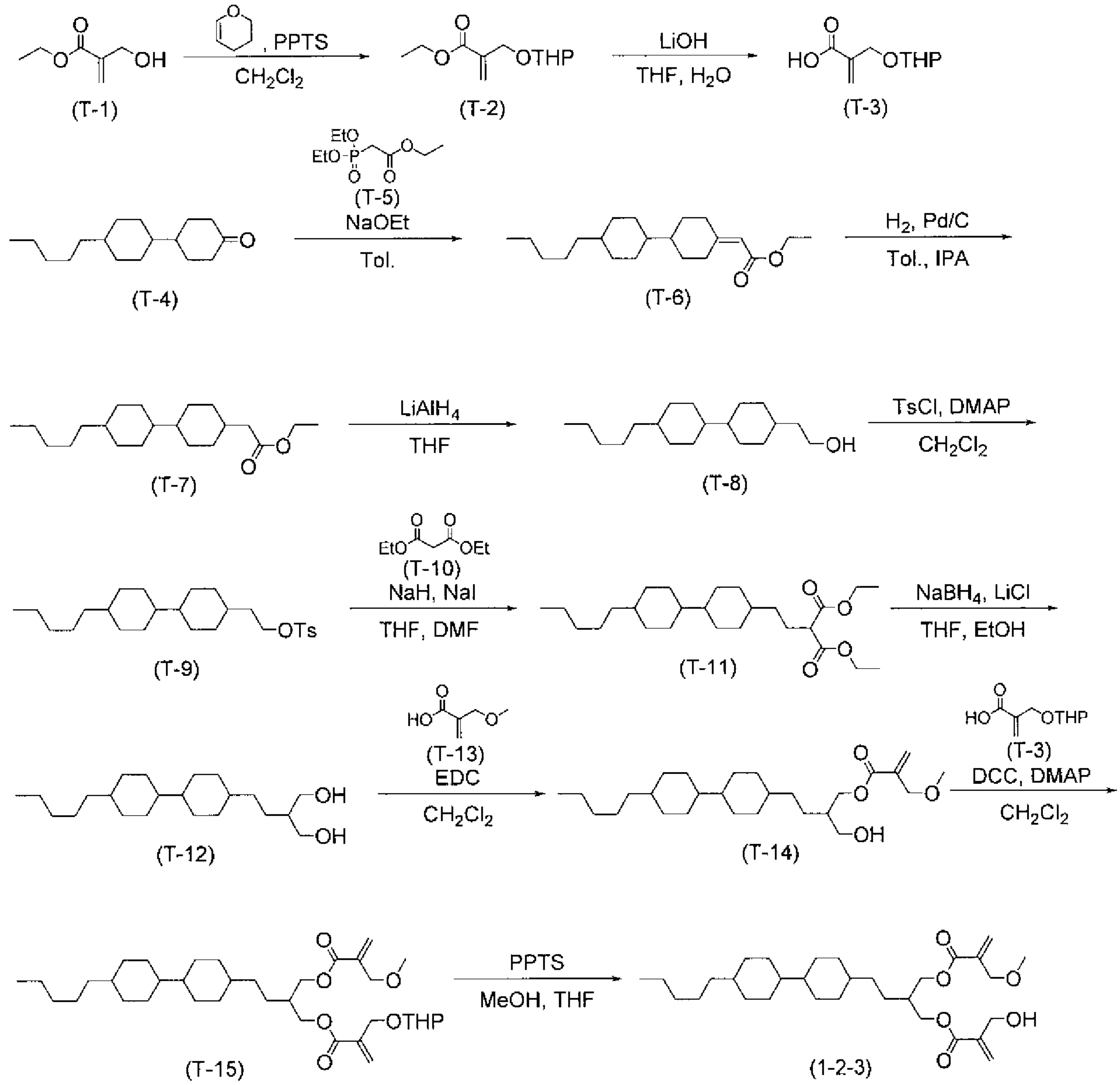

(T-1) (T-2) (T-3) (T-4) (T-5) (T-6) (T-7) (T-8) (T-9) (T-10) (T-11) (T-12) (T-13) (T-14) (T-3) (T-15) (1-2-3)

First process

Compound (T-1) (30.0 g), 3,4-dihydro-2H-pyran (23.3 g), pyridinium p-toluenesulfonate (PPTS) (5.80 g), and 300 ml of dichloromethane were put into a reaction vessel, and the mixture was stirred at room temperature for 12 hours. Insoluble substances were filtered off, the reaction mixture was then poured into water, and an aqueous layer was extracted with dichloromethane. The obtained organic layer was washed with water and dried with anhydrous magnesium sulfate. This solution was concentrated under a reduced pressure, and the residue was purified through silica gel chromatography (volume ratio, heptane:ethyl acetate=5:1), and thereby Compound (T-2) (39.5 g; 80%) was obtained. Here, THP indicates a tetrahydropyranyl group.

Second process

Compound (T-2) (39.5 g), tetrahydrofuran (THF) (400 ml), and water (400 ml) were put into a reaction vessel and cooled to 0 °C. Lithium hydroxide monohydrate (15.4 g) was added thereto and stirred for 12 hours while the temperature returned to room temperature. The reaction mixture was poured into water and 6 N hydrochloric acid (60 ml) was slowly added thereto so that it became acidic, and an aqueous layer was then extracted with ethyl acetate. The obtained organic layer was washed with water and dried with anhydrous magnesium sulfate. This solution was concentrated under a reduced pressure and thereby Compound (T-3) (32.6 g; 95%) was obtained.

Third process

Compound (T-4) (30.0 g), Compound (T-5) (28.2 g), and toluene (90.0 ml) were put into a reaction vessel and cooled to 0 °C. Sodium ethoxide (20 weight%; ethanol solution; 42.8 g) was slowly added thereto and stirred at 0 °C for 1 hour. The reaction mixture was poured into water and an aqueous layer was extracted with toluene. The obtained organic layer was washed with brine and dried with anhydrous magnesium sulfate. This solution was concentrated under a reduced pressure, and the residue was purified through silica gel chromatography (volume ratio, heptane:ethyl acetate=9:1), and thereby Compound (T-6) (36.5 g; 95%) was obtained.

Fourth process

Compound (T-6) (36.5 g), toluene (190 ml), IPA (190 ml) and a palladium carbon catalyst (PH type of 5% Pd/C; commercially available from Kawaken Fine Chemicals Co., Ltd.; 0.242 g) were put into a reaction vessel and stirred for 12 hours under a hydrogen atmosphere. Insoluble substances were filtered off, the reaction mixture was poured into water, and an aqueous layer was then extracted with toluene. The obtained organic layer was washed with water and dried with anhydrous magnesium sulfate. This solution was concentrated under a reduced pressure, and the residue was purified through silica gel chromatography (volume ratio, heptane:ethyl acetate=9:1), and thereby Compound (T-7) (34.8 g; 95%) was obtained.

Fifth process

Lithium aluminum hydride (2.46 g) and THF (200 ml) were put into a reaction vessel, and cooled to 0 °C. A THF (150 ml) solution containing Compound (T-7) (34.8 g) was slowly added thereto and stirred for 3 hours while the temperature returned to room temperature. The reaction mixture was poured into water, insoluble substances were filtered off, and an aqueous layer was then extracted with ethyl acetate. The obtained organic layer was washed with water and dried with anhydrous magnesium sulfate. This solution was concentrated under a reduced pressure and the residue was purified by recrystallization from heptane, and thereby Compound (T-8) (18.3 g; 61%) was obtained.

Sixth process

Compound (T-8) (18.3 g), p-toluenesulfonyl chloride (13.7 g), N,N-dimethylaminopyridine (DMAP) (9.58 g), and dichloromethane (275 ml) were put into a reaction vessel, and stirred at room temperature for 12 hours. The reaction mixture was poured into water, and an aqueous layer was extracted with dichloromethane. The obtained organic layer was washed with water and a brine sequentially, and dried with anhydrous magnesium sulfate. This solution was concentrated under a reduced pressure, and the residue was purified through silica gel chromatography (volume ratio, heptane:ethyl acetate=9:1). In addition, the residue was purified by recrystallization from heptane, and thereby Compound (T-9) (23.0 g; 81%) was obtained. Here, Ts indicates a tosyl group.

Seventh process

Compound (T-9) (19.0 g), THF (190 ml), and DMF (190 ml) were put into a reaction vessel, and cooled to 0 °C. Sodium hydride (3.81 g) was slowly added thereto and the mixture was stirred for 1 hour while the temperature returned to room temperature. Compound (T-10) (14.7 g) and sodium iodide (1.32 g) were added thereto, and the mixture was stirred at 80 °C for 2 hours. The reaction mixture was poured into water and an aqueous layer was extracted with ethyl acetate. The obtained organic layer was washed with brine and dried with anhydrous magnesium sulfate. This solution was concentrated under a reduced pressure and the residue was purified through silica gel chromatography (volume ratio, heptane:ethyl acetate=9:1), and thereby Compound (T-11) (13.1 g; 71%) was obtained.

Eighth process

Sodium borohydride (4.69 g), lithium chloride (0.263 g), and ethanol (65.0 ml) were put into a reaction vessel and cooled to 0 °C. A THF (130 ml) solution containing Compound (T-11) (13.1 g) was slowly added thereto and stirred at 60 °C for 3 hours. The reaction mixture was poured into 1 N hydrochloric acid (400 ml), and precipitated solids were collected by filtration. The obtained solids were washed with water and ethyl acetate sequentially, and thereby Compound (T-12) (9.37 g; 89%) was obtained.

Ninth process

Compound (T-12) (9.37 g), Compound (T-13) (3.86 g), and dichloromethane (190 ml) were put into a reaction vessel and cooled to 0 °C. 1-Ethyl-3-(3-dimethylaminopropyl)carbodiimide hydrochloride (EDC) (8.49 g) and triethylamine (8.49 ml) were added thereto and stirred for 24 hours while the temperature returned to room temperature. Insoluble substances were filtered off, the reaction mixture was then poured into water, and an aqueous layer was extracted with dichloromethane. The obtained organic layer was washed with water and dried with anhydrous magnesium sulfate. This solution was concentrated under a reduced pressure, and the residue was purified through silica gel chromatography (volume ratio, toluene:ethyl acetate=4:1), and thereby Compound (T-14) (3.97 g; 33%) was obtained.

Tenth process

Compound (T-14) (3.97 g), Compound (T-3) (2.03 g), DMAP (0.555 g), and dichloromethane (25.0 ml) were put into a reaction vessel and cooled to 0 °C. A dichloromethane (15.0 ml) solution containing DCC (2.81 g) was slowly added dropwise thereto and stirred for 12 hours while the temperature returned to room temperature. Insoluble substances were filtered off, the reaction mixture was then poured into water, and an aqueous layer was extracted with dichloromethane. The obtained organic layer was washed with water and dried with anhydrous magnesium sulfate. This solution was concentrated under a reduced pressure, and the residue was purified through silica gel chromatography (volume ratio, heptane:ethyl acetate=5:1), and thereby Compound (T-15) (5.18 g; 94%) was obtained.

Eleventh process

Compound (T-15) (5.18 g), PPTS (1.08 g), THF (26.0 ml), and methanol (26.0 ml) were put into a reaction vessel, and stirred at 50 °C for 4 hours. The reaction mixture was poured into water, and an aqueous layer was extracted with ethyl acetate. The obtained organic layer was washed with water and dried with anhydrous magnesium sulfate. This solution was concentrated under a reduced pressure, and the residue was purified through silica gel chromatography (volume ratio, toluene:ethyl acetate=3:1). In addition, the residue was purified by recrystallization from heptane, and thereby Compound (1-2-3) (3.22 g; 72%) was obtained.

NMR analysis values of the obtained Compound (1-2-3) were as follows.

$^1$H-NMR: chemical shift $\delta$ (ppm; $CDCl_3$): 6.30 (d, J=1.0 Hz, 1 H), 6.25 (s, 1 H), 5.89-5.83 (m, 2 H), 4.33 (d, J=6.6 Hz, 2 H), 4.26-4.19 (m, 2 H), 4.19-4.10 (m, 4 H), 3.40 (s, 3 H), 2.32 (t, J=6.7 Hz, 1 H), 2.13-2.04 (m, 1 H), 1.78-1.65 (m, 8 H), 1.46-1.38 (m, 2 H), 1.34-1.18 (m, 8 H), 1.18-1.06 (m, 4 H), 1.05-0.78 (m, 13 H).

[Synthesis Example 2]

Synthesis of Compound (1-3-1)

[Chem. 47]

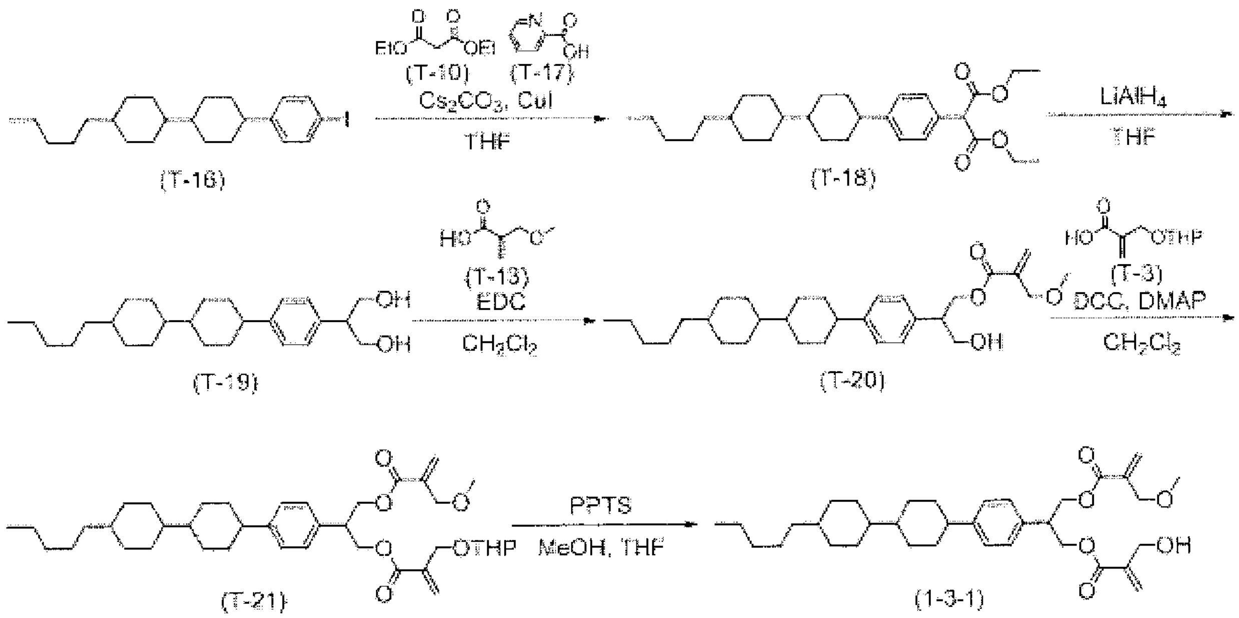


First process

Compound (T-16) (40.0 g), Compound (T-10) (29.2 g), Compound (T-17) (3.37 g), cesium carbonate (89.2 g), copper iodide (I) (3.48 g), and THF (300 ml) were put into a reaction vessel and heated and refluxed at 66 °C for 7 hours. The reaction mixture was poured into a saturated aqueous ammonium chloride solution, and an aqueous layer was extracted with ethyl acetate. The obtained organic layer was washed with water and dried with anhydrous magnesium sulfate. This solution was concentrated under a reduced pressure, and the residue was purified through silica gel chromatography (volume ratio, heptane:ethyl acetate=4:1), and thereby Compound (T-18) (23.1 g; 54%) was obtained.

Second process

Lithium aluminum hydride (3.72 g) and THF (300 ml) were put into a reaction vessel and cooled to -10 °C. A THF (100 ml) solution containing Compound (T-18) (23.1 g) was slowly added thereto and stirred for 12 hours while the temperature returned to room temperature. The reaction mixture was poured into water, insoluble substances were filtered off, and an aqueous layer was then extracted with ethyl acetate. The obtained organic layer was washed with water and dried with anhydrous magnesium sulfate. This solution was concentrated under a reduced pressure, and thereby Compound (T-19) (17.5 g; 92%) was obtained.

Third process

Compound (T-19) (15.7 g) was used as a raw material, and Compound (T-20) (15.3 g; 78%) was obtained in the same manner as in the ninth process of Synthesis Example 1.

Fourth process

Compound (T-20) (15.3 g) was used as a raw material, and Compound (T-21) (9.00 g; 44%) was obtained in the same manner as in the tenth process of Synthesis Example 1.

Fifth process

Compound (T-21) (9.00 g) was used as a raw material, and Compound (1-3-1) (4.81 g; 61%) was obtained in the same manner as in the eleventh process of Synthesis Example 1.

NMR analysis values of the obtained Compound (1-3-1) were as follows.

$^1$H-NMR: chemical shift $\delta$ (ppm; $CDCl_3$): 7.23-7.15 (m, 4 H), 6.30 (s, 1 H), 6.24 (s, 1 H), 5.88 (s, 1 H), 5.84 (s, 1 H), 4.51-4.44 (m, 4 H), 4.30 (d, J=7.2 Hz, 2 H), 4.12 (s, 2 H), 3.47-3.38 (m, 4 H), 2.45 (tt, J=12.2 Hz, J=3.2 Hz, 1 H),

2.14 (t, J=6.8 Hz, 1 H), 1.96-1.83 (m, 4H), 1.83-1.73 (m, 4 H), 1.48-1.37 (m, 2 H), 1.37-1.22 (m, 6 H), 1.22-0.96 (m, 9 H), 0.93-0.84 (m, 5 H).

[Synthesis Example 3]

Synthesis of Compound (1-3-4)

[Chem. 48]

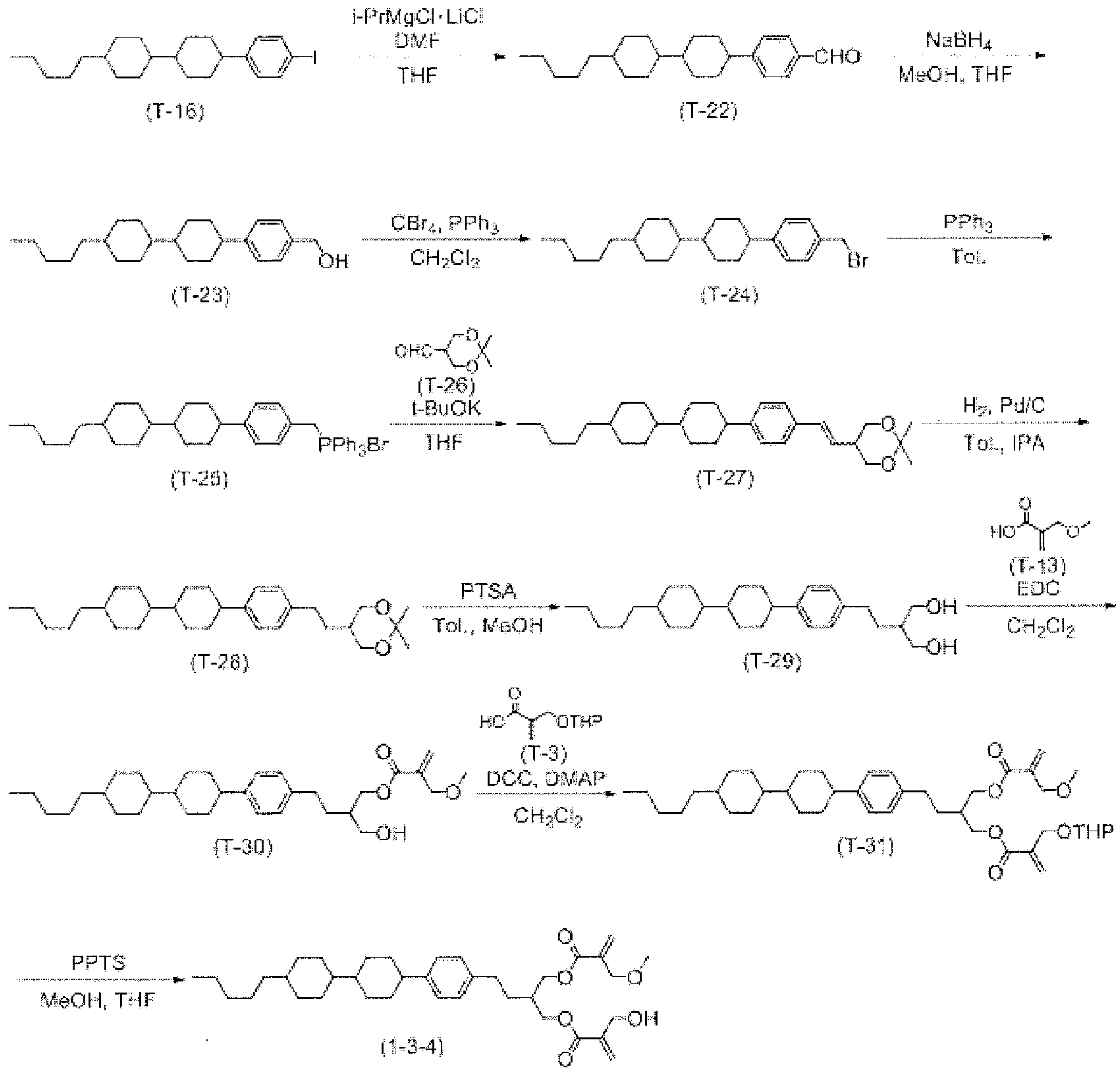


First process

Compound (T-16) (200 g) and THF (2,000 ml) were put into a reaction vessel and cooled to 0 °C. An i-propylmagnesium chloride and lithium chloride complex (1.30 M; n-THF solution; 421 ml) was slowly added dropwise thereto and stirred at 0 °C for 60 minutes. DMF (42.4 ml) was slowly added dropwise thereto and stirred for 3 hours while the temperature returned to room temperature. The reaction mixture was poured into water and an aqueous layer was

extracted with toluene. The obtained organic layer was washed with water and dried with anhydrous magnesium sulfate. This solution was concentrated under a reduced pressure, and the residue was purified through silica gel chromatography (volume ratio, heptane:toluene=1:1), and thereby Compound (T-22) (149 g; 96%) was obtained.

Second process

Sodium borohydride (16.6 g) and methanol (745 ml) were put into a reaction vessel and cooled to 0 °C. A THF (745 ml) solution containing Compound (T-22) (149 g) was slowly added thereto and stirred for 3 hours while the temperature returned to room temperature. The reaction mixture was poured into a saturated aqueous ammonium chloride solution and an aqueous layer was extracted with ethyl acetate. The obtained organic layer was washed with water and dried with anhydrous magnesium sulfate. This solution was concentrated under a reduced pressure and the residue was purified by recrystallization from heptane, and thereby Compound (T-23) (137 g; 91%) was obtained.

Third process

Compound (T-23) (137 g), triphenylphosphine (115 g), and dichloromethane (850 ml) were put into a reaction vessel and cooled to 0 °C. A THF (500 ml) solution containing carbon tetrabromide (145 g) was slowly added thereto and stirred for 12 hours while the temperature returned to room temperature. The reaction mixture was poured into water, and an aqueous layer was extracted with dichloromethane. The obtained organic layer was washed with water and dried with anhydrous magnesium sulfate. This solution was concentrated under a reduced pressure, and the residue was purified through silica gel chromatography (heptane), and thereby Compound (T-24) (132 g; 82%) was obtained.

Fourth process

Compound (T-24) (132 g), triphenylphosphine (94.1 g), and toluene (2,500 ml) were put into a reaction vessel and heated and refluxed at 110 °C for 15 hours. The reaction mixture was cooled to 0 °C and the precipitated crystals were collected by filtration and thereby Compound (T-25) (178 g; 82%) was obtained.

Fifth process

Compound (T-25) (178 g) and THF (900 ml) were put into a reaction vessel and cooled to -30 °C. Potassium t-butoxide (29.9 g) was added thereto and stirred at -30 °C for 1 hour. Next, a THF (900 ml) solution containing Compound (T-26) (38.4 g) was slowly added dropwise thereto and stirred for 12 hours while the temperature returned to room temperature. The reaction mixture was poured into water, and an aqueous layer was extracted with toluene. The obtained organic layer was washed with water and dried with anhydrous magnesium sulfate. This solution was concentrated under a reduced pressure, and the residue was purified through silica gel column chromatography (toluene), and thereby Compound (T-27) (78.1 g, yield 65%) was obtained.

Sixth process

Compound (T-27) (78.1 g) was used as a raw material, and Compound (T-28) (78.0 g; 99%) was obtained in the same manner as in the fourth process of Synthesis Example 1.

Seventh process

Compound (T-28) (74.6 g), p-toluenesulfonic acid monohydrate (PTSA), toluene (800 ml), and methanol (800 ml) were put into a reaction vessel, and the mixture was stirred at room temperature for 12 hours. The reaction mixture was poured into a saturated aqueous sodium hydrogen carbonate solution, and an aqueous layer was extracted with ethyl acetate. The obtained organic layer was washed with water and dried with anhydrous magnesium sulfate. This solution was concentrated under a reduced pressure, and thereby Compound (T-29) (59.0 g, yield 87%) was obtained.

Eighth process

Compound (T-29) (10.0 g) was used as a raw material, and Compound (T-30) (6.72 g; 55%) was obtained in the same manner as in the ninth process of Synthesis Example 1.

Ninth process

Compound (T-30) (6.72 g) was used as a raw material, and Compound (T-31) (6.64 g; 74%) was obtained in the same manner as in the tenth process of Synthesis Example 1.

Tenth process

Compound (T-31) (6.64 g) was used as a raw material, and Compound (1-3-4) (3.83 g; 66%) was obtained in the same manner as in the eleventh process of Synthesis Example 1.

NMR analysis values of the obtained Compound (1-3-4) were as follows.

$^{1}$H-NMR: chemical shift $\delta$ (ppm; $CDCl_3$): 7.15-7.07 (m, 4 H), 6.29 (d, J=1.0 Hz, 1 H), 6.25 s, 1 H), 5.87 (d, J=1.6 Hz, 1 H), 5.85 (d, J=1.0 Hz, 1 H), 4.33 (d, J=6.9 Hz, 2 H), 4.29-4.18 (m, 4 H), 4.13 (s, 2 H), 3.39 (s, 3 H), 2.68 (t, J=8.0 Hz, 2 H), 2.41 (tt, J=12.1 Hz, J=3.2 Hz, 1 H), 2.26 (t, J=6.6 Hz, 1 H), 2.21-2.03 (m, 1 H), 1.93-1.69 (m, 10 H), 1.47-1.36 (m, 2H), 1.36-0.95 (m, 15 H), 0.92-0.82 (m, 5 H).

The following Compounds (1-1-1) to (1-4-40) can be synthesized with reference to the methods described in the synthesis examples and the section "2. Synthesis of Compound (1)."

[Chem. 49]

| No. | |
|---|---|
| 1-1-1 | 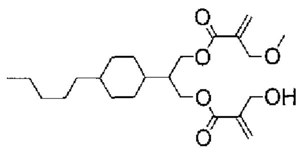 |
| 1-1-2 | 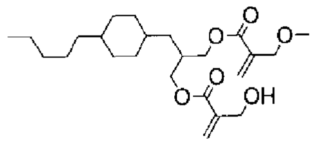 |
| 1-1-3 | 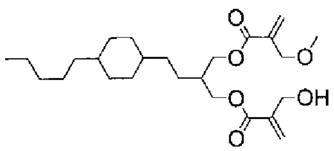 |
| 1-1-4 | 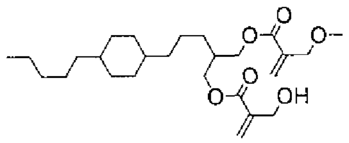 |
| 1-1-5 | 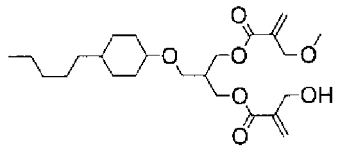 |
| 1-1-6 | 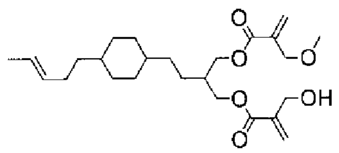 |
| 1-1-7 | 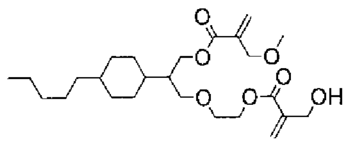 |
| 1-1-8 | 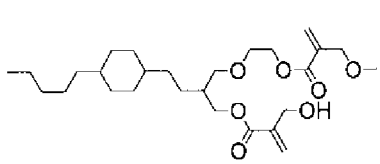 |
| 1-1-9 | 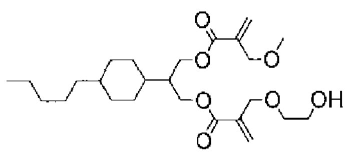 |
| 1-1-10 | 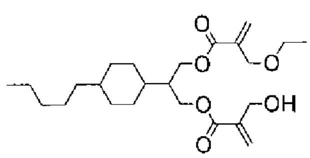 |

| No. | |
|---|---|
| 1-1-11 | 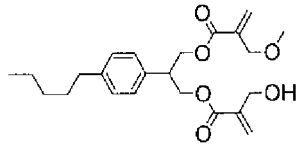 |
| 1-1-12 | 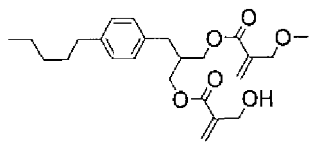 |
| 1-1-13 | 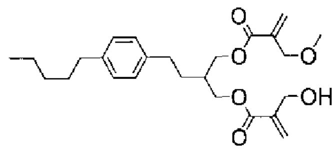 |
| 1-1-14 | 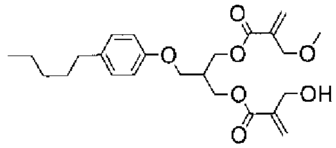 |
| 1-1-15 | 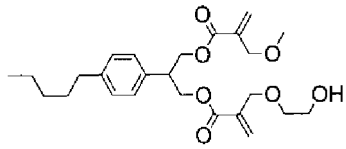 |
| 1-1-16 | 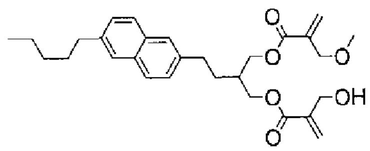 |
| 1-1-17 | 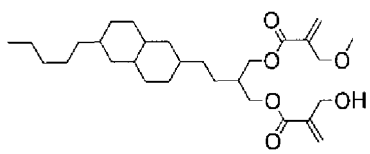 |
| 1-1-18 | 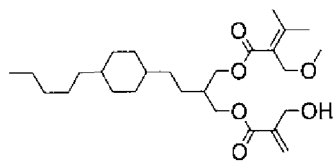 |
| 1-1-19 | 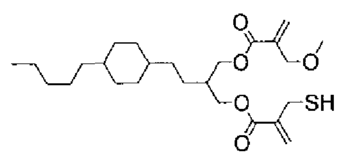 |
| 1-1-20 | 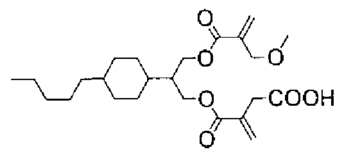 |

[Chem. 50]

No.

1-2-1 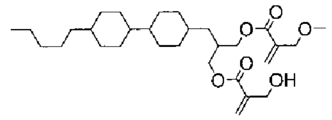

1-2-2 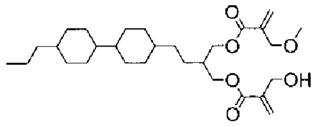

1-2-3 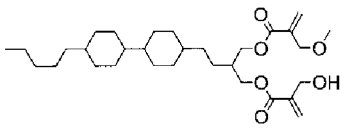

1-2-4 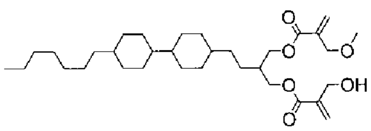

1-2-5 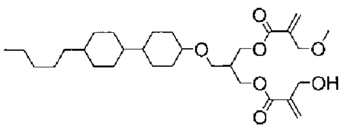

1-2-6 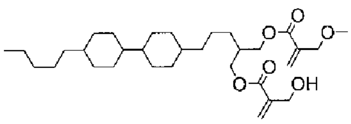

1-2-7 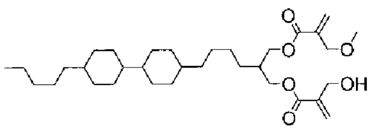

1-2-8 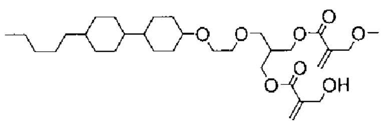

1-2-9 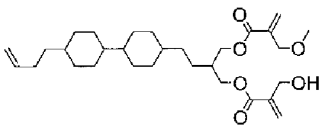

1-2-10 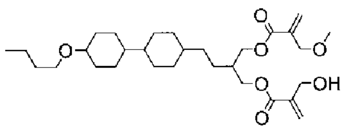

No.

1-2-11 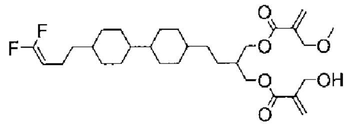

1-2-12 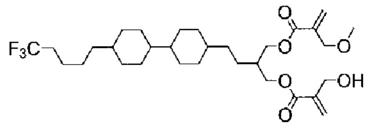

1-2-13 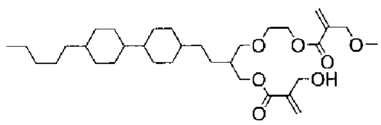

1-2-14 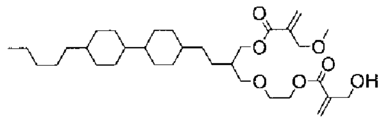

1-2-15 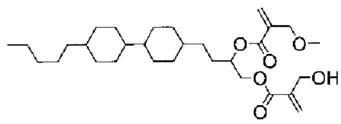

1-2-16 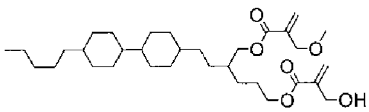

1-2-17 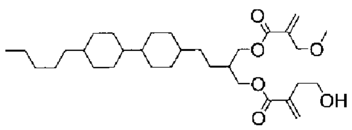

1-2-18 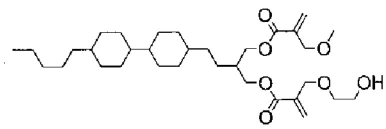

1-2-19 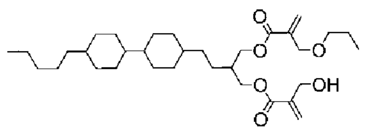

1-2-20 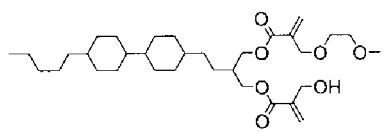

[Chem. 51]

No.

1-2-21 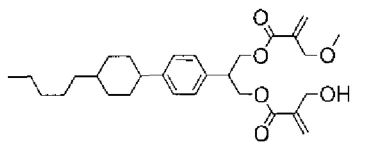

1-2-22 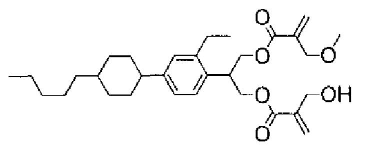

1-2-23 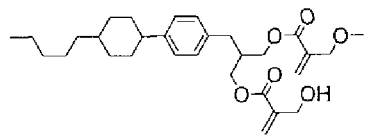

1-2-24 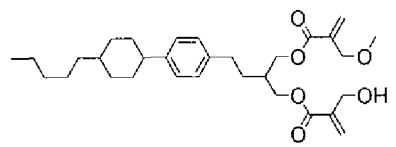

1-2-25 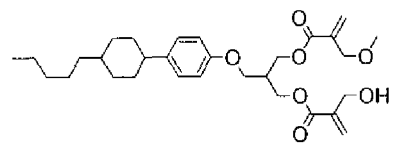

1-2-26 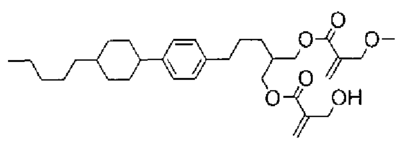

1-2-27 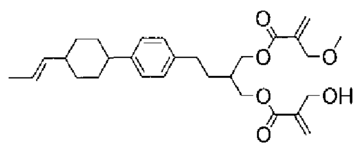

1-2-28 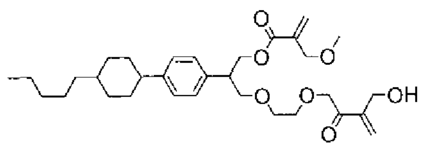

1-2-29 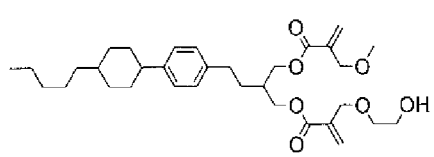

1-2-30 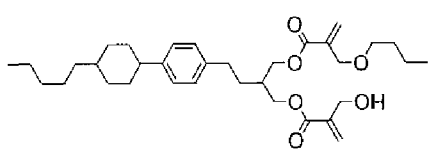

No.

1-2-31 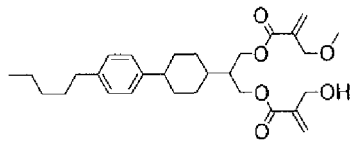

1-2-32 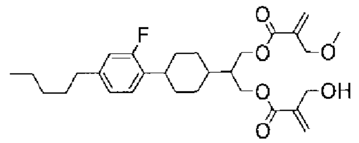

1-2-33 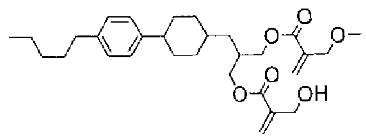

1-2-34 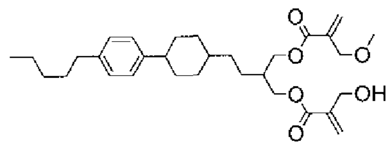

1-2-35 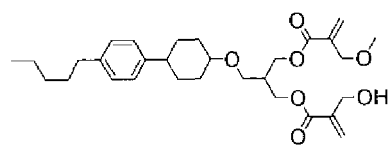

1-2-36 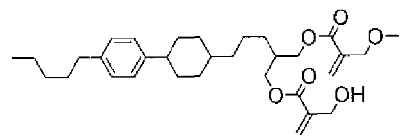

1-2-37 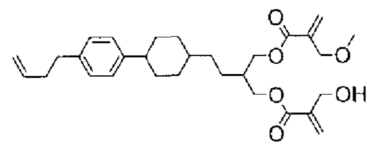

1-2-38 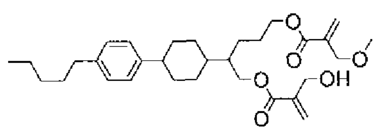

1-2-39 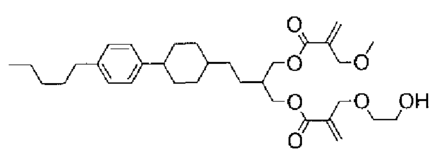

1-2-40 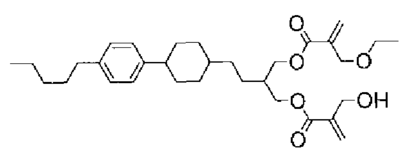

[Chem. 52]

No.

1-2-41 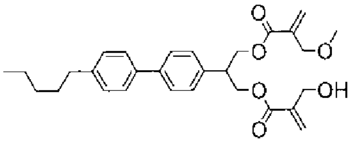

1-2-42 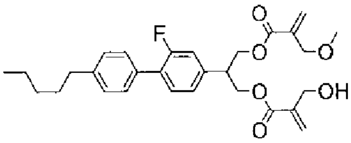

1-2-43 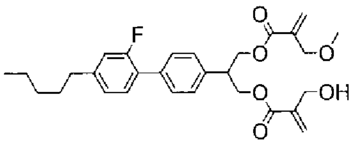

1-2-44 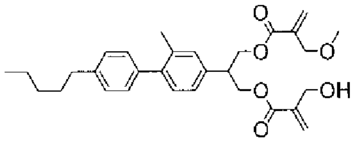

1-2-45 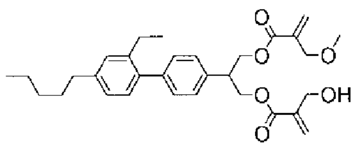

1-2-46 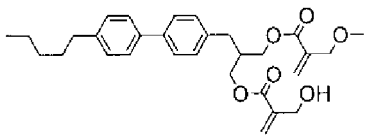

1-2-47 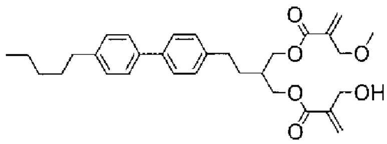

1-2-48 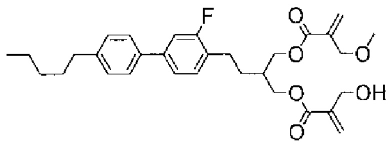

1-2-49 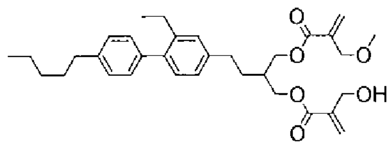

1-2-50 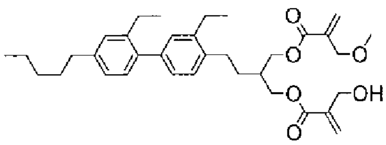

No.

1-2-51 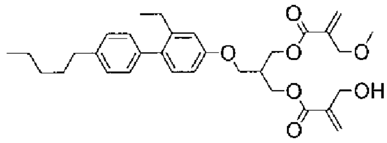

1-2-52 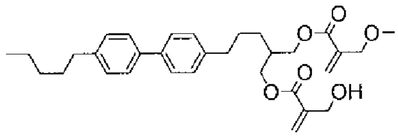

1-2-53 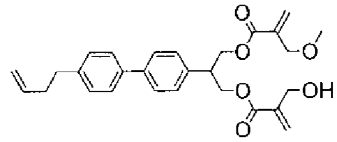

1-2-54 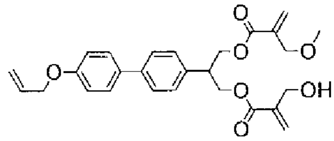

1-2-55 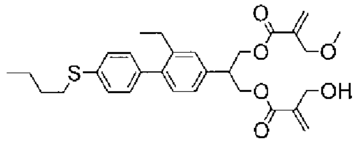

1-2-56 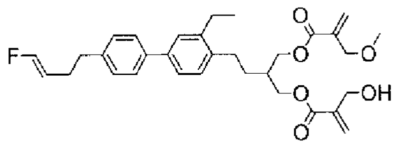

1-2-57 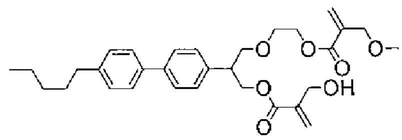

1-2-58 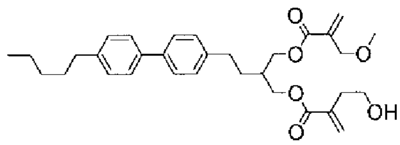

1-2-59 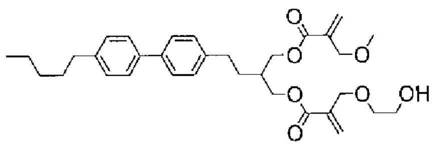

1-2-60 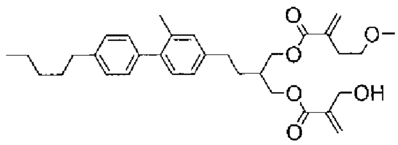

[Chem. 53]

No.

1-2-61 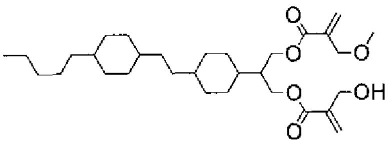

1-2-62 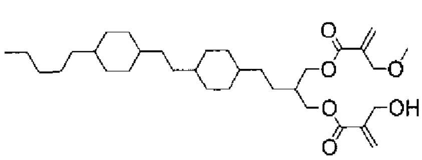

1-2-63 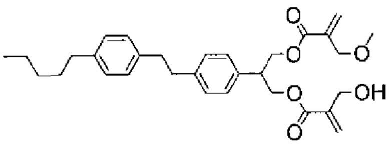

1-2-64 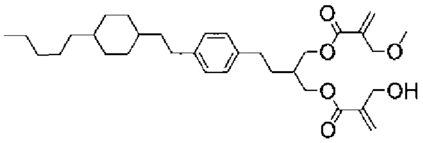

1-2-65 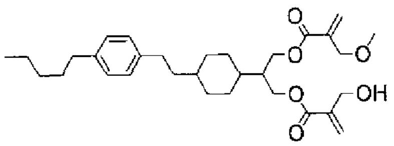

1-2-66 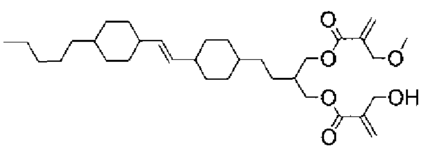

1-2-67 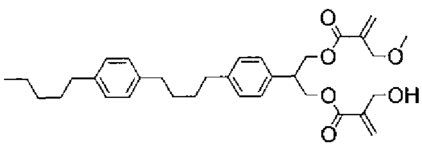

1-2-68 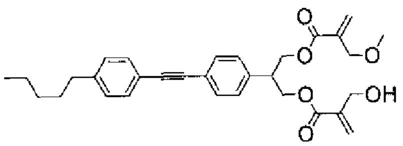

1-2-69 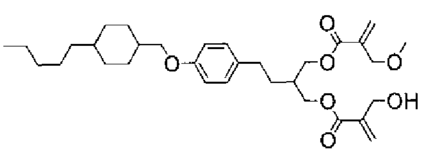

1-2-70 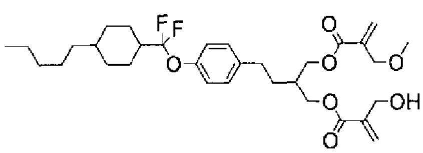

No.

1-2-71 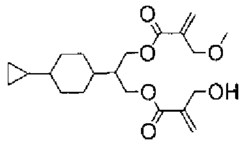

1-2-72 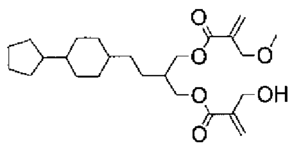

1-2-73 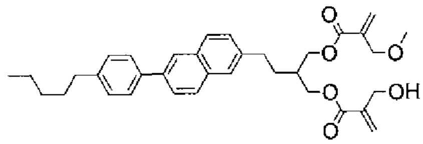

1-2-74 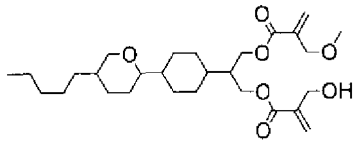

1-2-75 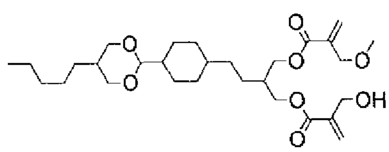

1-2-76 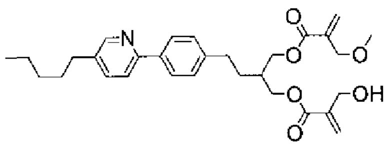

1-2-77 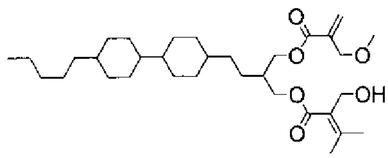

1-2-78 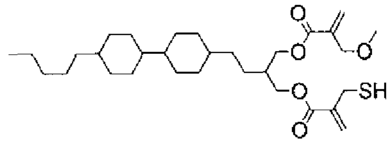

1-2-79 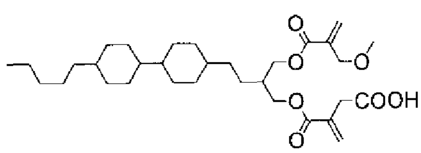

1-2-80 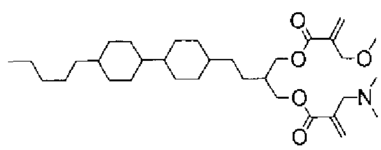

[Chem. 54]

No.

1-3-1
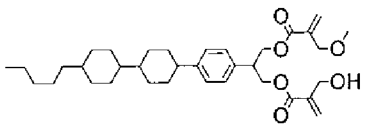

1-3-2
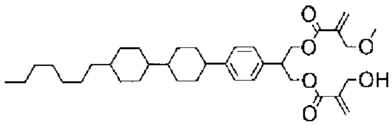

1-3-3
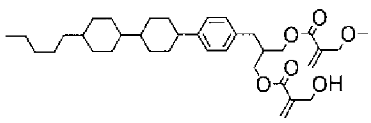

1-3-4
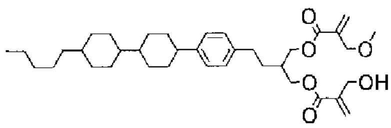

1-3-5
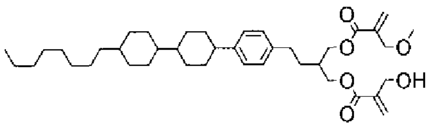

1-3-6
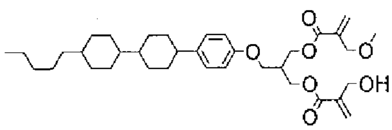

1-3-7
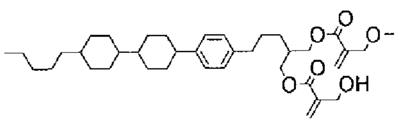

1-3-8
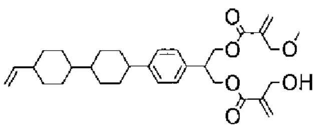

1-3-9
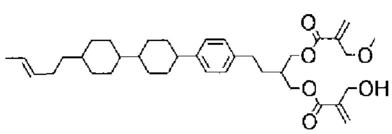

1-3-10
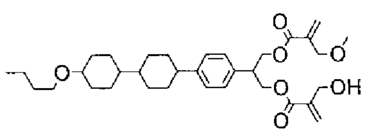

No.

1-3-11
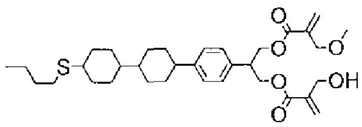

1-3-12
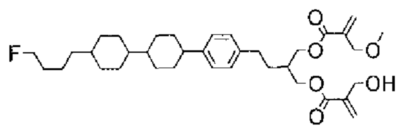

1-3-13
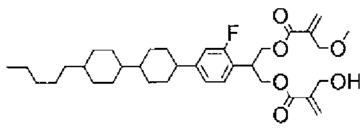

1-3-14
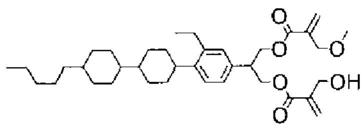

1-3-15
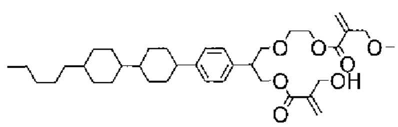

1-3-16
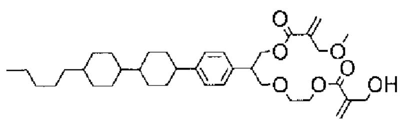

1-3-17
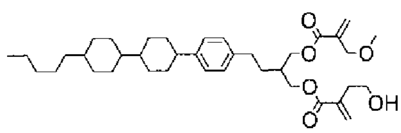

1-3-18
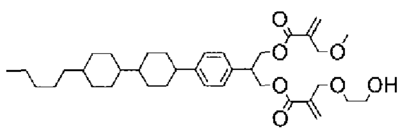

1-3-19
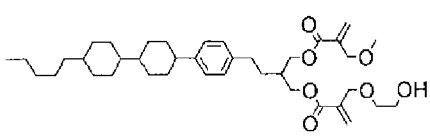

1-3-20
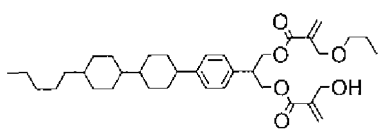

[Chem. 55]

| No. | |
|---|---|
| 1-3-21 | 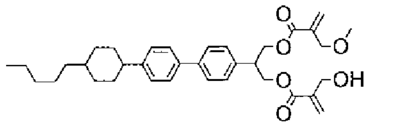 |
| 1-3-22 | 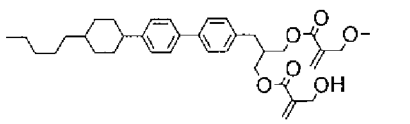 |
| 1-3-23 | 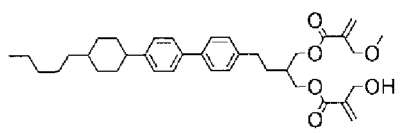 |
| 1-3-24 | 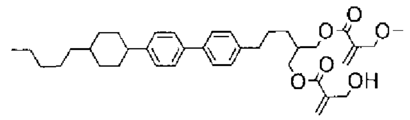 |
| 1-3-25 | 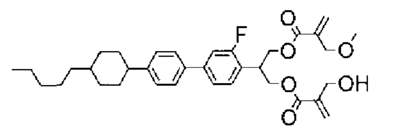 |
| 1-3-26 | 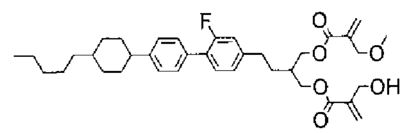 |
| 1-3-27 | 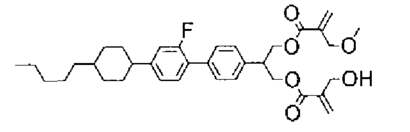 |
| 1-3-28 | 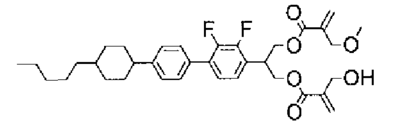 |
| 1-3-29 | 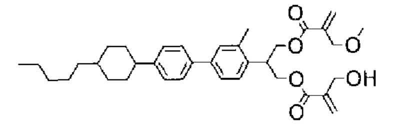 |
| 1-3-30 | 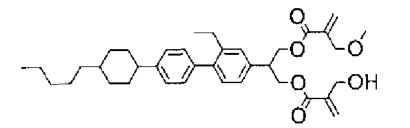 |

| No. | |
|---|---|
| 1-3-31 | 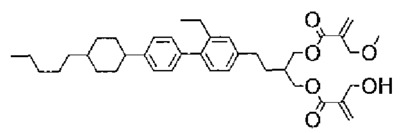 |
| 1-3-32 | 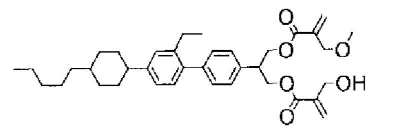 |
| 1-3-33 | 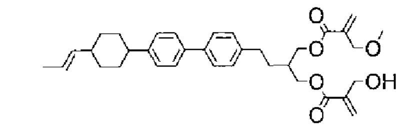 |
| 1-3-34 | 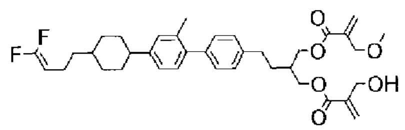 |
| 1-3-35 | 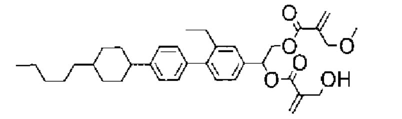 |
| 1-3-36 | 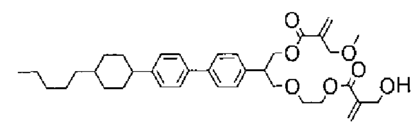 |
| 1-3-37 | 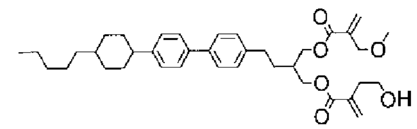 |
| 1-3-38 | 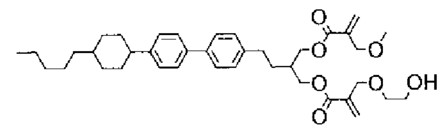 |
| 1-3-39 | 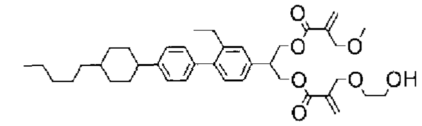 |
| 1-3-40 | 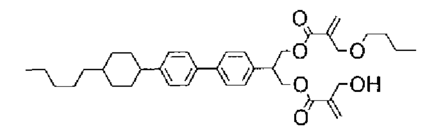 |

[Chem. 56]

No.

1-3-41
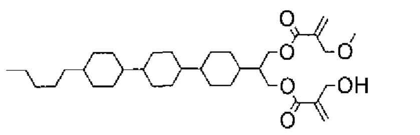

1-3-42
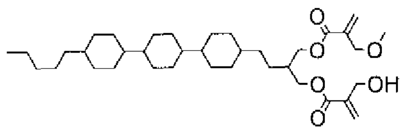

1-3-43
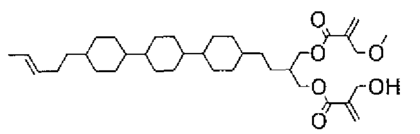

1-3-44
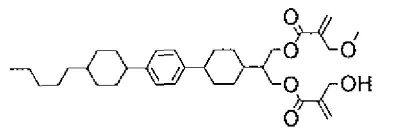

1-3-45
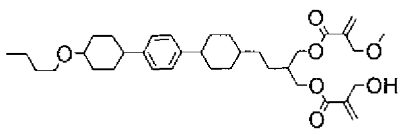

1-3-46
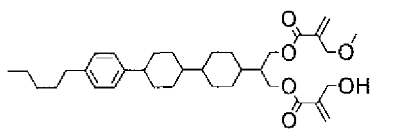

1-3-47
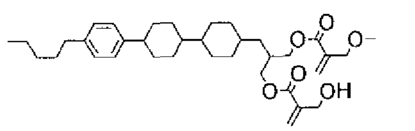

1-3-48
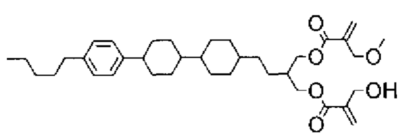

1-3-49
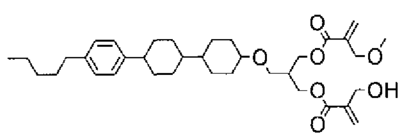

1-3-50
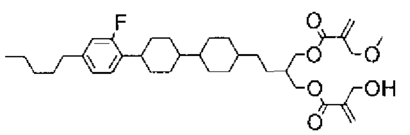

No.

1-3-51
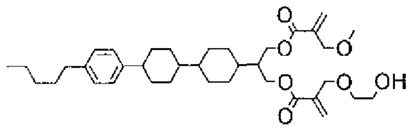

1-3-52
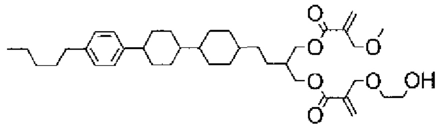

1-3-53
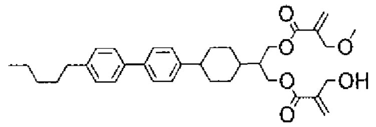

1-3-54
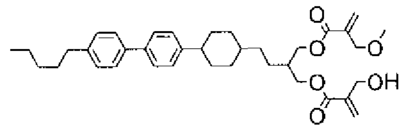

1-3-55
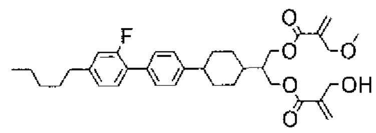

1-3-56
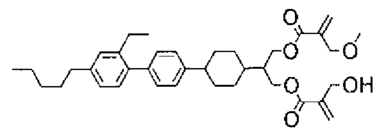

1-3-57
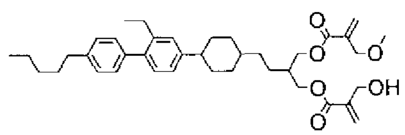

1-3-58
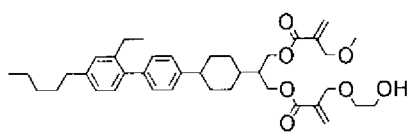

1-3-59
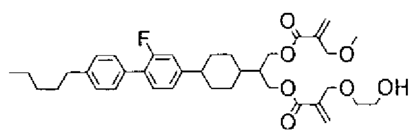

1-3-60
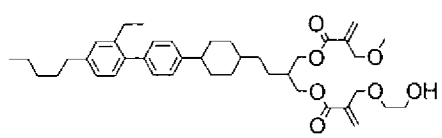

[Chem. 57]

| No. | | No. | |
|---|---|---|---|
| 1-3-61 | 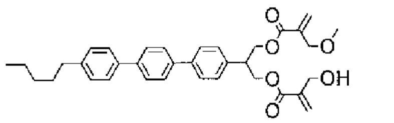 | 1-3-71 | 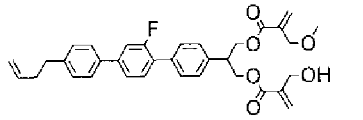 |
| 1-3-62 | 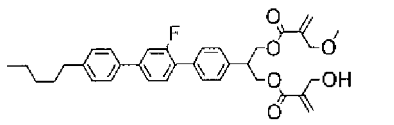 | 1-3-72 | 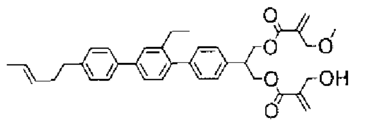 |
| 1-3-63 | 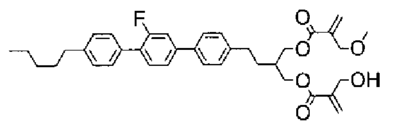 | 1-3-73 | 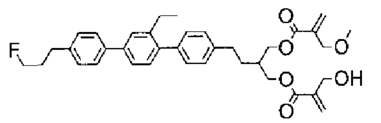 |
| 1-3-64 | 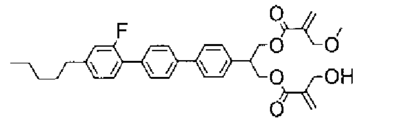 | 1-3-74 | 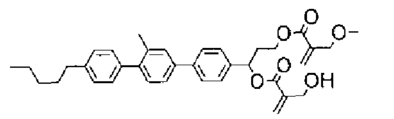 |
| 1-3-65 | 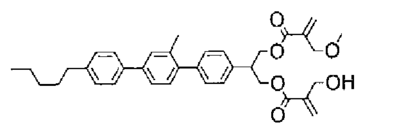 | 1-3-75 | 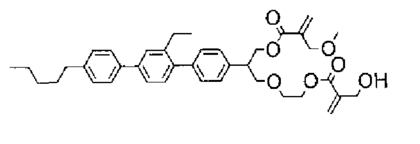 |
| 1-3-66 | 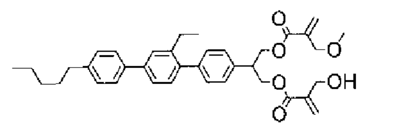 | 1-3-76 | 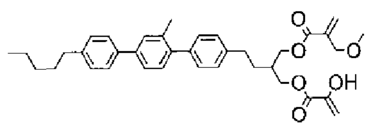 |
| 1-3-67 | 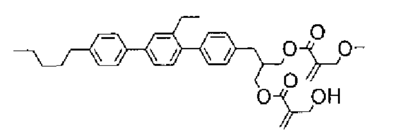 | 1-3-77 | 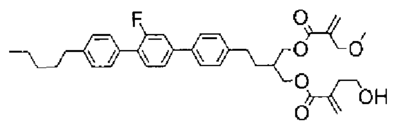 |
| 1-3-68 | 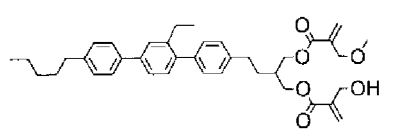 | 1-3-78 | 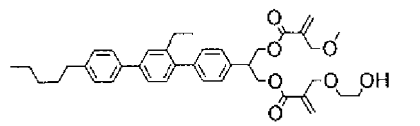 |
| 1-3-69 | 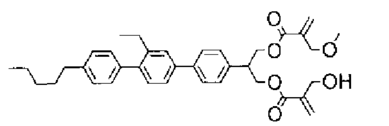 | 1-3-79 | 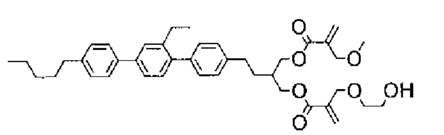 |
| 1-3-70 | 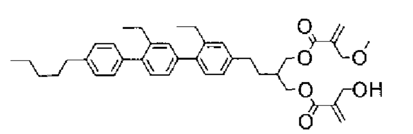 | 1-3-80 | 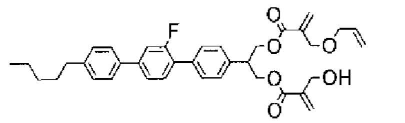 |

[Chem. 58]

No.

1-3-81 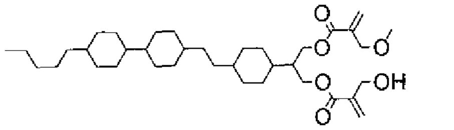

1-3-82 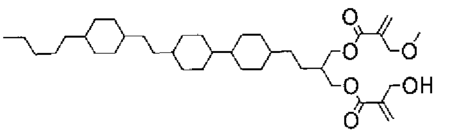

1-3-83 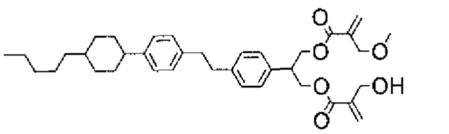

1-3-84 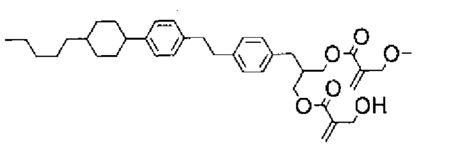

1-3-85 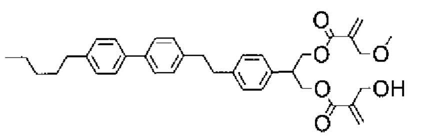

1-3-86 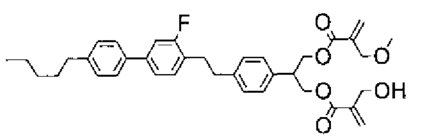

1-3-87 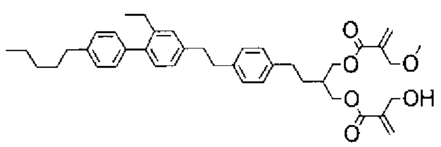

1-3-88 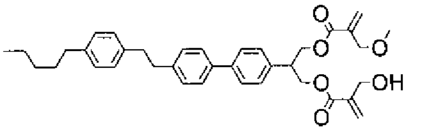

1-3-89 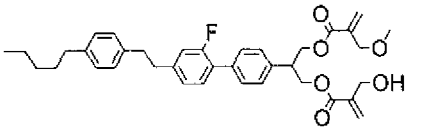

1-3-90 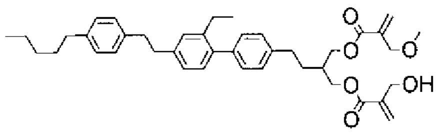

No.

1-3-91 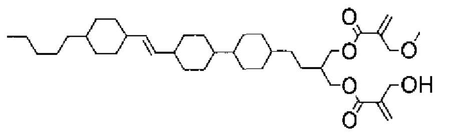

1-3-92 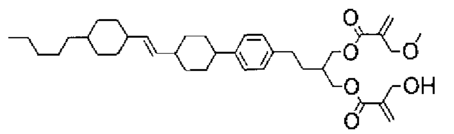

1-3-93 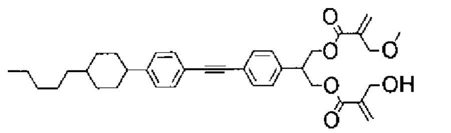

1-3-94 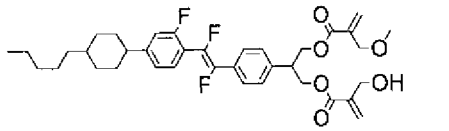

1-3-95 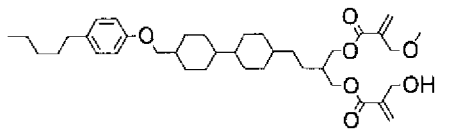

1-3-96 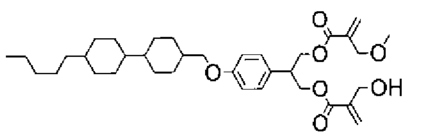

1-3-97 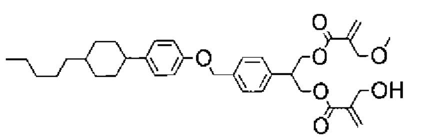

1-3-98 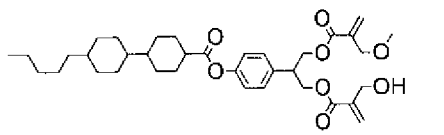

1-3-99 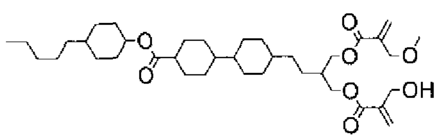

1-3-100 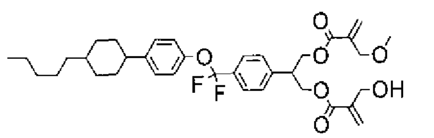

[Chem. 59]

No.

1-3-101 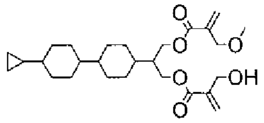

1-3-102 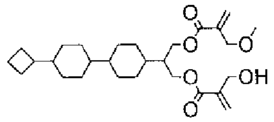

1-3-103 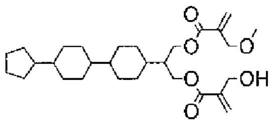

1-3-104 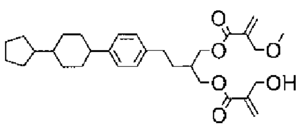

1-3-105 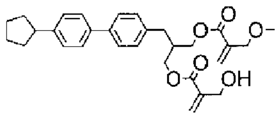

1-3-106 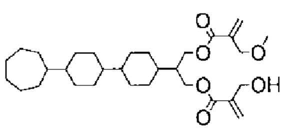

1-3-107 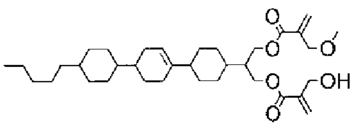

1-3-108 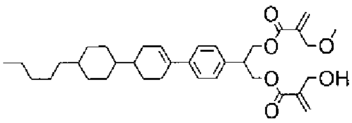

1-3-109 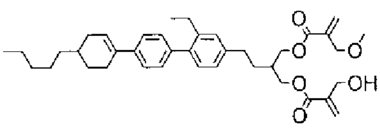

1-3-110 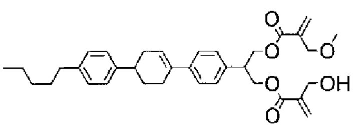

No.

1-3-111 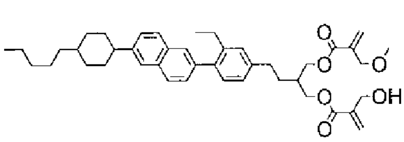

1-3-112 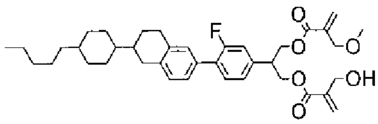

1-3-113 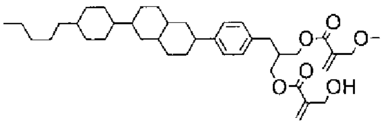

1-3-114 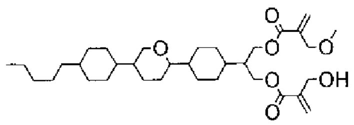

1-3-115 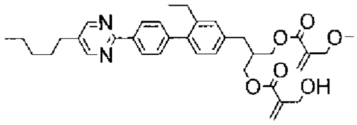

1-3-116 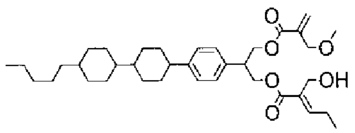

1-3-117 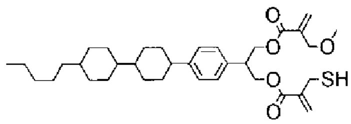

1-3-118 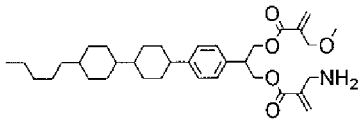

1-3-119 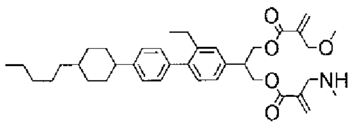

1-3-120 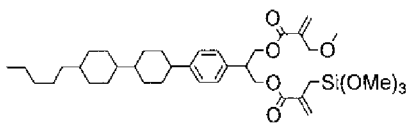

[Chem. 60]

No.

1-4-1 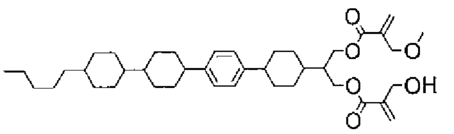

1-4-2 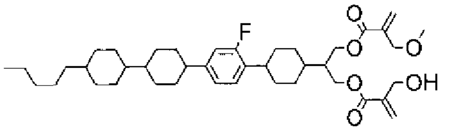

1-4-3 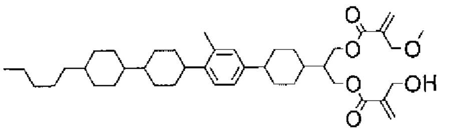

1-4-4 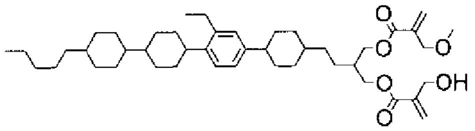

1-4-5 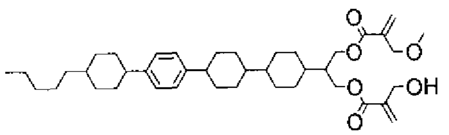

1-4-6 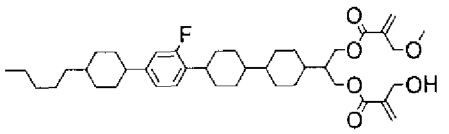

1-4-7 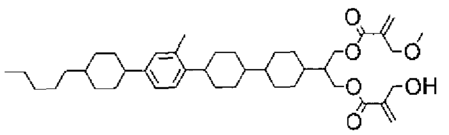

1-4-8 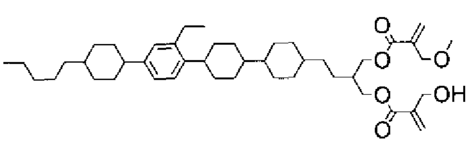

1-4-9 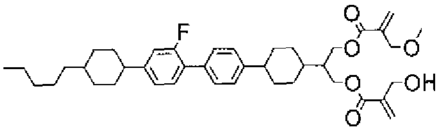

1-4-10 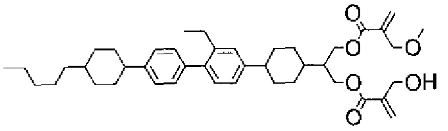

No.

1-4-11 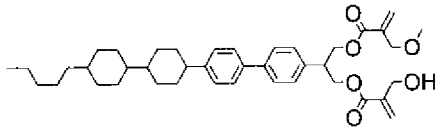

1-4-12 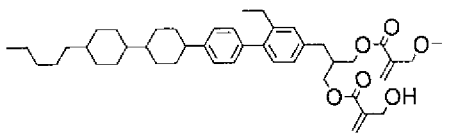

1-4-13 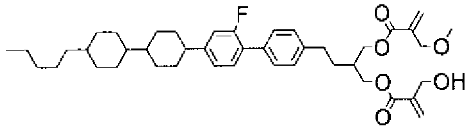

1-4-14 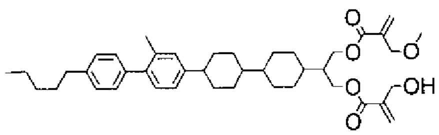

1-4-15 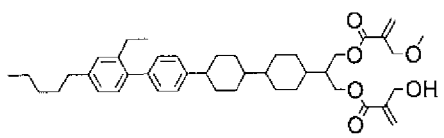

1-4-16 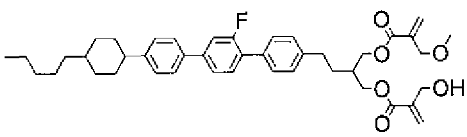

1-4-17 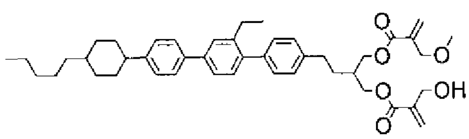

1-4-18 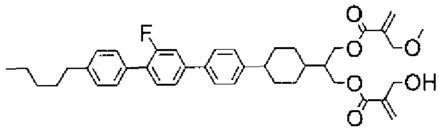

1-4-19 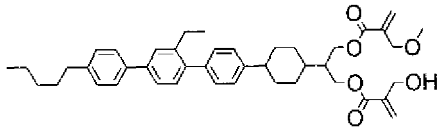

1-4-20 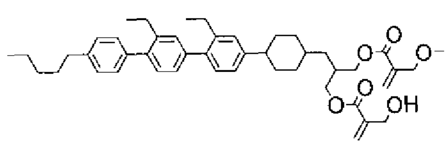

[Chem. 61]

No.

1-4-21 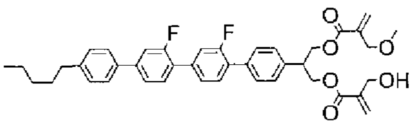

1-4-22 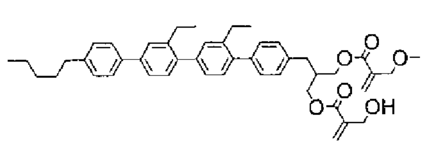

1-4-23 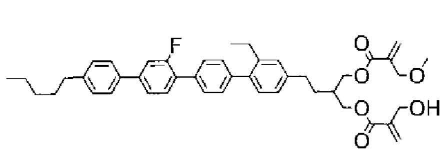

1-4-24 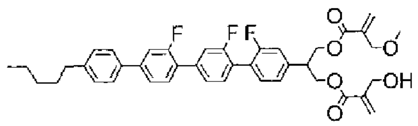

1-4-25 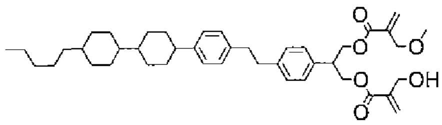

1-4-26 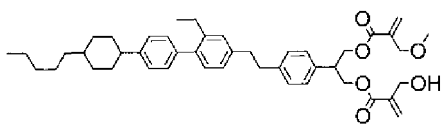

1-4-27 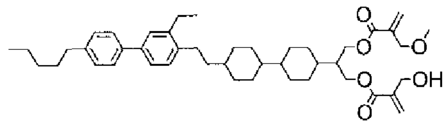

1-4-28 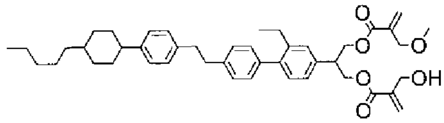

1-4-29 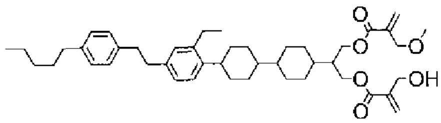

1-4-30 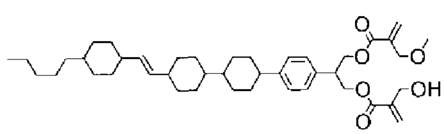

No.

1-4-31 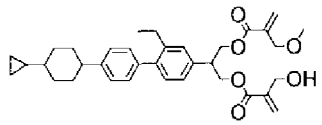

1-4-32 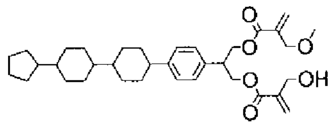

1-4-33 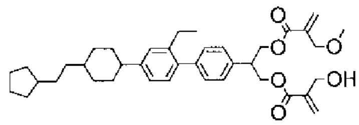

1-4-34 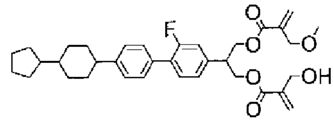

1-4-35 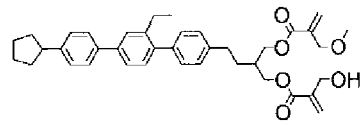

1-4-36 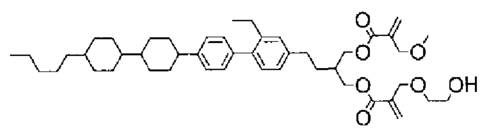

1-4-37 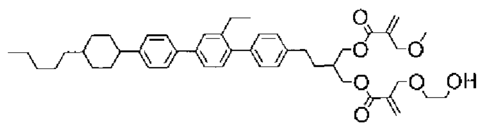

1-4-38 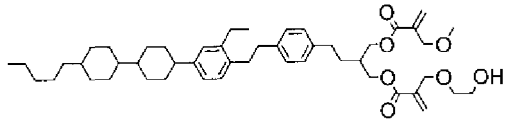

1-4-39 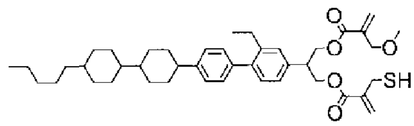

1-4-40 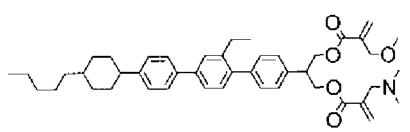

[Comparative Example 1] As a comparative compound, the following Compound (S-1) described in PCT International Publication No. WO 2017/047177 was synthesized based on description of the publication and properties thereof were measured.

[Chem. 62]

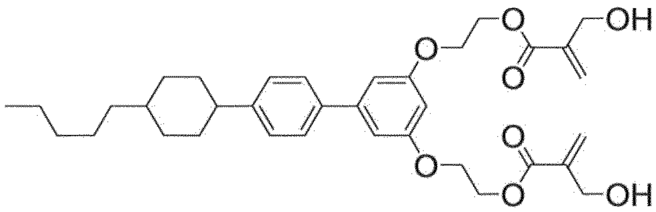

(S-1)

NMR analysis values of Comparative Compound (S-1) were as follows.

$^1$H-NMR: chemical shift δ (ppm; $CDCl_3$): 7.48-7.46 (m, 2 H), 7.27-7.26 (m. 2 H), 6.75 (d, J=2.3 Hz, 2 H), 6.47-6.46 (m, 1 H), 6.30 (s, 2 H), 5.86 (d, J=1.1 Hz, 2 H), 4.54 (t, 4.4 Hz, 4 H), 4.33 (s, 4 H), 4.27-4.25 (m, 4 H), 2.52-2.47 (m, 1 H), 2.34 (s, 2 H), 1.98-1.83 (m, 4 H), 1.51-1.44 (m, 2 H), 1.35-1.20 (m, 9 H), 1.09-1.02 (m, 2 H), 0.90 (t, J=6.9 Hz, 3 H).

Physical properties of Comparative Compound (S-1) were as follows.

Transition temperature: C 58.8 I.

Compatibilities of Compound (1-2-3), Compound (1-3-1), and Compound (1-3-4) and Comparative Compound (S-1) to a liquid crystal composition were compared. For evaluation, Composition (i) containing the following Compounds (i-1) to (i-9) was used.

A proportion of a component of Composition (i) is indicated by weight%.

[Chem. 63]

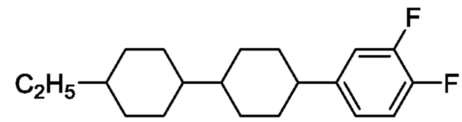

16.67% (i-1)

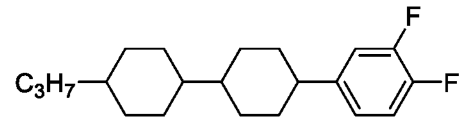

16.67% (i-2)

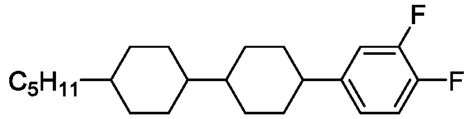

16.66% (i-3)

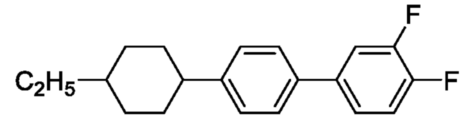

6.25% (i-4)

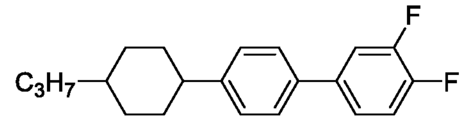

6.25% (i-5)

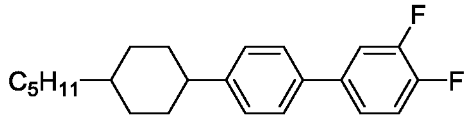

12.50% (i-6)

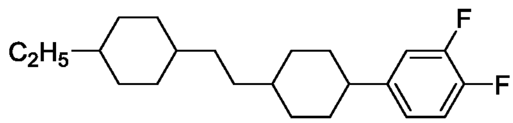

10.00% (i-7)

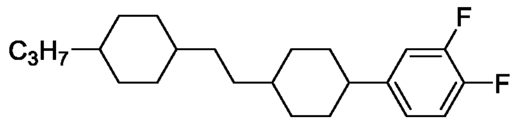

5.00% (i-8)

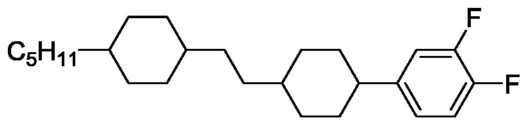

10.00% (i-9)

Samples in which Compound (No. 1-2-3), (No. 1-3-1), or (No. 1-3-4), or Comparative Compound (S-1) was added at any percentage of 0.1 weight% to 1.0 weight% shown in Table A with respect to 100 weight% of Composition (i) were prepared. These samples were left at 25 °C for 7 days, and then visually observed. When the nematic phase was maintained, this was evaluated as O, and when the crystal or smectic phase was precipitated, this was evaluated as ×.

[Table A]

| Amount added (weight%) \ Type of compound | Compound (1-2-3) | Compound (1-3-1) | Compound (1-3-4) | Comparative Compound (S-1) |
|---|---|---|---|---|
| 1.0 | ○ | ○ | ○ | × |
| 0.5 | ○ | ○ | ○ | × |
| 0.2 | ○ | ○ | ○ | × |
| 0.1 | ○ | ○ | ○ | ○ |

In results of comparing compatibility, the nematic phase was maintained even if 1.0 weight% of each of Compound (1-2-3), Compound (1-3-1), and Compound (1-3-4) was added to a mother liquid crystal (composition (i)). However, a crystal was precipitated when 0.2 weight% of Comparative Compound (S-1) was added. These compounds were similar compounds because they had a plurality of polymerizable groups, but their compatibilities with respect to a mother liquid crystal greatly differed. This is because Comparative Compound (S-1) had a plurality of hydroxyl groups as polar groups, but Compound (1-2-3), Compound (1-3-1), and Compound (1-3-4) had only one hydroxyl group as a polar group, and thus affinity with a mother liquid crystal was thought to be improved. It can be said that Compound (1) is a compound having a plurality of polymerizable groups and excellent practical compatibility.

2. Examples of composition

Compounds in the examples are indicated by symbols based on definitions of the following Table 2. In Table 2, the configuration related to 1,4-cyclohexylene is trans. A number in parentheses after a symbol indicates a number of a compound. The symbol (-) refers to other liquid crystalline compounds. A proportion (percentage) of the liquid crystalline compound is a weight percentage (weight%) based on the weight of the liquid crystal composition. Finally, values of properties of the liquid crystal compositions are summarized. The properties were measured according to the methods described above and measured values (without extrapolation) are shown without change.

[Table 2]

**Table 2. Method of representing compound using symbols**

| $R-(A_1)-Z_1-\cdots\cdots-Z_n-(A_n)-R'$ | | | |
|---|---|---|---|
| 1) Left terminal group R- | symbols | 4) Ring structure $-A_n-$ | symbols |
| $C_nH_{2n+1}-$ | n- | 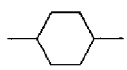 | H |
| $C_nH_{2n+1}O-$ | nO- | | |
| $C_mH_{2m+1}OC_nH_{2n}-$ | mOn- | 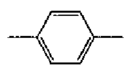 | B |
| $CH_2=CH-$ | V- | | |
| $C_nH_{2n+1}-CH=CH-$ | nV- | 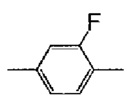 | B(F) |
| $CH_2=CH-C_nH_{2n}-$ | Vn- | | |
| $C_mH_{2m+1}-CH=CH-C_nH_{2n}-$ | mVn- | | |
| $CF_2=CH-$ | VFF- | 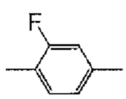 | B(2F) |
| $CF_2=CH-C_nH_{2n}-$ | VFFn- | | |
| 2) Right terminal group -R' | symbols | | |

(continued)

| R-($A_1$)-$Z_1$-·······-$Z_n$-($A_n$)-R' | | | |
|---|---|---|---|
| 1) Left terminal group R- | symbols | 4) Ring structure -$A_n$- | symbols |
| -$C_nH_{2n+1}$<br>-$OC_nH_{2n+1}$<br>-$COOCH_3$ | -n<br>-On<br>-EMe | 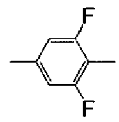 | B(F,F) |
| -$CH=CH_2$<br>-$CH=CH-C_nH_{2n+1}$<br>-$C_nH_{2n}-CH=CH_2$ | -V<br>-Vn<br>-nV | 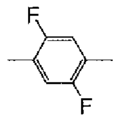 | B(2F,5F) |
| -$C_mH_{2m}-CH=CH-C_nH_{2n+1}$<br>-$CH=CF_2$<br>-F | -mVn<br>-VFF<br>-F | 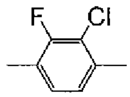 | B(2F,3Cl) |
| -Cl<br>-$OCF_3$<br>-$OCF_2H$ | -CL<br>-OCF3<br>-OCF2H | 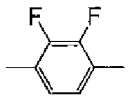 | B(2F,3F) |
| -$CF_3$<br>-$OCH=CH-CF_3$ | -CF3<br>-OVCF3 | 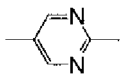 | Py |
| -C≡N | -C | 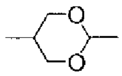 | G |
| 3) Bonding group -$Z_n$- | symbols | | |
| -$C_nH_{2n}$-<br>-COO- | n<br>E | 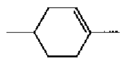 | Ch |
| -CH=CH-<br>-$CH_2O$- | V<br>1O | 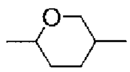 | Dh |
| -$OCH_2$-<br>-$CF_2O$-<br>-C≡C- | O1<br>X<br>T | 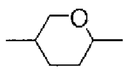 | dh |
| 5) Representative examples | | | |
| Example 1 | 3-HHB(F)-F | Example 2 | 4-H2HB(F,F)-F |
| 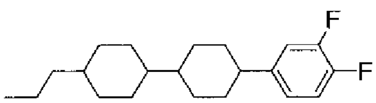 | | 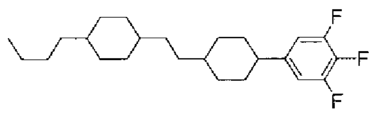 | |
| Example 3 | 3-HB-O2 | Example 4 | 3-HB-C |
| 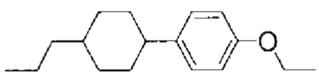 | | 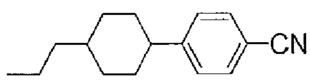 | |

[Usage Example 1]

| | | |
|---|---|---|
| 1-BB-3 | (2-8) | 6% |
| 1-BB-5 | (2-8) | 8% |
| 2-BTB-1 | (2-10) | 3% |
| 3-HHB-1 | (3-1) | 6% |
| 3-HHB-3 | (3-1) | 16% |

(continued)

| | | |
|---|---|---|
| 3-HHB-O1 | (3-1) | 5% |
| 3-HHB-F | (6-1) | 5% |
| 2-HHB(F)-F | (6-2) | 8% |
| 3-HHB(F)-F | (6-2) | 7% |
| 5-HHB(F)-F | (6-2) | 7% |
| 3-HHB(F, F)-F | (6-3) | 3% |
| 3-HHEB-F | (6-10) | 4% |
| 5-HHEB-F | (6-10) | 4% |
| 2-HB-C | (8-1) | 7% |
| 3-HB-C | (8-1) | 11% |

The following Compound (1-2-3) in a proportion of 1 weight% was added to 100 weight% of the composition containing such components.

[Chem. 64]

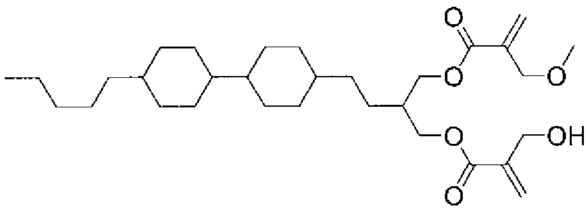

(1-2-3)

Properties of the obtained liquid crystal composition were as follows. NI=95.9 °C; η=17.0 mPa·s; Δn=0.108; Δε=4.8.

[Usage Example 2]

| | | |
|---|---|---|
| 3-HH-4 | (2-1) | 14% |
| 7-HB-1 | (2-5) | 4% |
| 5-HB-O2 | (2-5) | 3% |
| 5-HBB(F)B-2 | (4-5) | 6% |
| 5-HBB(F)B-3 | (4-5) | 3% |
| 3-HB-CL | (5-2) | 10% |
| 3-HHB(F, F)-F | (6-3) | 3% |
| 3-HBB(F, F)-F | (6-24) | 32% |
| 5-HBB(F, F)-F | (6-24) | 25% |

The following Compound (1-3-1) in a proportion of 1.5 weight% was added to 100 weight% of the composition containing such components.

[Chem. 65]

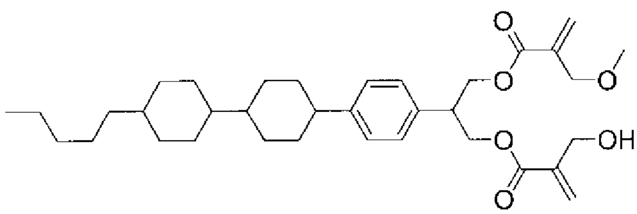

(1-3-1)

Properties of the obtained liquid crystal composition were as follows. NI=70.3 °C; η=20.1 mPa·s; Δn=0.112; Δε=5.8.

[Usage Example 3]

| | | |
|---|---|---|
| 1V2-HH-1 | (2-1) | 3% |
| 1V2-HH-3 | (2-1) | 4% |
| 7-HB(F, F)-F | (5-4) | 3% |
| 2-HHB(F)-F | (6-2) | 9% |
| 3-HHB(F)-F | (6-2) | 9% |
| 5-HHB(F)-F | (6-2) | 9% |
| 2-HBB-F | (6-22) | 4% |
| 3-HBB-F | (6-22) | 6% |
| 5-HBB-F | (6-22) | 3% |
| 2-HBB(F)-F | (6-23) | 9% |
| 3-HBB(F)-F | (6-23) | 10% |
| 5-HBB(F)-F | (6-23) | 16% |
| 3-HBB(F, F)-F | (6-24) | 5% |
| 5-HBB(F, F)-F | (6-24) | 10% |

The following Compound (1-3-4) in a proportion of 2 weight% was added to 100 weight% of the composition containing such components.

[Chem. 66]

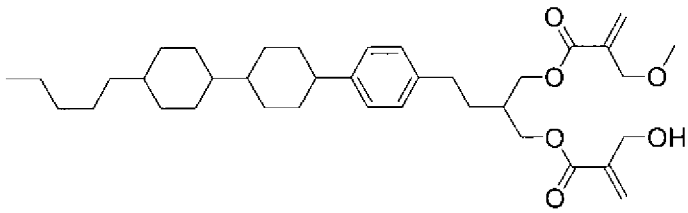

(1-3-4)

Properties of the obtained liquid crystal composition were as follows. NI=85.1 °C; η=25.1 mPa·s; Δn=0.113; Δε=5.7.

[Usage Example 4]

| | | |
|---|---|---|
| 2-HH-3 | (2-1) | 3% |
| 3-HH-4 | (2-1) | 11% |
| 1O1-HBBH-5 | (4-1) | 3% |
| 5-HB-CL | (5-2) | 17% |
| 3-HHB-F | (6-1) | 4% |
| 3-HHB-CL | (6-1) | 3% |
| 4-HHB-CL | (6-1) | 4% |
| 3-HHB(F)-F | (6-2) | 9% |
| 4-HHB(F)-F | (6-2) | 9% |
| 5-HHB(F)-F | (6-2) | 10% |
| 7-HHB(F)-F | (6-2) | 8% |
| 5-HBB(F)-F | (6-23) | 5% |

(continued)

| | | |
|---|---|---|
| 3-HHBB(F, F)-F | (7-6) | 2% |
| 4-HHBB(F, F)-F | (7-6) | 3% |
| 5-HHBB(F, F)-F | (7-6) | 3% |
| 3-HH2BB(F, F)-F | (7-15) | 3% |
| 4-HH2BB(F, F)-F | (7-15) | 3% |

The following Compound (1-3-66) in a proportion of 0.5 weight% was added to 100 weight% of the composition containing such components.

[Chem. 67]

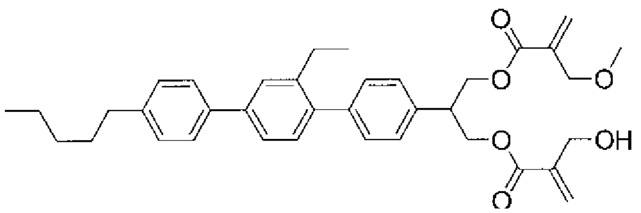

(1-3-66)

Properties of the obtained liquid crystal composition were as follows. NI=114.2 °C; η=19.8 mPa·s; Δn=0.092; Δε=3.9.

[Usage Example 5]

| | | |
|---|---|---|
| V-HBB-2 | (3-4) | 9% |
| 1O1-HBBH-4 | (4-1) | 3% |
| 1O1-HBBH-5 | (4-1) | 4% |
| 3-HHB(F, F)-F | (6-3) | 8% |
| 3-H2HB(F, F)-F | (6-15) | 7% |
| 4-H2HB(F, F)-F | (6-15) | 8% |
| 5-H2HB(F, F)-F | (6-15) | 8% |
| 3-HBB(F, F)-F | (6-24) | 12% |
| 5-HBB(F, F)-F | (6-24) | 20% |
| 3-H2BB(F, F)-F | (6-27) | 10% |
| 5-HHBB(F, F)-F | (7-6) | 5% |
| 3-HH2BB(F, F)-F | (7-15) | 4% |
| 5-HHEBB-F | (7-17) | 2% |

The following Compound (1-3-21) in a proportion of 1.5 weight% was added to 100 weight% of the composition containing such components.

[Chem. 68]

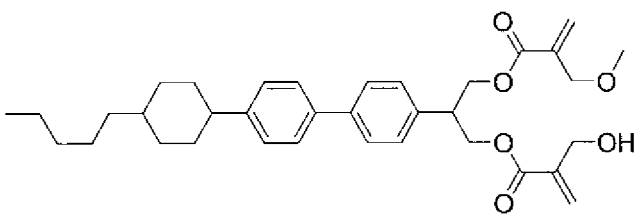

(1-3-21)

Properties of the obtained liquid crystal composition were as follows. NI=107.4 °C; η=33.9 mPa·s; Δn=0.123; Δε=8.4.

[Usage Example 6]

| | | |
|---|---|---|
| 5-HBBH-3 | (4-1) | 5% |
| 3-HB(F)BH-3 | (4-2) | 3% |
| 5-HB-F | (5-2) | 12% |
| 6-HB-F | (5-2) | 9% |
| 7-HB-F | (5-2) | 7% |
| 2-HHB-OCF3 | (6-1) | 6% |
| 3-HHB-OCF3 | (6-1) | 6% |
| 4-HHB-OCF3 | (6-1) | 7% |
| 5-HHB-OCF3 | (6-1) | 4% |
| 3-HHB(F, F)-OCF2H | (6-3) | 3% |
| 3-HHB(F, F)-OCF3 | (6-3) | 5% |
| 3-HH2B-OCF3 | (6-4) | 4% |
| 5-HH2B-OCF3 | (6-4) | 4% |
| 3-HH2B(F)-F | (6-5) | 3% |
| 3-HBB(F)-F | (6-23) | 11% |
| 5-HBB(F)-F | (6-23) | 11% |

The following Compound (1-3-88) in a proportion of 2 weight% was added to 100 weight% of the composition containing such components.

[Chem. 69]

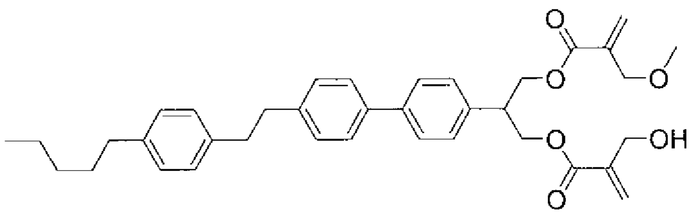

(1-3-88)

Properties of the obtained liquid crystal composition were as follows. NI=87.8 °C; η=15.6 mPa·s; Δn=0.094; Δε=4.4.

[Usage Example 7]

| | | |
|---|---|---|
| 3-HH-4 | (2-1) | 3% |
| 2-HH-5 | (2-1) | 4% |
| 5-B(F)BB-2 | (3-8) | 2% |
| 5-HB-CL | (5-2) | 12% |
| 3-HHB(F, F)-F | (6-3) | 7% |
| 3-HHEB(F, F)-F | (6-12) | 10% |
| 4-HHEB(F, F)-F | (6-12) | 3% |
| 5-HHEB(F, F)-F | (6-12) | 3% |
| 3-HBB(F, F)-F | (6-24) | 21% |
| 5-HBB(F, F)-F | (6-24) | 15% |

(continued)

| | | |
|---|---|---|
| 2-HBEB(F, F)-F | (6-39) | 4% |
| 3-HBEB(F, F)-F | (6-39) | 5% |
| 5-HBEB(F, F)-F | (6-39) | 4% |
| 3-HHBB(F, F)-F | (7-6) | 7% |

The following Compound (1-2-18) in a proportion of 4 weight% was added to 100 weight% of the composition containing such components.

[Chem. 70]

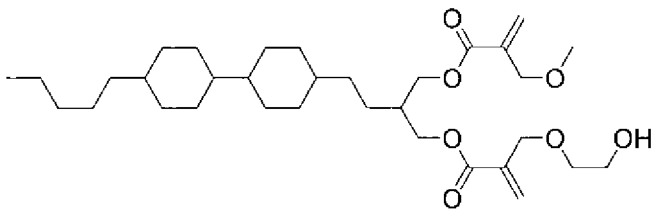

(1-2-18)

Properties of the obtained liquid crystal composition were as follows. NI=76.1 °C; $\eta$=24.1 mPa·s; $\Delta$n=0.107; $\Delta\varepsilon$=9.3.

[Usage Example 8]

| | | |
|---|---|---|
| V2-HHB-1 | (3-1) | 4% |
| 3-HB-CL | (5-2) | 5% |
| 5-HB-CL | (5-2) | 4% |
| 3-HHB-OCF3 | (6-1) | 6% |
| 5-HHB(F)-F | (6-2) | 4% |
| V-HHB(F)-F | (6-2) | 4% |
| 3-H2HB-OCF3 | (6-13) | 5% |
| 5-H2HB(F, F)-F | (6-15) | 8% |
| 5-H4HB-OCF3 | (6-19) | 15% |
| 5-H4HB(F, F)-F | (6-21) | 7% |
| 3-H4HB(F, F)-CF3 | (6-21) | 8% |
| 5-H4HB(F, F)-CF3 | (6-21) | 10% |
| 2-H2BB(F)-F | (6-26) | 5% |
| 3-H2BB(F)-F | (6-26) | 10% |
| 3-HBEB(F, F)-F | (6-39) | 5% |

The following Compound (1-2-3) in a proportion of 2.5 weight% was added to 100 weight% of the composition containing such components.

[Chem. 71]

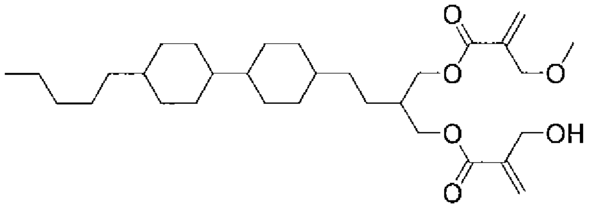

(1-2-3)

Properties of the obtained liquid crystal composition were as follows. NI=72.5 °C; η=25.6 mPa·s; Δn=0.098; Δε=8.2.

[Usage Example 9]

| | | |
|---|---|---|
| 3-HH-4 | (2-1) | 9% |
| 3-HH-5 | (2-1) | 4% |
| 3-HB-O2 | (2-5) | 14% |
| 3-HHB-1 | (3-1) | 7% |
| 3-HHB-O1 | (3-1) | 5% |
| 5-HB-CL | (5-2) | 17% |
| 7-HB(F, F)-F | (5-4) | 3% |
| 2-HHB(F)-F | (6-2) | 7% |
| 3-HHB(F)-F | (6-2) | 7% |
| 5-HHB(F)-F | (6-2) | 10% |
| 3-HHB(F, F)-F | (6-3) | 6% |
| 3-H2HB(F, F)-F | (6-15) | 5% |
| 4-H2HB(F, F)-F | (6-15) | 6% |

The following Compound (1-3-1) in a proportion of 5 weight% was added to 100 weight% of the composition containing such components.

[Chem. 72]

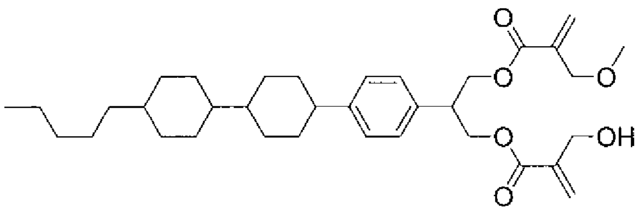

(1-3-1)

Properties of the obtained liquid crystal composition were as follows. NI=71.8 °C; η=14.6 mPa·s; Δn=0.074; Δε=3.0.

[Usage Example 10]

| | | |
|---|---|---|
| 3-HH-4 | (2-1) | 8% |
| 3-HH-5 | (2-1) | 9% |
| 3-HHB-1 | (3-1) | 12% |

(continued)

| | | |
|---|---|---|
| 5-HB-CL | (5-2) | 2% |
| 7-HB(F)-F | (5-3) | 7% |
| 2-HHB(F, F)-F | (6-3) | 4% |
| 3-HHB(F, F)-F | (6-3) | 5% |
| 3-HHEB-F | (6-10) | 9% |
| 5-HHEB-F | (6-10) | 9% |
| 3-HHEB(F, F)-F | (6-12) | 10% |
| 4-HHEB(F, F)-F | (6-12) | 5% |
| 3-GHB(F, F)-F | (6-109) | 5% |
| 4-GHB(F, F)-F | (6-109) | 7% |
| 5-GHB(F, F)-F | (6-109) | 8% |

The following Compound (1-3-4) in a proportion of 3.5 weight% was added to 100 weight% of the composition containing such components.

[Chem. 73]

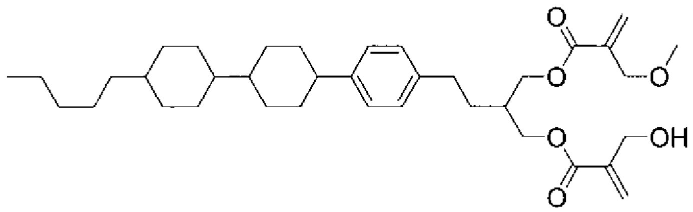

(1-3-4)

Properties of the obtained liquid crystal composition were as follows. NI=87.8 °C; η=24.3 mPa·s; Δn=0.071; Δε=6.4.

[Usage Example 11]

| | | |
|---|---|---|
| 3-HH-VFF | (2-1) | 4% |
| 5-HH-VFF | (2-1) | 24% |
| 2-BTB-1 | (2-10) | 9% |
| 3-HHB-1 | (3-1) | 3% |
| VFF-HHB-1 | (3-1) | 8% |
| VFF2-HHB-1 | (3-1) | 11% |
| 3-H2BTB-2 | (3-17) | 6% |
| 3-H2BTB-3 | (3-17) | 5% |
| 3-H2BTB-4 | (3-17) | 4% |
| 3-HB-C | (8-1) | 18% |
| 1V2-BEB(F, F)-C | (8-15) | 8% |

The following Compound (1-3-66) in a proportion of 3 weight% was added to 100 weight% of the composition containing such components.

[Chem. 74]

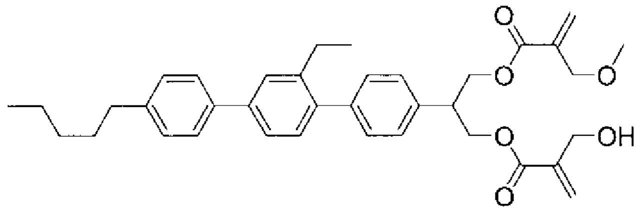

(1-3-66)

Properties of the obtained liquid crystal composition were as follows.
NI=81.9 °C; η=12.9 mPa·s; Δn=0.134; Δε=8.0.

Industrial Applicability

A liquid crystal composition containing Compound (1) can be used for a display device such as a liquid crystal projector and a liquid crystal television.

## Claims

1. A compound represented by Formula (1):

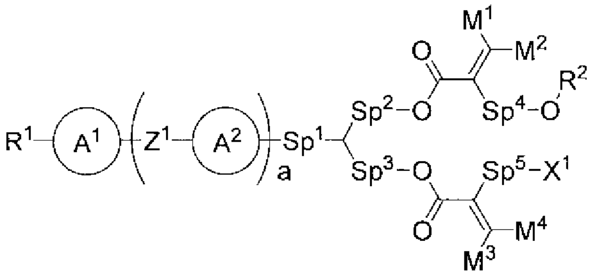

(1)

the compound being **characterized by**, in Formula (1),

$R^1$ is a hydrogen atom or an alkyl group having 1 to 15 carbon atoms, and in the alkyl group, at least one $-CH_2-$ is optionally substituted with -O- or -S-, at least one $-(CH_2)_2-$ is optionally substituted with -CH=CH- or -C=C-, and in these groups, at least one hydrogen atom is optionally substituted with a fluorine or chlorine atom;
the ring $A^1$ and the ring $A^2$ are independently 1,2-cyclopropylene, 1,3-cyclobutylene, 1,3-cyclopentylene, 1,4-cyclohexylene, 1,4-cycloheptylene, 1,4-cyclohexenylene, 1,4-phenylene, naphthalene-2,6-diyl, decahydronaphthalene-2,6-diyl, 1,2,3,4-tetrahydronaphthalene-2,6-diyl, tetrahydropyran-2,5-diyl, 1,3-dioxane-2,5-diyl, pyrimidine-2,5-diyl, or pyridine-2,5-diyl, and in these rings, at least one hydrogen atom is optionally substituted with a fluorine atom, a chlorine atom, an alkyl group having 1 to 10 carbon atoms, an alkenyl group having 2 to 10 carbon atoms, an alkoxy group having 1 to 9 carbon atoms, or an alkenyloxy group having 2 to 9 carbon atoms, and in these groups, at least one hydrogen atom is optionally substituted with a fluorine or chlorine atom;
a is 0, 1, 2, 3, or 4;
$Z^1$ is a single bond or an alkylene group having 1 to 6 carbon atoms, and in the alkylene group, at least one $-CH_2-$ is optionally substituted with -O-, -CO-, -COO-, -OCO-, or -OCOO-, at least one $-(CH_2)_2-$ is optionally substituted with -CH=CH- or -C≡C-, and in these groups, at least one hydrogen atom is optionally substituted with a fluorine or chlorine atom;
$Sp^1$, $Sp^2$, $Sp^3$, $Sp^4$, and $Sp^5$ are independently a single bond or an alkylene having 1 to 10 carbon atoms, and in the alkylene group, at least one $-CH_2-$ is optionally substituted with -O-, -CO-, -COO-, -OCO-, or -OCOO-, at least one $-(CH_2)_2-$ is optionally substituted with -CH=CH-or -C≡C-, and in these groups, at least one hydrogen atom is optionally substituted with a fluorine or chlorine atom;
$M^1$, $M^2$, $M^3$, and $M^4$ are independently a hydrogen atom, a fluorine atom, a chlorine atom, an alkyl group having 1 to 5 carbon atoms, or an alkyl group having 1 to 5 carbon atoms in which at least one hydrogen atom is substituted with a fluorine or chlorine atom;
$R^2$ is an alkyl group having 1 to 5 carbon atoms, and in the alkyl group, at least one $-CH_2-$ is optionally substituted

with -O- or -S-, at least one $-(CH_2)_2-$ is optionally substituted with -CH=CH- or -C≡C-, and in these groups, at least one hydrogen atom is optionally substituted with a fluorine or chlorine atom;
$X^1$ is -OH, $-NH_2$, $-OR^3$, $-N(R^3)_2$, -COOH, -SH, or $-Si(R^3)_3$;
in $-OR^3$, $-N(R^3)_2$, and $-Si(R^3)_3$,
$R^3$ is a hydrogen atom or an alkyl group having 1 to 10 carbon atoms, and in the alkyl group, at least one $-CH_2-$ is optionally substituted with -O-, at least one $-(CH_2)_2-$ is optionally substituted with -CH=CH-, and in these groups, at least one hydrogen atom is optionally substituted with a fluorine or chlorine atom;
when a is 1, both the ring $A^1$ and the ring $A^2$ are 1,4-cyclohexylene, $Z^1$ is a single bond, $Sp^2$, $Sp^3$, $Sp^4$, and $Sp^5$ are $-CH_2-$, $R^2$ is a methyl group, and when $X^1$ is -OH or $-OCH_3$, $Sp^1$ is not a single bond;
when a is 2, the ring on the side of $R^1$ is naphthalene-2,6-diyl, two rings on the side of $Sp^1$ are both 1,4-cyclohexylene, $Z^1$ is a single bond, $Sp^2$, $Sp^3$, $Sp^4$, and $Sp^5$ are $-CH_2-$, $R^2$ is a methyl group, and when $X^1$ is $-OCH_3$, $Sp^1$ is not a single bond; and
when a is 2, the ring on the side of $R^1$ is naphthalene-2,6-diyl, the center ring is 1,4-phenylene, the ring on the side of $Sp^1$ is 1,4-cyclohexylene, $Z^1$ is a single bond, $Sp^2$, $Sp^3$, $Sp^4$, and $Sp^5$ are $-CH_2-$, $R^2$ is a methyl group, and when $X^1$ is $-OCH_3$, $Sp^1$ is not a single bond.

**2.** The compound according to claim 1,
wherein, in Formula (1), $Z^1$ is a single bond, $-(CH_2)_2-$, $-(CH_2)_4-$, -CH=CH-, -C≡C-, -COO-, -OCO-, $-CF_2O-$, $-OCF_2-$, $-CH_2O-$, $-OCH_2-$, or -CF=CF-.

**3.** The compound according to claim 1 or 2,
wherein, in Formula (1),
the ring $A^1$ and the ring $A^2$ are independently 1,4-cyclohexylene, 1,4-cyclohexenylene, 1,4-phenylene, naphthalene-2,6-diyl, tetrahydropyran-2,5-diyl, 1,3-dioxane-2,5-diyl, pyrimidine-2,5-diyl, or pyridine-2,5-diyl, and in these rings, at least one hydrogen atom is optionally substituted with a fluorine atom, a chlorine atom, an alkyl group having 1 to 10 carbon atoms, an alkenyl group having 2 to 10 carbon atoms, an alkoxy group having 1 to 9 carbon atoms, or an alkenyloxy group having 2 to 9 carbon atoms, and in these groups, at least one hydrogen atom is optionally substituted with a fluorine or chlorine atom.

**4.** The compound according to any one of claims 1 to 3 represented by any one of Formula (1-1) to Formula (1-4):

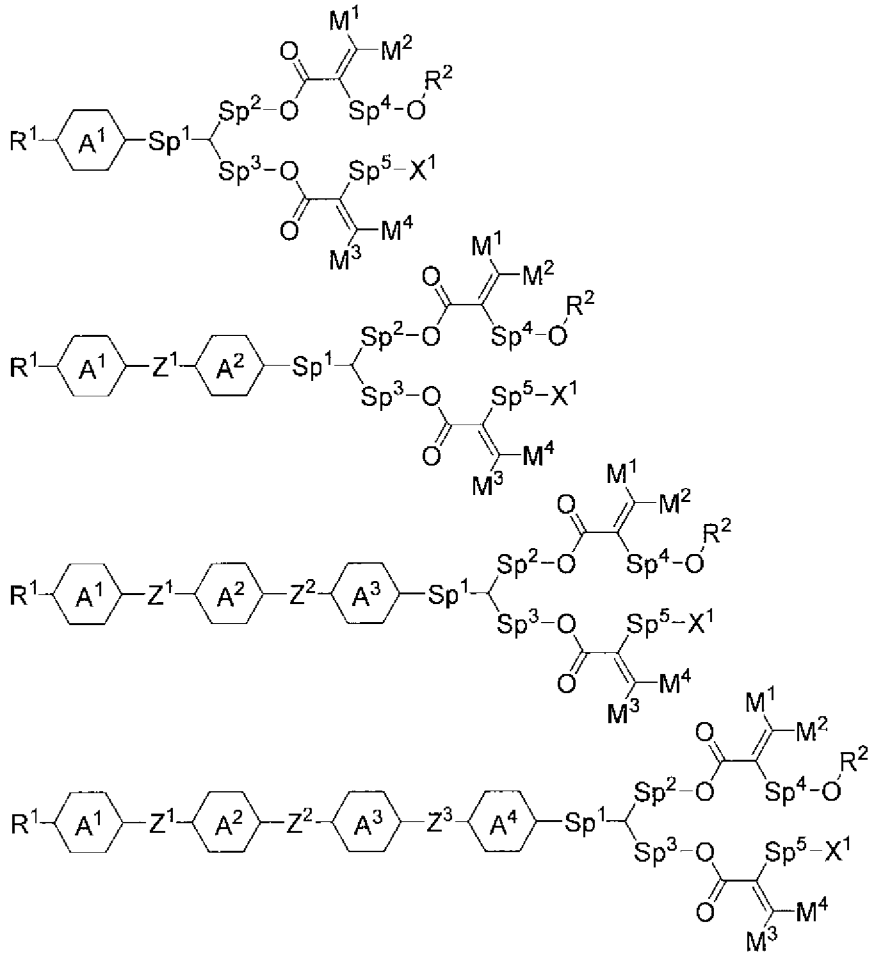

(1-1)

(1-2)

(1-3)

(1-4)

in Formula (1-1) to Formula (1-4),

$R^1$ is an alkyl group having 1 to 15 carbon atoms, an alkenyl group having 2 to 15 carbon atoms, an alkoxy group having 1 to 14 carbon atoms, or an alkenyloxy group having 2 to 14 carbon atoms, and in these groups, at least one hydrogen atom is optionally substituted with a fluorine atom;

the ring $A^1$, the ring $A^2$, the ring $A^3$, and the ring $A^4$ are independently 1,4-cyclohexylene, 1,4-cyclohexenylene, 1,4-phenylene, naphthalene-2,6-diyl, tetrahydropyran-2,5-diyl, or 1,3-dioxane-2,5-diyl, and in these rings, at least one hydrogen atom is optionally substituted with a fluorine atom, an alkyl group having 1 to 10 carbon atoms, an alkenyl group having 2 to 10 carbon atoms, an alkoxy group having 1 to 9 carbon atoms, or an alkenyloxy group having 2 to 9 carbon atoms, and in these groups, at least one hydrogen atom is optionally substituted with a fluorine atom;

$Z^1$, $Z^2$, and $Z^3$ are independently a single bond, $-(CH_2)_2-$, -CH=CH-, -C≡C-, -COO-, -OCO-, $-CF_2O-$, $-OCF_2-$, $-CH_2O-$, $-OCH_2-$, or -CF=CF-;

$Sp^1$, $Sp^2$, $Sp^3$, $Sp^4$, and $Sp^5$ are independently a single bond or an alkylene group having 1 to 7 carbon atoms, and in the alkylene group, at least one $-CH_2-$ is optionally substituted with -O-, -COO-, or -OCO-, at least one $-(CH_2)_2-$ is optionally substituted with -CH=CH-, and in these groups, at least one hydrogen atom is optionally substituted with a fluorine atom;

$M^1$, $M^2$, $M^3$, and $M^4$ are independently a hydrogen atom, a fluorine atom, an alkyl group having 1 to 5 carbon atoms, or an alkyl group having 1 to 5 carbon atoms in which at least one hydrogen atom is substituted with a fluorine atom;

$R^2$ is an alkyl group having 1 to 5 carbon atoms, and in the alkyl group, at least one $-CH_2-$ is optionally substituted with -O-;

$X^1$ is -OH, $-NH_2$, or -SH;

in Formula (1-2),

both the ring $A^1$ and the ring $A^2$ are 1,4-cyclohexylene, $Z^1$ is a single bond, $Sp^2$, $Sp^3$, $Sp^4$, and $Sp^5$ are $-CH_2-$, $R^2$ is a methyl group, and when $X^1$ is -OH, $Sp^1$ is not a single bond.

5. The compound according to any one of claims 1 to 4 represented by any one of Formula (1-5) to Formula (1-7):

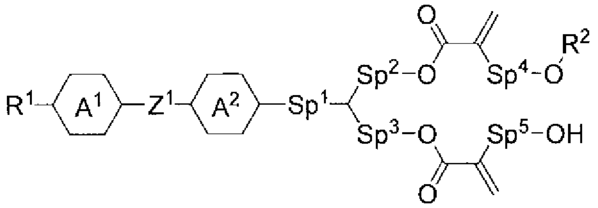

(1-5)

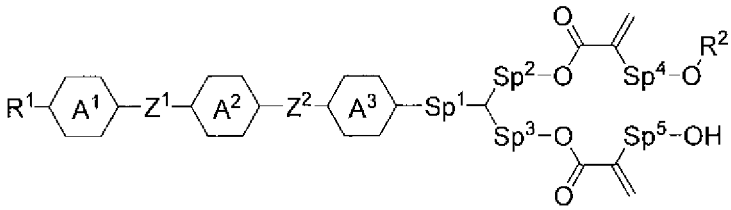

(1-6)

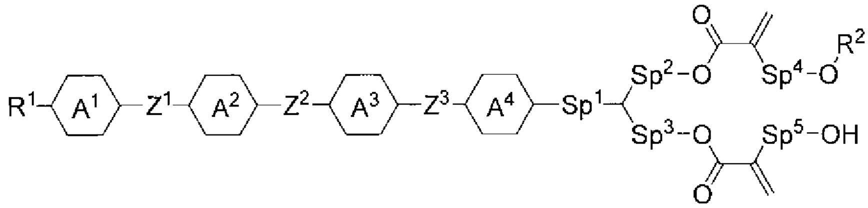

(1-7)

in Formula (1-5) to Formula (1-7),

$R^1$ is an alkyl group having 1 to 10 carbon atoms, an alkenyl group having 2 to 10 carbon atoms, or an alkoxy group having 1 to 9 carbon atoms;
the ring $A^1$, the ring $A^2$, the ring $A^3$, and the ring $A^4$ are independently 1,4-cyclohexylene, 1,4-cyclohexenylene, 1,4-phenylene, naphthalene-2,6-diyl, tetrahydropyran-2,5-diyl, or 1,3-dioxane-2,5-diyl, and in these rings, at least one hydrogen atom is optionally substituted with a fluorine atom, an alkyl group having 1 to 5 carbon atoms, an alkenyl group having 2 to 5 carbon atoms, or an alkoxy group having 1 to 4 carbon atoms;
$Z^1$, $Z^2$, and $Z^3$ are independently a single bond, $-(CH_2)_2-$, -CH=CH-, -C≡C-, $-CH_2O-$, or $-OCH_2-$;
$Sp^1$, $Sp^2$, $Sp^3$, $Sp^4$, and $Sp^5$ are independently a single bond or an alkylene group having 1 to 5 carbon atoms, and in the alkylene group, at least one -CH2- is optionally substituted with -O-, and at least one $-(CH_2)_2-$ is optionally substituted with -CH=CH-;
$R^2$ is an alkyl group having 1 to 3 carbon atoms;
in Formula (1-5),
both the ring $A^1$ and the ring $A^2$ are 1,4-cyclohexylene, $Z^1$ is a single bond, $Sp^2$, $Sp^3$, $Sp^4$, and $Sp^5$ are -CH2-, and when $R^2$ is a methyl group, $Sp^1$ is not a single bond.

6. The compound according to any one of claims 1 to 5 represented by any one of Formula (1-8) to Formula (1-16):

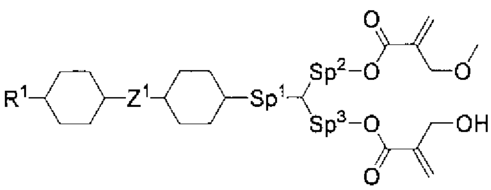

(1-8)

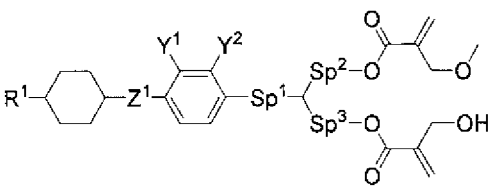

(1-9)

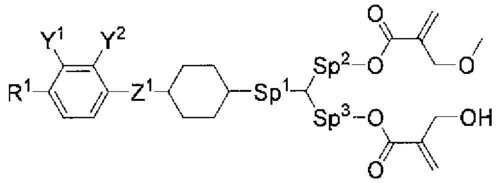

(1-10)

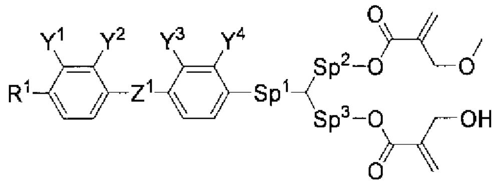

(1-11)

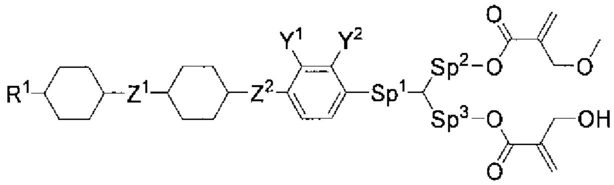

(1-12)

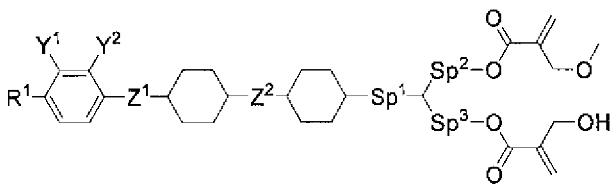

(1-13)

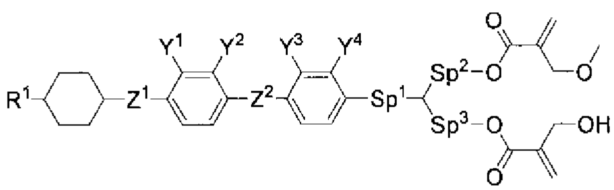

(1-14)

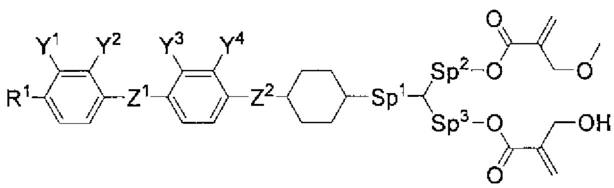

(1-15)

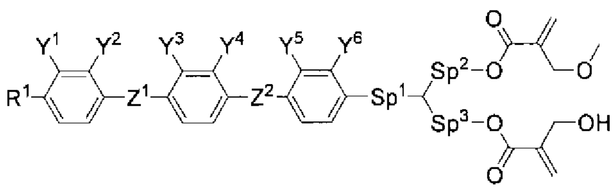

(1-16)

in Formula (1-8) to Formula (1-16),

$R^1$ is an alkyl group having 1 to 10 carbon atoms, an alkenyl group having 2 to 10 carbon atoms, or an alkoxy group having 1 to 9 carbon atoms;

$Z^1$ and $Z^2$ are independently a single bond or $-(CH_2)_2-$;

$Sp^1$, $Sp^2$, and $Sp^3$ are independently a single bond or an alkylene group having 1 to 5 carbon atoms, and in the alkylene group, at least one $-CH_2-$ is optionally substituted with -O-;

$Y^1$, $Y^2$, $Y^3$, $Y^4$, $Y^5$, and $Y^6$ are independently a hydrogen atom, a fluorine atom, an alkyl group having 1 to 5 carbon atoms, an alkenyl group having 2 to 5 carbon atoms, or an alkoxy group having 1 to 4 carbon atoms;

in Formula (1-8),
$Z^1$ is a single bond, and when $Sp^2$ and $Sp^3$ are $-CH_2-$, $Sp^1$ is not a single bond.

**7.** The compound according to any one of claims 1 to 6 represented by any one of Formula (1-17) to Formula (1-23):

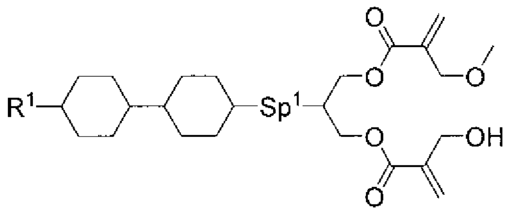

(1-17)

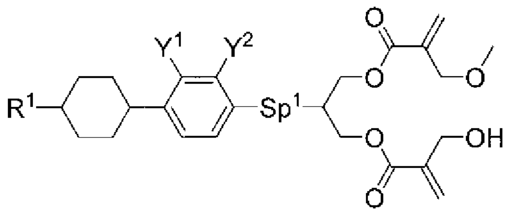

(1-18)

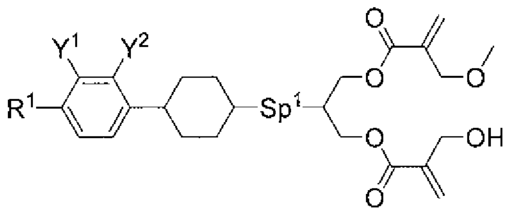

(1-19)

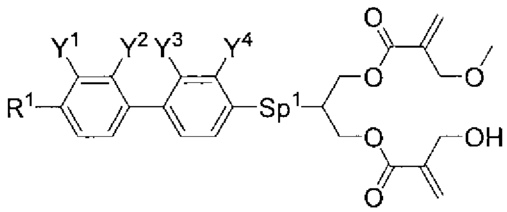

(1-20)

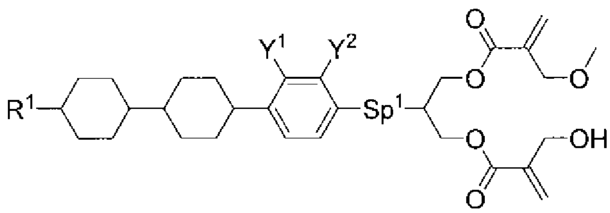

(1-21)

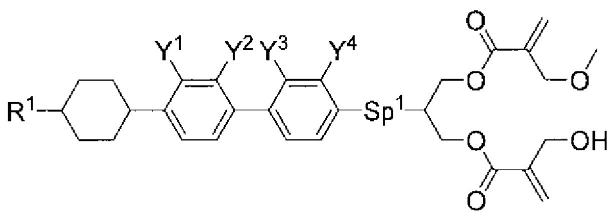

(1-22)

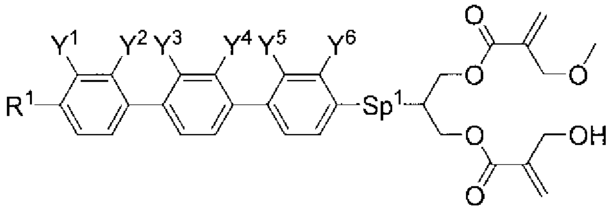

(1-23)

in Formula (1-17) to Formula (1-23),

$R^1$ is an alkyl group having 1 to 10 carbon atoms;
$Y^1$, $Y^2$, $Y^3$, $Y^4$, $Y^5$, and $Y^6$ are independently a hydrogen atom, a fluorine atom, a methyl group, or an ethyl group,
$Sp^1$ is a single bond or an alkylene group having 1 to 5 carbon atoms, and in the alkylene group, at least one $-CH_2-$ is optionally substituted with -O-;
in Formula (1-17),
$Sp^1$ is not a single bond.

8. A liquid crystal composition, being **characterized by** containing at least one of the compounds according to any one of claims 1 to 7.

9. The liquid crystal composition according to claim 8, containing at least one compound selected from the group consisting of compounds represented by Formulae (2) to (4):

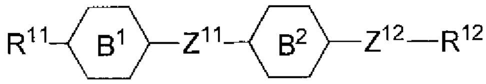

(2)

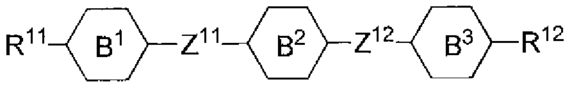

(3)

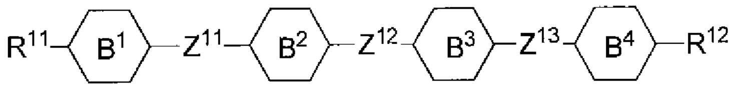

(4)

in Formulae (2) to (4),

$R^{11}$ and $R^{12}$ are independently an alkyl group having 1 to 10 carbon atoms or an alkenyl group having 2 to 10 carbon atoms, and in the alkyl and alkenyl groups, at least one $-CH_2-$ is optionally substituted with -O-, and in these groups, at least one hydrogen atom is optionally substituted with a fluorine atom;
the ring $B^1$, the ring $B^2$, the ring $B^3$, and the ring $B^4$ are independently 1,4-cyclohexylene, 1,4-phenylene, 2-fluoro-1,4-phenylene, 2,5-difluoro-1,4-phenylene, or pyrimidine-2,5-diyl; and
$Z^{11}$, $Z^{12}$, and $Z^{13}$ are independently a single bond, -COO-, $-CH_2CH_2-$, -CH=CH-, or -C≡C-.

10. The liquid crystal composition according to claim 8 or 9 containing at least one compound selected from the group consisting of compounds represented by Formulae (5) to (7):

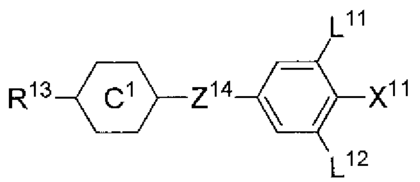

(5)

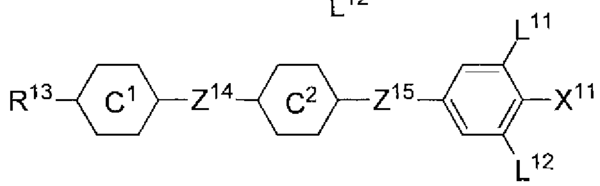

(6)

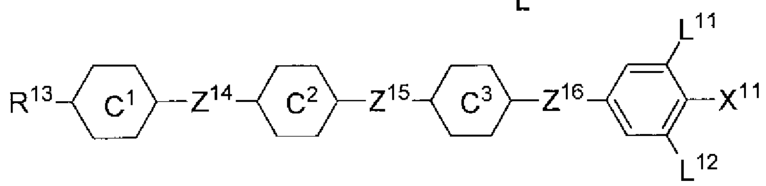

(7)

in Formulae (5) to (7),

$R^{13}$ is an alkyl group having 1 to 10 carbon atoms or an alkenyl group having 2 to 10 carbon atoms, and in the alkyl and alkenyl groups, at least one $-CH_2-$ is optionally substituted with -O-, and in these groups, at least one hydrogen atom is optionally substituted with a fluorine atom;

$X^{11}$ is a fluorine atom, a chlorine atom, $-OCF_3$, $-OCHF_2$, $-CF_3$, $-CHF_2$, $-CH_2F$, $-OCF_2CHF_2$, or $-OCF_2CHFCF_3$ ;

the ring $C^1$, the ring $C^2$, and the ring $C^3$ are independently 1,4-cyclohexylene, 1,4-phenylene, tetrahydropyran-2,5-diyl, 1,3-dioxane-2,5-diyl, pyrimidine-2,5-diyl, or 1,4-phenylene in which at least one hydrogen atom is substituted with a fluorine atom;

$Z^{14}$, $Z^{15}$, and $Z^{16}$ are independently a single bond, -COO-, -OCO-, $-CH_2O-$, $-OCH_2-$, $-CF_2O-$, $-OCF_2-$, $-CH_2CH_2-$, -CH=CH-, -C≡C-, or $-(CH_2)_4-$; and

$L^{11}$ and $L^{12}$ are independently a hydrogen or fluorine atom.

**11.** The liquid crystal composition according to any one of claims 8 to 10 containing at least one compound selected from the group consisting of compounds represented by Formula (8):

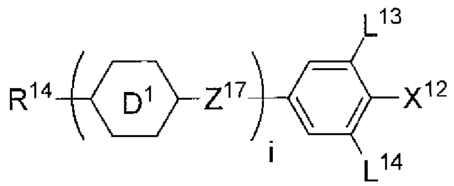

(8)

in Formula (8),

$R^{14}$ is an alkyl group having 1 to 10 carbon atoms or an alkenyl group having 2 to 10 carbon atoms, and in the alkyl and alkenyl groups, at least one $-CH_2-$ is optionally substituted with -O-, and in these groups, at least one hydrogen atom is optionally substituted with a fluorine atom;

$X^{12}$ is -C≡N or -C≡C-C≡N;

the ring $D^1$ is 1,4-cyclohexylene, 1,4-phenylene, tetrahydropyran-2,5-diyl, 1,3-dioxane-2,5-diyl, pyrimidine-2,5-diyl, or 1,4-phenylene in which at least one hydrogen atom is substituted with a fluorine atom;

$Z^{17}$ is a single bond, -COO-, -OCO-, $-CH_2O-$, $-OCH_2-$, $-CF_2O-$, $-OCF_2-$, $-CH_2CH_2-$, or -C≡C-;

$L^{13}$ and $L^{14}$ are independently a hydrogen or fluorine atom; and

i is 1, 2, 3, or 4.

**12.** The liquid crystal composition according to any one of claims 8 to 11 containing at least one compound selected from the group consisting of compounds represented by Formulae (11) to (19):

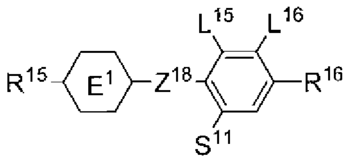
(11)

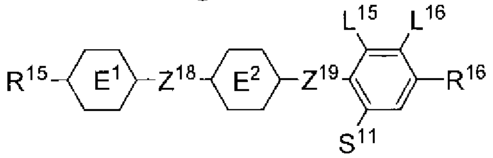
(12)

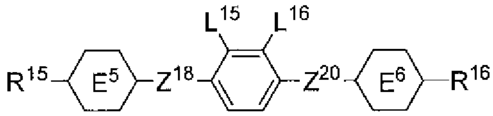
(13)

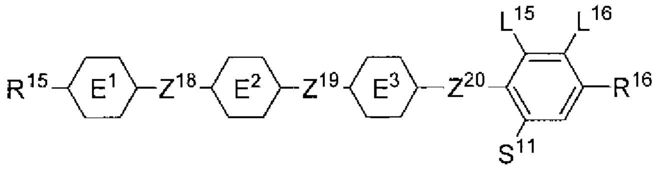
(14)

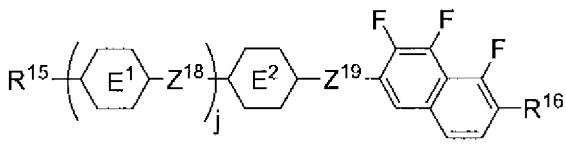
(15)

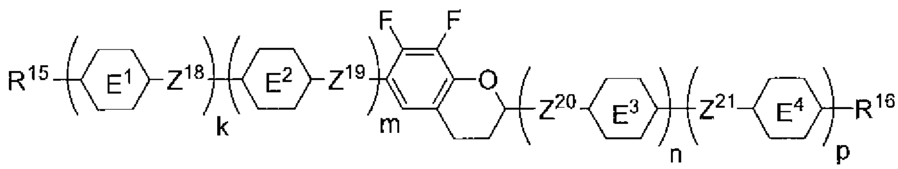
(16)

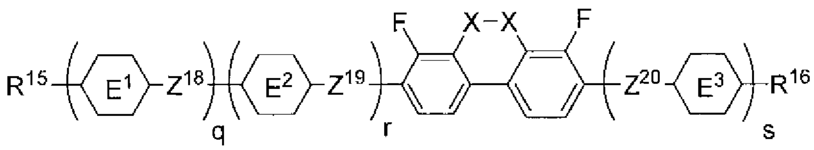
(17)

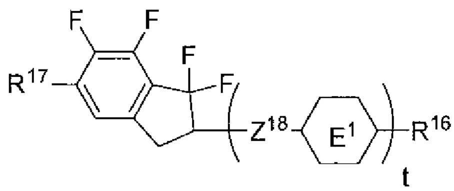
(18)

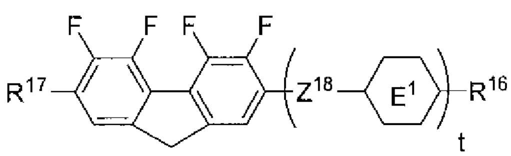
(19)

in Formulae (11) to (19),

$R^{15}$, $R^{16}$, and $R^{17}$ are independently an alkyl group having 1 to 10 carbon atoms or an alkenyl group having 2 to 10 carbon atoms, and in the alkyl and alkenyl groups, at least one $-CH_2-$ is optionally substituted with -O-, and in these groups, at least one hydrogen atom is optionally substituted with a fluorine atom and $R^{17}$ may be a hydrogen or fluorine atom;
the ring $E^1$, the ring $E^2$, the ring $E^3$, and the ring $E^4$ are independently 1,4-cyclohexylene, 1,4-cyclohexenylene, 1,4-phenylene, tetrahydropyran-2,5-diyl, decahydronaphthalene-2,6-diyl, or 1,4-phenylene in which at least one hydrogen atom is substituted with a fluorine atom;
the ring $E^5$ and the ring $E^6$ are independently 1,4-cyclohexylene, 1,4-cyclohexenylene, 1,4-phenylene, tetrahydropyran-2,5-diyl, or decahydronaphthalene-2,6-diyl;
$Z^{18}$, $Z^{19}$, $Z^{20}$, and $Z^{21}$ are independently a single bond, -COO-, -OCO-, $-CH_2O-$, $-OCH_2-$, $-CF_2O-$, $-OCF_2-$, $-CH_2CH_2-$, $-CF_2OCH_2CH_2-$, or $-OCF_2CH_2CH_2-$;
$L^{15}$ and $L^{16}$ are independently a fluorine or chlorine atom;
$S^{11}$ is a hydrogen atom or a methyl group;
X is -CHF- or $-CF_2-$;
j, k, m, n, p, q, r, and s are independently 0 or 1, a sum of k, m, n, and p is 1 or 2, and a sum of q, r, and s is 0, 1, 2, or 3, t is 1, 2, or 3.

**13.** The liquid crystal composition according to any one of claims 8 to 12 containing at least one polymerizable compound represented by Formula (20) other than the compound represented by Formula (1):

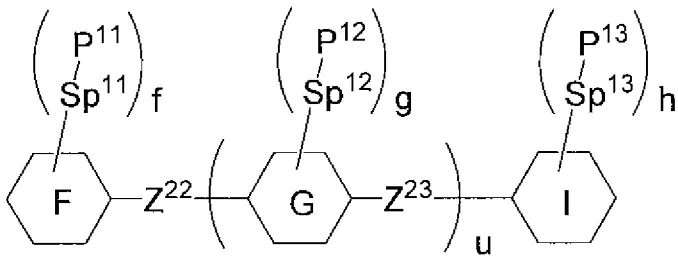

(20)

in Formula (20),

the ring F and the ring I are independently cyclohexyl, cyclohexenyl, phenyl, 1-naphthyl, 2-naphthyl, tetrahydropyran-2-yl, 1,3-dioxan-2-yl, pyrimidin-2-yl, or pyridin-2-yl, and in these rings, at least one hydrogen atom is optionally substituted with a halogen atom, an alkyl group having 1 to 12 carbon atoms, an alkoxy group having 1 to 12 carbon atoms, or an alkyl group having 1 to 12 carbon atoms in which at least one hydrogen atom is substituted with a halogen atom;
the ring G is 1,4-cyclohexylene, 1,4-cyclohexenylene, 1,4-phenylene, naphthalene-1,2-diyl, naphthalene-1,3-diyl, naphthalene-1,4-diyl, naphthalene-1,5-diyl, naphthalene-1,6-diyl, naphthalene- 1,7-diyl, naphthalene-1,8-diyl, naphthalene-2,3-diyl, naphthalene-2,6-diyl, naphthalene-2,7-diyl, phenanthrene-2,7-diyl, tetrahydropyran-2,5-diyl, 1,3-dioxane-2,5-diyl, pyrimidine-2,5-diyl, or pyridine-2,5-diyl, and in these rings, at least one hydrogen atom is optionally substituted with a halogen atom, an alkyl group having 1 to 12 carbon atoms, an alkoxy group having 1 to 12 carbon atoms, or an alkyl group having 1 to 12 carbon atoms in which at least one hydrogen atom is substituted with a halogen atom;
$Z^{22}$ and $Z^{23}$ are independently a single bond or an alkylene having 1 to 10 carbon atoms, and in the alkylene group, at least one $-CH_2-$ is optionally substituted with -O-, -CO-, -COO-, or -OCO-, and at least one $-CH_2CH_2-$ is optionally substituted with -CH=CH-, $-C(CH_3)=CH-$, $-CH=C(CH_3)-$, or $-C(CH_3)=C(CH_3)-$, and in these groups, at least one hydrogen atom is optionally substituted with a fluorine or chlorine atom;
$P^{11}$, $P^{12}$, and $P^{13}$ are independently a polymerizable group;
$Sp^{11}$, $Sp^{12}$, and $Sp^{13}$ are independently a single bond or an alkylene having 1 to 10 carbon atoms, and in the alkylene group, at least one $-CH_2-$ is optionally substituted with -O-, -COO-, -OCO-, or -OCOO-, and at least one $-CH_2CH_2-$ is optionally substituted with -CH=CH- or -C=C-, and in these groups, at least one hydrogen atom is optionally substituted with a fluorine or chlorine atom;
u is 0, 1, or 2; and
f, g, and h are independently 0, 1, 2, 3, or 4, and a sum of f, g, and h is 1 or more.

**14.** The liquid crystal composition according to claim 13, wherein, in Formula (20),

$P^{11}$, $P^{12}$, and $P^{13}$ are independently a group selected from the group consisting of polymerizable groups represented by Formula (P-1) to Formula (P-5):

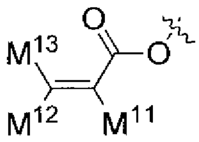
(P-1)

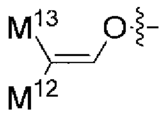
(P-2)

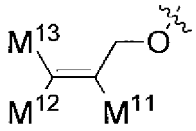
(P-3)

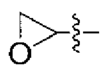
(P-4)

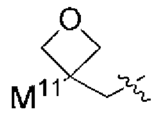
(P-5)

in Formula (P-1) to Formula (P-5),
$M^{11}$, $M^{12}$, and $M^{13}$ are independently a hydrogen atom, a fluorine atom, an alkyl group having 1 to 5 carbon atoms, or an alkyl group having 1 to 5 carbon atoms in which at least one hydrogen atom is substituted with a halogen atom.

**15.** The liquid crystal composition according to claim 13 or 14, wherein the polymerizable compound represented by Formula (20) is at least one compound selected from the group consisting of polymerizable compounds represented by Formula (20-1) to Formula (20-7):

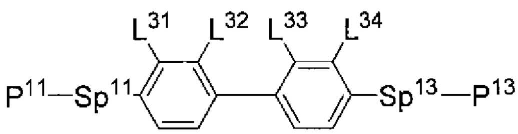
(20-1)

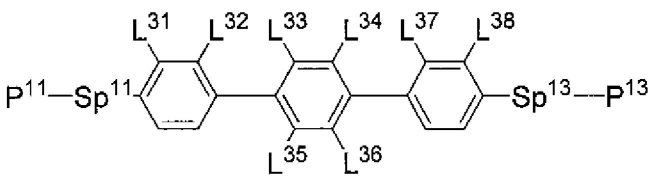
(20-2)

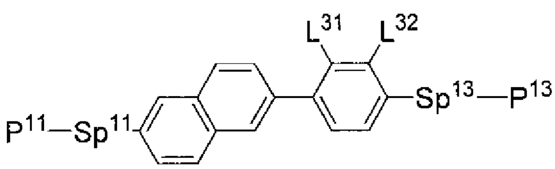
(20-3)

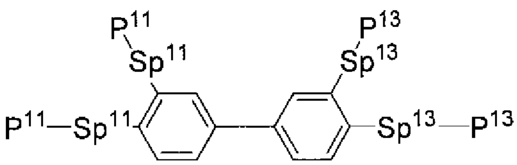
(20-4)

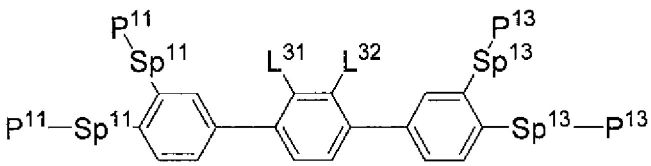
(20-5)

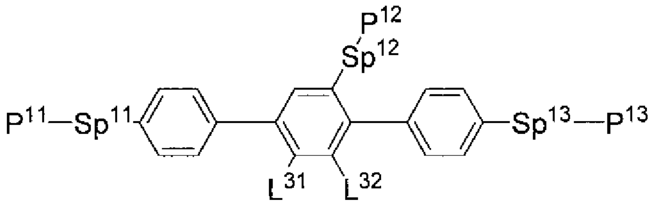

(20-6)

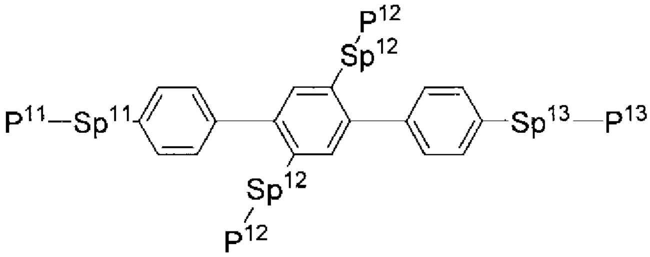

(20-7)

in Formula (20-1) to Formula (20-7),
$L^{31}$, $L^{32}$, $L^{33}$, $L^{34}$, $L^{35}$, $L^{36}$, $L^{37}$, and $L^{38}$ are independently a hydrogen atom, a fluorine atom or a methyl group; $Sp^{11}$, $Sp^{12}$, and $Sp^{13}$ are independently a single bond or an alkylene having 1 to 10 carbon atoms, and in the alkylene group, at least one $-CH_2-$ is optionally substituted with -O-, -COO-, -OCO-, or -OCOO-, and at least one $-CH_2CH_2-$ is optionally substituted with -CH=CH- or -C=C-, and in these groups, at least one hydrogen atom is optionally substituted with a fluorine or chlorine atom,
$P^{11}$, $P^{12}$, and $P^{13}$ are independently a group selected from the group consisting of polymerizable groups represented by Formula (P-1) to Formula (P-3),

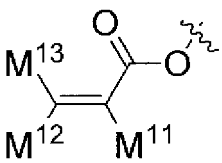

(P-1)

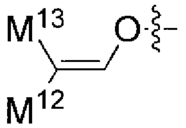

(P-2)

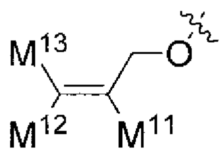

(P-3)

in Formula (P-1) to Formula (P-3),
$M^{11}$, $M^{12}$, and $M^{13}$ are independently a hydrogen atom, a fluorine atom, an alkyl group having 1 to 5 carbon atoms, or an alkyl group having 1 to 5 carbon atoms in which at least one hydrogen atom is substituted with a halogen atom.

**16.** The liquid crystal composition according to any one of claims 8 to 15, containing at least one selected from the group consisting of a polymerizable compound different from compounds represented by Formula (1) and Formula (20), a polymerization initiator, a polymerization inhibitor, an optically active compound, an antioxidant, a UV absorber, a light stabilizer, a heat stabilizer, a dye, and an antifoaming agent:

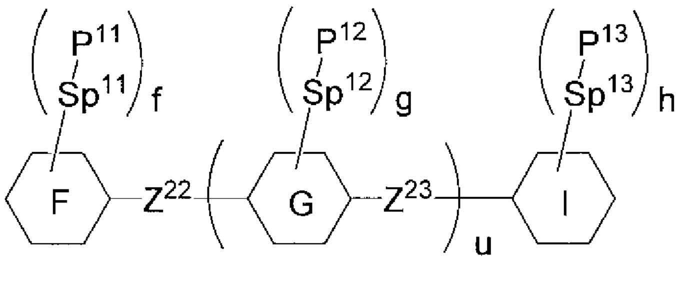

(20)

in Formula (20),

the ring F and the ring I are independently cyclohexyl, cyclohexenyl, phenyl, 1-naphthyl, 2-naphthyl, tetrahydropyran-2-yl, 1,3-dioxan-2-yl, pyrimidin-2-yl, or pyridin-2-yl, and in these rings, at least one hydrogen atom is optionally substituted with a halogen atom, an alkyl group having 1 to 12 carbon atoms, an alkoxy group having 1 to 12 carbon atoms, or an alkyl group having 1 to 12 carbon atoms in which at least one hydrogen atom is substituted with a halogen atom;

the ring G is 1,4-cyclohexylene, 1,4-cyclohexenylene, 1,4-phenylene, naphthalene-1,2-diyl, naphthalene-1,3-diyl, naphthalene-1,4-diyl, naphthalene-1,5-diyl, naphthalene-1,6-diyl, naphthalene- 1,7-diyl, naphthalene-1,8-diyl, naphthalene-2,3-diyl, naphthalene-2,6-diyl, naphthalene-2,7-diyl, phenanthrene-2,7-diyl, tetrahydropyran-2,5-diyl, 1,3-dioxane-2,5-diyl, pyrimidine-2,5-diyl, or pyridine-2,5-diyl, and in these rings, at least one hydrogen atom is optionally substituted with a halogen atom, an alkyl group having 1 to 12 carbon atoms, an alkoxy group having 1 to 12 carbon atoms, or an alkyl group having 1 to 12 carbon atoms in which at least one hydrogen atom is substituted with a halogen atom.

$Z^{22}$ and $Z^{23}$ are independently a single bond or an alkylene having 1 to 10 carbon atoms, and in the alkylene group, at least one $-CH_2-$ is optionally substituted with -O-, -CO-, -COO-, or -OCO-, and at least one $-CH_2CH_2-$ is optionally substituted with -CH=CH-, $-C(CH_3)=CH-$, $-CH=C(CH_3)-$, or $-C(CH_3)=C(CH_3)-$, and in these groups, at least one hydrogen atom is optionally substituted with a fluorine or chlorine atom;

$P^{11}$, $P^{12}$, and $P^{13}$ are independently a polymerizable group;

$Sp^{11}$, $Sp^{12}$, and $Sp^{13}$ are independently a single bond or an alkylene having 1 to 10 carbon atoms, and in the alkylene group, at least one $-CH_2-$ is optionally substituted with -O-, -COO-, -OCO-, or -OCOO-, and at least one $-CH_2CH_2-$ is optionally substituted with -CH=CH- or -C=C-, and in these groups, at least one hydrogen atom is optionally substituted with a fluorine or chlorine atom;

u is 0, 1, or 2; and

f, g, and h are independently 0, 1, 2, 3, or 4, and a sum of f, g, and h is 1 or more.

**17.** A liquid crystal display element, being **characterized by** comprising at least one selected from the group consisting of products obtained by polymerizing at least some of the liquid crystal composition according to any one of claims 8 to 16 and the liquid crystal composition according to any one of claims 8 to 16.

## Patentansprüche

**1.** Verbindung, die durch die Formel (1) dargestellt ist:

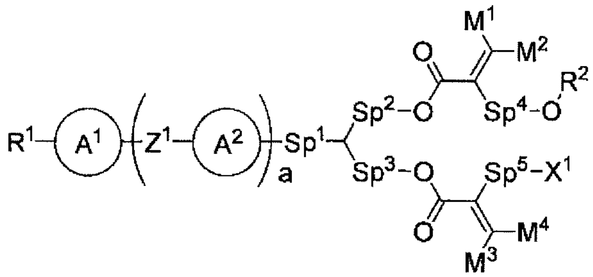

(1)

die Verbindung, **dadurch gekennzeichnet ist, dass** in Formel (1),

$R^1$ ein Wasserstoffatom oder eine Alkylgruppe aus 1 bis 15 Kohlenstoffatomen ist, und in der Alkylgruppe wenigstens ein $-CH_2-$ optional durch -O- oder -S-ersetzt ist, wenigstens ein $-(CH_2)_2-$ optional durch -CH=CH- oder -C≡C- ersetzt ist, und in diesen Gruppen wenigstens ein Wasserstoffatom optional durch ein Fluor oder Chloratom ersetzt ist;

der Ring $A^1$ und der Ring $A^2$ unabhängig voneinander 1,2-Cyclopropylen, 1,3-Cyclobutylen, 1,3-Cyclopentylen, 1,4-Cyclohexylen, 1,4-Cycloheptylen, 1,4-Cyclohexenylen, 1,4-Phenylen, Naphthalin-2,6-diyl, Decahydronaphthalin-2,6-diyl, 1,2,3,4-TetrahydroNaphtalin-2,6-diyl, Tetrahydropyran-2,5-diyl, 1,3-Dioxan-2,5-diyl, Pyrimidin-2,5-diyl oder Pyridin-2,5-diyl sind, und in diesen Ringen wenigstens ein Wasserstoffatom optional durch ein Fluoratom, ein Chloratom, ein Alkylgruppe aus 1 bis 10 Kohlenstoffatomen, eine Alkenylgruppe aus 2 bis 10 Kohlenstoffatomen, eine Alkoxygruppe aus 1 bis 9 Kohlenstoffatomen oder eine Alkenyloxygruppe aus 2 bis 9 Kohlenstoffatomen ersetzt ist, und in diesen Gruppen optional wenigstens ein Wasserstoffatom durch ein Fluor- oder Chloratom ersetzt ist;

a 0, 1, 2, 3 oder 4 ist;

$Z^1$ eine Einfachbindung oder eine Alkylengruppe aus 1 bis 6 Kohlenstoffatomen ist, und in der Alkylengruppe wenigstens ein $-CH_2-$ optional durch -O-, -CO-, -COO-, -OCO- oder -OCOO-ersetzt ist, wenigstens ein $-(CH_2)_2-$ optional durch -CH=CH- oder -C=C- ersetzt ist, und in diesen Gruppen wenigstens ein Wasserstoffatom optional durch ein Fluor- oder Chloratom ersetzt ist;

$Sp^1$, $Sp^2$, $Sp^3$, $Sp^4$ und $Sp^5$ unabhängig voneinander eine Einfachbindung oder ein Alkylen aus 1 bis 10 Kohlenstoffatomen ist, und in der Alkylengruppe wenigstens ein $-CH_2-$ optional durch -O-, -CO-, -COO-, -OCO- oder -OCOO-ersetzt ist, wenigstens ein $-(CH_2)_2-$ optional durch -CH=CH- oder -C≡C- ersetzt ist, und in diesen Gruppen wird wenigstens ein Wasserstoffatom optional durch ein Fluor- oder Chloratom ersetzt ist;

$M^1$, $M^2$, $M^3$ und $M^4$ unabhängig voneinander ein Wasserstoffatom, ein Fluoratom, ein Chloratom, eine Alkylgruppe aus 1 bis 5 Kohlenstoffatomen oder eine Alkylgruppe aus 1 bis 5 Kohlenstoffatomen sind, bei denen wenigstens ein Wasserstoffatom durch ein Fluor- oder Chloratom ersetzt ist;

$R^2$ eine Alkylgruppe aus 1 bis 5 Kohlenstoffatomen ist, und in der Alkylgruppe wenigstens ein $-CH_2-$ optional durch -O- oder -S- ersetzt ist, wenigstens ein $-(CH_2)_2-$ optional durch -CH=CH- oder -C≡C- ersetzt ist, und in diesen Gruppen wenigstens ein Wasserstoffatom optional durch ein Fluor- oder Chloratom ersetzt ist;

$X^1$ -OH, $-NH_2$,$-OR^3$,$-N(R^3)_2$,-COOH, -SH oder $-Si(R^3)_3$ ist;

in $-OR^3$, $-N(R^3)_2$und $-Si(R^3)_3$,

$R^3$ ein Wasserstoffatom oder eine Alkylgruppe aus 1 bis 10 Kohlenstoffatomen ist, und in der Alkylgruppe wenigstens ein $-CH_2-$ optional durch -O- ersetzt ist, wenigstens ein $-(CH_2)_2$ optional durch -CH=CH- ersetzt ist, und in diesen Gruppen wenigstens ein Wasserstoffatom optional durch ein Fluor- oder Chloratom ersetzt ist;

wenn a 1 ist, sowohl der Ring $A^1$ als auch der Ring $A^2$ 1,4-Cyclohexylen sind, $Z^1$ eine Einfachbindung ist, $Sp^2$, $Sp^3$, $Sp^4$ und $Sp^5$ $-CH_2-$ sind, $R^2$ eine Methylgruppe ist, und wenn $X^1$ -OH oder $-OCH_3$ ist, ist $Sp^1$ keine Einfachbindung;

wenn a 2 ist, der Ring auf der Seite von $R^1$ Naphthalin-2,6-diyl ist, zwei Ringe auf der Seite von $Sp^1$ beide 1,4-Cyclohexylen sind, $Z^1$ eine Einfachbindung ist, $Sp^2$, $Sp^3$, $Sp^4$ und $Sp^5$ $-CH_2-$ sind, $R^2$ eine Methylgruppe ist, und wenn $X^1$ $-OCH_3$ ist, $Sp^1$ keine Einfachbindung ist; und

wenn a 2 ist, der Ring auf der Seite von $R^1$ Naphthalin-2,6-diyl ist, der Mittelring 1,4-Phenylen ist, der Ring auf der Seite von $Sp^1$ 1,4-Cyclohexylen ist, $Z^1$ eine Einfachbindung ist, $Sp^2$, $Sp^3$, $Sp^4$ und $Sp^5$ $-CH_2-$ sind, $R^2$ eine Methylgruppe ist, und wenn $X^1$ $-OCH_3$ ist, $Sp^1$ keine Einfachbindung ist.

**2.** Verbindung gemäß Anspruch 1,
wobei in Formel (1), $Z^1$ eine Einfachbindung ist, $-(CH_2)_2-$, $-(CH_2)_4-$, -CH=CH-, -C≡C-, -COO-, -OCO-, $-CF_2O-$, $-OCF_2-$, $-CH_2O-$, $-OCH_2-$, oder -CF=CF-ist.

**3.** Verbindung gemäß 1 oder 2,
wobei, in Formel (1),
der Ring $A^1$ und der Ring $A^2$ unabhängig voneinander 1,4-Cyclohexylen, 1,4-Cyclohexenylen, 1,4-Phenylen, Naphthalin-2,6-diyl, Tetrahydropyran-2,5-diyl, 1,3-Dioxan-2,5-diyl, Pyrimidin-2,5-diyl, oder Pyridin-2,5-diyl sind, und in diesen Ringen wenigstens ein Wasserstoffatom optional durch ein Fluoratom, ein Chloratom, eine Alkylgruppe aus 1 bis 10 Kohlenstoffatomen, eine Alkenylgruppe aus 2 bis 10 Kohlenstoffatomen, eine Alkoxygruppe mit 1 bis 9 Kohlenstoffatomen oder eine Alkenyloxygruppe aus 2 bis 9 Kohlenstoffatomen ersetzt ist, und in diesen Gruppen wenigstens ein Wasserstoffatom optional mit einem Fluor- oder Chloratom ersetzt ist.

**4.** Verbindung gemäß irgendeinem der Ansprüche 1 bis 3, dargestellt durch irgendeine von Formel (1-1) bis Formel (1-4):

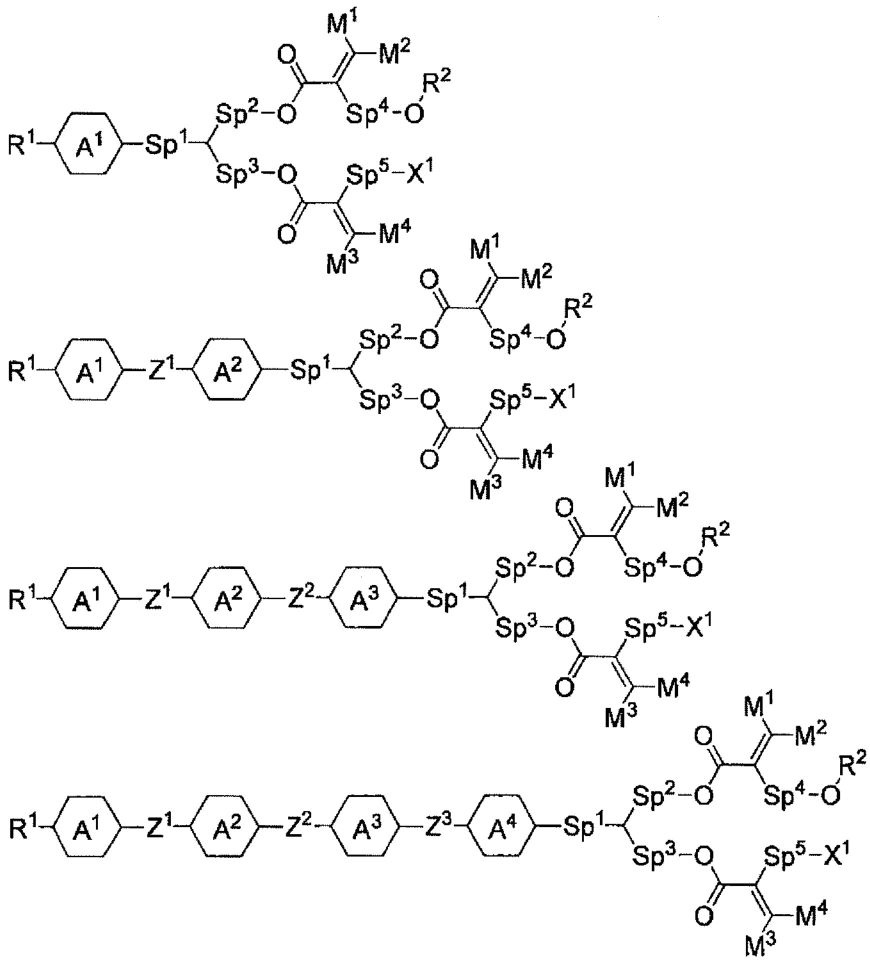

(1-1)

(1-2)

(1-3)

(1-4)

in Formel (1-1) bis Formel (1-4),

$R^1$ eine Alkylgruppe aus 1 bis 15 Kohlenstoffatomen, eine Alkenylgruppe aus 2 bis 15 Kohlenstoffatomen, eine Alkoxygruppe aus 1 bis 14 Kohlenstoffatomen oder eine Alkenyloxygruppe aus 2 bis 14 Kohlenstoffatomen ist, und in diesen Gruppen optional wenigstens ein Wasserstoffatom durch ein Fluoratom ersetzt ist;

der Ring $A^1$, der Ring $A^2$, der Ring $A^3$ und der Ring $A^4$ unabhängig voneinander 1,4-Cyclohexylen, 1,4-Cyclohexenylen, 1,4-Phenylen, Naphthalin-2,6-diyl, Tetrahydropyran-2,5-diyl, oder 1,3-Dioxan-2,5-diyl sind, und in diesen Ringen, wenigstens ein Wasserstoffatom optional durch ein Fluoratom, eine Alkylgruppe aus 1 bis 10 Kohlenstoffatomen, eine Alkenylgruppe aus 2 bis 10 Kohlenstoffatomen, eine Alkoxygruppe aus 1 bis 9 Kohlenstoffatomen oder eine Alkenyloxygruppe aus 2 bis 9 Kohlenstoffatomen ersetzt ist, und in diesen Gruppen optional wenigstens ein Wasserstoffatom durch ein Fluoratom ersetzt;

$Z^1$, $Z^2$ und $Z^3$ unabhängig voneinander eine Einfachbindung, $-(CH_2)_2-$, -CH=CH-, -C≡C-, COO-, -OCO-, $-CF_2O-$, $-OCF_2-$, $-CH_2O-$, $-OCH_2-$, oder -CF=CF- sind;

$Sp^1$, $Sp^2$, $Sp^3$, $Sp^4$ und $Sp^5$ unabhängig voneinander eine Einfachbindung oder eine Alkylengruppe aus 1 bis 7 Kohlenstoffatomen sind, und in der Alkylengruppe optional wenigstens ein $-CH_2-$ durch -O-, -COO- oder -OCO- ersetzt ist, wenigstens ein $-(CH_2)_2-$optional mit -CH=CH- ersetzt ist, und in diesen Gruppen wenigstens ein Wasserstoffatom optional durch ein Fluoratom ersetzt ist;

$M^1$, $M^2$, $M^3$ und $M^4$ unabhängig voneinander ein Wasserstoffatom, ein Fluoratom, eine Alkylgruppe aus 1 bis 5 Kohlenstoffatomen oder eine Alkylgruppe aus 1 bis 5 Kohlenstoffatomen sind, bei denen wenigstens ein Wasserstoffatom durch ein Fluoratom ersetzt ist;

$R^2$ eine Alkylgruppe aus 1 bis 5 Kohlenstoffatomen ist, und in der Alkylgruppe optional wenigstens ein $-CH_2-$ durch -O- ersetzt ist;

$X^1$ -OH, $-NH_2$ oder -SH ist;

in der Formel (1-2),

sowohl der Ring $A^1$ als auch der Ring $A^2$ 1,4-Cyclohexylen ist, $Z^1$ eine Einfachbindung ist, $Sp^2$, $Sp^3$, $Sp^4$ und $Sp^5$ $-CH_2-$ sind, $R^2$ eine Methylgruppe ist, und wenn $X^1$ -OH ist, $Sp^1$ keine Einfachbindung ist.

**5.** Verbindung gemäß irgendeinem der Ansprüche 1 bis 4, dargestellt durch irgendeine von Formel (1-5) bis Formel (1-7):

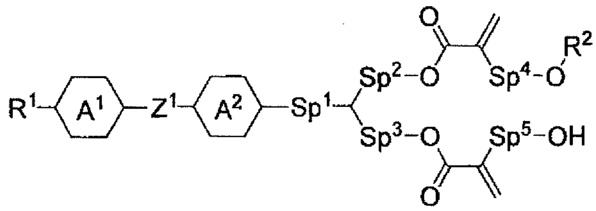

(1-5)

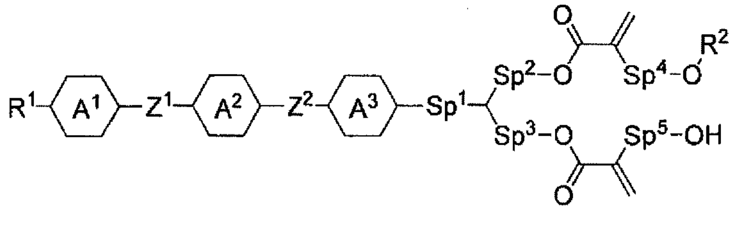

(1-6)

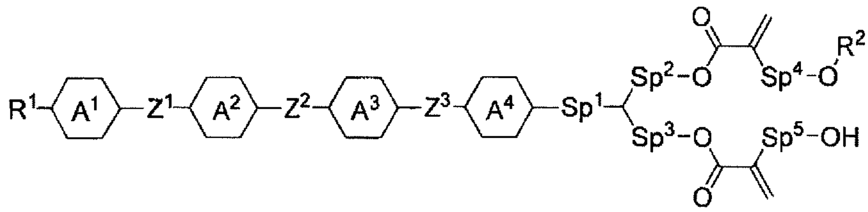

(1-7)

in Formel (1-5) bis Formel (1-7),

$R^1$ eine Alkylgruppe aus 1 bis 10 Kohlenstoffatomen, eine Alkenylgruppe aus 2 bis 10 Kohlenstoffatomen oder eine Alkoxygruppe aus 1 bis 9 Kohlenstoffatomen ist;
der Ring $A^1$, der Ring $A^2$, der Ring $A^3$ und der Ring $A^4$ unabhängig voneinander 1,4-Cyclohexylen, 1,4-Cyclohexenylen, 1,4-Phenylen, Naphthalin-2,6-diyl, Tetrahydropyran-2,5-diyl, oder 1,3-Dioxan-2,5-diyl sind, und in diesen Ringen wenigstens ein Wasserstoffatom optional durch ein Fluoratom, eine Alkylgruppe aus 1 bis 5 Kohlenstoffatomen, eine Alkenylgruppe aus 2 bis 5 Kohlenstoffatomen oder eine Alkoxygruppe aus 1 bis 4 Kohlenstoffatomen ersetzt ist;
$Z^1$, $Z^2$ und $Z^3$ unabhängig voneinander eine Einfachbindung, $-(CH_2)_2-$, -CH=CH-, -C≡C-,$-CH_2O-$ oder $-OCH_2-$ sind;
$Sp^1$, $Sp^2$, $Sp^3$, $Sp^4$ und $Sp^5$ unabhängig voneinander eine Einfachbindung oder eine Alkylengruppe aus 1 bis 5 Kohlenstoffatomen sind, und in der Alkylengruppe optional wenigstens ein $-CH_2-$ durch -O- ersetzt ist, und wenigstens ein $-(CH_2)_2-$ optional durch -CH=CH- ersetzt ist;
$R^2$ eine Alkylgruppe mit 1 bis 3 Kohlenstoffatomen ist;
in Formel (1-5),
sowohl der Ring $A^1$, als auch der Ring $A^2$ 1,4-Cyclohexylen ist, $Z^1$ ist eine Einfachbindung ist, $Sp^2$, $Sp^3$, $Sp^4$ und $Sp^5$ $-CH_2-$ sind, und wenn $R^2$ eine Methylgruppe ist, $Sp^1$ keine Einfachbindung ist.

**6.** Verbindung gemäß irgendeinem der Ansprüche 1 bis 5 dargestellt durch eine von Formel (1-8) bis Formel (1-16):

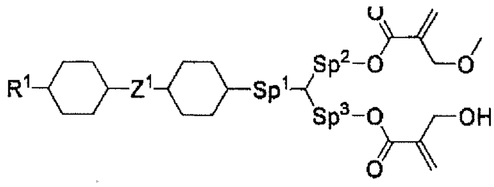

(1-8)

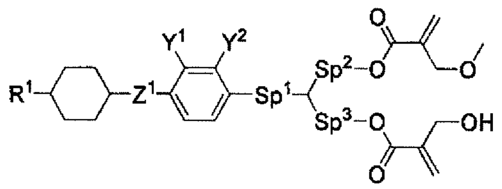
(1-9)

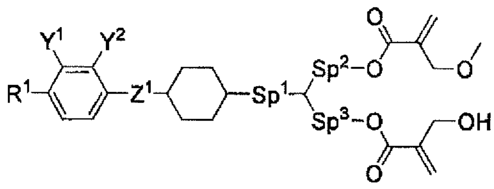
(1-10)

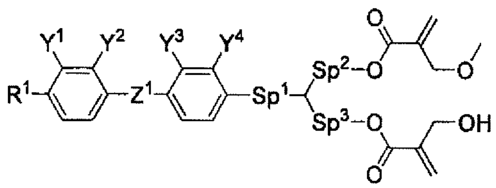
(1-11)

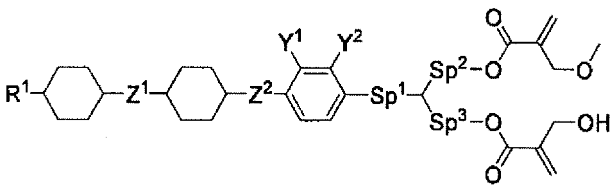
(1-12)

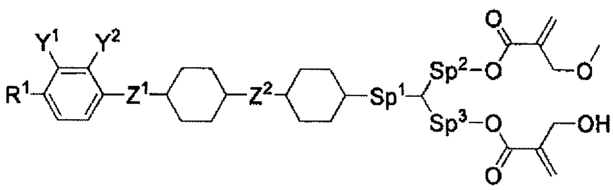
(1-13)

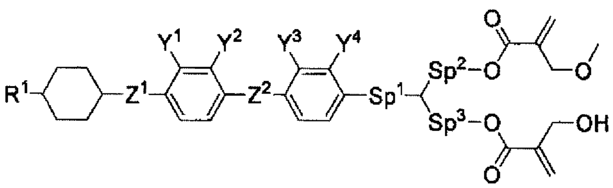
(1-14)

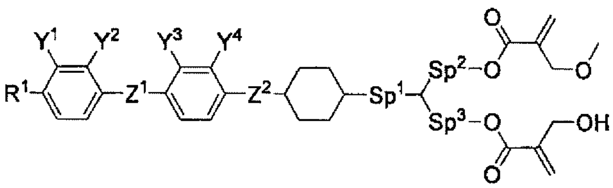
(1-15)

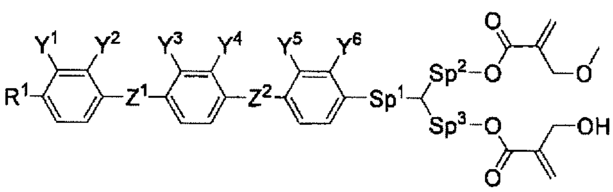
(1-16)

in der Formel (1-8) bis Formel (1-16),
$R^1$ eine Alkylgruppe aus 1 bis 10 Kohlenstoffatomen, eine Alkenylgruppe aus 2 bis 10 Kohlenstoffatomen oder eine Alkoxygruppe aus 1 bis 9 Kohlenstoffatomen ist;
$Z^1$ und $Z^2$ unabhängig voneinander eine Einfachbindung oder $-(CH_2)_2-$ sind;
$Sp^1$, $Sp^2$ und $Sp^3$ unabhängig voneinander eine Einfachbindung oder eine Alkylengruppe aus 1 bis 5 Kohlenstoffatomen sind, und in der Alkylengruppe wenigstens ein $-CH_2-$ optional durch -O- ersetzt ist;
$Y^1$, $Y^2$, $Y^3$, $Y^4$, $Y^5$, und $Y^6$ unabhängig voneinander ein Wasserstoffatom, ein Fluoratom, eine Alkylgruppe aus 1 bis 5 Kohlenstoffatomen, eine Alkenylgruppe aus 2 bis 5 Kohlenstoffatomen oder eine Alkoxygruppe aus 1 bis 4 Kohlenstoffatomen ist;
in der Formel (1-8),
$Z^1$ eine Einfachbindung ist, und wenn $Sp^2$ und $Sp^3$ $-CH_2-$ sind, $Sp^1$ keine Einfachbindung ist.

**7.** Verbindung gemäß irgendeinem der Ansprüche 1 bis 6, dargestellt durch eine von Formel (1-17) bis Formel (1-23):

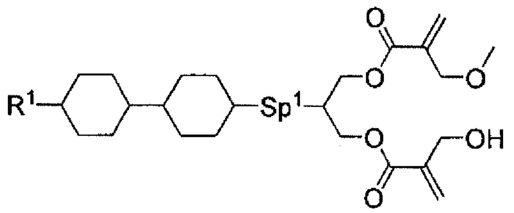
(1-17)

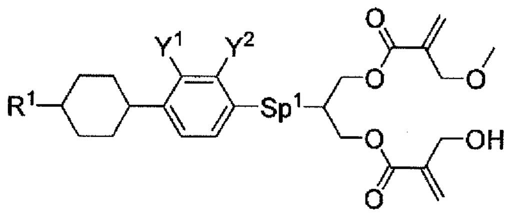
(1-18)

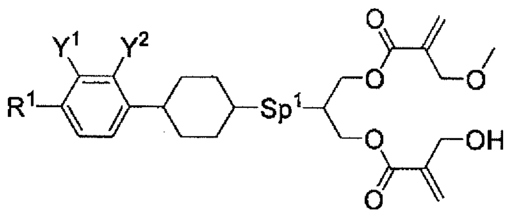
(1-19)

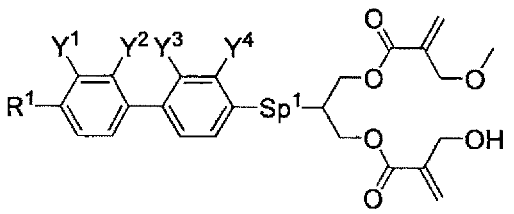
(1-20)

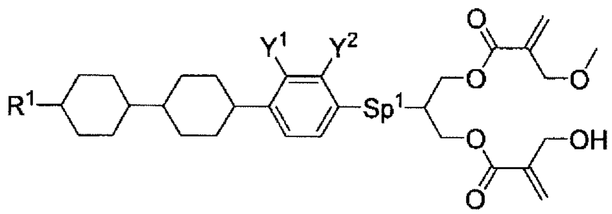
(1-21)

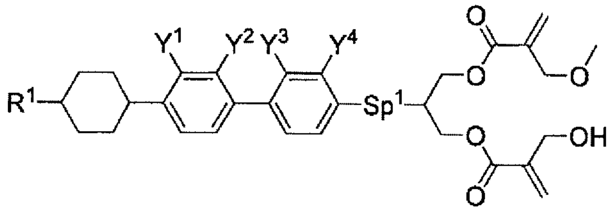

(1-22)

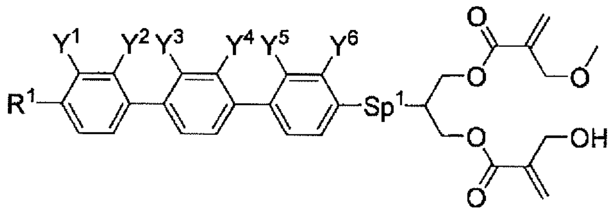

(1-23)

in Formel (1-17) bis Formel (1-23),

$R^1$ eine Alkylgruppe aus 1 bis 10 Kohlenstoffatomen ist;
$Y^1$, $Y^2$, $Y^3$, $Y^4$, $Y^5$ und $Y^6$ unabhängig voneinander ein Wasserstoffatom, ein Fluoratom, eine Methylgruppe oder eine Ethylgruppe sind,
$Sp^1$ ist eine Einfachbindung oder eine Alkylengruppe aus 1 bis 5 Kohlenstoffatomen ist, und in der Alkylengruppe optional wenigstens ein $-CH_2-$ durch -O- ersetzt ist;
in der Formel (1-17),
$Sp^1$ keine Einfachbindung ist.

8. Flüssigkristallzusammensetzung, **dadurch gekennzeichnet, dass** wenigstens eine der Verbindungen gemäß irgendeinem der Ansprüche 1 bis 7 enthält.

9. Flüssigkristallzusammensetzung gemäß Anspruch 8, die wenigstens eine Verbindung enthält, ausgewählt aus der Gruppe, bestehend aus Verbindungen, dargestellt durch Formel (2) bis (4):

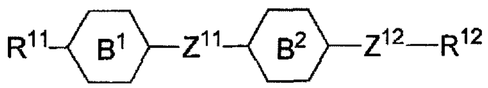

(2)

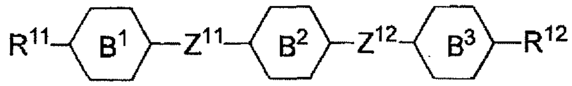

(3)

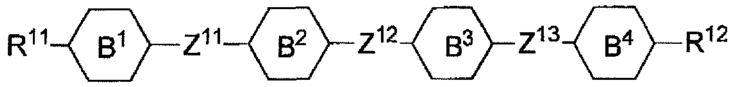

(4)

in Formel (2) bis (4),

$R^{11}$ und $R^{12}$ unabhängig voneinander eine Alkylgruppe mit 1 bis 10 Kohlenstoffatomen oder eine Alkenylgruppe aus 2 bis 10 Kohlenstoffatomen sind, und in den Alkyl- und Alkenylgruppen wenigstens ein $-CH_2-$ optional durch -O- ersetzt ist, und in diesen Gruppen wenigstens ein Wasserstoffatom optional durch ein Fluoratom ersetzt ist;
der Ring $B^1$, der Ring $B^2$, der Ring $B^3$ und der Ring $B^4$ unabhängig voneinander 1,4-Cyclohexylen, 1,4-Phenylen, 2-Fluor-1,4-Phenylen, 2,5-Difluor-1,4-Phenylen oder Pyrimidin-2,5-diyl sind; und
$Z^{11}$, $Z^{12}$ und $Z^{13}$ unabhängig voneinander eine Einfachbindung, -COO-, $-CH_2CH_2-$, - CH=CH-, oder -C≡C- sind.

10. Flüssigkristallzusammensetzung gemäß Anspruch 8 oder 9, die wenigstens eine Verbindung enthält, ausgewählt aus der Gruppe bestehend aus Verbindungen, dargestellt durch Formel (5) bis (7):

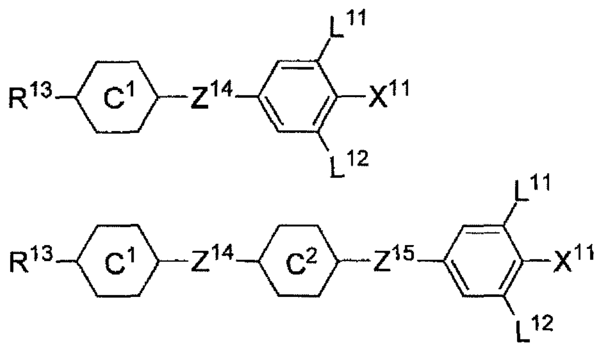

(5)

(6)

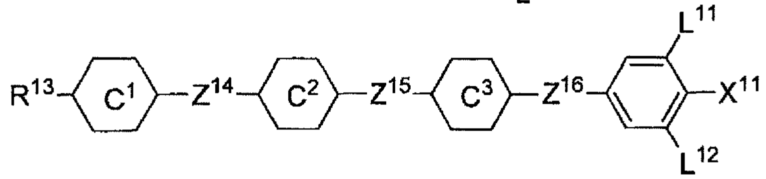

(7)

in Formel (5) bis (7),

$R^{13}$ eine Alkylgruppe aus 1 bis 10 Kohlenstoffatomen oder einer Alkenylgruppe aus 2 bis 10 Kohlenstoffatomen ist, und in den Alkyl- und Alkenylgruppen wenigsten ein $-CH_2$-optional durch -O- ersetzt ist, und in diesen Gruppen wenigstens ein Wasserstoffatom optional durch ein Fluoratom ersetzt ist;
$X^{11}$ ein Fluoratom, ein Chloratom, $-OCF_3$, $-OCHF_2$, $-CF_3$, $-CHF_2$, $-CH_2F$, $-OCF_2CHF_2$, oder $-OCF_2CHFCF_3$ ist;
der Ring $C^1$, der Ring $C^2$ und der Ring $C^3$ unabhängig voneinander 1,4-Cyclohexylen, 1,4-Phenylen, Tetrahydropyran-2,5-diyl, 1,3-Dioxan-2,5-diyl, Pyrimidin-2,5-diyl oder 1,4-phenylen sind, bei dem wenigstens ein Wasserstoffatom durch ein Fluoratom ersetzt ist;
$Z^{14}$, $Z^{15}$ und $Z^{16}$ unabhängig voneinander eine Einfachbindung, -COO-, -OCO-, $-CH_2O-$, - $OCH_2-$, $-CF_2O-$, $-OCF_2-$, $-CH_2CH_2-$, -CH=CH-, -C≡C-oder $-(CH_2)_4-$ sind; und
$L^{11}$ und $L^{12}$ unabhängig voneinander ein Wasserstoff- oder Fluoratom sind.

**11.** Flüssigkristallzusammensetzung gemäß irgendeinem der Ansprüche 8 bis 10, die wenigstens eine Verbindung enthält, ausgewählt aus der Gruppe bestehend aus Verbindungen, dargestellt durch Formel (8):

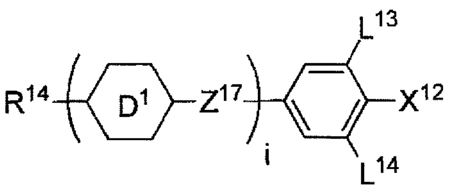

(8)

in der Formel (8),

$R^{14}$ eine Alkylgruppe aus 1 bis 10 Kohlenstoffatomen oder einer Alkenylgruppe aus 2 bis 10 Kohlenstoffatomen ist, und in den Alkyl- und Alkenylgruppen wenigstens eine $-CH_2$-optional durch -O- ersetzt ist, und in diesen Gruppen wenigstens ein Wasserstoffatom optional durch ein Fluoratom ersetzt ist;
$X^{12}$ -C≡N oder -C≡C-C≡N ist;
der Ring $D^1$ 1,4-Cyclohexylen, 1,4-Phenylen, Tetrahydropyran-2,5-diyl, 1,3-Dioxan-2,5-diyl, Pyrimid-2,5-diyl oder 1,4-Phenylen ist, bei dem wenigstens ein Wasserstoffatom durch ein Fluoratom ersetzt ist
$Z^{17}$ eine Einfachbindung, -COO-, -OCO-, $-CH_2O-$, $-OCH_2-$, $-CF_2O-$, $-OCF_2-$, $-CH_2CH_2-$, oder -C=C-;
$L^{13}$ und $L^{14}$ unabhängig voneinander ein Wasserstoff- oder Fluoratom ist; und
i 1, 2, 3 oder 4 ist.

**12.** Flüssigkristallzusammensetzung gemäß irgendeinem der Ansprüche 8 bis 11, die wenigstens eine Verbindung enthält, ausgewählt aus der Gruppe bestehend aus Verbindungen, dargestellt durch Formel (11) bis (19):

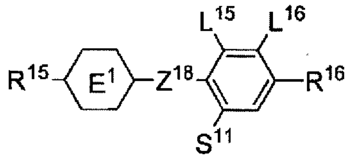

(11)

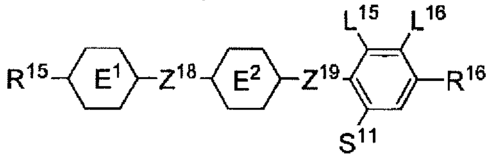

(12)

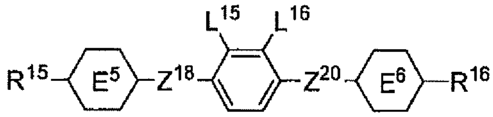

(13)

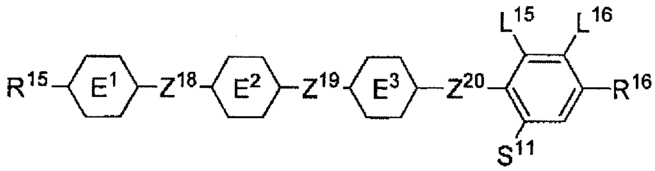

(14)

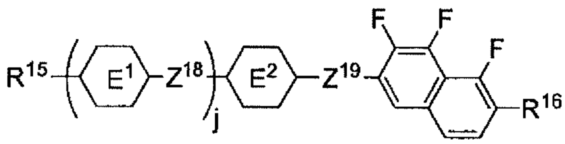

(15)

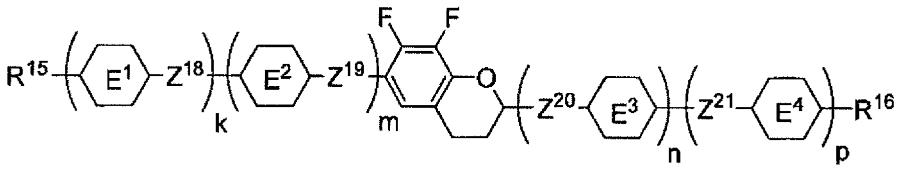

(16)

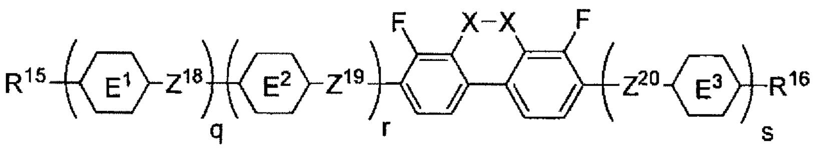

(17)

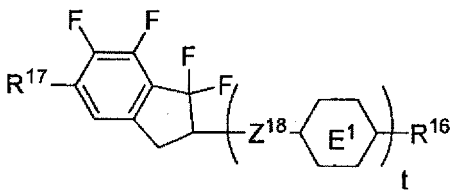

(18)

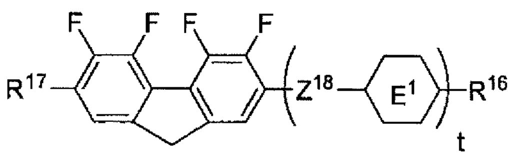

(19)

in Formel (11) bis (19),

$R^{15}$, $R^{16}$ und $R^{17}$ unabhängig voneinander eine Alkylgruppe aus 1 bis 10 Kohlenstoffatomen oder eine Alkenylgruppe aus 2 bis 10 Kohlenstoffatomen sind, und in den Alkyl- und Alkenylgruppen wenigstens ein $-CH_2-$ optional durch -O- ersetzt ist, und in diesen Gruppen wenigstens ein Wasserstoffatom optional durch ein Fluoratom ersetzt ist und $R^{17}$ ein Wasserstoff- oder Fluoratom sein kann ;
der Ring $E^1$, der Ring $E^2$, der Ring $E^3$, und der Ring $E^4$ unabhängig voneinander 1,4-Cyclohexylen, 1,4-Cyclohexenylen, 1,4-Phenylen, Tetrahydropyran-2,5-diyl, Decahydronaphthalin-2,6-diyl oder 1,4-Phenylen, bei dem wenigstens ein Wasserstoffatom durch ein Fluoratom ersetzt ist;
der Ring $E^5$ und der Ring $E^6$ unabhängig voneinander 1,4-Cyclohexylen, 1,4-Cyclohexenylen, 1,4-Phenylen, Tetrahydropyran-2,5-diyl oder Decahydronaphthalin-2,6-diyl sind;
$Z^{18}$, $Z^{19}$, $Z^{20}$ und $Z^{21}$ unabhängig voneinander eine Einfachbindung, -COO-, -OCO-, - $CH_2O$-, $-OCH_2-$, $-CF_2O-$, $-OCF_2-$, $-CH_2CH_2-$, $-CF_2OCH_2CH_2-$, oder $-OCF_2CH_2CH_2-$ sind;
$L^{15}$ und $L^{16}$ unabhängig voneinander ein Fluor- oder Chloratom sind;
$S^{11}$ ein Wasserstoffatom oder eine Methylgruppe ist;
X -CHF- oder $-CF_2-$ ist;
j, k, m, n, p, q, r und s unabhängig 0 oder 1 sind, eine Summe von k, m, n und p 1 oder 2 ist, und eine Summe von q, r und s 0, 1, 2 oder 3 ist,
t 1, 2 oder 3 ist.

**13.** Flüssigkristallzusammensetzung gemäß irgendeinem der Ansprüche 8 bis 12, die wenigstens eine polymerisierbare Verbindung enthält, dargestellt durch Formel (20), anders als die Verbindung, die durch Formel (1) dargestellt ist:

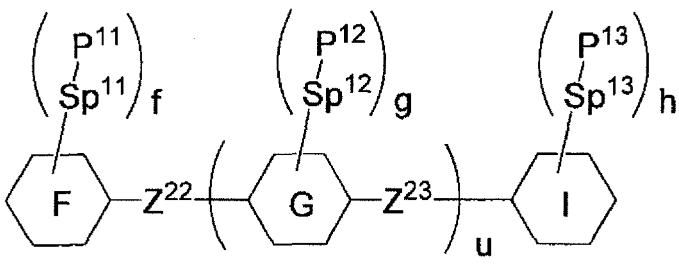

(20)

in Formel (20),

der Ring F und der Ring I unabhängig Cyclohexyl, Cyclohexenyl, Phenyl, 1-Naphthyl, 2-Naphthyl, Tetrahydropyran-2-yl, 1,3-Dioxan-2-yl, Pyrimidin-2-yl oder Pyridin-2-yl sind, und in diesen Ringen wenigstens ein Wasserstoffatom durch ein Halogenatom, eine Alkylgruppe aus 1 bis 12 Kohlenstoffatomen, eine Alkoxygruppe aus 1 bis 12 Kohlenstoffatomen oder eine Alkylgruppe aus 1 bis 12 Kohlenstoffatomen ersetzt ist, bei denen wenigstens ein Wasserstoffatom durch ein Halogenatom ersetzt ist;
der Ring G 1,4-Cyclohexylen, 1,4-Cyclohexenylen, 1,4-Phenylen, Naphthalin-1,2-diyl, Naphthalin-1,3-diyl, Naphthalin-1,4-diyl, Naphthalin-1,5-diyl, Naphthalin-1,6-diyl, Naphthalin-1,7-diyl, Naphtalin-1,8-diyl, Naphtalin-2,3-diyl, Naphthalin-2,6-diyl, Naphthalin-2,7-diyl, Phenanthren-2,7-diyl, Tetrahydropyran-2,5-diyl, 1,3-Dioxan-2,5-diyl, Pyrimidin-2,5-diyl oder Pyridin-2 ist, und in diesen Ringen optional wenigstens ein Wasserstoffatom durch ein Halogenatom, eine Alkylgruppe aus 1 bis 12 Kohlenstoffatomen, eine Alkoxygruppe aus 1 bis 12 Kohlenstoffatomen oder eine Alkylgruppe aus 1 bis 12 Kohlenstoffatomen ersetzt ist, wobei wenigstens ein Wasserstoffatom durch ein Halogenatom ersetzt ist;
$Z^{22}$ und $Z^{23}$ unabhängig voneinander eine Einfachbindung oder ein Alkylen aus 1 bis 10 Kohlenstoffatomen sind und in der Alkylengruppe, wenigstens ein $-CH_2-$ optional durch -O-, -CO-, -COO- oder -OCO- ersetzt ist, und wenigstens ein $-CH_2CH_2-$ optional durch -CH=CH-, $-C(CH_3)=CH-$, $-CH=C(CH_3)-$ oder $-C(CH_3)=C(CH_3)-$ ersetzt ist, und in diesen Gruppen wenigstens ein Wasserstoffatom optional durch ein Fluor- oder Chloratom ersetzt ist;
$P^{11}$, $P^{12}$ und $P^{13}$ unabhängig voneinander eine polymerisierbare Gruppe sind;
$Sp^{11}$, $Sp^{12}$ und $Sp^{13}$ unabhängig voneinander eine Einfachbindung oder ein Alkylen aus 1 bis 10 Kohlenstoffatomen sind, und in der Alkylengruppe optional wenigstens ein $-CH_2-$durch -O-, -COO-, -OCO- oder -OCOO- ersetzt ist, und wenigstens ein $-CH_2CH_2-$ optional durch -CH=CH- oder $-C\equiv C-$ ersetzt ist, und in diesen Gruppen optional wenigstens ein Wasserstoffatom durch ein Fluor- oder Chloratom ersetzt ist;
u 0, 1 oder 2 ist; und
f, g und h unabhängig voneinander 0, 1, 2, 3 oder 4 sind, und eine Summe von f, g und h 1 oder mehr ist.

**14.** Flüssigkristallzusammensetzung gemäß Anspruch 13, wobei, in Formel (20), $P^{11}$, $P^{12}$ und $P^{13}$ unabhängig voneinander eine Gruppe sind, ausgewählt aus der Gruppe, bestehend aus polymerisierbaren Gruppen, die durch Formel (P-1) bis Formel (P-5) dargestellt sind:

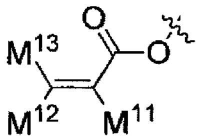

(P-1)

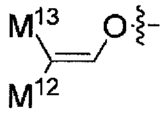

(P-2)

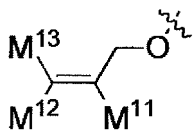

(P-3)

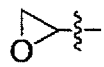

(P-4)

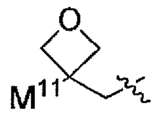

(P-5)

in Formel (P-1) bis Formel (P-5), $M^{11}$, $M^{12}$ und $M^{13}$ unabhängig voneinander ein Wasserstoffatom, ein Fluoratom, eine Alkylgruppe aus 1 bis 5 Kohlenstoffatomen oder eine Alkylgruppe aus 1 bis 5 Kohlenstoffatomen sind, bei denen wenigstens ein Wasserstoffatom durch ein Halogenatom ersetzt ist.

**15.** Flüssigkristallzusammensetzung gemäß Anspruch 13 oder 14, wobei die polymerisierbare Verbindung, die durch Formel (20) dargestellt ist, wenigstens eine Verbindung ist, ausgewählt aus der Gruppe, bestehend aus polymerisierbaren Verbindungen, die durch Formel (20-1) bis Formel (20-7) dargestellt sind:

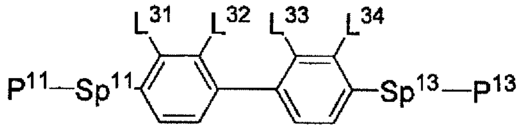

(20-1)

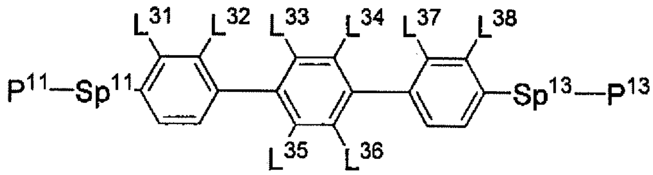

(20-2)

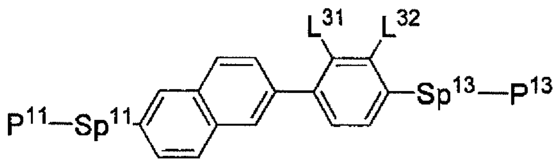

(20-3)

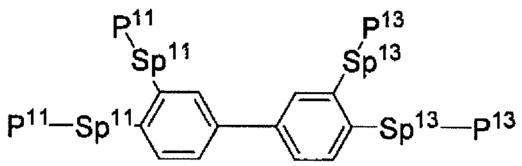

(20-4)

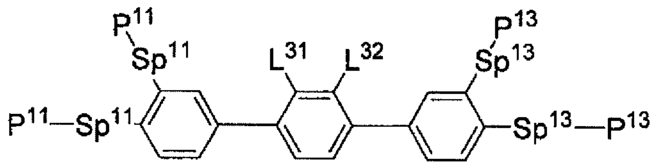

(20-5)

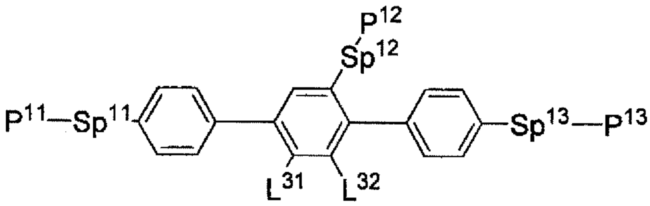

(20-6)

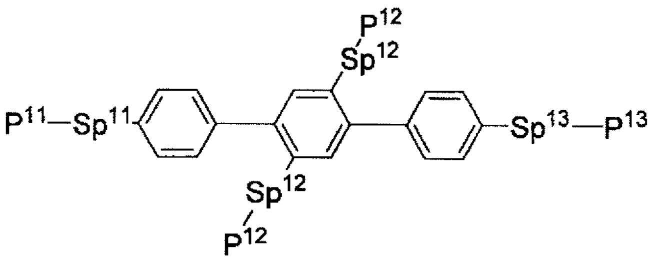

(20-7)

in der Formel (20-1) bis Formel (20-7),

$L^{31}$, $L^{32}$, $L^{33}$, $L^{34}$, $L^{35}$, $L^{36}$, $L^{37}$ und $L^{38}$ unabhängig voneinander ein Wasserstoffatom, ein Fluoratom oder eine Methylgruppe sind;
$Sp^{11}$, $Sp^{12}$ und $Sp^{13}$ unabhängig voneinander eine Einfachbindung oder ein Alkylen aus 1 bis 10 Kohlenstoffatomen sind, und in der Alkylengruppe wenigstens ein $-CH_2-$ optional durch -O-, -COO-, -OCO-oder -OCOO- ersetzt ist, und wenigstens ein $-CH_2CH_2-$ optional durch -CH=CH- oder -C=C- ersetzt ist, und in diesen Gruppen wenigstens ein Wasserstoffatom optional durch ein Fluor- oder Chloratom ersetzt ist,
$P^{11}$, $P^{12}$ und $P^{13}$ unabhängig voneinander eine Gruppe sind, ausgewählt aus der Gruppe, bestehend aus polymerisierbaren Gruppen, die durch Formel (P-1) bis Formel (P-3) dargestellt sind,

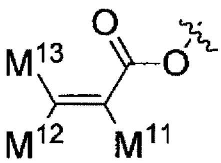

(P-1)

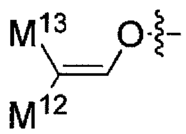

(P-2)

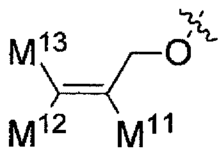

(P-3)

in Formel (P-1) bis Formel (P-3),
$M^{11}$, $M^{12}$ und $M^{13}$ unabhängig voneinander ein Wasserstoffatom, ein Fluoratom, eine Alkylgruppe aus 1 bis 5 Kohlenstoffatomen oder eine Alkylgruppe aus 1 bis 5 Kohlenstoffatomen sind, bei denen wenigstens ein Wasserstoffatom durch ein Halogenatom ersetzt ist.

**16.** Flüssigkristallzusammensetzung gemäß irgendeinem der Ansprüche 8 bis 15, die wenigstens eine Gruppe, ausgewählt aus der Gruppe, bestehend aus einer polymerisierbaren Verbindung, die sich von den Verbindungen unterscheidet, die durch Formel (1) und Formel (20) dargestellt sind, einen Polymerisationsinitiator, einen Polymerisationsinhibitor, einen optisch aktiven Wirkstoff, ein Antioxidans, einen UV-Absorber, einen Lichtstabilisator, eines Wärmestabilisator, einen Farbstoff und ein Antischaummittel enthält:

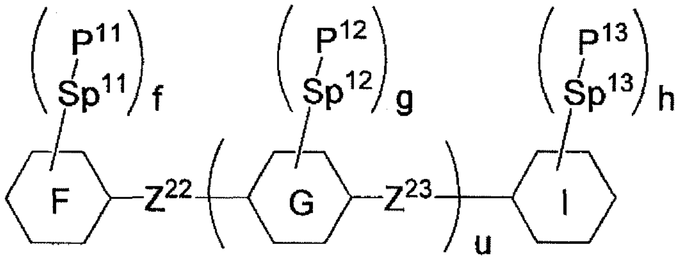

(20)

in Formel (20),

der Ring F und der Ring I unabhängig Cyclohexyl, Cyclohexenyl, Phenyl, 1-Naphthyl, 2-Naphthyl, Tetrahydropyran-2-yl, 1,3-Dioxan-2-yl, Pyrimidin-2-yl oder Pyridin-2-yl sind, und in diesen Ringen wenigstens ein Wasserstoffatom durch ein Halogenatom, eine Alkylgruppe aus 1 bis 12 Kohlenstoffatomen, eine Alkoxygruppe aus 1 bis 12 Kohlenstoffatomen oder eine Alkylgruppe aus 1 bis 12 Kohlenstoffatomen ersetzt ist, bei denen wenigstens ein Wasserstoffatom durch ein Halogenatom ersetzt ist;

der Ring G 1,4-Cyclohexylen, 1,4-Cyclohexenylen, 1,4-Phenylen, Naphthalin-1,2-diyl, Naphthalin-1,3-diyl, Naphthalin-1,4-diyl, Naphthalin-1,5-diyl, Naphthalin-1,6-diyl, Naphtaline-1,7-diyl, Naphtaline-1,8-diyl, Naphtaline-2,3-diyl, Naphthalin-2,6-diyl, Naphthalin-2,7-diyl, Phenanthren-2,7-diyl, Tetrahydropyran-2,5-diyl, 1,3-Dioxan-2,5-diyl, Pyrimidin-2,5-diyl oder Pyridin-2 ist, und in diesen Ringen optional wenigstens ein Wasserstoffatom durch ein Halogenatom, eine Alkylgruppe aus 1 bis 12 Kohlenstoffatomen, eine Alkoxygruppe aus 1 bis 12 Kohlenstoffatomen oder eine Alkylgruppe aus 1 bis 12 Kohlenstoffatomen ersetzt ist, wobei wenigstens ein Wasserstoffatom durch ein Halogenatom ersetzt ist.

$Z^{22}$ und $Z^{23}$ unabhängig voneinander eine Einfachbindung oder ein Alkylen aus 1 bis 10 Kohlenstoffatomen sind und in der Alkylengruppe, wenigstens ein $-CH_2-$ optional durch -O-, -CO-, -COO-oder -OCO- ersetzt ist, und wenigstens ein $-CH_2CH_2-$ optional durch -CH=CH-, $-C(CH_3)=CH-$, $-CH=C(CH_3)$-oder $-C(CH_3)=C(CH_3)-$ ersetzt ist, und in diesen Gruppen wenigstens ein Wasserstoffatom optional durch ein Fluor oder Chloratom ersetzt ist;

$P^{11}$, $P^{12}$ und $P^{13}$ unabhängig voneinander eine polymerisierbare Gruppe sind;

$Sp^{11}$, $Sp^{12}$ und $Sp^{13}$ unabhängig voneinander eine Einfachbindung oder ein Alkylen aus 1 bis 10 Kohlenstoffatomen sind, und in der Alkylengruppe optional wenigstens ein $-CH_2$-durch -O-, -COO-, -OCO- oder -OCOO- ersetzt ist, und wenigstens ein $-CH_2CH_2-$ optional durch -CH=CH- oder $-C\equiv C-$ ersetzt ist, und in diesen Gruppen optional wenigstens ein Wasserstoffatom durch ein Fluor- oder Chloratom ersetzt ist;

u 0, 1 oder 2 ist; und

f, g und h unabhängig voneinander 0, 1, 2, 3 oder 4 sind, und eine Summe von f, g und h 1 oder mehr ist.

17. Flüssigkristall-Anzeigeelement, **dadurch gekennzeichnet, dass** es wenigstens eines ausgewählt aus der Gruppe, bestehend aus Produkten, die durch Polymerisieren wenigstens etwas der Flüssigkristallzusammensetzung gemäß irgendeinem der Ansprüche 8 bis 16 erhalten werden und die Flüssigkristallzusammensetzung gemäß irgendeinem der Ansprüche 8 bis 16 umfasst.

## Revendications

1. Composé représenté par la formule (1) :

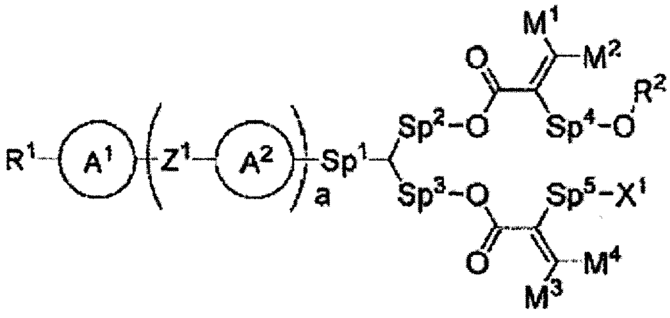

(1)

le composé étant **caractérisé par**, dans la formule (1), $R^1$ représente un atome d'hydrogène ou un groupe alkyle ayant 1 à 15 atomes de carbone, et dans le groupe alkyle, au moins un $-CH_2-$ est éventuellement substitué par -0- ou -S-, au moins un $-(CH_2)_2-$ est éventuellement substitué par -CH=CH- ou -C=C-, et dans ces groupes, au moins un atome d'hydrogène est éventuellement substitué par un atome de fluor ou de chlore ;
le cycle $A^1$ et le cycle $A^2$ représentent indépendamment un groupe 1,2-cyclopropylène, 1,3-cyclobutylène, 1,3-cyclopentylène, 1,4-cyclohexylène, 1,4-cycloheptylène, 1,4-cyclohexénylène, 1,4-phénylène, naphtalène-2,6-diyle, décahydronaphtalène-2,6-diyle, 1,2,3,4-tétrahydronaphtalène-2,6-diyle, tétrahydropyran-2,5-diyle, 1,3-dioxane-2,5-diyle, pyrimidine-2,5-diyle ou pyridine-2,5-diyle, et dans ces cycles, au moins un atome d'hydrogène est éventuellement substitué par un atome de fluor, un atome de chlore, un groupe alkyle ayant 1 à 10 atomes de carbone, un groupe alcényle ayant 2 à 10 atomes de carbone, un groupe alcoxy ayant 1 à 9 atomes de carbone ou un groupe alcényloxy ayant 2 à 9 atomes de carbone, et dans ces groupes, au moins un atome d'hydrogène est éventuellement substitué par un atome de fluor ou de chlore ;
a représente 0, 1, 2, 3 ou 4 ;
$Z^1$ représente une liaison simple ou un groupe alkylène ayant 1 à 6 atomes de carbone, et dans le groupe alkylène, au moins un $-CH_2-$ est éventuellement substitué par -O-, -CO-, -COO-, -OCO- ou -OCOO-, au moins un - $(CH_2)_2-$ est éventuellement substitué par -CH=CH- ou - C≡C-, et dans ces groupes, au moins un atome d'hydrogène est éventuellement substitué par un atome de fluor ou de chlore ;
$Sp^1$, $Sp^2$, $Sp^3$, $Sp^4$ et $Sp^5$ représentent indépendamment une liaison simple ou un groupe alkylène ayant 1 à 10 atomes de carbone, et dans le groupe alkylène, au moins un - $CH_2-$ est éventuellement substitué par -O-, -CO-, -COO-, -OCO- ou -OCOO-, au moins un $-(CH_2)_2-$ est éventuellement substitué par -CH=CH- ou -C=C-, et dans ces groupes, au moins un atome d'hydrogène est éventuellement substitué par un atome de fluor ou de chlore ;
$M^1$, $M^2$, $M^3$ et $M^4$ représentent indépendamment un atome d'hydrogène, un atome de fluor, un atome de chlore, un groupe alkyle ayant 1 à 5 atomes de carbone ou un groupe alkyle ayant 1 à 5 atomes de carbone dans lequel au moins un atome d'hydrogène est substitué par un atome de fluor ou de chlore ;
$R^2$ représente un groupe alkyle ayant 1 à 5 atomes de carbone, et dans le groupe alkyle, au moins un $-CH_2-$est éventuellement substitué par -O- ou -S-, au moins un $-(CH_2)_2-$ est éventuellement substitué par -CH=CH- ou -C≡C-, et dans ces groupes, au moins un atome d'hydrogène est éventuellement substitué par un atome de fluor ou de chlore ;
$X^1$ représente -OH, $-NH_2$, $-OR^3$, $-N(R^3)_2$, -COOH, -SH ou - Si $(R^3)_3$ ;
dans $-OR^3$, $-N(R^3)_2$ et $-Si(R^3)_3$, $R^3$ représente un atome d'hydrogène ou un groupe alkyle ayant 1 à 10 atomes de carbone, et dans le groupe alkyle, au moins un $-CH_2-$est éventuellement substitué par -O-, au moins un - $(CH_2)_2-$ est éventuellement substitué par -CH=CH-, et dans ces groupes, au moins un atome d'hydrogène est éventuellement substitué par un atome de fluor ou de chlore ;
lorsque a représente 1, le cycle $A^1$ et le cycle $A^2$ représentent tous deux un groupe 1,4-cyclohexylène, $Z^1$ représente une liaison simple, $Sp^2$, $Sp^3$, $Sp^4$ et $Sp^5$ représentent $-CH_2-$, $R^2$ représente un groupe méthyle, et lorsque $X^1$ représente -OH ou $-OCH_3$, $Sp^1$ ne représente pas une liaison simple ;
lorsque a représente 2, le cycle du côté de $R^1$ représente un groupe naphtalène-2,6-diyle, deux cycles du côté de $Sp^1$ représentent tous deux un groupe 1,4-cyclohexylène, $Z^1$ représente une liaison simple, $Sp^2$, $Sp^3$, $Sp^4$ et $Sp^5$ représentent $-CH_2-$, $R^2$ représente un groupe méthyle, et lorsque $X^1$ représente $-OCH_3$, $Sp^1$ ne représente pas une liaison simple.
lorsque a représente 2, le cycle du côté de $R^1$ représente un groupe naphtalène-2,6-diyle, le cycle central représente un groupe 1,4-phénylène, le cycle du côté de $Sp^1$ représente un groupe 1,4-cyclohexylène, $Z^1$ représente une liaison simple, $Sp^2$, $Sp^3$, $Sp^4$ et $Sp^5$ représentent $-CH_2-$, $R^2$ représente un groupe méthyle, et lorsque $X^1$ représente $-OCH_3$, $Sp^1$ ne représente pas une liaison simple.

**2.** Composé selon la revendication 1,
dans lequel, dans la formule (1), $Z^1$ représente une liaison simple, $-(CH_2)_2-$, $-(CH_2)_4-$, -CH=CH-, -C≡C-, -COO-, -OCO-, $-CF_2O-$, $-OCF_2-$, $-CH_2O-$ ou -CF=CF-.

**3.** Composé selon la revendication 1 ou 2,
dans lequel, dans la formule (1),
le cycle $A^1$ et le cycle $A^2$ représentent indépendamment un groupe 1,4-cyclohexylène, 1,4-cyclohexénylène, 1,4-phénylène, naphtalène-2,6-diyle, tétrahydropyran-2,5-diyle, 1,3-dioxane-2,5-diyle, pyrimidine-2,5-diyle ou pyridine-2,5-diyle, et dans ces cycles, au moins un atome d'hydrogène est éventuellement substitué par un atome de fluor, un atome de chlore, un groupe alkyle ayant 1 à 10 atomes de carbone, un groupe alcényle ayant 2 à 10 atomes de carbone, un groupe alcoxy ayant 1 à 9 atomes de carbone ou un groupe alcényloxy ayant 2 à 9 atomes de carbone, et dans ces groupes, au moins un atome d'hydrogène est éventuellement substitué par un atome de fluor ou de chlore.

4. Composé selon l'une quelconque des revendications 1 à 3 représenté par l'une quelconque de la formule (1-1) à la formule (1-4) :

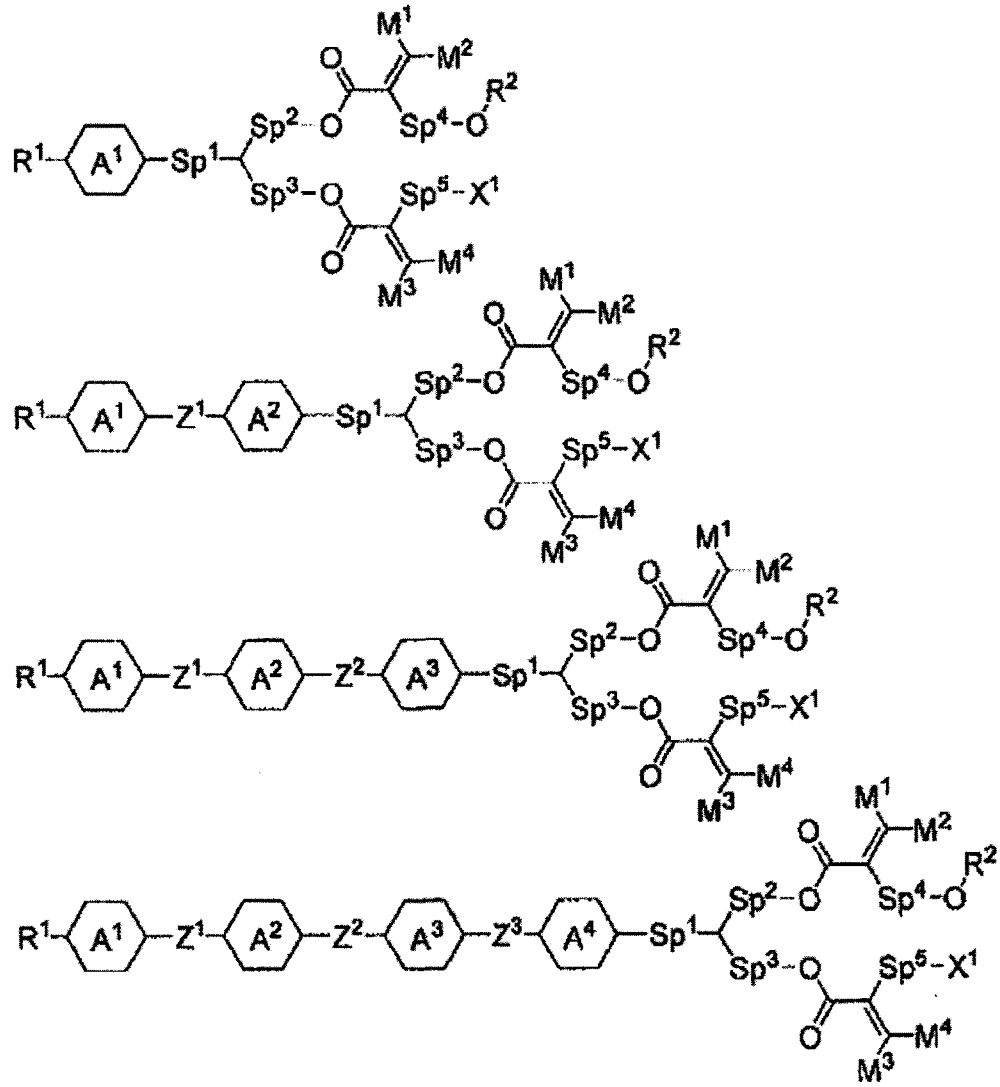

(1-1)

(1-2)

(1-3)

(1-4)

dans la formule (1-1) à la formule (1-4),

$R^1$ représente un groupe alkyle ayant 1 à 15 atomes de carbone, un groupe alcényle ayant 2 à 15 atomes de carbone, un groupe alcoxy ayant 1 à 14 atomes de carbone ou un groupe alcényloxy ayant 2 à 14 atomes de carbone, et dans ces groupes, au moins un atome d'hydrogène est éventuellement substitué par un atome de fluor ;

le cycle $A^1$, le cycle $A^2$, le cycle $A^3$ et le cycle $A^4$ représentent indépendamment un groupe 1,4-cyclohexylène, 1,4-cyclohexénylène, 1,4-phénylène, naphtalène-2,6-diyle, tétrahydropyran-2,5-diyle ou 1,3-dioxane-2,5-diyle, et dans ces cycles, au moins un atome d'hydrogène est éventuellement substitué par un atome de fluor, un groupe alkyle ayant 1 à 10 atomes de carbone, un groupe alcényle ayant 2 à 10 atomes de carbone, un groupe alcoxy ayant 1 à 9 atomes de carbone ou un groupe alcényloxy ayant 2 à 9 atomes de carbone, et dans ces groupes, au moins un atome d'hydrogène est éventuellement substitué par un atome de fluor ;

$Z^1$, $Z^2$ et $Z^3$ représentent indépendamment une liaison simple, $-(CH_2)_2-$, -CH=CH-, -C≡C-, -COO-, -OCO-, $-CF_2O-$, $-OCF_2-$, $-CH_2O-$, $-OCH_2-$ ou -CF=CF- ;

$Sp^1$, $Sp^2$, $Sp^3$, $Sp^4$ et $Sp^5$ représentent indépendamment une liaison simple ou un groupe alkylène ayant 1 à 7 atomes de carbone, et dans le groupe alkylène, au moins un - $CH_2$- est éventuellement substitué par -O-, -COO- ou - OCO-, au moins un $-(CH_2)_2-$ est éventuellement substitué par -CH=CH-, et dans ces groupes, au moins un atome d'hydrogène est éventuellement substitué par un atome de fluor ;

$M^1$, $M^2$, $M^3$ et $M^4$ représentent indépendamment un atome d'hydrogène, un atome de fluor, un groupe alkyle

ayant 1 à 5 atomes de carbone ou un groupe alkyle ayant 1 à 5 atomes de carbone dans lequel au moins un atome d'hydrogène est substitué par un atome de fluor ;

$R^2$ représente un groupe alkyle ayant 1 à 5 atomes de carbone, et dans le groupe alkyle, au moins un $-CH_2$-est éventuellement substitué par -O- ;

$X^1$ représente -OH, $-NH_2$ ou -SH ;

dans la formule (1-2),

le cycle $A^1$ et le cycle $A^2$ représentent tous deux un groupe 1,4-cyclohexylène, $Z^1$ représente une liaison simple, $Sp^2$, $Sp^3$, $Sp^4$ et $Sp^5$ représentent $-CH_2-$, $R^2$ représente un groupe méthyle et lorsque $X^1$ représente - OH, $Sp^1$ ne représente pas une liaison simple.

**5.** Composé selon l'une quelconque des revendications 1 à 4 représenté par l'une quelconque de la formule (1-5) à formule (1-7) :

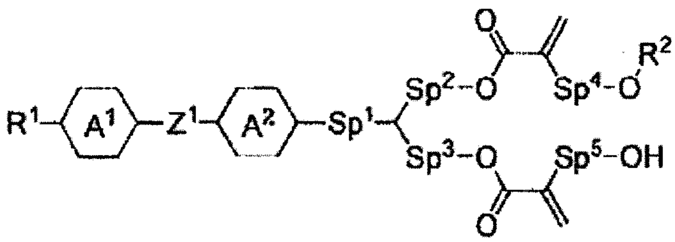

(1-5)

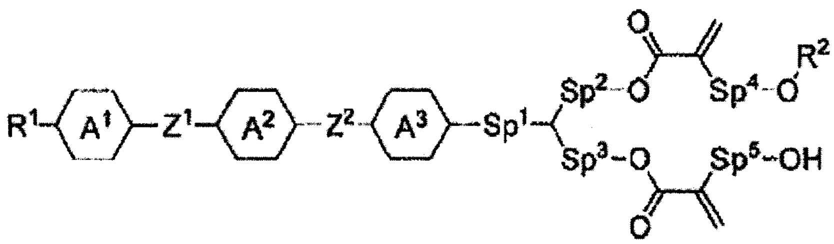

(1-6)

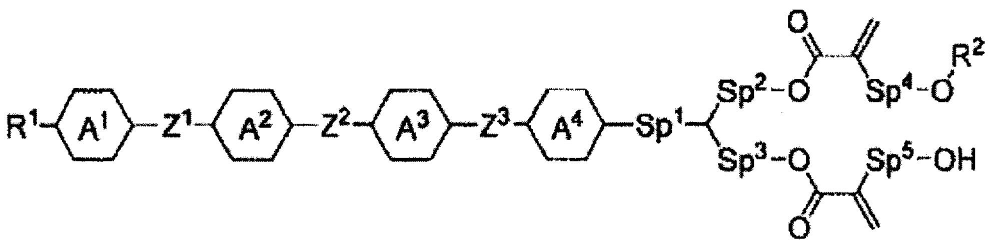

(1-7)

dans la formule (1-5) à la formule (1-7),

$R^1$ représente un groupe alkyle ayant 1 à 10 atomes de carbone, un groupe alcényle ayant 2 à 10 atomes de carbone ou un groupe alcoxy ayant 1 à 9 atomes de carbone ;

le cycle $A^1$, le cycle $A^2$, le cycle $A^3$ et le cycle $A^4$ représentent indépendamment un groupe 1,4-cyclohexylène, 1,4-cyclohexénylène, 1,4-phénylène, naphtalène-2,6-diyle, tétrahydropyran-2,5-diyle ou 1,3-dioxane-2,5-diyle, et dans ces cycles, au moins un atome d'hydrogène est éventuellement substitué par un atome de fluor, un groupe alkyle ayant 1 à 5 atomes de carbone, un groupe alcényle ayant 2 à 5 atomes de carbone ou un groupe alcoxy ayant 1 à 4 atomes de carbone ;

$Z^1$, $Z^2$ et $Z^3$ représentent indépendamment une liaison simple, $-(CH_2)_2-$, -CH=CH-, -C≡C-, $-CH_2O-$ ou $-OCH_2-$ ;

$Sp^1$, $Sp^2$, $Sp^3$, $Sp^4$ et $Sp^5$ représentent indépendamment une liaison simple ou un groupe alkylène ayant 1 à 5 atomes de carbone, et dans le groupe alkylène, au moins un - $CH_2$- est éventuellement substitué par -O-, et au moins un $-(CH_2)_2-$ est éventuellement substitué par -CH=CH- ; $R^2$ représente un groupe alkyle ayant 1 à 3 atomes de carbone ;

dans la formule (1-5),

le cycle $A^1$ et le cycle $A^2$ représentent tous deux un groupe 1,4-cyclohexylène, $Z^1$ représente une liaison simple, $Sp^2$, $Sp^3$, $Sp^4$ et $Sp^5$ représentent $-CH_2-$, et lorsque $R^2$ représente un groupe méthyle, $Sp^1$ ne représente pas une liaison simple.

6. Composé selon l'une quelconque des revendications 1 à 5 représenté par l'une quelconque de la formule (1-8) à formule (1-16) :

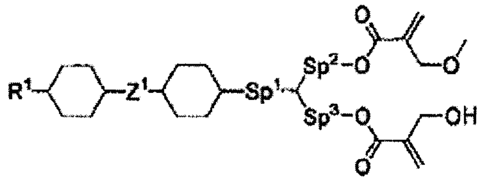

(1-8)

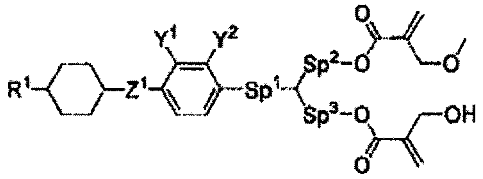

(1-9)

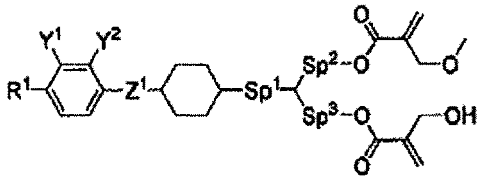

(1-10)

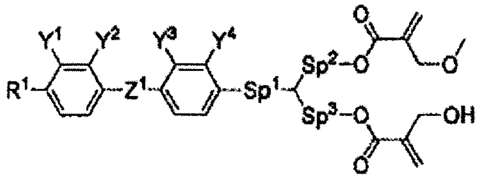

(1-11)

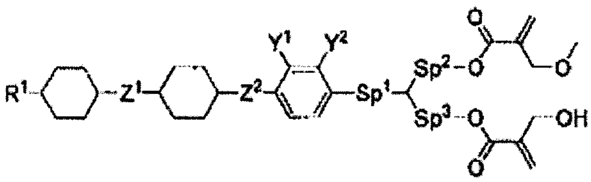

(1-12)

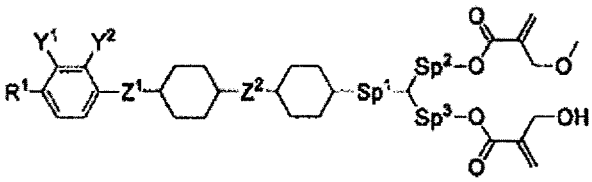

(1-13)

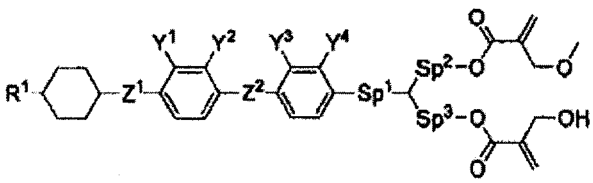

(1-14)

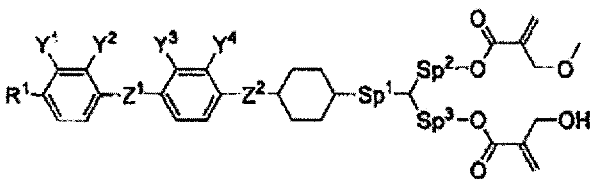

(1-15)

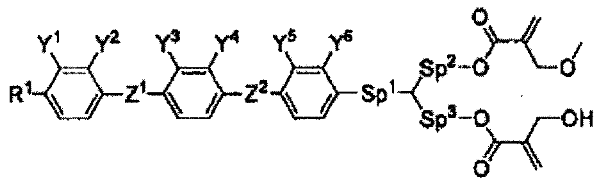

(1-16)

dans la formule (1-8) à la formule (1-16),

$R^1$ représente un groupe alkyle ayant 1 à 10 atomes de carbone, un groupe alcényle ayant 2 à 10 atomes de carbone ou un groupe alcoxy ayant 1 à 9 atomes de carbone ;
$Z^1$ et $Z^2$ représentent indépendamment une liaison simple ou - $(CH_2)_2$- ;
$Sp^1$, $Sp^2$ et $Sp^3$ représentent indépendamment une liaison simple ou un groupe alkylène ayant 1 à 5 atomes de carbone, et dans le groupe alkylène, au moins un -$CH_2$-est éventuellement substitué par -O- ;
$Y^1$, $Y^2$, $Y^3$, $Y^4$, $Y^5$ et $Y^6$ représentent indépendamment un atome d'hydrogène, un atome de fluor, un groupe alkyle ayant 1 à 5 atomes de carbone, un groupe alcényle ayant 2 à 5 atomes de carbone ou un groupe alcoxy ayant 1 à 4 atomes de carbone ;
dans la formule (1-8),
$Z^1$ représente une liaison simple, et lorsque $Sp^2$ et $Sp^3$ représentent -$CH_2$-, $Sp^1$ ne représente pas une liaison simple.

7. Composé selon l'une quelconque des revendications 1 à 6, représenté par l'une quelconque de la formule (1-17) à formule (1-23) :

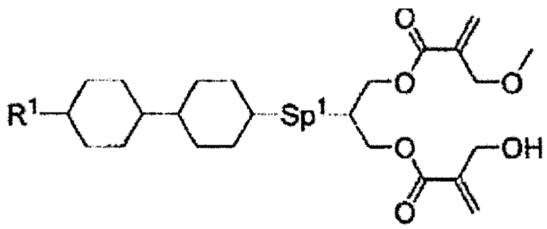

(1-17)

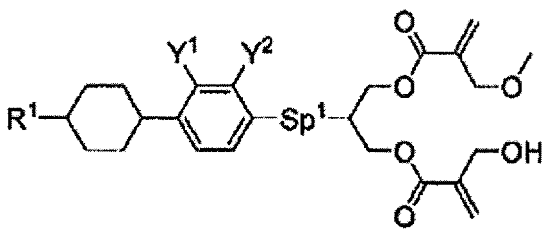

(1-18)

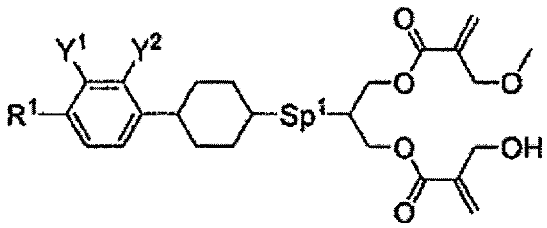

(1-19)

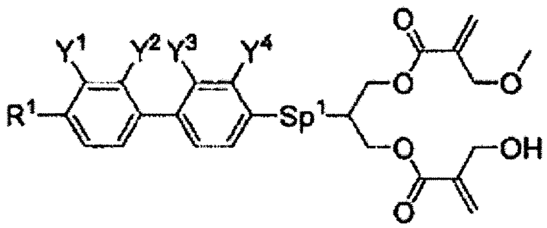

(1-20)

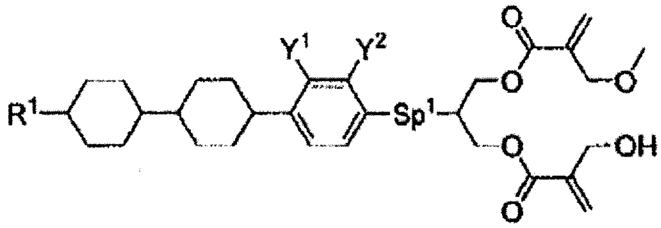

(1-21)

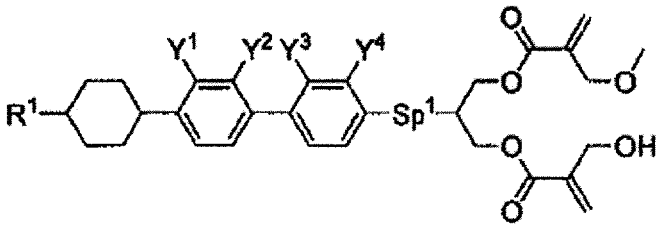

(1-22)

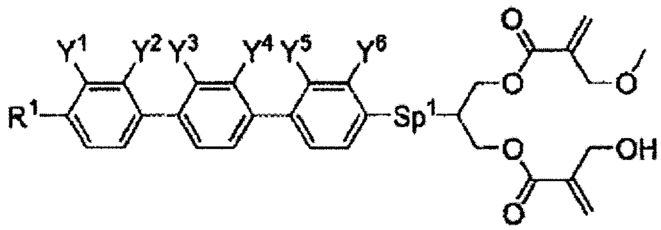

(1-23)

dans la formule (1-17) à la formule (1-23),

$R^1$ représente un groupe alkyle ayant 1 à 10 atomes de carbone ;
$Y^1$, $Y^2$, $Y^3$, $Y^4$, $Y^5$ et $Y^6$ représentent indépendamment un atome d'hydrogène, un atome de fluor, un groupe méthyle ou un groupe éthyle,
$Sp^1$ représente une liaison simple ou un groupe alkylène ayant 1 à 5 atomes de carbone, et dans le groupe alkylène, au moins un $-CH_2-$ est éventuellement substitué par -O- ;
dans la formule (1-17),
$Sp^1$ ne représente pas une liaison simple.

**8.** Composition de cristaux liquides, qui est **caractérisée en ce qu'**elle contient au moins l'un des composés selon l'une quelconque des revendications 1 à 7.

**9.** Composition de cristaux liquides selon la revendication 8, contenant au moins un composé sélectionné dans le groupe constitué par les composés représentés par les formules (2) à (4) :

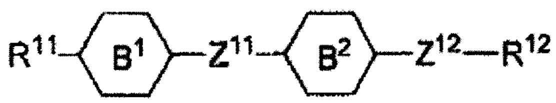

(2)

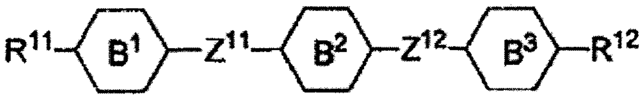

(3)

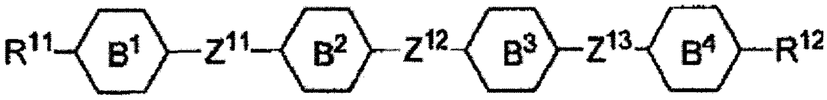

(4)

dans les formules (2) à (4),

$R^{11}$ et $R^{12}$ représentent indépendamment un groupe alkyle ayant 1 à 10 atomes de carbone ou un groupe alcényle ayant 2 à 10 atomes de carbone, et dans les groupes alkyle et alcényle, au moins un $-CH_2-$ est éventuellement substitué par -O-, et dans ces groupes, au moins un atome d'hydrogène est éventuellement substitué par un atome de fluor ;
le cycle $B^1$, le cycle $B^2$, le cycle $B^3$ et le cycle $B^4$ représentent indépendamment un groupe 1,4-cyclohexylène, 1,4-phénylène, 2-fluoro-1,4-phénylène, 2,5-difluoro-1,4-phénylène ou pyrimidine-2,5-diyle ; et
$Z^{11}$, $Z^{12}$ et $Z^{13}$ représentent indépendamment une liaison simple, -COO-, $-CH_2CH_2-$, -CH=CH- ou -C≡C-.

**10.** Composition de cristaux liquides selon la revendication 8 ou 9 contenant au moins un composé sélectionné dans le groupe constitué par les composés représentés par les formules (5) à (7) :

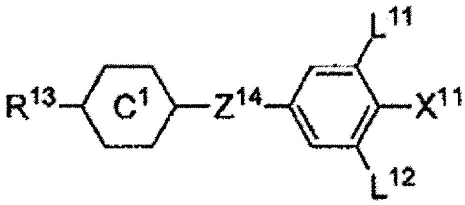

(5)

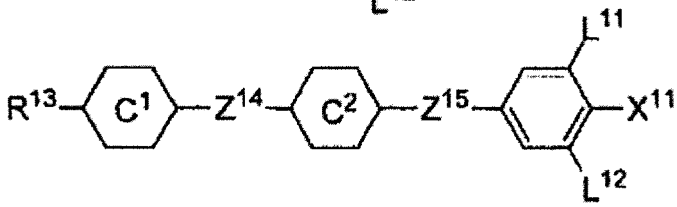

(6)

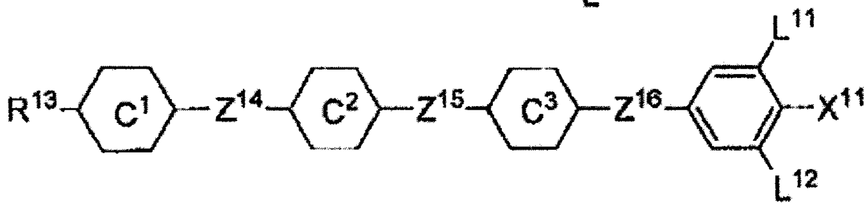

(7)

dans les formules (5) à (7),

$R^{13}$ représente un groupe alkyle ayant 1 à 10 atomes de carbone ou un groupe alcényle ayant 2 à 10 atomes de carbone, et dans les groupes alkyle et alcényle, au moins un $-CH_2-$ est éventuellement substitué par -O-, et dans ces groupes, au moins un atome d'hydrogène est éventuellement substitué par un atome de fluor ;
$X^{11}$ représente un atome de fluor, un atome de chlore, $-OCF_3$, $-OCHF_2$, $-CF_3$, $-CHF_2$, $-CH_2F$, $-OCF_2CHF_2$ ou $-OCF_2CHFCF_3$ ;
le cycle $C^1$, le cycle $C^2$ et le cycle $C^3$ représentent indépendamment un groupe 1,4-cyclohexylène, 1,4-phénylène, tétrahydropyran-2,5-diyle, 1,3-dioxane-2,5-diyle, pyrimidine-2,5-diyle ou 1,4-phénylène dans lequel au moins un atome d'hydrogène est substitué par un atome de fluor ;
$Z^{14}$, $Z^{15}$ et $Z^{16}$ représentent indépendamment une liaison simple, -COO-, -OCO-, $-CH_2O-$, $-OCH_2-$, $-CF_2O-$, $-OCF_2-$, $-CH_2CH_2-$, -CH=CH-, -C≡C- ou $-(CH_2)_4-$ ; et
$L^{11}$ et $L^{12}$ représentent indépendamment un atome d'hydrogène ou de fluor.

**11.** Composition de cristaux liquides selon l'une quelconque des revendications 8 à 10 contenant au moins un composé

sélectionné dans le groupe constitué par les composés représentés par la formule (8) :

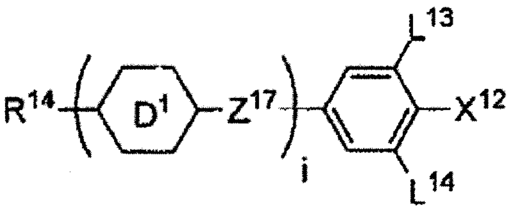

(8)

dans la formule (8),

$R^{14}$ représente un groupe alkyle ayant 1 à 10 atomes de carbone ou un groupe alcényle ayant 2 à 10 atomes de carbone, et dans les groupes alkyle et alcényle, au moins un $-CH_2-$ est éventuellement substitué par - O-, et dans ces groupes, au moins un atome d'hydrogène est éventuellement substitué par un atome de fluor ;
$X^{12}$ représente -C≡N ou -C≡C-C≡N ;
le cycle $D^1$ représente un groupe 1,4-cyclohexylène, 1,4-phénylène, tétrahydropyran-2,5-diyle, 1,3-dioxane-2,5-diyle, pyrimidine-2,5-diyle ou 1,4-phénylène dans lequel au moins un atome d'hydrogène est substitué par un atome de fluor ;
$Z^{17}$ représente une liaison simple, -COO-, -OCO-, $-CH_2O-$, $-OCH_2-$, $-CF_2O-$, $-OCF_2-$, $-CH_2CH_2-$ ou -C≡C- ;
$L^{13}$ et $L^{14}$ représentent indépendamment un atome d'hydrogène ou de fluor ;et
i représente 1, 2, 3 ou 4.

**12.** Composition de cristaux liquides selon l'une quelconque des revendications 8 à 11 contenant au moins un composé sélectionné dans le groupe constitué par les composés représentés par les formules (11) à (19) :

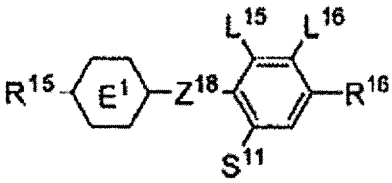

(11)

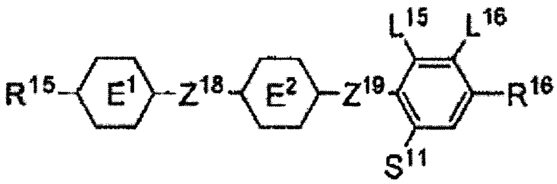

(12)

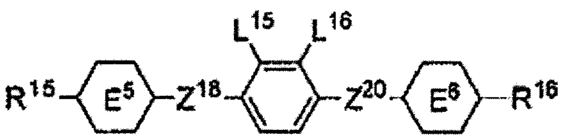

(13)

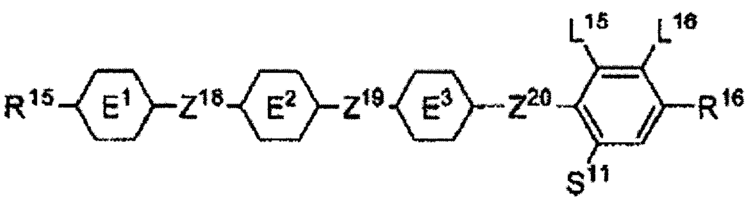

(14)

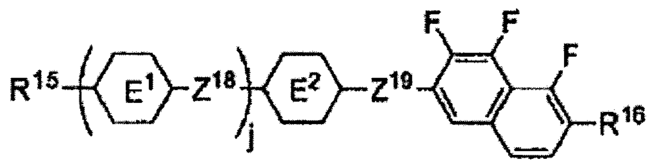

(15)

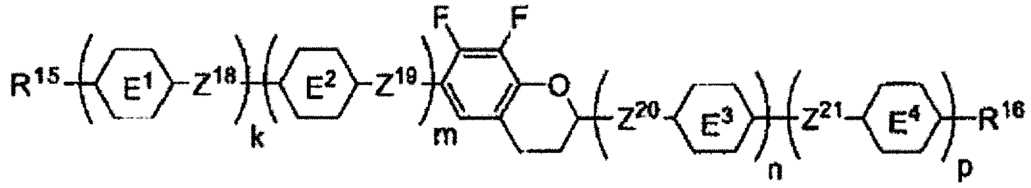

(16)

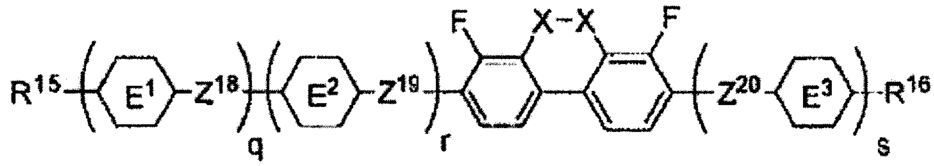

(17)

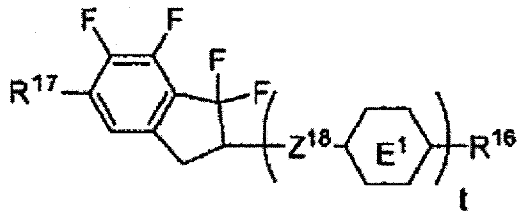

(18)

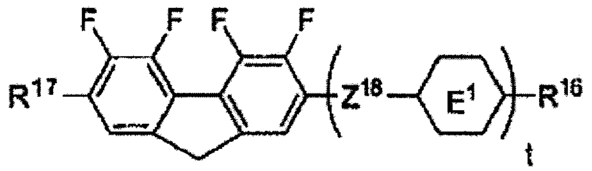

(19)

dans les formules (11) à (19),

$R^{15}$, $R^{16}$ et $R^{17}$ représentent indépendamment un groupe alkyle ayant 1 à 10 atomes de carbone ou un groupe alcényle ayant 2 à 10 atomes de carbone, et dans les groupes alkyle et alcényle, au moins un $-CH_2-$ est éventuellement substitué par -O-, et dans ces groupes, au moins un atome d'hydrogène est éventuellement substitué par un atome de fluor et $R^{17}$ peut représenter un atome d'hydrogène ou de fluor ;
le cycle $E^1$, le cycle $E^2$, le cycle $E^3$ et le cycle $E^4$ représentent indépendamment un groupe 1,4-cyclohexylène, 1,4-cyclohexénylène, 1,4-phénylène, tétrahydropyran-2,5-diyle, décahydronaphtalène-2,6-diyle ou 1,4-phénylène dans lequel au moins un atome d'hydrogène est substitué par un atome de fluor ;
le cycle $E^5$ et le cycle $E^6$ représentent indépendamment un groupe 1,4-cyclohexylène, 1,4-cyclohexénylène, 1,4-phénylène, tétrahydropyran-2,5-diyle ou décahydronaphtalène-2,6-diyle ;
$Z^{18}$, $Z^{19}$, $Z^{20}$ et $Z^{21}$ représentent indépendamment une liaison simple, -COO-, -OCO-, $-CH_2O-$, $-OCH_2-$, $-CF_2O-$, $-OCF_2-$, $-CH_2CH_2-$, $-CF_2OCH_2CH_2-$ ou $-OCF_2CH_2CH_2-$ ;
$L^{15}$ et $L^{16}$ représentent indépendamment un atome de fluor ou de chlore ;
$S^{11}$ représente un atome d'hydrogène ou un groupe méthyle ;
X représente -CHF- ou $-CF_2-$ ;
j, k, m, n, p, q, r et s représentent indépendamment 0 ou 1, une somme de k, m, n et p est égale à 1 ou 2 et une somme de q, r et s est égale à 0, 1, 2 ou 3, t représente 1, 2 ou 3.

**13.** Composition de cristaux liquides selon l'une quelconque des revendications 8 à 12 contenant au moins un composé polymérisable représenté par la formule (20) autre que le composé représenté par la formule (1) :

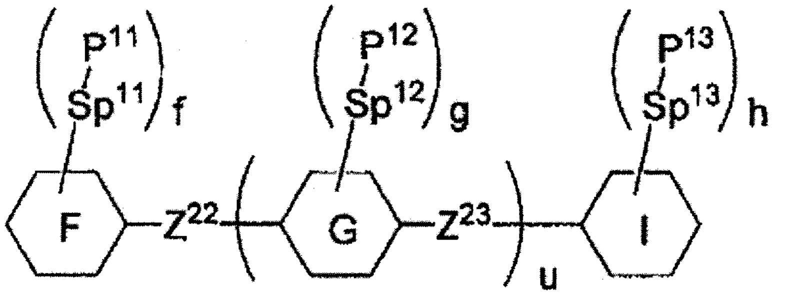

(20)

dans la formule (20),

le cycle F et le cycle I représentent indépendamment un groupe cyclohexyle, cyclohexényle, phényle, 1-naphtyle, 2-naphtyle, tétrahydropyran-2-yle, 1,3-dioxan-2-yle, pyrimidin-2-yle ou pyridin-2-yle, et dans ces cycles, au moins un atome d'hydrogène est éventuellement substitué par un atome d'halogène, un groupe alkyle ayant 1 à 12 atomes de carbone, un groupe alcoxy ayant 1 à 12 atomes de carbone ou un groupe alkyle ayant 1 à 12 atomes de carbone dans lequel au moins un atome d'hydrogène est substitué par un atome d'halogène ;
le cycle G représente un groupe 1,4-cyclohexylène, 1,4-cyclohexénylène, 1,4-phénylène, naphtalène-1,2-diyle, naphtalène-1,3-diyle, naphtalène-1,4-diyle, naphtalène-1,5-diyle, naphtalène-1,6-diyle, naphtalène-1,7-diyle, naphtalène-1,8-diyle, naphtalène-2,3-diyle, naphtalène-2,6-diyle, naphtalène-2,7-diyle, phénanthrène-2,7-diyle, tétrahydropyran-2,5-diyle, 1,3-dioxane-2,5-diyle, pyrimidine-2,5-diyle ou pyridine-2,5-diyle, et dans ces cycles, au moins un atome d'hydrogène est éventuellement substitué par un atome d'halogène, un groupe alkyle ayant 1 à 12 atomes de carbone, un groupe alcoxy ayant 1 à 12 atomes de carbone ou un groupe alkyle ayant 1 à 12 atomes de carbone dans lequel au moins un atome d'hydrogène est substitué par un atome d'halogène ;
$Z^{22}$ et $Z^{23}$ représentent indépendamment une liaison simple ou un groupe alkylène ayant 1 à 10 atomes de carbone, et dans le groupe alkylène, au moins un $-CH_2-$ est éventuellement substitué par -O-, -CO-, -COO- ou -OCO-, et au moins un $-CH_2CH_2-$ est éventuellement substitué par -CH=CH-, $-C(CH_3)=CH-$, $-CH=C(CH_3)-$ ou $-C(CH_3)=C(CH_3)-$, et dans ces groupes, au moins un atome d'hydrogène est éventuellement substitué par un atome de fluor ou de chlore ;
$P^{11}$, $P^{12}$ et $P^{13}$ représentent indépendamment un groupe polymérisable ;
$Sp^{11}$, $Sp^{12}$ et $Sp^{13}$ représentent indépendamment une liaison simple ou un groupe alkylène ayant 1 à 10 atomes de carbone, et dans le groupe alkylène, au moins un - $CH_2$- est éventuellement substitué par -O-, -COO-, -OCO- ou -OCOO-, et au moins un $-CH_2CH_2-$ est éventuellement substitué par -CH=CH- ou -C≡C-, et dans ces groupes, au moins un atome d'hydrogène est éventuellement substitué par un atome de fluor ou de chlore ;
u représente 0, 1 ou 2 ; et
f, g et h représentent indépendamment 0, 1, 2, 3 ou 4, et une somme de f, g et h est égale à 1 ou plus.

**14.** Composition de cristaux liquides selon la revendication 13, dans laquelle, dans la formule (20), $P^{11}$, $P^{12}$ et $P^{13}$ représentent indépendamment un groupe sélectionné dans le groupe constitué par les groupes polymérisables représentés par la formule (P-1) à la formule (P-5) :

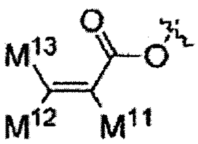

(P-1)

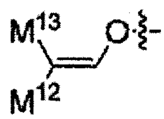

(P-2)

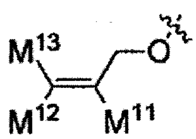

(P-3)

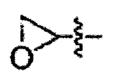

(P-4)

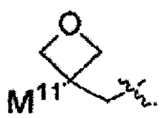

(P-5)

dans la formule (P-1) à la formule (P-5),
$M^{11}$, $M^{12}$ et $M^{13}$ représentent indépendamment un atome d'hydrogène, un atome de fluor, un groupe alkyle ayant 1 à 5 atomes de carbone ou un groupe alkyle ayant 1 à 5 atomes de carbone dans lequel au moins un atome d'hydrogène est substitué par un atome d'halogène.

**15.** Composition de cristaux liquides selon la revendication 13 ou 14,

dans laquelle le composé polymérisable représenté par la formule (20) est au moins un composé sélectionné dans le groupe constitué par les composés polymérisables représentés par la formule (20-1) à la formule (20-7) :

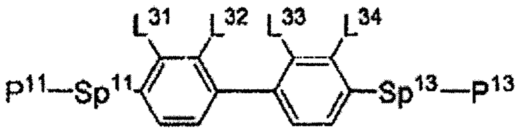

(20-1)

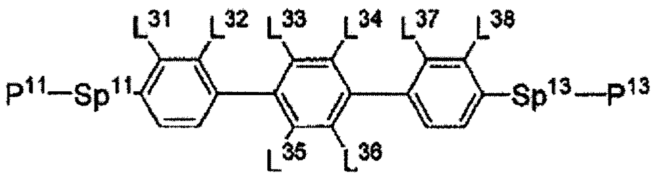

(20-2)

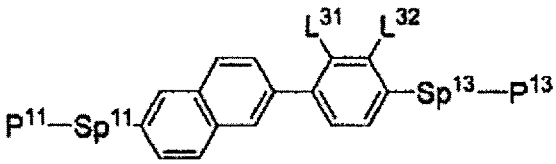

(20-3)

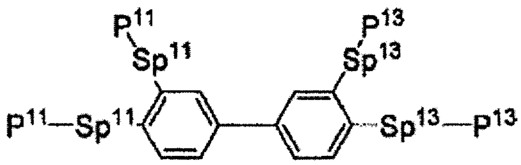

(20-4)

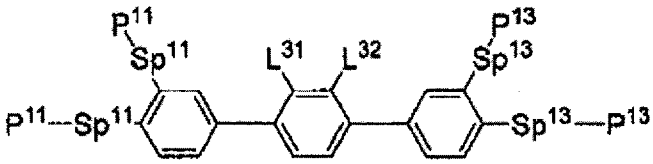

(20-5)

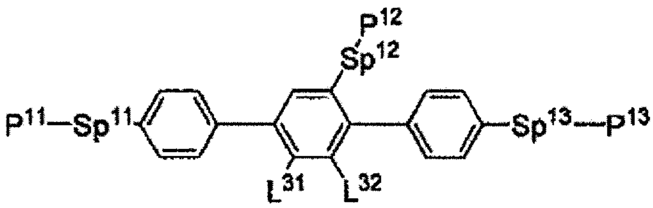

(20-6)

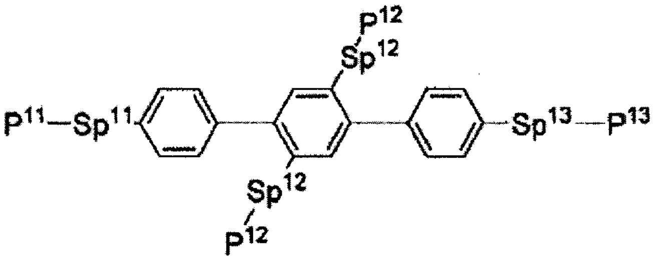

(20-7)

dans la formule (20-1) à la formule (20-7),

$L^{31}$, $L^{32}$, $L^{33}$, $L^{34}$, $L^{35}$, $L^{36}$, $L^{37}$ et $L^{38}$ représentent indépendamment un atome d'hydrogène, un atome de fluor

ou un groupe méthyle ;

$Sp^{11}$, $Sp^{12}$ et $Sp^{13}$ représentent indépendamment une liaison simple ou un groupe alkylène ayant 1 à 10 atomes de carbone, et dans le groupe alkylène, au moins un - $CH_2$- est éventuellement substitué par -O-, -COO-, -OCO- ou -OCOO-, et au moins un -$CH_2CH_2$- est éventuellement substitué par -CH=CH- ou -C≡C-, et dans ces groupes, au moins un atome d'hydrogène est éventuellement substitué par un atome de fluor ou de chlore,

$P^{11}$, $P^{12}$ et $P^{13}$ représentent indépendamment un groupe sélectionné dans le groupe constitué par les groupes polymérisables représentés par la formule (P-1) à la formule (P-3),

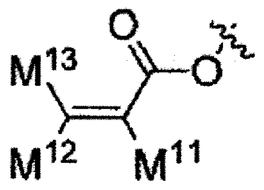
(P-1)

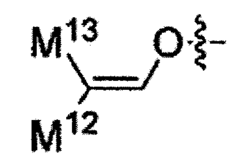
(P-2)

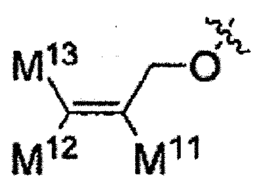
(P-3)

dans la formule (P-1) à la formule (P-3),

$M^{11}$, $M^{12}$ et $M^{13}$ représentent indépendamment un atome d'hydrogène , un atome de fluor, un groupe alkyle ayant 1 à 5 atomes de carbone, ou un groupe alkyle ayant 1 à 5 atomes de carbone dans lequel au moins un atome d'hydrogène est substitué par un atome d'halogène.

**16.** Composition de cristaux liquides selon l'une quelconque des revendications 8 à 15, contenant au moins un composé sélectionné dans le groupe constitué par un composé polymérisable différent des composés représentés par la formule (1) et la formule (20), un initiateur de polymérisation, un inhibiteur de polymérisation, un composé optiquement actif, un antioxydant, un absorbeur d'UV, un photostabilisant, un stabilisant thermique, un colorant et un agent antimousse :

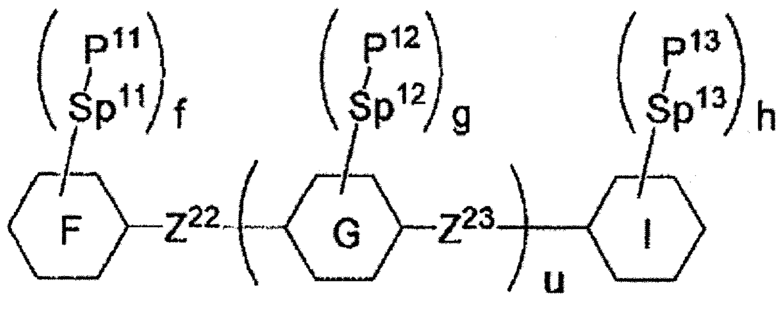
(20)

dans la formule (20),

le cycle F et le cycle I représentent indépendamment un groupe cyclohexyle, cyclohexényle, phényle, 1-naphtyle, 2-naphtyle, tétrahydropyran-2-yle, 1,3-dioxan-2-yle, pyrimidin-2-yle ou pyridin-2-yle, et dans ces cycles, au moins un atome d'hydrogène est éventuellement substitué par un atome d'halogène, un groupe alkyle ayant 1 à 12 atomes de carbone, un groupe alcoxy ayant 1 à 12 atomes de carbone ou un groupe alkyle ayant 1 à 12 atomes de carbone dans lequel au moins un atome d'hydrogène est substitué par un atome d'halogène ;

le cycle G représente un groupe 1,4-cyclohexylène, 1,4-cyclohexénylène, 1,4-phénylène, naphtalène-1,2-diyle, naphtalène-1,3-diyle, naphtalène-1,4-diyle, naphtalène-1,5-diyle, naphtalène-1,6-diyle, naphtalène-1,7-diyle, naphtalène-1,8-diyle, naphtalène-2,3-diyle, naphtalène-2,6-diyle, naphtalène-2,7-diyle, phénanthrène-2,7-diyle, tétrahydropyran-2,5-diyle, 1,3-dioxane-2,5-diyle, pyrimidine-2,5-diyle ou pyridine-2,5-diyle, et dans ces cycles, au moins un atome d'hydrogène est éventuellement substitué par un atome d'halogène, un groupe alkyle ayant 1 à 12 atomes de carbone, un groupe alcoxy ayant 1 à 12 atomes de carbone ou un groupe alkyle ayant 1 à 12 atomes de carbone dans lequel au moins un atome d'hydrogène est substitué par un atome d'halogène ;

$Z^{22}$ et $Z^{23}$ représentent indépendamment une liaison simple ou un groupe alkylène ayant 1 à 10 atomes de carbone, et dans le groupe alkylène, au moins un -$CH_2$- est éventuellement substitué par -O-, -CO-, -COO- ou

-OCO-, et au moins un $-CH_2CH_2-$ est éventuellement substitué par -CH=CH-, $-C(CH_3)=CH-$, $-CH=C(CH_3)-$ ou $-C(CH_3)=C(CH_3)-$, et dans ces groupes, au moins un atome d'hydrogène est éventuellement substitué par un atome de fluor ou de chlore ;
$P^{11}$, $P^{12}$ et $P^{13}$ représentent indépendamment un groupe polymérisable ;
$Sp^{11}$, $Sp^{12}$ et $Sp^{13}$ représentent indépendamment une liaison simple ou un groupe alkylène ayant 1 à 10 atomes de carbone, et dans le groupe alkylène, au moins un $-CH_2-$ est éventuellement substitué par -O-, -COO-, -OCO- ou -OCOO-, et au moins un $-CH_2CH_2-$ est éventuellement substitué par -CH=CH- ou -C≡C-, et dans ces groupes, au moins un atome d'hydrogène est éventuellement substitué par un atome de fluor ou de chlore ;
u représente 0, 1 ou 2 ; et
f, g et h représentent indépendamment 0, 1, 2, 3 ou 4, et une somme de f, g et h est égale à 1 ou plus.

**17.** Élément d'affichage à cristaux liquides, **caractérisé en ce qu'**il comprend au moins un produit sélectionné dans le groupe constitué par les produits obtenus par polymérisation d'au moins une partie de la composition de cristaux liquides selon l'une quelconque des revendications 8 à 16 et de la composition de cristaux liquides selon l'une quelconque de revendications 8 à 16.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2017047177 A
- WO 2016129490 A


### Non-patent literature cited in the description


- Organic Syntheses. John Wiley & Sons, Inc
- Organic Reactions. John Wiley & Sons, Inc
- Comprehensive Organic Synthesis. Pergamon Press
- New Course of Experimental Chemistry. Maruzen
- **M. KUROBOSHI et al.** *Chem. Lett.,* 1992, 827
- **W. H. BUNNELLE et al.** *J. Org. Chem.,* 1990, vol. 55, 768
- **M. IMAI et al.** *Molecular Crystals and Liquid Crystals,* 1995, vol. 259, 37